# EUROPEAN PATENT APPLICATION

(11) **EP 1 797 841 A1**
(43) Date of publication of application: **20.06.2007**
(21) Application number: 04821893.7
(22) Date of filing: 26.11.2004
(51) Int. Cl.: A61C 11/00, A61C 19/045

(54) **OCCLUSAL SURFACE TRANSFER INSTRUMENT, ARTICULATOR, OCCLUSAL SURFACE SETTING INSTRUMENT, AND METHOD FOR MAKING POST CROWN BY USING THEM**

(30) Priority: 07.09.2004 JP 2004259639
(71) Applicant: Noguchi Dental Medical Research Institute, Oyama-shi Tochigi 3230804 (JP)
(72) Inventor: NOGUCHI, Munenori, 3230804 (JP)
(74) Representative: Oser, Andreas
(86) International application number: PCT/JP2004/017623
(87) International publication number: WO 2005/099614

(57) **Abstract**

There are provided an occlusal surface transfer instrument, an articulator, and an occlusal surface setting instrument capable of making an artificial tooth with a dentition adapted to patient's occlusal surface, and a method of making an artificial tooth by use of them.

An occlusal surface transfer instrument 10 according to the present invention is constituted of: a bite material holding member 2 which holds a non-hardened bite material 1 in a bitable state; a connection member 3 whose one end is provided with the bite material holding member; a pupil line setting rod 4 disposed in the other end of the connection member, and a median line setting rod 5 which is attachable at right angles to the pupil line setting rod and in an arbitrary angular position around a material axis of the pupil line setting rod. An insertion hole 6 having a circular section is formed in the other end of the connection member 3, and an inserting portion 7 to be fitted into the insertion hole and having a circular section is protruded from the vicinity of the center of the pupil line setting rod 4, and the inserting portion 7 is inserted into the insertion hole 6 to thereby constitute the pupil line setting rod 4 at right angles with respect to a material axis of the connection member 3 and so as to be swingable or rotatable around the material axis.

## Description

### Technical Field

The present invention relates to an occlusal surface transfer instrument, an articulator, an occlusal surface setting instrument, and a method of making an artificial tooth by using of them in making an artificial tooth adapted to a patient.

### Background Art

It is necessary to make an artificial tooth or teeth adapted to a patient in various cases, for example, an occlusion abnormality or an implanting treatment required for missing a tooth or teeth. A dentition of teeth, especially the dentition of an upper jaw is an important factor for providing the patient with a natural smile. Therefore, in making artificial tooth, close attention has to be paid to not only the shape of the tooth but also an appearance of the teeth altogether.

When the artificial tooth adapted to the patient is made, a dentist should exactly identify a plane where the patient's dentition of the upper jaw engages with that of a lower jaw, that is, a relative position of a so-called occlusal surface to the head and face, and the dentist should exactly transmit the occlusal surface to a dental technician who makes the artificial tooth. With regard to exactly transmitting the occlusal surface to the dental technician, it is important to determine three points which are not on a straight line and can reproduce the occlusal surface.

In order to record the occlusal surface, a face-bow is generally used. This face-bow is an instrument that records the occlusal surface as a reference plane on which there are three points, that is, two rear points and one front point. A lower edge of an orbit is utilized as the front reference point, and an average-value condyle head (hinge axis) or external ear holes are utilized as the rear reference points in many cases. In using the face-bow, for example, ear pieces of the face-bow are inserted into opposite external ear holes, an orbital pointer is pressed onto the lower edge of the orbit, a bite member attached to a bite fork is put between the upper-jaw dentition and the lower-jaw dentition, and the patient is allowed to bite the bite member.

In this way, a plane including three points of the opposite external ear holes and the orbit lower edge become the reference plane, and the patient's occlusal surface is recorded in the face-bow.

Next, the dental technician receives the face-bow in which the occlusal surface is recorded, applies this face-bow to an articulator, an upper-jaw dentition cast (maxillary cast) and a lower-jaw dentition cast (mandibular cast) are fixed with plaster to the articulator, and makes the artificial tooth by use of these casts.

Patent Document 1: Japanese Patent Application Laid-Open No. 10-295707

Patent Document 2: Japanese Patent Application Laid-Open No. 2003-245291

### Disclosure of the Invention

### Problem to be solved by the Invention

However, when the artificial teeth made in the above process are attached into the patient's oral cavity, then the artificial teeth are in an unbalanced state to patient's face parts such as eyes, nose and ears. Therefore, a problem has occurred that it is impossible to secure facial expression beauty represented by a smile called aesthetic beauty.

That is, a conventional face-bow is designed based on an idea that a so-called Camper's plane is parallel to the occlusal surface, but there are various ideas as to which portion of the face or the head part should be identified as the reference point so that Camper's plane can be reproduced. For example, the rear reference points can be selected from various points such as the external ear hole or the average value condyle head (hinge axis), and the front reference point can be selected from various points such as the orbit lower edge or the nose wing lower edge.

Therefore, even if there is not doubt that Camper's plane is parallel to the occlusal surface, this Camper's plane cannot be exactly recorded into the face-bow. Therefore, even when the dental technician attaches the upper-jaw dentition cast and the lower-jaw dentition cast to the articulator by use of such face-bow, the occlusal surface cannot be exactly reproduced in the articulator, and it is therefore impossible to make the artificial tooth or teeth along the dentition adapted to the patient's occlusal surface.

### Means for solving the Problem

The present invention has been developed in consideration of the above-described situation, and an object thereof is to provide an occlusal surface transfer instrument which can make an artificial tooth along the dentition adapted to a patient's occlusal surface.
Furthermore, another object is similarly to provide an articulator, an occlusal surface setting instrument and a method of making an artificial tooth by use of them.

To achieve the above-described object, according to a first aspect of the present invention, there is provided an occlusal surface transfer instrument comprising:
a bite material holding member for holding a non-hardened bite material in a bitable state;
a connection member the one end of which the bite material holding member is disposed in;
a pupil line setting rod connected near a center region thereof to other end of the connection member; and
a median line setting rod attachable to the pupil line setting rod at right angles;
the median line setting rod being able to be in an arbitrary angular position around a material axis of the pupil line setting rod;
the pupil line setting rod being able to be attached to the connection member so as to be at right angles to the material axis of the connection member and so as to be swingable or rotatable around the material axis of the connection member.

Moreover, according to a second aspect of the present invention, there is provided an articulator comprising:
a bottom plate the upper surface of which a lower-jaw dentition cast is able to be attached to;
a support mechanism stood in the vicinity of a rear edge portion of the bottom plate; and
a top plate the lower surface of which an upper-jaw dentition cast is able to be attached to;
the top plate being mounted at rear edge portion thereof to the support mechanism in a cantilever form so as to be directed frontwards and being mounted to the support mechanism detachably or rotatably such that an upper and lower sides of the top plate can be reversed;
the bottom plate and the top plate being constituted to be able to fix the lower-jaw dentition cast and the upper-jaw dentition cast to the upper surface of the bottom plate and the lower surface of the top plate respectively such that a median line setting rod constituting an occlusal surface transfer instrument according to any one of claims 1 to 5 is disposed perpendicularly to the bottom plate on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

Moreover, according to a third aspect of the present invention, there is provided a method of making an artificial tooth, comprising the steps of:
biting a hardened bite material held by a bite material holding member provided with one end of a connection member constituting an occlusal surface transfer instrument between front teeth of an upper-jaw dentition cast and those of a lower-jaw dentition cast so as to correspond to an occlusion impression impressed on the hardened bite material and biting a two side materials between molar of the upper-jaw dentition cast and molar of the lower-jaw dentition cast respectively so as to correspond to occlusion impressions impressed by upper and lower molar on two side bite materials respectively;
fixing the lower-jaw dentition cast and the upper-jaw dentition cast to an upper surface of a bottom plate and a lower surface of a top plate respectively, the bottom plate and the top plate constituting an articulator, the top plate being mounted at the rear edge portion to a support mechanism in a cantilever form so as to be directed frontwards, the support mechanism being stood in the vicinity of a rear edge portion of the bottom plate;
removing the bite material and two side bite materials such that a relative positional relation between the bottom plate and the top plate is retained before and after removing; and
making the artificial tooth by use of the lower-jaw dentition cast or the upper-jaw dentition cast while the top plate is attached/detached such that a relative positional relation between the bottom plate and the top plate is retained before and after attached/detached or while the top plate is reversed by rotating to the support mechanism such that a relative positional relation between the bottom plate and the top plate is retained before and after reversed;
the lower-jaw dentition cast and the upper-jaw dentition cast being fixed to the upper surface of the bottom plate and the lower surface of the top plate respectively such that a median line setting rod constituting the occlusal surface transfer instrument is disposed perpendicularly to the bottom plate;
the median line setting rod being attached to a pupil line setting rod constituting the occlusal surface transfer instrument at right angles in a predetermined angular position around a material axis of the pupil line setting rod;
the pupil line setting rod being connected to other end of the connection member.

Furthermore, according to a fourth aspect of the present invention, there is provided an occlusal surface transfer instrument comprising: a bite material holding member for holding a non-hardened bite material in a bitable state; a connection member the one end of which the bite material holding member is disposed in; a pupil line setting rod connected near a center region thereof to other end of the connection member; and a median line setting rod attachable to the pupil line setting rod at right angles, the median line setting rod being able to be in an arbitrary angular position around a material axis of the pupil line setting rod;
the pupil line setting rod being able to be attached to the connection member so as to be at right angles to the material axis of the connection member and so as to be swingable or rotatable around the material axis of the connection member;
the median line setting rod having a predetermined rod body and a protruding member protruded from a peripheral surface of the rod body along the material axis of the rod body.

Additionally, according to a fifth aspect of the present invention, there is provided an articulator comprising:
a bottom plate the upper surface of which a lower-jaw dentition cast is able to be attached to;
a support mechanism stood in the vicinity of a rear edge portion of the bottom plate; and
a top plate the lower surface of which an upper-jaw dentition cast is able to be attached to;
the top plate being mounted at rear edge portion thereof to the support mechanism in a cantilever form so as to be directed frontwards and being mounted to the support mechanism detachably or rotatably such that an upper and lower sides of the top plate can be reversed;
the bottom plate having a predetermined fitting groove formed in a front end surface of the bottom plate and the top plate having a predetermined fitting groove formed in a front end surface of the top plate such that a protruding member of a median line setting rod constituting an occlusal surface transfer instrument according to any one of claims 15 to 19 is detachably fitted into the fitting grooves;
the bottom plate and the top plate being constituted to be able to hold temporarily the median line setting rod when the protruding member of the median line setting rod is fitted into the fitting grooves such that the median line setting rod is perpendicular to the bottom plate and the median line setting rod is positioned at a specific angle around an axial line perpendicular to the bottom plate;
the bottom plate and the top plate being constituted to be able to fix the lower-jaw dentition cast and the upper-jaw dentition cast to the upper surface of the bottom plate and the lower surface of the top plate respectively when the protruding member of the median line setting rod is fitted into the fitting grooves on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

Moreover, according to a sixth aspect of the present invention, there is provided an occlusal surface transfer instrument comprising:
a bite material holding member for holding a non-hardened bite material in a bitable state; a connection member the one end of which the bite material holding member is disposed in; a pupil line setting rod connected near a center region thereof to other end of the connection member; and a median line setting rod attachable to the pupil line setting rod at right angles;
the median line setting rod being able to be in an arbitrary angular position around a material axis of the pupil line setting rod;
the pupil line setting rod being able to be attached to the connection member so as to be at right angles to the material axis of the connection member and so as to be swingable or rotatable around the material axis of the connection member;
the median line setting rod having a non-circular section.

Furthermore, according to a seventh aspect of the present invention, there is provided an articulator comprising:
a bottom plate the upper surface of which a lower-jaw dentition cast is able to be attached to;
a support mechanism stood in the vicinity of a rear edge portion of the bottom plate; and
a top plate the lower surface of which an upper-jaw dentition cast is able to be attached to; the top plate being mounted at rear edge portion thereof to the support mechanism in a cantilever form so as to be directed frontwards and being mounted to the support mechanism detachably or rotatably such that an upper and lower sides of the top plate can be reversed;
the bottom plate having a predetermined rod fitting recessed portion formed in a front end surface of the bottom plate and the top plate having a predetermined rod fitting recessed portion formed in a front end surface of the top plate such that a median line setting rod constituting an occlusal surface transfer instrument according to any one of claims 24 to 28 is detachably fitted into the recessed portions;
the bottom plate and the top plate being constituted to be able to hold temporarily the median line setting rod when the median line setting rod is fitted into the rod fitting recessed portions such that the median line setting rod is perpendicular to the bottom plate and the median line setting rod is positioned at a specific angle around an axial line perpendicular to the bottom plate;
the bottom plate and the top plate being constituted to be able to fix the lower-jaw dentition cast and the upper-jaw dentition cast to the upper surface of the bottom plate and the lower surface of the top plate respectively when the median line setting rod is fitted into the rod fitting recessed portions on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

Additionally, according to an eighth aspect of the present invention, there is provided an occlusal surface transfer instrument comprising:
a bite material holding member for holding a non-hardened bite material in a bitable state; a connection member the one end of which the bite material holding member is disposed in;
a pupil line setting rod connected near a center region thereof to other end of the connection member; and
a median line setting rod attachable to the pupil line setting rod at right angles;
the median line setting rod being able to be in an arbitrary angular position around a material axis of the pupil line setting rod;
the pupil line setting rod being able to be attached to the connection member so as to be at right angles to the material axis of the connection member and so as to be swingable or rotatable around the material axis of the connection member;
the median line setting rod including a predetermined rod body having a noncircular section and a protruding member protruded from a peripheral surface of the rod body along the material axis of the rod body.

Moreover, according to a ninth aspect of the present invention, there is provided an articulator comprising:
a bottom plate the upper surface of which a lower-jaw dentition cast is able to be attached to;
a support mechanism stood in the vicinity of a rear edge portion of the bottom plate; and
a top plate the lower surface of which an upper-jaw dentition cast is able to be attached to; the top plate being mounted at rear edge portion thereof to the support mechanism in a cantilever form so as to be directed frontwards and being mounted to the support mechanism detachably or rotatably such that an upper and lower sides of the top plate can be reversed;
the bottom plate having a predetermined rod fitting recessed portion formed in a front end surface of the bottom plate and the top plate having a predetermined rod fitting recessed portion formed in a front end surface of the top plate such that a rod body of a median line setting rod constituting an occlusal surface transfer instrument according to any one of claims 33 to 37 is detachably attached into the rod fitting recessed portions;
the rod fitting recessed portion being formed in the inner surface of which a predetermined fitting groove is formed such that a protruding member of the median line setting rod is detachably fitted into the predetermined fitting grooves;
the bottom plate and the top plate being constituted to be able to hold temporarily the median line setting rod when the rod body and the protruding member are fitted into the rod fitting recessed portions and the fitting grooves respectively such that the median line setting rod is perpendicular to the bottom plate and the median line setting rod is positioned at a specific angle around an axial line perpendicular to the bottom plate;
the bottom plate and the top plate being constituted to be able to fix the lower-jaw dentition cast and the upper-jaw dentition cast to the upper surface of the bottom plate and the lower surface of the top plate respectively when the rod body and the protruding member are fitted into the rod fitting recessed portions and the fitting grooves respectively on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

Furthermore, according to a tenth aspect of the present invention, there is provided an articulator comprising:
a bottom plate the upper surface of which a lower-jaw dentition cast is able to be attached to;
a support mechanism stood in the vicinity of a rear edge portion of the bottom plate;
a top plate the lower surface of which an upper-jaw dentition cast is able to be attached to; and
an occlusal surface setting mechanism elevatably passed through a through hole formed in the vicinity of a front side of the top plate;
the top plate being mounted at rear edge portion thereof to the support mechanism in a cantilever form so as to be directed frontwards and being mounted to the support mechanism detachably or rotatably such that an upper and lower sides of the top plate can be reversed;
the occlusal surface setting mechanism including:
an elevator rod passed through the through hole so as to be non-rotatable around a material axis thereof;
an incisor guide member disposed at right angles to the material axis of the elevator rod in the vicinity of a lower end thereof and so as to protrude to a rear side of the bottom plate; and
a pupil line guide member disposed at right angles to the material axis of the elevator rod and the incisor guide member in the vicinity of the lower end of the elevator rod,
the bottom plate and the top plate being constituted to be able to fix the lower-jaw dentition cast and the upper-jaw dentition cast to the upper surface of the bottom plate and the lower surface of the top plate respectively such that a median line setting rod constituting an occlusal surface transfer instrument according to any one of claims 1 to 5 is disposed perpendicularly to the bottom plate on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

Additionally, according to an eleventh aspect of the present invention, there is provided an occlusal surface setting instrument comprising:
a predetermined median line guide member;
an elevator member attached so as to be elevatable along the median line guide member;
an incisor guide member protruded from the elevator member at right angles to the median line guide member; and
a pupil line guide member attached near a center region thereof to the incisor guide member at right angles to a material axis of the incisor guide member and that of the median line guide member;
the median line guide member including:
a median line guiding rod body; and
a median line guiding protruding member protruded from a peripheral surface of the median line guiding rod body along a material axis of the median line guiding rod body, the median line guiding protruding member having the same section shape as a protruding member of a median line setting rod constituting an occlusal surface transfer instrument according to any one of claims 15 to 19;
the pupil line guide member is positioned to the median line guide member so that a disposing angle of the pupil line guide member to a protruding direction of the median line guiding protruding member is equal to that of the pupil line setting rod constituting the occlusal surface transfer instrument to the protruding direction of the protruding member.

Moreover, according to a twelfth aspect of the present invention, there is provided an occlusal surface setting instrument comprising:
a predetermined median line guide member;
an incisor guide member protruded from the median line guide member at right angles to a material axis of the median line guide member; and
a pupil line guide member attached near a center region thereof to the incisor guide member at right angles to a material axis of the incisor guide member and that of the median line guide member;
the median line guide member including:
a median line guiding rod body; and
a median line guiding protruding member protruded from a peripheral surface of the median line guiding rod body along a material axis of the median line guiding rod body, the median line guiding protruding member having the same section shape as a protruding member of a median line setting rod constituting an occlusal surface transfer instrument according to any one of claims 15 to 19;
the pupil line guide member is positioned to the median line guide member so that a disposing angle of the pupil line guide member to a protruding direction of the median line guiding
protruding member is equal to that of the pupil line setting rod constituting the occlusal surface transfer instrument to the protruding direction of the protruding member.

Furthermore, according to a thirteenth aspect of the present invention, there is provided an occlusal surface setting instrument comprising:
a predetermined median line guide member;
an elevator member attached so as to be elevatable along the median line guide member;
an incisor guide member protruded from the elevator member at right angles to the median line guide member; and
a pupil line guide member attached near a center region thereof to the incisor guide member at right angles to a material axis of the incisor guide member and that of the median line guide member;
the median line guide member having the same section shape as a median line setting rod constituting an occlusal surface transfer instrument according to any one of claims 24 to 28; the pupil line guide member is positioned to the median line guide member so that a disposing angle of the pupil line guide member to the median line guide member is equal to that of the pupil line setting rod constituting the occlusal surface transfer instrument to the median line setting rod.

Additionally, according to a fourteenth aspect of the present invention, there is provided an occlusal surface setting instrument comprising:
a predetermined median line guide member;
an incisor guide member protruded from the median line guide member at right angles to a material axis of the median line guide member; and
a pupil line guide member attached near a center region thereof to the incisor guide member at right angles to a material axis of the incisor guide member and that of the median line guide member;
the median line guide member having the same section shape as a median line setting rod constituting an occlusal surface transfer instrument according to any one of claims 24 to 28; the pupil line guide member is positioned to the median line guide member so that a disposing angle of the pupil line guide member to median line guide member is equal to that of the pupil line setting rod constituting the occlusal surface transfer instrument to the a median line setting rod.

Moreover, according to a fifteenth aspect of the present invention, there is provided an occlusal surface setting instrument comprising:
a predetermined median line guide member;
an elevator member attached so as to be elevatable along the median line guide member;
an incisor guide member protruded from the elevator member at right angles to the median line guide member; and
a pupil line guide member attached near a center region thereof to the incisor guide member at right angles to a material axis of the incisor guide member and that of the median line guide member;
the median line guide member including:
a median line guiding rod body; and
a median line guiding protruding member protruded from a peripheral surface of the median line guiding rod body along a material axis of the median line guiding rod body, the median line guide member having the same section shape as a median line setting rod constituting an occlusal surface transfer instrument according to any one of claims 33 to 37;
the pupil line guide member is positioned to the median line guide member so that a disposing angle of the pupil line guide member to a protruding direction of the median line guiding protruding member is equal to that of the pupil line setting rod constituting the occlusal surface transfer instrument to a protruding direction of a protruding member of the median line setting rod.

Furthermore, according to a sixteenth aspect of the present invention, there is provided an occlusal surface setting instrument comprising:
a predetermined median line guide member;
an incisor guide member protruded from the median line guide member at right angles to a material axis of the median line guide member; and
a pupil line guide member attached near a center region thereof to the incisor guide member at right angles to a material axis of the incisor guide member and that of the median line guide member;
the median line guide member including:
a median line guiding rod body; and
a median line guiding protruding member protruded from a peripheral surface of the median line guiding rod body along a material axis of the median line guiding rod body, the median line guide member having the same section shape as a median line setting rod constituting an occlusal surface transfer instrument according to any one of claims 33 to 37;
the pupil line guide member is positioned to the median line guide member so that a disposing angle of the pupil line guide member to a protruding direction of the median line guiding protruding member is equal to that of a pupil line setting rod constituting an occlusal surface transfer instrument to a protruding direction of a protruding member of the median line setting rod.

Additionally, according to a seventeenth aspect of the present invention, there is provided an articulator comprising:
a bottom plate the upper surface of which a lower-jaw dentition cast is able to be attached to;
a support mechanism stood in the vicinity of a rear edge portion of the bottom plate;
a top plate the lower surface of which an upper-jaw dentition cast is able to be attached to; and
an occlusal surface setting mechanism elevatably passed through a through hole formed in the vicinity of a front side of the top plate;
the top plate being mounted at rear edge portion thereof to the support mechanism in a cantilever form so as to be directed frontwards and being mounted to the support mechanism detachably or rotatably such that an upper and lower sides of the top plate can be reversed;
the occlusal surface setting mechanism including:
an elevator rod passed through the through hole so as to be non-rotatable around a material axis thereof;
an incisor guide member disposed at right angles to the material axis of the elevator rod in the vicinity of a lower end thereof and so as to protrude to a rear side of the bottom plate; and
a pupil line guide member disposed at right angles to the material axis of the elevator rod and the incisor guide member in the vicinity of the lower end of the elevator rod;
the bottom plate having a predetermined fitting groove formed in a front end surface of the bottom plate and the top plate having a predetermined fitting groove formed in a front end surface of the top plate such that a protruding member of a median line setting rod constituting an occlusal surface transfer instrument according to any one of claims 15 to 19 is detachably fitted into the fitting grooves;
the bottom plate and the top plate being constituted to be able to hold temporarily the median line setting rod when the protruding member of the median line setting rod is fitted into the fitting grooves such that a pupil line setting rod constituting the occlusal surface transfer instrument becomes parallel to the pupil line guide member, that the median line setting rod becomes perpendicular to the bottom plate and that the material axis of the median line setting rod and the material axis of the incisor guide member are on a same plane; the bottom plate and the top plate being constituted to be able to fix the lower-jaw dentition cast and the upper-jaw dentition cast to the upper surface of the bottom plate and the lower surface of the top plate respectively when the protruding member of the median line setting rod is fitted into the fitting grooves on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and
after reversing the top plate.

Moreover, according to an eighteenth aspect of the present invention, there is provided an articulator comprising:
a bottom plate the upper surface of which a lower-jaw dentition cast is able to be attached to;
a support mechanism stood in the vicinity of a rear edge portion of the bottom plate;
a top plate the lower surface of which an upper-jaw dentition cast is able to be attached to; and
an occlusal surface setting mechanism elevatably passed through a through hole formed in the vicinity of a front side of the top plate;
the top plate being mounted at rear edge portion thereof to the support mechanism in a cantilever form so as to be directed frontwards and being mounted to the support mechanism detachably or rotatably such that an upper and lower sides of the top plate can be reversed;
the occlusal surface setting mechanism including:
an elevator rod passed through the through hole so as to be non-rotatable around a material axis thereof;
an incisor guide member disposed at right angles to the material axis of the elevator rod in the vicinity of a lower end thereof and so as to protrude to a rear side of the bottom plate; and
a pupil line guide member disposed at right angles to the material axis of the elevator rod and the incisor guide member in the vicinity of the lower end of the elevator rod;
the bottom plate having a rod fitting recessed portion formed in a front end surface of the bottom plate and the top plate having a predetermined rod fitting recessed portion formed in a front end surface of the top plate such that a median line setting rod constituting an occlusal surface transfer instrument according to any one of claims 24 to 28 is detachably fitted into the rod fitting recessed portions;
the bottom plate and the top plate being constituted to be able to hold temporarily the median line setting rod when the median line setting rod is fitted into the rod fitting recessed portions such that a pupil line setting rod constituting the occlusal surface transfer instrument becomes parallel to the pupil line guide member, that the median line setting rod becomes perpendicular to the bottom plate and that the material axis of the median line setting rod and the material axis of the incisor guide member are on a same plane;
the bottom plate and the top plate being constituted to be able to fix the lower-jaw dentition cast and the upper-jaw dentition cast to the upper surface of the bottom plate and the lower surface of the top plate respectively when the median line setting rod is fitted into the rod fitting recessed portions on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

Furthermore, according to a nineteenth aspect of the present invention, there is provided an articulator comprising:
a bottom plate the upper surface of which a lower-jaw dentition cast is able to be attached to;
a support mechanism stood in the vicinity of a rear edge portion of the bottom plate;
a top plate the lower surface of which an upper-jaw dentition cast is able to be attached to; and
an occlusal surface setting mechanism elevatably passed through a through hole formed in the vicinity of a front side of the top plate;
the top plate being mounted at rear edge portion thereof to the support mechanism in a cantilever form so as to be directed frontwards and being mounted to the support mechanism detachably or rotatably such that an upper and lower sides of the top plate can be reversed;
the occlusal surface setting mechanism including:
an elevator rod passed through the through hole so as to be non-rotatable around a material axis thereof;
an incisor guide member disposed at right angles to the material axis of the elevator rod in the vicinity of a lower end thereof and so as to protrude to a rear side of the bottom plate; and
a pupil line guide member disposed at right angles to the material axis of the elevator rod and the incisor guide member in the vicinity of the lower end of the elevator rod;
the bottom plate having a rod fitting recessed portion formed in a front end surface of the bottom plate and the top plate having a predetermined rod fitting recessed portion formed in a front end surface of the top plate such that a rod body of a median line setting rod constituting an occlusal surface transfer instrument according to any one of claims 33 to 37 is detachably fitted into the rod fitting recessed portions;
the bottom plate having a fitting groove formed in an inner surface of the rod fitting recessed portion formed in the bottom plate and the top plate having a fitting groove formed in an inner surface of the rod fitting recessed portion formed in the top plate such that a protruding member of the median line setting rod is detachably fitted into the rod fitting grooves;
the bottom plate and the top plate being constituted to be able to hold temporarily the median line setting rod when the rod body and the protruding member of the median line setting rod is fitted into the rod fitting recessed portions and the fitting grooves respectively such that a pupil line setting rod constituting the occlusal surface transfer instrument becomes parallel to the pupil line guide member, that the median line setting rod becomes perpendicular to the bottom plate and that the material axis of the median line setting rod and the material axis of the incisor guide member are on a same plane;
the bottom plate and the top plate being constituted to be able to fix the lower-jaw dentition cast and the upper-jaw dentition cast to the upper surface of the bottom plate and the lower surface of the top plate respectively when the rod body and the protruding member of the median line setting rod is fitted into the rod fitting recessed portions and the fitting grooves respectively on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

With respect to beauty of the dentition, it is important that the dentition itself is prettily aligned but it is more important that the dentition and the parts of a face such as eyes, nose and ears are balanced.
Especially, an upper-jaw dentition is important for a person to make a natural smile, and such arranged dentition is called an aesthetic dentition.

Heretofore, a plane where the upper-jaw dentition is engaged with a lower-jaw dentition, that is, an occlusal surface has been determined by use of a device called a face-bow as described above in order to secure such aesthetic dentition.
However, the present applicant has obtained a finding that it is difficult to exactly identify a position of an average value condyle head in a case where the average value condyle head is utilized as a rear reference point even by use of such face-bow.
In a case where external ear holes are utilized, since a line connecting opposite external ear holes is not parallel to a pupil line, as a result, the aesthetic dentition cannot be realized by use of the conventional face-bow. As a result of regarding this as a problem and repeating intensive researches, there have been developed an inventive occlusal surface transfer instrument, articulator, occlusal surface setting instrument, and a method of making an artificial tooth by use of them for use in aesthetic repair that can be said to be innovative without using any face-bow.

It is to be noted that a virtual surface constituted by ranging occlusal portions of the teeth of the upper jaw and the teeth of the lower jaw is called a occlusal plane, but the occlusal plane is not strictly flat, and curved toward a molar tooth portion. Therefore, the occlusal plane will be called the occlusal surface in the present description.

When a patient's occlusal surface is recorded by use of the occlusal surface transfer instrument according to the first aspect of the present invention, first, a dentist shaves, for example, the patient's upper tooth with a turbine or the like to form a support for supporting an artificial tooth. It is to be noted that in a case where it is difficult to utilize a self tooth, the self tooth is extracted, and, instead, an implant is implanted into an upper jaw bone to use the implant as a support.

Here, in a case where the patient's dentition is shaved with the turbine or the like to form the support for supporting an artificial tooth, it is necessary to secure the aesthetic dentition as described above, when the completed artificial tooth for the dentition is mounted in the patient's oral cavity. A support using self tooth is formed so that the support's directions from the gums are parallel to a line directed from the forehead to the jaw. Additionally, The support is formed so that the support is shortened gradually toward the molar's position from the incisor's position symmetrically when seeing from the front of the patient. Furthermore the support is formed so that a position between adjacent incisors is on a median line. This also applies to the case where the implant is implanted in the upper jaw bone instead of the self tooth to form the implant as the support.

Here, in a case where the artificial teeth are made for both of the upper and lower teeth, it is arbitrary to make either of them first, but it is important to form the upper-jaw dentition aesthetically beautifully for a person to make a natural smile. Therefore, it is preferable to make the artificial tooth for the upper-jaw dentition and thereafter make the artificial tooth for the lower-jaw dentition.

There will be described hereinafter an example of a case where the artificial tooth of the upper-jaw dentition is made.

Before, after, or simultaneously with a step of forming the support for supporting the artificial tooth, line of the gums are aligned with those of the lips if necessary.

Next, a tentative tooth is inserted in the support of either of a left molar tooth and a right molar tooth in the upper-jaw dentition, and a non-hardened side bite material is bitten between the other upper-jaw dentition molar tooth support and the lower-jaw dentition molar tooth in such state to make an occlusion mold.

If it does in this way, in a state in which the tentative tooth is engaged with the lower-jaw dentition molar tooth, for example, on a left side, in other words, the upper-jaw dentition is normally engaged with the lower-jaw dentition on the left side, the occlusion mold of the upper and lower molar teeth can be made on a right side that is the other side.

After hardening the side bite material which has been bitten by the other upper and lower molar teeth, the tentative tooth is removed from one molar tooth support, the side bite material on which the occlusion mold of the other upper and lower molar teeth has been impressed is bitten between the other upper and lower molar teeth again so as to correspond to the occlusion mold. In such state, a non-hardened side bite material is bitten between one-side upper and lower molar teeth to make the occlusion mold.

It is to be noted that since the side bite material bitten by the other upper and lower molar teeth is hardened, a normal engaged state between the upper and lower jaw dentitions is not obstructed even when the tentative tooth covering one molar tooth support is removed from the support.

Next, after hardening the side bite material bitten by one-side upper and lower molar teeth, two side bite materials on which the occlusion molds of the upper and lower molar teeth on the opposite sides are impressed are bitten by the upper and lower molar teeth so as to correspond to the respective occlusion molds, respectively, and non-hardened bite material is bitten by upper and lower jaw front teeth. Such non-hardened bite material is held beforehand in a bite material holding member disposed in one end of a connection member constituting an occlusal surface transfer instrument by, for example, intrusion or the like.

It is to be noted that when the bite material is bitten, the bite material is bitten between the patient's upper jaw front teeth and lower jaw front teeth so that a pupil line setting rod constituting the occlusal surface transfer instrument is parallel to the patient's face.

Next, after the bite material bitten between the upper and lower jaw front teeth is hardened, the pupil line setting rod attached to the connection member is swung or rotated around the material axis of the connection member, accordingly the pupil line setting rod is positioned in parallel with the patient's pupil line, and the pupil line setting rod is fixed to the connection member in such position.

It is to be noted that even if the bite material is not completely hardened, complete hardening does not have to be waited for as long as the positioning by the swinging or rotating of the pupil line setting rod does not change.

Here, for getting the aesthetic dentition, a dental arch, that is, the occlusal surface is required to be parallel to the pupil line connecting pupils each other. Additionally, a median line which intersects at right angles the pupil line at its middle point when the patient's face is viewed from the front is required to be on a position between the adjacent incisors of the upper jaw. Furthermore, the teeth directions from the gums are required to be parallel to the line directed from the forehead to the jaw.

It is to be noted that the median line is, as before, a line which intersects the pupil line at right angles in the midpoint of the pupil line, when the patient's face is viewed from the front.

When the pupil line setting rod is positioned as described above, the pupil line is recorded in the pupil line setting rod as a relative positional relation to the bite material holding member or the connection member, that is, finally a relative positional relation to the occlusal surface of the upper and lower jaw dentitions and one of the requirements for getting the aesthetic dentition with respect to occlusal surface of patient is determined.

Next, the median line setting rod is attached to the pupil line setting rod so that the median line setting rod agrees with the median line when the patient's face is viewed from the front while retaining a state in which the bite material held by the bite material holding member is bitten by the upper and lower jaw front teeth. Moreover, the median line setting rod is rotated around the material axis of the pupil line setting rod so that a distance from the forehead is equal to that from the jaw, and the median line setting rod is fixed to the pupil line setting rod in such state.

It is to be noted that when the bite material is bitten by the upper and lower jaw front teeth, needless to say, fluctuations are generated back and forth and right and left depending on a portion of the bite material to be bitten. However, since the median line setting rod is fixed to the pupil line setting rod so as to match the median line setting rod with the median line, such fluctuations do not raise any problem. It is rather additionally mentioned that the median line or the line connecting the forehead to the jaw can be recorded in the median line setting rod regardless of a dentition state in an oral cavity, and transferred to the articulator to make the aesthetically superior artificial tooth, and this respect is one of remarkable functions/effects of the present invention which have not existed in a conventional art.

When the median line setting rod is fixed to the pupil line setting rod in this way, another of the requirements for getting the aesthetic dentition with respect to occlusal surface of patient is determined. That is, the median line is recorded in the median line setting rod, and the line parallel to the line connecting the forehead to the jaw is recorded as the relative positional relation to the pupil line setting rod in the median line setting rod in the same way as in the median line.

Therefore, according to the occlusal surface transfer instrument of the present invention comprising: a bite material holding member for holding a non-hardened bite material in a bitable state; a connection member the one end of which the bite material holding member is disposed in; a pupil line setting rod connected near a center region thereof to other end of the connection member; and a median line setting rod attachable to the pupil line setting rod at right angles, it is possible to record the patient's aesthetic occlusal surface, and the occlusal surface adapted to the patient can be reproduced. That is, according to the occlusal surface transfer instrument of the first aspect of the present invention, the occlusal surface reproducible by the occlusion molds of the patient's upper and lower jaw front teeth impressed on the bite material is associated with a group of aesthetic information including the pupil line, the median line, and the line connecting the forehead to the jaw, they are recorded in the pupil line setting rod and the median line setting rod, and thus it is possible to make the artificial tooth constituting the aesthetic dentition .

Here, in the present description, the median line is used in a meaning similar to the conventional meaning as described above, but in the present invention including the first aspect of the present invention and described below, a line which intersects at right angles the pupil line at its middle point (median line) and which has the distance from the forehead that is equal to that from the jaw when the patient's face is viewed from the front has an important meaning.

Therefore, in the present invention, such line is defined especially as a specific median line. It is to be noted that the specific median line is sometimes referred to as the line connecting the forehead to the jaw, the (virtual) line parallel to the line, or the line having the distance from the forehead that is equal to that from the jaw, and all of them are used as synonymous terms in the present description.

It is to be noted that a non-hardened impression material such as a silicon rubber impression material or a dental agar impression material is applied to the upper and lower jaw dentitions, respectively, at an appropriate time, for example, after the support is formed, and the molds of the upper and lower jaw dentitions are made. The upper and lower jaw dentition casts are made by a conventional method, respectively.

The pupil line setting rod is constituted so that the virtual line parallel to the pupil line which is a line connecting the patient's opposite pupils can be recorded, and can be constituted of, for example, a rod having a diameter of about 3 mm.

The median line setting rod is constituted so that the median line which intersects at right angles the pupil line at its middle point and the virtual line parallel to the line connecting the forehead to the jaw can be recorded, and is constituted of, for example, a rod having a diameter of about 3 mm.

Here, the above-described pupil line setting rod may be constituted in any way as long as the pupil line setting rod can be attached near a center region thereof to other end of the connection member so as to be at right angles to the material axis of the connection member and so as to be swingable or rotatable around the material axis of the connection member. For example, the connection member can be constituted by forming an insertion hole having a circular sectional shape in the other end, and the pupil line setting rod can be constituted by protruding an inserting portion near the center region thereof having circular sectional shape, the inserting portion being fitted into the insertion hole.

Furthermore, there is not any restriction on a constitution of means for fixing the inserting portion at a desired angle around an axial line of the insertion hole when the above-described inserting portion is inserted into the insertion hole, but the inserting portion fixing mechanism may be disposed on, for example, the connection member.

In this case, when the pupil line setting rod is positioned, the inserting portion is swung or rotated around the material axis of the connection member so that the pupil line setting rod is parallel to the patient's pupil line. Next, the inserting portion fixing mechanism disposed in the connection member can be operated to thereby fix the pupil line setting rod to a desired positioned portion of the connection member.

There is not any restriction on a constitution of the median line setting rod as long as the median line setting rod can be attached to the pupil line setting rod at right angles and can be attached to the pupil line setting rod in an arbitrary angular position around a material axis of the pupil line setting rod. For example, the pupil line setting rod is formed in a circular section and the median line setting rod is constituted by having a fitting portion in a peripheral surface of the median line setting rod which the pupil line setting rod can be fitted into, so that the median line setting rod can be slidable along the pupil line setting rod and can be swung or rotated around the material axis of the pupil line setting rod when the median line setting rod is attached to the pupil line setting rod.

Furthermore, there is not any restriction on a constitution of means for fixing the fitting portion to an arbitrary position of the pupil line setting rod. For example, the fitting portion may be provided with the fitting portion fixing mechanism so that the median line setting rod is fixed to a desired position of the pupil line setting rod at a desired angle in a state in which the pupil line setting rod is fitted into the fitting portion.

As described above, according to the occlusal surface transfer instrument of the first aspect of the present invention, the patient's pupil line can be recorded in the pupil line setting rod as the relative positional relation to the bite material holding member or the connection member, that is, finally as the relative positional relation to the occlusal surface of the upper and lower-jaw dentitions, and the patient's median line or the specific median line can be recorded as the relative positional relation to the pupil line setting rod in the median line setting rod. Therefore, it is possible to make the artificial tooth for realizing the above-described aesthetic dentition.

Here, teeth such as the front teeth and the molar teeth do not mean the artificial tooth to be made, but mean the teeth as supports shaved to support the artificial tooth or the cast of the teeth unless mentioned otherwise in a case where the teeth belong to the dentition on a side for which the artificial tooth is to be made.

In the articulator according to the second aspect of the present invention, as described above, the bottom plate and the top plate are constituted to be able to fix the lower-jaw dentition cast and the upper-jaw dentition cast to the upper surface of the bottom plate and the lower surface of the top plate respectively such that a median line setting rod constituting an occlusal surface transfer instrument is disposed perpendicularly to the bottom plate on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively.

Here, a pupil line of the patient is recorded as a relative positional relation to the bite material holding member or the connection member in a pupil line setting rod constituting the occlusal surface transfer instrument, that is, finally as a relative positional relation to the occlusal surface of the upper and lower jaw dentitions. In addition, in the median line setting rod, the patient's median line and the specific median line are recorded as a relative positional relation to the pupil line setting rod. Furthermore, the pupil line setting rod is constituted so as to cross the median line setting rod at right angles.

Therefore, by applying the median line setting rod of the occlusal surface transfer instrument according to the first aspect of the present invention to the articulator according to the second aspect of the present invention so that the median line setting rod becomes perpendicular to the bottom plate of the articulator, the recording of the patient's pupil line is transferred to the articulator as the relation parallel to the bottom plate of the articulator and the recording of the patient's median line and the specific median line is transferred to the articulator as the relation perpendicular to the bottom plate of the articulator.

Thus, the upper and lower jaw dentition casts can be fixed to the articulator so that their occlusal surface becomes the same as the occlusal surface in the patient's oral cavity in a three-dimensional coordinate and so it is possible to make the aesthetically superior artificial tooth in a state in which the occlusal surface in the patient's oral cavity is reproduced in the articulator.

In other words, when the articulator according to the second aspect of the present invention is used together with the occlusal surface transfer instrument according to the first aspect of the present invention, the patient's pupil line, the median line and the specific median line can be transferred to the articulator as the relative positional relation to the occlusal surface formed by the upper and lower jaw dentitions without using the face-bow based on Camper's plane. Moreover, the upper and lower jaw dentition casts can be disposed to the articulator in the same three-dimensional absolute coordinate position as that of the dentition in the patient's oral cavity and the conventional face-bow is completely unnecessary.

Here, when the lower-jaw dentition cast is fixed to the upper surface of the bottom plate, and the upper-jaw dentition cast is fixed to the lower surface of the top plate, respectively, so that the median line setting rod becomes perpendicular to the bottom plate, front directions of the upper and lower jaw dentition casts can be preferably specified on the basis of the articulator.

For example, in a case where the bottom and top plates of the articulator have rectangular shapes, the lower and upper jaw dentition casts are fixed to the upper surface of the bottom plate and the lower surface of the top plate, respectively, so that the pupil line setting rod becomes parallel to the front edge portion of the bottom plate.

In this case, front direction of the upper and lower jaw dentition casts agree with those of the articulator.

Therefore, when the upper and lower jaw dentition casts are viewed from the front of the articulator, this means that the upper and lower jaw dentition casts are viewed from the front. Therefore, it is possible to make the artificial tooth more exactly.

Moreover, in the articulator according to the second aspect of the present invention, the top plate and the support mechanism are constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

Therefore, even after the bite material and two side bite materials are removed, the relative positional relation between the low and upper jaw dentition casts does not change. Therefore, it is possible to make the artificial tooth in the relative positional relation in which normal occlusion is performed. Moreover, even when the top plate is attached or rotated as before during the making of the artificial tooth, it is possible to check whether or not the normal occlusion is performed as needed during the making of the artificial tooth.

The bottom and top plates can be constituted of, for example, rectangular steel plates each having a predetermined thickness, and the upper surface of the bottom plate and the lower surface of the top plate may be finished by known technologies such as rough surface working or embossing so that the lower and upper jaw dentition casts can be fixed via a predetermined bonding material such as plaster, respectively.

The top plate is mounted at rear edge portion thereof to the support mechanism detachably or rotatably such that an upper and lower sides of the top plate can be reversed, there is not any restriction on the constitutions of these top plate and support mechanism as long as the top plate and the support mechanism are constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate. For example, there are considered constitutions of the top plate and the support mechanism, such as a constitution in which the top plate is attached to the support mechanism so that the top plate becomes parallel to the bottom plate and a constitution in which a rotation angle of the top plate can be limited in a position parallel to the bottom plate to retain the parallel position.

The support mechanism stands in the vicinity of the rear edge portion of the bottom plate, and there is not any restriction on a structure of the support mechanism as long as the support mechanism has such strength or section as to direct the top plate frontwards and support the top plate in a cantilever form.
Furthermore, a distance between the bottom and top plates does not have to be adjustable. However, for example, the support mechanism can be constituted a pair of height adjusting rods stood at a distance each other along a rear edge portion of said bottom plate, wherein said top plate comprises a top plate base member whose opposite end portions are provided with rod holes through which the height adjusting rods are inserted, and a top plate main body connected to the top plate base member via hinges, whereby to elevate said top plate along the height adjusting rods and reverse upper and lower surfaces of said top plate main body, wherein a fixing mechanism which fixes the top plate base member to desired positions of the height adjusting rods is disposed in the top plate base member or the height adjusting rod. According to this constitution, it is possible to enhance operability for the dental technician to make the artificial tooth.

When the occlusal surface transfer instrument according to any one of claims 1 to 5 is applied to the articulator according to the second aspect of the present invention, it is possible to attach the occlusal surface transfer instrument to the articulator by use of an appropriate jig. In this case, the bottom plate and the top plate can be provided with a median line setting rod groove in front end surface thereof respectively, the median line setting rod groove being formed so that the median line setting rod constituting the occlusal surface transfer instrument can be fitted, wherein a depth of the median line setting rod groove is set so that the median line setting rod becomes perpendicular to said bottom plate, when the median line setting rod is fitted into the median line setting rod grooves. According to this constitution, an operation for setting the median line setting rod to be perpendicular to the bottom plate is remarkably facilitated. In addition, when the median line setting rod is simply fitted into the median line setting rod grooves, perpendicularity of the median line setting rod with respect to the top plate is assured.

It is to be noted that relative angles of the front surfaces of the upper and lower jaw dentition casts with respect to the bottom or top plate are set to be reproducible in a case where the median line setting rod is fitted into the median line setting rod grooves to fix the lower-jaw dentition cast to the upper surface of the bottom plate and fix the upper-jaw dentition cast to the lower surface of the top plate, respectively. For example, in a case where the bottom and top plates are formed into the rectangular shapes, when the median line setting rod grooves are formed so that the pupil line setting rod becomes parallel to the front edge portion of the bottom plate at a time when the median line setting rod is fitted into the median line setting rod grooves, the upper and lower jaw dentition casts turn to the front as viewed from the front surface of the articulator.
In the same manner as described above, when the upper and lower jaw dentition casts are viewed from the front surface of the articulator, it is possible to reproduce the same relative position as that at a time when the dentition in the oral cavity is viewed from the patient's front surface.

Moreover, for example, when the median line setting rod is constituted of a plastic rod having a circular section, and a width of the median line setting rod groove is set to be slightly smaller than a size of an outer diameter of the median line setting rod, the median line setting rod is tentatively attached to the median line setting rod grooves at a time when the median line setting rod is fitted into the median line setting rod grooves.
Therefore, the operability in mounting the upper and lower jaw dentition casts is enhanced.

Moreover, the patient's pupil line is transferred as the relative positional relation with respect to the bottom plate to the articulator by the occlusal surface transfer instrument according to the first aspect of the present invention. Moreover, the upper and lower jaw dentition casts are fixed to the top and bottom plates, respectively, based on the relation. Therefore, to make the artificial tooth, the occlusal surface is determined on the basis of the bottom plate, and the artificial tooth can be made based on the occlusal surface. However, when a predetermined pupil line reference line is disposed in parallel with the bottom plate in the front end surfaces of the bottom or top plate, the occlusal surface is determined based on such pupil line reference line, and the artificial tooth can be made horizontally symmetrically on the basis of the pupil line reference line. Therefore, the operability in making the artificial tooth is enhanced, and the precision in making the artificial tooth is also enhanced.

As an example of the articulator, for example, there is considered such a constitution that the median line setting rod grooves into which the median line setting rod constituting the occlusal surface transfer instrument according to the first aspect of the present invention are to be fitted are formed in the front end surfaces of the bottom and top plates, respectively. Moreover, the depth of each median line setting rod groove is set so that the median line setting rod becomes perpendicular at a time when the median line setting rod is fitted in the median line setting rod grooves, respectively, and the median line reference lines perpendicular to the bottom plate are disposed in the inner surfaces of the respective median line setting rod grooves. Moreover, the pupil line reference lines forming right angles with the median line reference lines are disposed in the front end surfaces of the top and bottom plates, respectively.

Here, in a case where the top and bottom plates are formed into the rectangular shapes, the median line setting rod grooves are formed so that the pupil line setting rod becomes parallel to the front edge portion of the bottom plate at a time when the median line setting rod is fitted into the median line setting rod grooves formed in the front end surfaces of the top and bottom plates.

In such constitution, the operation for setting the median line setting rod to be perpendicular to the bottom plate is remarkably facilitated. In addition, when the median line setting rod is simply fitted into the median line setting rod grooves, the perpendicularity of the median line setting rod with respect to the top plate is assured.

Moreover, the lower and upper jaw dentition casts are fixed to the articulator so as to turn to the front surface of the articulator, and the relative positional relation of the pupil line with respect to the occlusal surface of the upper and lower jaw dentition casts is transferred to the front edge portions of the top and bottom plates.

Furthermore, since the pupil line reference lines at right angles to the median line reference lines are disposed in the front end surfaces of the top and bottom plates, respectively, the occlusal surface is determined based on such pupil line reference lines, and the artificial tooth can be made horizontally symmetrically on the basis of the pupil line reference line. Therefore, the operability in making the artificial tooth is enhanced, and the precision in making the artificial tooth is also enhanced.

In addition, the median line reference lines perpendicular to the bottom plate are disposed in the inner surfaces of the respective median line setting rod grooves. Therefore, when the dental technician's eye line positioned in the front surface of the articulator is matched with the median line reference line, and the upper-jaw dentition cast in an extended line is viewed in such state, the median line can be adjusted between the adjacent incisors of the upper-jaw dentition.

Here, for example, when the median line setting rod is constituted of the plastic rod having the circular section, and the width of each median line setting rod groove is set to be slightly smaller than the size of the outer diameter of the median line setting rod in the same manner as described above, the median line setting rod is tentatively attached to the median line setting rod grooves at a time when the median line setting rod is fitted into the median line setting rod grooves. Therefore, the operability in mounting the upper and lower jaw dentition casts is enhanced.

In a method of making an artificial tooth by use of the occlusal surface transfer instrument according to the first aspect of the present invention and the articulator according to the second aspect of the present invention, that is, a method of making an artificial tooth according to a third aspect of the present invention, the dentist hands to the dental technician the occlusal surface transfer instrument in which the patient's occlusal surface has been recorded as described above. The dental technician applies the occlusal surface transfer instrument to the articulator to make an artificial tooth.

That is, first, the hardened bite material held by the bite material holding member disposed in one end of the connection member constituting the occlusal surface transfer instrument is bitten by front teeth of the upper and lower jaw dentition casts so as to correspond to the occlusion mold impressed on the bite material.

Next, before, after, or simultaneously with such operation, two side bite materials on which the occlusion molds of the upper and low molar teeth on the opposite sides have been impressed are bitten by the opposite sides of the upper and lower jaw dentition casts so as to correspond to the occlusion mold.

Next, the lower-jaw dentition cast is fixed to the upper surface of the bottom plate constituting the articulator in the above-described state. Moreover, the upper-jaw dentition cast is fixed to the lower surface of the top plate whose rear edge portion is mounted to the support mechanism stood in the vicinity of the rear edge portion of the bottom plate and which is directed frontwards and which is mounted to the support mechanism in the cantilever form.

Here, to fix the upper and lower jaw dentition casts to the top and bottom plates, respectively, the upper and lower jaw dentition casts are fixed to the top and bottom plates, respectively, so that the median line setting rod attached at right angles to the pupil line setting rod disposed on the other end of the connection member and in a predetermined angular position around the material axis of the pupil line setting rod is perpendicular to the bottom plate.

Next, after fixing the lower and upper jaw dentition casts to the bottom and top plates, respectively, the bite material and two side bite materials are removed in a state in which the relative positional relation between the bottom and top plates is retained.

Next, while attaching and detaching the top plate with respect to the support mechanism as needed so that the relative positional relation with respect to the bottom plate is retained before/after the attaching/detaching, or rotating the top plate with respect to the support mechanism so that the relative positional relation with respect to the bottom plate is retained before/after the reversing to reverse the upper and lower sides, the artificial tooth is made by use of the lower or upper-jaw dentition cast.

Here, to make the artificial tooth, a procedure is repeatedly performed, if necessary, in which the top plate is detached and attached or rotated as needed as described above, and the artificial tooth is attached to the upper-jaw dentition cast to confirm an occlusion state with respect to the lower-jaw dentition cast.

It is to be noted that from an aesthetic viewpoint that the most important factor for a person to make a natural smile is the upper-jaw dentition, confirmation of the occlusion state in making the artificial tooth of the upper-jaw dentition does not have a meaning that the occlusion states between the upper teeth and the facing lower teeth is confirmed tooth by tooth, and has a meaning that the whole occlusion state between the upper and lower jaw dentitions is confirmed so as to retain a relative positional relation between the upper-jaw dentition cast fixed to the top plate and the lower-jaw dentition cast fixed to the bottom plate. As to the occlusion between the upper teeth and the facing lower teeth, in a case where the artificial tooth for the lower-jaw dentition is also made, the occlusion is confirmed between the lower-jaw dentition cast and the upper-jaw dentition cast obtained in a state in which the completed artificial tooth for the upper-jaw dentition is inserted into the support of the upper jaw, when the artificial tooth is made.

Moreover, the artificial tooth for the upper-jaw dentition is made so as to be horizontally symmetrical on the basis of the bottom plate in which the pupil line has been recorded. Moreover, the artificial tooth for the upper-jaw dentition is made so that a line between the adjacent incisors of the upper-jaw dentition is positioned on the median line and in parallel with the line connecting the forehead to the jaw as viewed from the front surfaces of the upper and lower jaw dentition casts.
Accordingly, the dentition of the artificial tooth is aligned in the occlusal surface, and the aesthetic dentition is obtained when the completed artificial tooth for the upper-jaw dentition is mounted in the patient's oral cavity.

The artificial tooth for the lower-jaw dentition is made in the same manner as described above. First, the lower-jaw dentition is shaved with the turbine or the like to form the support for supporting the artificial tooth, and two side bite materials and the bite materials are bitten by the patient by the above-described procedure. In such state, the patient's pupil line is recorded in the pupil line setting rod, and the patient's median line and the specific median line are recorded in the median line setting rod, respectively. Next, the lower and upper jaw dentition casts are fixed on the articulator, and the artificial tooth for the lower-jaw dentition may be made using the lower-jaw dentition cast by the above-described procedure using the occlusal surface transfer instrument and the articulator.

Additionally, unlike a process of making the artificial tooth for the upper-jaw dentition, the occlusion state of the lower teeth of the lower-jaw dentition cast and the facing upper teeth is confirmed tooth by tooth between the lower-jaw dentition cast and the upper-jaw dentition cast corresponding to the already completed artificial tooth for the upper-jaw dentition, when the artificial tooth of the lower-jaw dentition is made.

According to the fourth aspect of the present invention, the occlusal surface transfer instrument comprises: a bite material holding member for holding a non-hardened bite material in a bitable state; a connection member the one end of which the bite material holding member is disposed in; a pupil line setting rod connected near a center region thereof to other end of the connection member; and a median line setting rod attachable to the pupil line setting rod at right angles, the median line setting rod being able to be in an arbitrary angular position around a material axis of the pupil line setting rod; the pupil line setting rod being able to be attached to the connection member so as to be at right angles to the material axis of the connection member and so as to be swingable or rotatable around the material axis of the connection member; the median line setting rod having a predetermined rod body and a protruding member protruded from a peripheral surface of the rod body along the material axis of the rod body.
To record the patient's occlusal surface by use of such occlusal surface transfer instrument according to the fourth aspect of the present invention, first, a dentist shaves, for example, the patient' s upper tooth with a turbine or the like to form a support for supporting an artificial tooth. It is to be noted that in a case where it is difficult to utilize a self tooth, the self tooth is extracted, and, instead, an implant is implanted into an upper jaw bone to use the implant as a support.

Next, in the same manner as in the first aspect of the present invention, occlusion molds of left and right upper and lower molar teeth are made, and two side bite materials on which the occlusion molds of the upper and lower molar teeth on the opposite sides are impressed are bitten by the upper and lower molar teeth so as to correspond to the respective occlusion molds, respectively, and non-hardened bite material is bitten by upper and lower jaw front teeth. Such non-hardened bite material is held beforehand in a bite material holding member disposed in one end of a connection member constituting an occlusal surface transfer instrument by, for example, intrusion or the like. It is to be noted that when the bite material is bitten, the bite material is bitten between the patient's upper jaw front teeth and lower jaw front teeth so that a pupil line setting rod constituting the occlusal surface transfer instrument is parallel to the patient's face.

Next, after the bite material bitten between the upper and lower jaw front teeth is hardened, the pupil line setting rod attached to the connection member is swung or rotated around the material axis of the connection member, accordingly the pupil line setting rod is positioned in parallel with the patient's pupil line, and the pupil line setting rod is fixed to the connection member in such position. It is to be noted that even if the bite material is not completely hardened, complete hardening does not have to be waited for as long as the positioning by the swinging or rotating of the pupil line setting rod does not change.

Since the aesthetic dentition and the median line have been described in the first aspect of the present invention, the description is omitted here.

When the pupil line setting rod is positioned as described above, the pupil line is recorded in the pupil line setting rod as a relative positional relation to the occlusal surface of the upper and lower jaw dentitions and one of the requirements for getting the aesthetic dentition with respect to occlusal surface of patient is determined.

Next, the median line setting rod is attached to the pupil line setting rod and adjusted the attached position so that the median line setting rod agrees with the median line, when the patient's face is viewed from the front, while retaining a state in which the bite material held by the bite material holding member is bitten by the upper and lower jaw front teeth. Moreover, the median line setting rod is rotated around a material axis of the pupil line setting rod so that a distance from the forehead becomes equal to that from the jaw. In such state, the median line setting rod is fixed to the pupil line setting rod.

Here, when the bite material is bitten by the upper and lower jaw front teeth, needless to say, fluctuations are generated back and forth and right and left depending on a portion of the bite material to be bitten. However, such fluctuations do not raise any problem as described in the first aspect of the present invention. It is rather additionally mentioned that the median line or the specific median line can be recorded in the median line setting rod regardless of a dentition state in an oral cavity, and transferred to the articulator to make the aesthetically superior artificial tooth, and this respect is one of remarkable functions/effects of the present invention which have not existed in a conventional art.

When the median line setting rod is fixed to the pupil line setting rod in this manner, another condition is determined among the conditions that determine the patient's aesthetic occlusal surface. That is, the median line is recorded in the median line setting rod, and the specific median line is recorded as the relative positional relation with respect to the pupil line setting rod in the median line setting rod in the same manner as in the median line.

Therefore, according to the occlusal surface transfer instrument of the fourth aspect of the present invention, the occlusal surface reproducible by the occlusion molds of the patient's upper and lower jaw front teeth impressed on the bite material is associated with a group of aesthetic information including the pupil line, the median line, and the specific median line, they are recorded in the pupil line setting rod and the median line setting rod, and it is therefore possible to make the artificial tooth constituting the aesthetic dentition in this manner.

It is to be noted that a non-hardened impression material such as a silicon rubber impression material or a dental agar impression material is attached to the upper and lower jaw dentitions, respectively, at an appropriate time, for example, after the support is formed, and the molds of the upper and lower jaw dentitions are made. The upper and lower jaw dentition casts are made by a conventional method, respectively.

The pupil line setting rod is similar to that of the first aspect of the present invention, and descriptions of constitutions, typical examples, or functions and effects of the rod are omitted here.

The median line setting rod is constituted so that the median line and the specific median line can be recorded, and can be constituted, for example, by protruding a protruding member having a rectangular section from a peripheral surface of a rod body along a material axis thereof, the rod body having a diameter of about 3 mm.

There is not any restriction on a constitution of such median line setting rod as long as the median line setting rod can be attached to the pupil line setting rod at right angles and can be attached to the pupil line setting rod in an arbitrary angular position around a material axis of the pupil line setting rod likewise the first aspect of the present invention. For example, the pupil line setting rod is formed in a circular section and the median line setting rod is constituted by having a fitting portion in a peripheral surface of the median line setting rod which the pupil line setting rod can be fitted into, so that the median line setting rod can be slidable along the pupil line setting rod and can be swung or rotated around the material axis of the pupil line setting rod when the median line setting rod is attached to the pupil line setting rod. It is to be noted that since means for fixing the fitting portion to the arbitrary position of the pupil line setting rod is similar to that of the first aspect of the present invention, the description thereof is omitted.

As described above, according to the occlusal surface transfer instrument of the fourth aspect of the present invention, the patient's pupil line can be recorded in the pupil line setting rod as the relative positional relation to the bite material holding member or the connection member, that is, finally as the relative positional relation to the occlusal surface of the upper and lower-jaw dentitions, and the patient's median line or the specific median line can be recorded as the relative positional relation to the pupil line setting rod in the median line setting rod. Therefore, it is possible to make the artificial tooth for realizing the above-described aesthetic dentition.

In the articulator according to the fifth aspect of the present invention, as described above, the bottom plate have a predetermined fitting groove formed in a front end surface of the bottom plate and the top plate have a predetermined fitting groove formed in a front end surface of the top plate such that a protruding member of a median line setting rod constituting an occlusal surface transfer instrument according to any one of claims 15 to 19 is detachably fitted into the fitting grooves. The bottom plate and the top plate are constituted to be able to hold temporarily the median line setting rod when the protruding member of the median line setting rod is fitted into the fitting grooves such that the median line setting rod is perpendicular to the bottom plate and the median line setting rod is positioned at a specific angle around an axial line perpendicular to the bottom plate.

Furthermore, the bottom plate and the top plate are constituted to be able to fix the lower-jaw dentition cast and the upper-jaw dentition cast to the upper surface of the bottom plate and the lower surface of the top plate respectively when the protruding member of the median line setting rod is fitted into the fitting grooves on the condition that a hardened bite material held by a bite material holding member constituting the occlusal surface transfer instrument according to any one of claims 15 to 19 is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively.

Therefore, when the protruding member of the median line setting rod is fitted into the fitting groove, the recording of the patient's pupil line is transferred as the relation parallel to the bottom plate of the articulator to the articulator, and the recording of the specific median line is transferred as the relation perpendicular to the bottom plate of the articulator in the same manner as in the second aspect of the present invention. Therefore, the upper and lower jaw dentition casts can be fixed to the articulator so that the occlusal surface becomes the same as that in the patient's oral cavity in the three-dimensional coordinate. Therefore, it is possible to make the aesthetically superior artificial tooth in a state in which the occlusal surface in such oral cavity is reproduced on the articulator.

In other words, when the articulator according to the fifth aspect of the present invention is used together with the occlusal surface transfer instrument according to any one of claims 15 to 19, the patient's pupil line, the median line and the specific median line can be transferred to the articulator as the relative positional relation to the occlusal surface formed by the upper and lower jaw dentitions without using the face-bow based on Camper's plane. Moreover, the upper and lower jaw dentition casts can be disposed to the articulator in the same three-dimensional absolute coordinate position as that of the dentition in the patient's oral cavity and the conventional face-bow is completely unnecessary.

Moreover, The bottom plate and the top plate are constituted to be able to hold temporarily the median line setting rod when the protruding member of the median line setting rod is fitted into the fitting grooves such that the median line setting rod is perpendicular to the bottom plate. Therefore, the operability in mounting the upper and lower jaw dentition casts is enhanced, and the perpendicularity of the median line setting rod with respect to the bottom plate can be easily obtained.

Furthermore, after the fixing of the lower-jaw dentition cast and the upper-jaw dentition cast, the top plate and support mechanism are constituted so that a relative positional relation between the bottom plate and top plate is retained before and after removing of the bite material and two side bite materials, and a relative positional relation between the bottom plate and the top plate is retained before and after the mounting or the reversing of the top plate. Therefore, even after the bite material and two side bite materials are removed, relative positional relation between the lower-jaw dentition cast and the upper-jaw dentition cast does not change.

Therefore, it is possible to make the artificial tooth in the relative positional relation in which normal occlusion is performed. Moreover, even when the top plate is attached or rotated as before during the making of the artificial tooth, it is possible to check whether or not the normal occlusion is performed as needed during the making of the artificial tooth.

Since the bottom plate, the top plate, the support mechanism, modifications of the support mechanism, and functions and effects are similar to those of the articulator according to the second aspect of the present invention, the description thereof is omitted here.

Here, a constitution is preferable in which the pupil line setting rod is attached beforehand to the median line setting rod so that the material axis of the pupil line setting rod crosses a protrusion plane including the protruding member of the median line setting rod at right angles, and a fitting grooves are cut so as to agree with a front-surface direction of the articulator.

According to such constitution, when the protruding member of the median line setting rod is fitted into the fitting grooves, the front surfaces of the upper and lower jaw dentition casts agree with the front surface of the articulator.

Therefore, when the upper and lower jaw dentition casts are viewed from the front surface of the articulator, the upper and lower jaw dentition casts are viewed from the front, and it is therefore possible to make the artificial tooth more exactly.

Moreover, when pupil line reference lines parallel to the bottom plate are disposed in front end surfaces of the top and bottom plates, respectively, the occlusal surface is determined based on such pupil line reference lines, and the artificial tooth can be made horizontally symmetrically on the basis of the pupil line reference lines. Therefore, the operability in making the artificial tooth is enhanced, and the precision in making the artificial tooth is also enhanced.

According to the sixth aspect of the present invention, the occlusal surface transfer instrument comprises:
a bite material holding member for holding a non-hardened bite material in a bitable state; a connection member the one end of which the bite material holding member is disposed in; a pupil line setting rod connected near a center region thereof to other end of the connection member; and a median line setting rod attachable to the pupil line setting rod at right angles;
the median line setting rod being able to be in an arbitrary angular position around a material axis of the pupil line setting rod;
the pupil line setting rod being able to be attached to the connection member so as to be at right angles to the material axis of the connection member and so as to be swingable or rotatable around the material axis of the connection member;
the median line setting rod having a non-circular section.

To record the patient's occlusal surface by use of the occlusal surface transfer instrument according to the sixth aspect of the present invention, first, the support for supporting the artificial tooth is formed. Moreover, if necessary, the gum line is aligned with the lip line with laser, and the occlusion molds of the upper and lower molar teeth on the opposite sides are made by two side bite materials.

Next, two side bite materials on which the occlusion molds have been impressed are bitten by the upper and lower molar teeth so as to correspond to the respective occlusion molds. In such state, the non-hardened bite material held by the bite material holding member disposed in one end of the connection member constituting the occlusal surface transfer instrument is bitten by the upper and lower jaw front teeth, and the pupil line setting rod attached to the connection member is fixed to the connection member in the position parallel to the patient's pupil line.

Next, the median line setting rod is attached to the pupil line setting rod so that the median line setting rod agrees with the patient's median line and the specific median line, and fixed in such position.

Hereinafter, a procedure to record the occlusal surface reproducible by the occlusion molds of the patient's upper and lower jaw front teeth impressed on the bite material and a group of aesthetic information constituted of the pupil line, the median line, and the specific median line in the pupil line setting rod and the median line setting rod in a state in which the occlusal surface is associated with the information is similar to the above-described procedure using the occlusal surface transfer instrument according to the fourth aspect of the present invention, and therefore description thereof is omitted here.

It is to be noted that a non-hardened impression material such as a silicon rubber impression material or a dental agar impression material is attached to the upper and lower jaw dentitions, respectively, at an appropriate time, for example, after the support is formed, and the molds of the upper and lower jaw dentitions are made. The upper and lower jaw dentition casts are made by a conventional method, respectively.

The pupil line setting rod is similar to that of the first aspect of the present invention, and the descriptions of the constitution, the typical example, or the functions and the effects are omitted here.

The median line setting rod is constituted so that the median line and the specific median line can be recorded, and can be constituted of, for example, the rod having a rectangular section.

Such median line setting rod may be formed into any constitution as long as the rod is attachable at right angles to the pupil line setting rod and in the arbitrary angular position around the material axis of the pupil line setting rod in the same manner as in the first aspect of the present invention. However, for example, the pupil line setting rod is formed in a circular section and the median line setting rod is constituted by having a fitting portion in a peripheral surface of the median line setting rod which the pupil line setting rod can be fitted into, so that the median line setting rod can be slidable along the pupil line setting rod and can be swung or rotated around the material axis of the pupil line setting rod when the median line setting rod is attached to the pupil line setting rod. It is to be noted that since means for attaching the fitting portion to the arbitrary position of the pupil line setting rod is similar to that of the first aspect of the present invention, the description is omitted.

As described above, according to the occlusal surface transfer instrument of the sixth aspect of the present invention, the patient's pupil line can be recorded as the relative positional relation with respect to the bite material holding member or the connection member, that is, finally as the relative positional relation with respect to the occlusal surface of the upper and lower jaw dentitions in the pupil line setting rod. The patient's median line and the specific median line can be recorded as the relative positional relation with respect to the median line setting rod in the median line setting rod, and it is further possible to make the artificial tooth for realizing the above-described aesthetic dentition.

In the articulator according to the seventh aspect of the present invention, as described above, the bottom plate and the top plate are provided with the predetermined rod fitting recessed portions formed in the front end surfaces of the bottom plate and the top plate so that the median line setting rod constituting the occlusal surface transfer instrument according to any one of claims 24 to 28 is detachably attached to the recessed portions. Moreover, the bottom and top plates are constituted so that the median line setting rod becomes perpendicular to the bottom plate, when the median line setting rod is fitted into the rod fitting recessed portions and that the median line setting rod is positioned and tentatively attached at the specific angle around the axial line perpendicular to the bottom plate.

Furthermore, the bottom and top plates are constituted so that the median line setting rod can be fitted into the rod fitting recessed portions, the lower-jaw dentition cast can be fixed to the upper surface of the bottom plate, and the upper-jaw dentition cast can be fixed to the lower surface of the top plate in a state in which the hardened bite material held by the bite material holding member constituting the occlusal surface transfer instrument according to any one of claims 24 to 28 is bitten by the front teeth of the upper and lower jaw dentition casts so as to correspond to the occlusion mold impressed on the bite material and in which two side bite materials impressed with the occlusion molds of the upper and lower molar teeth on opposite sides are bitten by the opposite sides of the upper and lower jaw dentition casts so as to correspond to the occlusion molds respectively.

Therefore, when the median line setting rod is fitted into the rod fitting recessed portion, the recording of the patient's pupil line is transferred as the relation parallel to the bottom plate of the articulator to the articulator, and the recording of the specific median line is transferred as the relation perpendicular to the bottom plate of the articulator to the articulator in the same manner as in the second aspect of the present invention. Therefore, the upper and lower jaw dentition casts can be fixed to the articulator so that the occlusal surface becomes the same as that in the patient's oral cavity in the three-dimensional coordinate. Additionally, it is possible to make the aesthetically superior artificial tooth in a state in which the occlusal surface in such oral cavity is reproduced by the articulator.

In other words, when the articulator according to the seventh aspect of the present invention is used together with the occlusal surface transfer instrument according to any one of claims 24 to 28, heretofore, the patient's pupil line, the median line, and the specific median line can be transferred to the articulator, as the relative positional relation with respect to the occlusal surface formed by the upper and lower jaw dentitions without using any face-bow based on Camper's plane. Moreover, it is possible to mount the upper and lower jaw dentition casts in the same three-dimensional absolute coordinate position as that of the dentition in the patient's oral cavity, and the conventional face-bow is not required at all.

Moreover, since the median line setting rod can be fitted into the rod fitting recessed portion to be thereby tentatively and detachably attached to the bottom and top plates in a perpendicular posture with respect to the bottom plate, the operability in mounting the upper and lower jaw dentition casts is enhanced, and the perpendicularity of the median line setting rod with respect to the bottom plate can be easily obtained.

Furthermore, the relative positional relation between the bottom and top plates is retained before and after removing in a case where the bite material and two side bite materials are removed after the upper and lower jaw dentition casts are fixed. Moreover, the relative positional relation between the bottom and top plates is retained before and after the attaching/detaching or the reversing. Therefore, even after the bite material and two side bite materials are removed, the relative positional relation between the lower and upper jaw dentition casts does not change.

Therefore, it is possible to make the artificial tooth in the relative positional relation in which normal occlusion is performed. Moreover, it is possible to check as needed whether or not the normal occlusion is performed during the making of the artificial tooth, even when the top plate is attached or rotated to its former state during the making of the artificial tooth.

Since the bottom plate, the top plate, the modification of the support mechanism, and the functions and effects are similar to those of the articulator according to the second aspect of the present invention, the description thereof is omitted here.

Here, it is preferable to form the median line setting rod and the rod fitting recessed portion beforehand so that the pupil line setting rod turns to the front surface of the articulator, when the median line setting rod is fitted into the rod fitting recessed portion.

According to such constitution, when the median line setting rod is fitted into the rod fitting recessed portion, the front surfaces of the upper and lower jaw dentition casts agree with the front surface of the articulator.

Therefore, when the upper and lower jaw dentition casts are viewed from the front surface of the articulator, the upper and lower jaw dentition casts are viewed from the front surface, and it is therefore possible to make the artificial tooth more precisely.

Moreover, when the pupil line reference lines parallel to the bottom plate are disposed in the front end surfaces of the top and bottom plates, respectively, the occlusal surface is determined based on such pupil line reference lines, and the artificial tooth can be made horizontally symmetrically on the basis of the pupil line reference lines. Therefore, the operability in making the artificial tooth is enhanced, and the precision in making the artificial tooth is also enhanced.

Furthermore, when the median line setting rod is fitted into the rod fitting recessed portion, the median line setting rod having the perpendicular position with respect to the top plate can be detachably and tentatively attached to the bottom and top plates. Therefore, the operability in mounting the upper and lower jaw dentition casts is enhanced, and the perpendicularity of the median line setting rod with respect to the bottom plate can be easily obtained.

The rod fitting recessed portion may be formed so that the upper and lower jaw dentition casts turn to the front surface of the articulator, when the median line setting rod is fitted into the rod fitting recessed portion in a case where the median line setting rod of the occlusal surface transfer instrument according to any one of, for example, claims 24 to 28 is formed into a rectangular shape, and constituted of a plastic rod.
Moreover, the width of the rod fitting recessed portion is set to be slightly smaller than that of the median line setting rod.

The occlusal surface transfer instrument according to the eighth aspect of the present invention comprises: a bite material holding member for holding a non-hardened bite material in a bitable state; a connection member the one end of which the bite material holding member is disposed in; a pupil line setting rod connected near a center region thereof to other end of the connection member; and a median line setting rod attachable to the pupil line setting rod at right angles; the median line setting rod being able to be in an arbitrary angular position around a material axis of the pupil line setting rod; the pupil line setting rod being able to be attached to the connection member so as to be at right angles to the material axis of the connection member and so as to be swingable or rotatable around the material axis of the connection member; the median line setting rod including a predetermined rod body having a noncircular section and a protruding member protruded from a peripheral surface of the rod body along the material axis of the rod body.

To record the patient's occlusal surface by use of the occlusal surface transfer instrument according to the eighth aspect of the present invention, first, the support for supporting the artificial tooth is formed. Moreover, if necessary, the gum line is aligned with the lip line with laser, and the occlusion molds of the upper and lower molar teeth on the opposite sides are made by two side bite materials.

Next, two side bite materials on which the occlusion molds have been impressed are bitten by the upper and lower molar teeth so as to correspond to the occlusion molds, respectively. In such state, the non-hardened bite material held by the bite material holding member disposed in one end of the connection member constituting the occlusal surface transfer instrument is bitten by the upper and lower jaw front teeth, and the pupil line setting rod attached to the connection member is fixed to the connection member in the position parallel to the patient' s pupil line.

Next, the median line setting rod is attached to the pupil line setting rod so that the median line setting rod agrees with the patient's median line and the specific median line, and fixed in such position.

Hereinafter, the procedure to record the occlusal surface reproducible by the occlusion molds of the patient's upper and lower jaw front teeth impressed on the bite material and the group of aesthetic information constituted of the pupil line, the median line, and the specific median line in the pupil line setting rod and the median line setting rod in a state in which the occlusal surface is associated with the information is similar to the above-described procedure using the occlusal surface transfer instrument according to the fourth aspect of the present invention, and therefore description thereof is omitted here.

It is to be noted that as described above a non-hardened impression material such as the silicon rubber impression material or the dental agar impression material is attached to the upper and lower jaw dentitions, respectively, at the appropriate time, for example, after the support is formed, and the upper and lower jaw dentition casts are made by the conventional method, respectively.

The pupil line setting rod is similar to that of the first aspect of the present invention, and the descriptions of the constitution, the typical example, or the functions and the effects are omitted here.

The median line setting rod is constituted so that the median line and the specific median line can be recorded, and the rod can be constituted by protruding a protruding member having a rectangular section on one ridge of the rod body having a triangular section along the material axis of the rod body.

Such median line setting rod may be formed into any constitution as long as the rod is attachable at right angles to the pupil line setting rod and in the arbitrary angular position around the material axis of the pupil line setting rod in the same manner as in the first aspect of the present invention. However, for example, when the pupil line setting rod is formed into a circular section, and the fitting portion attachable to the pupil line setting rod is attached to the peripheral surface of the median line setting rod, the median line setting rod in the attached state can be constituted so as to be slidable with respect to the pupil line setting rod and swingable or rotatable around the material axis of the pupil line setting rod. It is to be noted that since means for fixing the fitting portion to the arbitrary position of the pupil line setting rod is similar to that of the first aspect of the present invention, the description is omitted.

As described above, according to the occlusal surface transfer instrument of the eighth aspect of the present invention, the patient's pupil line can be recorded as the relative positional relation with respect to the bite material holding member or the connection member, that is, finally as the relative positional relation with respect to the occlusal surface of the upper and lower jaw dentitions in the pupil line setting rod.
The patient's median line and the specific median line can be recorded as the relative positional relation with respect to the median line setting rod in the median line setting rod, and it is further possible to make the artificial tooth for realizing the above-described aesthetic dentition.

In the articulator according to the ninth aspect of the present invention, the bottom and top plates are provided with the predetermined rod fitting recessed portions formed in the front end surfaces of the bottom and top plates so that the rod body of the median line setting rod constituting the occlusal surface transfer instrument according to any one of claims 33 to 37 is detachably fitted into the rod fitting recessed portions.
Moreover, the predetermined fitting grooves are formed in the inner surfaces of the rod fitting recessed portions so that the protruding member of the median line setting rod is detachably fitted into the fitting groove. The bottom and top plates are constituted so that the median line setting rod becomes perpendicular to the bottom plate when the rod body and the protruding member are fitted into the rod fitting recessed portions and the fitting grooves and that the median line setting rod is positioned and tentatively attached at the specific angle around the axial line perpendicular to the bottom plate.

Furthermore, the bottom and top plates are constituted so that the rod body and the protruding member are fitted into the rod fitting recessed portions and the fitting grooves, respectively, the lower-jaw dentition cast can be fixed to the upper surface of the bottom plate, and the upper-jaw dentition cast can be fixed to the lower surface of the bottom plate in the state in which the hardened bite material held by the bite material holding member constituting the occlusal surface transfer instrument according to any one of claims 33 to 37 is bitten by the front teeth of the upper and lower jaw dentition cast so as to correspond to an occlusion mold impressed on the bite material and in which two side bite materials impressed with the occlusion molds of the upper and lower molar teeth on the opposite sides are bitten by the opposite sides of the upper and lower jaw dentition casts so as to correspond to the occlusion molds.

Therefore, when the median line setting rod is fitted into the rod fitting recessed portion and the fitting groove, the recording of the patient's pupil line is transferred as the relation parallel to the bottom plate of the articulator to the articulator, and the recording of the specific median line is transferred as the relation perpendicular to the bottom plate of the articulator in the same manner as in the second aspect of the present invention. Therefore, the upper and lower jaw dentition casts can be fixed to the articulator so that the occlusal surface becomes the same as that in the patient's oral cavity in the three-dimensional coordinate. Therefore, it is possible to make the aesthetically superior artificial tooth in a state in which the occlusal surface in such oral cavity is reproduced on the articulator.

In other words, when the articulator according to the ninth aspect of the present invention is used together with the occlusal surface transfer instrument according to any one of claims 33 to 37, heretofore, the patient's pupil line, the median line, and the specific median line can be transferred to the articulator, as the relative positional relation with respect to the occlusal surface formed by the upper and lower jaw dentitions without using any face-bow based on Camper's plane. Moreover, it is possible to mount the upper and lower jaw dentition casts in the same three-dimensional absolute coordinate position as that of the dentition in the patient's oral cavity, and the conventional face-bow is not required at all.

Moreover, when the median line setting rod is fitted into the rod fitting recessed portion and the fitting groove, the median line setting rod having the perpendicular position with respect to the bottom plate can be tentatively detachably attached to the bottom and top plates. Therefore, the operability in mounting the upper and lower jaw dentition casts is enhanced, and the perpendicularity of the median line setting rod with respect to the bottom plate can be easily obtained.

Furthermore, the relative positional relation between the bottom plate and the top plate is retained before and after removing the bite material and two side bite materials after the upper and lower jaw dentition casts are fixed to the articulator, and the relative positional relation between the bottom and top plates is retained before and after the attaching/detaching or the reversing. Therefore, the relative positional relation between the lower and upper jaw dentition casts does not change even after the bite material and two side bite materials are removed.

Therefore, it is possible to make the artificial tooth in the relative positional relation in which normal occlusion is performed. Moreover, it is possible to check as needed whether or not the normal occlusion is performed during the making of the artificial tooth, even when the top plate is attached or rotated to its former state during the making of the artificial tooth.

Since the bottom plate, the top plate, the support mechanism, the modification of the support mechanism, and the functions and effects are similar to those of the articulator according to the second aspect of the present invention, the description thereof is omitted here.

Here, it is preferable to form beforehand the median line setting rod and the rod fitting recessed portion so that the pupil line setting rod turns to the front surface of the articulator, when the median line setting rod is fitted into the rod fitting recessed portion and the fitting groove.

According to such constitution, when the median line setting rod is fitted into the rod fitting recessed portion and the fitting groove, the front surfaces of the upper and lower jaw dentition casts agree with the front surface of the articulator.

Therefore, when the upper and lower jaw dentition casts are viewed from the front surface of the articulator, the upper and lower jaw dentition casts are viewed from the front, and it is therefore possible to make the artificial tooth more exactly.

Moreover, when the pupil line reference lines parallel to the bottom plate are disposed in the front end surfaces of the top and bottom plates, respectively, the occlusal surface is determined based on such pupil line reference lines, and the artificial tooth can be made horizontally symmetrically on the basis of the pupil line reference lines. Therefore, the operability in making the artificial tooth is enhanced, and the precision in making the artificial tooth is also enhanced.

Furthermore, when the median line setting rod is fitted into the rod fitting recessed portion and the fitting groove, the median line setting rod having the perpendicular posture with respect to the bottom plate is tentatively detachably attached to the bottom and top plates. Therefore, the operability in mounting the upper and lower jaw dentition casts is enhanced, and the perpendicularity of the median line setting rod with respect to the bottom plate can be easily obtained.

As to the rod fitting recessed portion and the fitting groove, for example, the median line setting rod of the occlusal surface transfer instrument according to any one of claims 33 to 37 is constituted of a rod body having a triangular section and a protruding member having a rectangular section protruded on one ridge of the main body, and constituted of a plastic rod. The rod fitting recessed portion and the fitting groove are formed so that the upper and lower jaw dentition casts turn to the front surface of the articulator, when the rod body and the protruding member are fitted into the rod fitting recessed portion and the fitting groove, respectively. Moreover, the width of the fitting groove may be set to be slightly smaller than that of the protruding member.

In the articulator according to the tenth aspect of the present invention, as described above, the occlusal surface setting mechanism is elevatably passed through the through hole formed in the vicinity of the front side of the top plate, and includes: an elevator rod passed through the through hole so as to be non-rotatable around a material axis thereof; an incisor guide member disposed at right angles to the material axis of the elevator rod in the vicinity of a lower end thereof and so as to protrude to a rear side of the bottom plate; and a pupil line guide member disposed at right angles to the material axis of the elevator rod and the incisor guide member in the vicinity of the lower end of the elevator rod.

Moreover, the bottom plate and the top plate are constituted so that the lower-jaw dentition cast can be fixed to the upper surface of the bottom plate and the upper-jaw dentition cast can be fixed to the lower surface of the top plate, respectively, so as to dispose the median line setting rod perpendicularly with respect to the bottom plate in a state in which the hardened bite material held by the bite material holding member constituting the occlusal surface transfer instrument according to any one of claims 1 to 5 is bitten by the front teeth of the upper and lower jaw dentition casts so as to correspond to the occlusion mold impressed on the bite material and in which two side bite materials impressed with the occlusion molds of the upper and lower molar teeth on the opposite sides are bitten by the opposite sides of the upper and lower jaw dentition casts so as to correspond to the occlusion molds.

Therefore, when the median line setting rod of the occlusal surface transfer instrument according to the first aspect of the present invention is applied to the articulator so as to be perpendicular to the bottom plate of the articulator according to the tenth aspect of the present invention, the recording of the patient's pupil line is transferred to the articulator, as the relation parallel to the bottom plate of the articulator according to the tenth aspect of the present invention. The recordings of the patient's median line and the specific median line are transferred to the articulator, as the relation perpendicular to the bottom plate of the articulator according to the tenth aspect of the present invention.

Therefore, the upper and lower jaw dentition casts can be fixed to the articulator so that the occlusal surface becomes the same as that in the patient's oral cavity in the three-dimensional coordinate. Therefore, it is possible to make the aesthetically superior artificial tooth in a state in which the occlusal surface in such oral cavity is reproduced on the articulator.

In other words, when the articulator according to the tenth aspect of the present invention is used together with the occlusal surface transfer instrument according to any one of claims 1 to 5, heretofore, the patient's pupil line, the median line, and the specific median line can be transferred to the articulator, as the relative positional relation with respect to the occlusal surface formed by the upper and lower jaw dentitions without using any face-bow based on Camper's plane. Moreover, it is possible to mount the upper and lower jaw dentition casts in the same three-dimensional absolute coordinate position as that of the dentition in the patient's oral cavity, and the conventional face-bow is not required at all.

Moreover, the relative positional relation between the bottom and top plates is retained before and after removing the bite material and two side bite materials after the upper and lower jaw dentition casts are fixed to the articulator, and the relative positional relation between the bottom and top plates is retained before and after the attaching/detaching or the reversing. Therefore, the relative positional relation between the lower and upper jaw dentition casts does not change even after the bite material and two side bite materials are removed.

Therefore, it is possible to make the artificial tooth in the relative positional relation in which the normal occlusion is performed. Moreover, it is possible to check as needed whether or not the normal occlusion is performed during the making of the artificial tooth, even when the top plate is attached or rotated to its former state during the making of the artificial tooth.

Since the bottom plate, the top plate, the support mechanism, and the functions and effects are similar to those of the articulator according to the second aspect of the present invention, the description thereof is omitted here.

Here, to attach the upper and lower jaw dentition casts to the articulator, the occlusal surface transfer instrument is applied to the articulator according to the second aspect of the present invention so as to include the material axis of the median line setting rod in the same plane as that of the material axis of the incisor guide member, and dispose the pupil line setting rod in parallel with the pupil line guide member among the median line setting rod and the pupil line setting rod constituting the occlusal surface transfer instrument according to any one of claims 1 to 5.

In this case, the pupil line recorded in the pupil line setting rod is rerecorded in the pupil line guide member, and the median line and the specific median line recorded in the median line setting rod are rerecorded in the median line guide member.

Therefore, it is possible to make the artificial tooth so that the dentition is horizontal symmetrical on the basis of the pupil line guide member and the median line guide member after the upper and lower jaw dentition casts are attached in the above-described procedure and that a portion between two incisor constituting the dentition comes on an extended line of the incisor guide member. In addition, as compared with the second aspect of the present invention, the precision in making the artificial tooth is largely enhanced. Additionally, the operability in making the artificial tooth is also enhanced.

Moreover, when the occlusal surface transfer instrument is applied to the articulator according to the tenth aspect of the present invention in the above-described procedure, the upper and lower jaw dentition casts face the pupil line guide member in parallel with the member. When a line of vision is adjusted while the pupil line guide member is regarded as the front surface, or when the line of vision is adjusted in an extended direction of the incisor guide member, the upper and lower jaw dentition casts can be viewed from the front surface. The precision in making the artificial tooth is largely enhanced even in this respect.

It is to be noted that when the top and bottom plates are formed into the rectangular shapes, and the occlusal surface setting mechanism is constituted so that the pupil line guide member becomes parallel to the front edge portions of the top and bottom plates, the upper and lower jaw dentition casts are fixed to the articulator in a state in which the front surfaces of the casts agree with the front surface of the articulator. When the upper and lower jaw dentition casts are viewed from the front surface of the articulator, the same state as that in a case where the dentition in the oral cavity is viewed from the patient's front is reproduced.

In a case where the specific median line is regarded as a reference, the occlusal surface gradually becomes high inwardly from the front teeth, premolar teeth, and the molar in the oral cavity. Therefore, the artificial tooth may be made so as to reproduce this even in the upper or lower jaw dentition cast, while appropriately elevating and lowering the elevator rod depending on an artificial tooth type.

Moreover, as to two adjacent incisors, the artificial tooth may be made so that an adjacent boundary of the incisor comes on the extended line of the incisor guide member.
Additionally, even in this case, an operation is facilitated, when the height of the incisor guide member is matched with the position of the incisor by appropriately elevating and lowering the elevator rod.

The elevator rod may be constituted of, for example, a rectangular rod, and constituted so as to be passed elevatably through the through hole formed into the same sectional shape as that of the elevator rod in the vicinity of the front side of the top plate. Here, the elevator rod is preferably constituted so that the rod can be fixed at a desired height when the elevator rod is passed through the through hole.

When the occlusal surface transfer instrument according to any one of claims 1 to 5 is applied to the articulator according to the tenth aspect of the present invention, it is possible to attach the occlusal surface transfer instrument to the articulator by use of the appropriate jig. In this case, the median line setting rod grooves into which the median line setting rod constituting such occlusal surface transfer instrument are to be fitted are formed in the front end surfaces of the bottom and top plates. Moreover, each median line setting rod groove is set so that the median line setting rod becomes perpendicular to the bottom plate and the material axis of the rod and that of the incisor guide member are included in the same plane, when the median line setting rod is fitted into the median line setting rod grooves. In this case, an operation to transfer information on the occlusal surface to the articulator is completed simply by setting the pupil line setting rod in parallel with the pupil line guide member. This obviates the need for the operation to dispose the median line setting rod perpendicularly to the bottom plate or the operation to include the material axis of the median line setting rod in the same plane as that of the material axis of the incisor guide member.

It is to be noted that for example, the median line setting rod is constituted of the plastic rod having a circular section, and the width of the median line setting rod groove is set beforehand to be slightly smaller than the size of the outer diameter of the median line setting rod. In this case, when the median line setting rod is fitted into the median line setting rod groove, the median line setting rod is tentatively attached to the median line setting rod groove. Therefore, the operability in mounting the upper and lower jaw dentition casts is enhanced.

The incisor guide member is disposed at right angles to the material axis of the elevator rod and so as to protrude on the rear side of the bottom plate in the vicinity of the lower end of the elevator rod, and may be formed into any structure as long as it is possible to specify the portion between the adjacent incisors of the artificial tooth made based on the upper and lower jaw dentition casts fixed to the articulator. For example, the incisor guide member is constituted so as to be stretchable, and a tip of the member is formed to be sharp-pointed. In this case, the incisor guide member can be expanded and contracted so that the tip of the incisor guide member comes close to the front teeth of the upper and lower jaw dentition casts regardless of a distant length (length along a line parallel to the bottom plate) between a position where the upper and lower jaw dentition casts are attached and a position where the occlusal surface setting mechanism is disposed. Moreover, it is possible to make the artificial tooth so that the portion between the adjacent incisors comes on the sharp tip, and the precision in making the artificial tooth is enhanced more.

In other words, the position between the incisor can be exactly matched with the median line or the specific median line without reproducing horizontal lengths of the median line setting rod and the bite material holding member constituting the occlusal surface transfer instrument on the articulator.
Moreover, fluctuations of an occlusion position at a time when the bite material is bitten can be absorbed by the expansion and contraction of the incisor guide member.

The occlusal surface setting instrument according to the eleventh aspect of the present invention comprises: a predetermined median line guide member; an elevator member attached so as to be elevatable along the median line guide member; an incisor guide member protruded from the elevator member at right angles to the median line guide member; and a pupil line guide member attached near a center region thereof to the incisor guide member at right angles to a material axis of the incisor guide member and that of the median line guide member.

To apply such occlusal surface setting instrument according to the eleventh aspect of the present invention to the articulator according to any one of claims 20 to 23, after fixing the upper and lower jaw dentition casts to the above-described articulator by use of the occlusal surface transfer instrument according to any one of claims 15 to 19, the median line guiding protruding member constituting the median line guide member is fitted into the fitting grooves formed in the front end surfaces of the top and bottom plates of such articulator, respectively.

It is to be noted that in a case where the occlusal surface setting instrument according to the eleventh aspect of the present invention is lightweight, or the median line guiding protruding member is tightly fitted into the fitting groove, the median line guiding protruding member may be fitted into the fitting groove formed in the front end surface of at least one of the top and bottom plates of the articulator.

For example, when the artificial tooth of the upper-jaw dentition is made using the upper-jaw dentition cast, the occlusal surface setting instrument is attached to the top plate. When the artificial tooth of the lower-jaw dentition is made using the lower-jaw dentition cast, the occlusal surface setting instrument may be attached to the bottom plate.

In this case, it is not necessary to remove the occlusal surface setting instrument from the articulator every time the top plate is attached and detached or reversed in order to confirm the occlusion while the artificial tooth is made.

In the occlusal surface setting instrument according to the eleventh aspect of the present invention, the median line guiding protruding member of the median line guide member have the.same section shape as a protruding member of a median line setting rod constituting an occlusal surface transfer instrument according to any one of claims 15 to 19, the pupil line guide member is positioned to the median line guide member so that a disposing angle of the pupil line guide member to a protruding direction of the median line guiding protruding member is equal to that of the pupil line setting rod constituting the occlusal surface transfer instrument to the protruding direction of the protruding member.

On the other hand, since the pupil line setting rod is attached to the bite material holding member via the connection member, the directions of the upper and lower jaw dentition casts fixed to the articulator by use of the occlusal surface transfer instrument are determined by the disposing angle of the pupil line setting rod with respect to the protruding direction (direction of the fitting groove of the articulator) of the protruding member of the occlusal surface transfer instrument.

Therefore, when the pupil line guide member is positioned with respect to the median line guide member so that the disposing angle of the pupil line guide member with respect to the protruding direction of the median line guiding protruding member is equal to that of the pupil line setting rod with respect to the protruding direction of the protruding member, the direction of the pupil line guide member becomes the same as that of the pupil line setting rod reproduced at a time when the upper and lower jaw dentition casts are fixed.

That is, when the occlusal surface setting instrument is constituted beforehand as described above, the direction of the pupil line guide member with respect to the upper and lower jaw dentition casts becomes the same as that of the pupil line setting rod at the fixing time regardless of the direction in which the upper and lower jaw dentition casts are fixed to the articulator.

Therefore, the relative positional relation between the patient's pupil line, median line, and specific median line, and the occlusal surface in the oral cavity is exactly reproduced on the articulator, as the relative positional relation between the pupil line guide member and median line guide member, and the upper and lower jaw dentition casts. It is possible to make the artificial tooth with a high precision on the basis of the pupil line guide member and the median line guide member.

Specifically, it is possible to make the artificial tooth so that the upper and lower jaw dentitions are horizontal symmetrically on the basis of the pupil line guide member. It is to be noted that the occlusal surface gradually becomes high inwardly from the front teeth, the premolar teeth, and the molar in the oral cavity in a case where the specific median line is regarded as the reference. The occlusal surface can be exactly reproduced by the upper or lower jaw dentition cast while the height of the pupil line guide member is changed by appropriately elevating and lowering the elevator member along the median line guide member depending on the artificial tooth type.

Moreover, it is possible to make the artificial tooth of the incisors so that the extended line of the axial line of the incisor guide member extending from the median line guide member in an orthogonal direction falls between the incisors. Additionally, also in this case, the height of the incisor guide member can be matched with the position of the incisor by appropriately elevating and lowering the elevator member.

Here, the incisor guide member is protruded from the elevator member at right angles to the median line guide member, and may be formed into any structure as long as it is possible to specify the portion between the adjacent incisors of the artificial tooth made based on the upper and lower jaw dentition casts fixed to the articulator. However, when such incisor guide member is constituted to be stretchable, and the tip of the member is formed to be sharp-pointed, the incisor guide member can be expanded and contracted so that the tip of the incisor guide member comes close to the front teeth of the upper and lower jaw dentition casts regardless of the distant length (length along the line parallel to the bottom plate) between the position where the upper and lower jaw dentition casts are fixed and the position where the occlusal surface setting instrument is disposed.
Moreover, it is possible to make the artificial tooth so that the portion between the adjacent incisors comes on the sharp tip, and the precision in making the artificial tooth is enhanced more.

In other words, the position between the incisors can be exactly matched with the median line or the specific median line without reproducing the horizontal length between the median line setting rod and the bite material holding member constituting the occlusal surface transfer instrument on the articulator. Moreover, the fluctuations of an occlusion position at the time when the bite material is bitten can be absorbed by the expanding and contracting the incisor guide member.

The function of the occlusal surface setting instrument according to the twelfth aspect of the present invention is substantially similar to that of the occlusal surface setting instrument according to the eleventh aspect of the present invention, detailed description thereof is omitted here. The occlusal surface setting instrument according to the eleventh aspect of the present invention is constituted by attaching the elevator member so as to be elevatable along the median line guide member and protruding the incisor guide member from the elevator member at right angles to the median line guide member, whereas the occlusal surface setting instrument according to the twelfth aspect of the present invention is constituted by protruding the incisor guide member from the median line guide member at right angles to the material axis of the median line guide member.

In such constitution, the median line guide member is attached and detached with respect to the fitting groove of the articulator according to any one of claims 20 to 23 every time.

That is, in the occlusal surface setting instrument according to the eleventh aspect of the present invention, the heights of the pupil line guide member and the incisor guide member can be arbitrarily set by elevating and lowering the elevator member along the median line guide member. The occlusal surface setting instrument according to the twelfth aspect of the present invention is different in that the heights of the pupil line guide member and the incisor guide member can be arbitrarily set by changing the attaching/detaching height of the median line guide member.

The occlusal surface setting instruments according to the thirteenth and fourteenth aspects of the present invention are similar to those according to the eleventh and twelfth aspects of the present invention except that the sectional shape of the median line guide member is formed so as to be the same as that of the median line setting rod constituting the occlusal surface transfer instrument according to any one of claims 24 to 28. Since a difference between the occlusal surface setting instruments according to the thirteenth and fourteenth aspects of the present invention is similar to that between the occlusal surface setting instruments according to the eleventh and twelfth aspects of the present invention, descriptions of the inventions are omitted here.

Moreover, the occlusal surface setting instruments according to the fifteenth and sixteenth aspects of the present invention are similar to those according to the eleventh and twelfth aspects of the present invention except that the median line guide member is constituted of the predetermined median line guiding rod body and the median line guiding protruding member protruded from the peripheral surface of the median line guiding rod body along the material axis of the main body and that the sectional shape of the median line setting rod is formed so as to be the same as that of the median line setting rod constituting the occlusal surface transfer instrument according to any one of claims 33 to 37. Since a difference between the occlusal surface setting instruments according to the fifteenth and sixteenth aspects of the present invention is similar to that between the occlusal surface setting instruments according to the eleventh and twelfth aspects of the present invention, the descriptions of the inventions are omitted here.

The articulator according to the seventeenth aspect of the present invention comprises: the bottom plate to whose upper surface the lower-jaw dentition cast is fixed; the support mechanism stood in the vicinity of the rear edge portion of the bottom plate; and the top plate whose rear edge portion is detachably attached to the support mechanism or which is rotatably attached to the support mechanism so that the upper and lower sides can be reversed and to whose lower surface the upper-jaw dentition cast is fixed. Moreover, the top plate is directed frontwards and attached to the support mechanism in the cantilever form.

Here, the predetermined fitting grooves are formed beforehand in the front end surfaces of the bottom and top plates so that the protruding member of the median line setting rod constituting the occlusal surface transfer instrument according to any one of claims 15 to 19 is detachably fitted into the fitting grooves.

The bottom and top plates are constituted so that the protruding member is fitted into the fitting grooves, the lower-jaw dentition cast can be fixed to the upper surface of the bottom plate, and the upper-jaw dentition cast can be fixed to the lower surface of the top plate in a state in which the hardened bite material held by the bite material holding member constituting the occlusal surface transfer instrument is bitten by the front teeth of the upper and lower jaw dentition casts so as to correspond to the occlusion mold impressed on the bite material and in which two side bite materials impressed with the occlusion molds of the upper and lower molar teeth on the opposite sides are bitten by the opposite sides of the upper and lower jaw dentition casts so as to correspond to the occlusion molds.

The top plate and the support mechanism are constituted so that the relative positional relation between the bottom and top plates is retained before and after removing the bite material and two side bite materials after the attaching and that the relative positional relation between the bottom plate and the top plate is retained before and after the attaching/detaching or the reversing.

Therefore, when the protruding member of the median line setting rod is fitted into the fitting groove, the recording of the patient's pupil line is transferred as the relation parallel to the bottom plate of the articulator to the articulator, and the recording of the specific median line is transferred as the relation perpendicular to the bottom plate of the articulator to the articulator in the same manner as in the fourth aspect of the present invention. Therefore, the upper and lower jaw dentition casts can be fixed to the articulator so that the occlusal surface becomes the same as that in the patient's oral cavity in the three-dimensional coordinate. Therefore, it is possible to make the aesthetically superior artificial tooth in a state in which the occlusal surface in such oral cavity is reproduced on the articulator.

In other words, when the articulator according to the seventeenth aspect of the present invention is used together with the occlusal surface transfer instrument according to any one of claims 15 to 19, heretofore, the patient's pupil line, the median line, and the specific median line can be transferred to the articulator, as the relative positional relation with respect to the occlusal surface formed by the upper and lower jaw dentitions without using any face-bow based on Camper's plane. Moreover, it is possible to mount the upper and lower jaw dentition casts in the same three-dimensional absolute coordinate position as that of the dentition in the patient's oral cavity, and the conventional face-bow is not required at all.

Moreover, when the protruding member of the median line setting rod is fitted into the fitting groove, the median line setting rod having the perpendicular posture with respect to the bottom plate can be tentatively detachably attached to the bottom and top plates. Therefore, the operability in mounting the upper and lower jaw dentition casts is enhanced, and the perpendicularity of the median line setting rod with respect to the bottom plate can be easily obtained.

Furthermore, the relative positional relation between the bottom and top plates is retained before and after removing the bite material and two side bite materials after the upper and lower jaw dentition casts are fixed to the articulator, and the relative positional relation between the bottom and top plates is retained before and after the attaching/detaching or the reversing. Therefore, even after the bite material and two side bite materials are removed, the relative positional relation between the lower and upper jaw dentition casts does not change.

Therefore, it is possible to make the artificial tooth in the relative positional relation in which the normal occlusion is performed. Moreover, it is possible to check as needed whether or not the normal occlusion is performed during the making of the artificial tooth, even when the top plate is attached or rotated to its former state during the making of the artificial tooth.

Here, the top plate is provided with the occlusal surface setting mechanism elevatably passed through the through hole formed in the vicinity of the front side of the top plate. The occlusal surface setting mechanism includes: an elevator rod passed through the through hole so as to be non-rotatable around a material axis thereof; an incisor guide member disposed at right angles to the material axis of the elevator rod in the vicinity of a lower end thereof and so as to protrude to a rear side of the bottom plate; and a pupil line guide member disposed at right angles to the material axis of the elevator rod and the incisor guide member in the vicinity of the lower end of the elevator rod. Moreover, the bottom and top plates are constituted so that the median line setting rod is tentatively attached in a state in which the pupil line setting rod becomes parallel to the pupil line guide member, the median line setting rod becomes perpendicular to the bottom plate, and the material axis of the median line setting rod and that of the incisor guide member are included in the same plane, when the protruding member is fitted into the fitting groove.

In this case, in the articulator according to the seventeenth aspect of the present invention, when the upper and lower jaw dentition casts are fixed to the articulator by use of the occlusal surface transfer instrument according to any one of claims 15 to 19, the pupil line recorded in the pupil line setting rod is rerecorded in the pupil line guide member, and the median line and the specific median line recorded in the median line setting rod are rerecorded in the incisor guide member.

Therefore, it is possible to make the artificial tooth so that the dentition becomes horizontal symmetrical on the basis of the pupil line guide member after the upper and lower jaw dentition casts are attached in the above-described procedure. Moreover, it is possible to make the artificial tooth so that the extended line of the incisor guide member falls between two incisors constituting the dentition. In addition, as compared with the second aspect of the present invention, the precision in making the artificial tooth is largely enhanced, and additionally the operability in making the artificial tooth is also enhanced.

Moreover, when the occlusal surface transfer instrument is applied to the articulator according to the seventeenth aspect of the present invention in the above-described procedure, the upper and lower jaw dentition casts face the pupil line guide member in parallel with the member. When the line of vision is adjusted while the pupil line guide member is regarded as the front surface, or when the line of vision is adjusted in the extended direction of the incisor guide member, the upper and lower jaw dentition casts can be viewed from the front surface. The precision in making the artificial tooth is largely enhanced even in this respect.

It is to be noted that when the top and bottom plates are formed into the rectangular shapes, and the occlusal surface setting mechanism is constituted so that the pupil line guide member becomes parallel to the front edge portions of the top and bottom plates, the upper and lower jaw dentition casts are fixed to the articulator in a state in which the front surfaces of the casts agree with the front surface of the articulator. When the upper and lower jaw dentition casts are viewed from the front surface of the articulator, the same state as that in a case where the dentition in the oral cavity is viewed from the patient's front is reproduced.

In a case where the specific median line is regarded as the reference, the occlusal surface gradually becomes high inwardly from the front teeth, the premolar teeth, and the molar in the oral cavity. Therefore, the artificial tooth may be made so as to reproduce this even in the upper or lower jaw dentition cast, while appropriately elevating and lowering the elevator rod depending on the artificial tooth type.

Moreover, as to two adjacent incisors, the artificial tooth may be made so that the adjacent boundary of the incisor comes on the extended line of the incisor guide member.
Additionally, even in this case, the operation is facilitated, when the height of the incisor guide member is matched with the position of the incisor by appropriately elevating and lowering the elevator rod.

Here, in the articulator according to the seventeenth aspect of the present invention, when the upper and lower jaw dentition casts are fixed, the occlusal surface setting mechanism becomes an obstruction. Therefore, the mechanism is extracted from the through hole, and temporarily removed, but the occlusal surface setting mechanism passed through the through hole is constituted not to be rotated.

Therefore, the pupil line recorded in the pupil line setting rod is recorded in the pupil line guide member of the occlusal surface setting mechanism passed through the through hole after completion of a fixing operation, and the median line and the specific median line recorded in the median line setting rod are recorded in the incisor guide member. Even when the occlusal surface setting mechanism is temporarily removed, there is not any problem.

Since the occlusal surface setting mechanism is similar to that of the tenth aspect of the present invention, description thereof is omitted here. When the incisor guide member is constituted so as to be stretchable, and the tip of the member is formed to be sharp-pointed, the incisor guide member can be expanded and contracted so that the tip of the incisor guide member comes close to the front teeth of the upper and lower jaw dentition casts regardless of the distant length (length along the line parallel to the bottom plate) between the position where the upper and lower jaw dentition casts are fixed and the position where the occlusal surface setting mechanism is disposed.
Moreover, it is possible to make the artificial tooth so that the portion between the adjacent incisors comes on the sharp tip, and the precision in making the artificial tooth is enhanced more.

In other words, the position between the incisor can be exactly matched with the median line or the specific median line without reproducing the horizontal lengths of the median line setting rod and the bite material holding member constituting the occlusal surface transfer instrument on the articulator. Moreover, the fluctuations of the occlusion position at a time when the bite material is bitten can be absorbed by the expansion and contraction of the incisor guide member.

A constitution and functions and effects of the articulator according to the eleventh aspect of the present invention are substantially similar except that the predetermined rod fitting recessed portions are formed in the front end surfaces of the bottom and top plates so that the median line setting rod constituting the occlusal surface transfer instrument according to any one of claims 24 to 28 is detachably fitted into the recessed portions, and therefore description thereof is omitted here.

Moreover, a constitution and functions and effects of the articulator according to the nineteenth aspect of the present invention are substantially similar except that the predetermined rod fitting recessed portions are formed in the front end surfaces of the bottom and top plates so that the rod body of the median line setting rod constituting the occlusal surface transfer instrument according to any one of claims 33 to 37 is detachably fitted into the recessed portions and that the predetermined fitting grooves are formed in the inner surfaces of the rod fitting recessed portions so that the protruding member of the median line setting rod is detachably fitted into the grooves, and therefore description thereof is omitted here.

### Brief Description of the Drawings

[FIG. 1] is an exploded perspective view showing an occlusal surface transfer instrument according to a first embodiment;
[FIG. 2] is a front view showing a procedure at a time when patient's occlusion mold is sampled by use of the occlusal surface transfer instrument according to the first embodiment;
[FIG. 3] is a diagram in a case where the occlusal surface transfer instrument according to the first embodiment is attached to a patient, (a) is a front view, and (b) is a side view;
[FIG. 4] is a perspective view showing an articulator according to a second embodiment;
[FIG. 5] is a front view showing the articulator according to the second embodiment;
[FIG. 6] is a side view showing the articulator according to the second embodiment;
[FIG. 7] is a perspective view showing the articulator according to a modification;
[FIG. 8] is a flowchart showing a procedure of a method of making an artificial tooth for an upper-jaw dentition according to a third embodiment;
[FIG. 9] is a diagram showing an occlusal surface transfer instrument according to a fourth embodiment, (a) is an exploded perspective view, and (b) is a sectional view;
[FIG. 10] is a diagram showing an articulator according to the fourth embodiment, (a) is a perspective view, and (b) is a detailed sectional view in the vicinity of a front side of a top plate;
[FIG. 11] is a side view showing the articulator according to the fourth embodiment;
[FIG. 12] is a diagram showing an occlusal surface setting instrument according to the fourth embodiment, (a) is a perspective view, and (b) is a sectional view;
[FIG. 13] is a diagram showing a relation between the occlusal surface transfer instrument and the occlusal surface setting instrument according to the fourth embodiment, (a) is a sectional view of the occlusal surface setting instrument, and (b) is a sectional view of the occlusal surface transfer instrument;
[FIG. 14] is a front view showing a state in which the pupil line setting rod constituting the occlusal surface transfer instrument according to the fourth embodiment is attached to the patient;
[FIG. 15] is a diagram showing a state in which the occlusal surface transfer instrument according to the fourth embodiment is attached to the patient, (a) is a front view, and (b) is a side view;
[FIG. 16] is a front view showing a state in which the occlusal surface transfer instrument is attached to the articulator according to the fourth embodiment;
[FIG. 17] is a side view showing a state in which the occlusal surface transfer instrument is attached to the articulator according to the fourth embodiment;
[FIG. 18] is a front view showing a state in which the occlusal surface setting instrument is attached to the articulator according to the fourth embodiment;
[FIG. 19] is a detailed front view showing a periphery of a top plate main body in FIG. 18;
[FIG. 20] is a side view showing a state in which the occlusal surface setting instrument is attached to the articulator according to the fourth embodiment;
[FIG. 21] is a diagram showing a state in which an upper-jaw dentition cast is attached to a top plate main body constituting the articulator according to the fourth embodiment, (a) is an arrow view along line A-A in FIG. 17, and (b) is an arrow view along line B-B in FIG. 20;
[FIG. 22] is a diagram showing an occlusal surface transfer instrument according to a modification, (a) is a perspective view, (b) is a detailed plan view showing the vicinity of a bite material holding member, and (c) is a detailed side view showing the vicinity of the bite material holding member;
[FIG. 23] is a perspective view showing an articulator according to the modification;
[FIG. 24] is a perspective view showing the articulator according to the modification;
[FIG. 25] is a diagram showing the articulator according to the modification, (a) is a perspective view, and (b) is a detailed sectional view around a top plate main body;
[FIG. 26] is a diagram showing an occlusal surface setting instrument according to the modification, (a) is a perspective view, and (b) is a sectional view;
[FIG. 27] is a diagram showing the occlusal surface setting instrument according to the modification, (a) is a perspective view, and (b) is a sectional view;
[FIG. 28] is a looking-upward diagram (diagram in which one looks up at the above) showing the top plate main body constituting the articulator according to the fourth embodiment, (a) is a diagram showing a relative positional relation between an occlusal surface transfer instrument and an upper-jaw dentition cast or an articulator according to a modification, and (b) is a diagram showing a relative positional relation between an occlusal surface setting instrument and the upper-jaw dentition cast or the articulator according to the modification;
[FIG. 29] is a diagram showing an occlusal surface transfer instrument according to a fifth embodiment, (a) is an exploded perspective view, and (b) is a sectional view;
[FIG. 30] is a diagram showing an articulator according to the fifth embodiment, (a) is a perspective view, and (b) is a detailed sectional view around a top plate main body;
[FIG. 31] is a sectional view showing the articulator according to the fifth embodiment;
[FIG. 32] is a diagram showing an occlusal surface setting instrument according to the fifth embodiment, (a) is a perspective view, and (b) is a sectional view;
[FIG. 33] is a diagram showing a relation between the occlusal surface transfer instrument and the occlusal surface setting instrument according to the fifth embodiment, (a) is a sectional view of the occlusal surface setting instrument, and (b) is a sectional view of the occlusal surface transfer instrument;
[FIG. 34] is a perspective view showing an articulator according to a modification;
[FIG. 35] is a perspective view showing the articulator according to the modification;
[FIG. 36] is a diagram showing the articulator according to the modification, (a) is a perspective view, and (b) is a sectional view in the vicinity of a front side of a top plate main body;
[FIG. 37] is a diagram showing an occlusal surface setting instrument according to the modification, (a) is a perspective view, and (b) is a sectional view;
[FIG. 38] is a diagram showing the occlusal surface setting instrument according to the modification, (a) is a perspective view, and (b) is a sectional view;
[FIG. 39] is a looking-upward diagram (diagram in which one looks up at the above) showing the top plate main body constituting the articulator according to the fifth embodiment, (a) is a diagram showing a relative positional relation between an occlusal surface transfer instrument and an upper-jaw dentition cast or an articulator according to a modification, and (b) is a diagram showing a relative positional relation between an occlusal surface setting instrument and the upper-jaw dentition cast or the articulator according to the modification;
[FIG. 40] is a diagram showing an occlusal surface transfer instrument according to a sixth embodiment, (a) is a perspective view, and (b) is a sectional view;
[FIG. 41] is a diagram showing an articulator according to the sixth embodiment, (a) is a perspective view, and (b) is a sectional view in the vicinity of a front side of a top plate;
[FIG. 42] is a side view showing the articulator according to the sixth embodiment;
[FIG. 43] is a diagram showing an occlusal surface setting instrument according to the sixth embodiment, (a) is a perspective view, and (b) is a sectional view;
[FIG. 44] is a diagram showing a relation between the occlusal surface setting instrument and the occlusal surface transfer instrument according to the sixth embodiment, (a) is a sectional view of the occlusal surface setting instrument, and (b) is a sectional view of the occlusal surface transfer instrument;
[FIG. 45] is a perspective view showing an articulator according to a modification;
[FIG. 46] is a perspective view showing the articulator according to the modification;
[FIG. 47] is a diagram showing the articulator according to the modification, (a) is a perspective view, and (b) is a sectional view in the vicinity of a front side of a top plate main body;
[FIG. 48] is a diagram showing an occlusal surface setting instrument according to the modification, (a) is a perspective view, and (b) is a sectional view;
[FIG. 49] is a diagram showing the occlusal surface setting instrument according to the modification, (a) is a perspective view, and (b) is a sectional view;
[FIG. 50] is a looking-upward diagram (diagram in which one looks up at the above) showing the top plate main body constituting the articulator according to the sixth embodiment, (a) is a diagram showing a relative positional relation between an occlusal surface transfer instrument and an upper-jaw dentition cast or an articulator according to a modification, and (b) is a diagram showing a relative positional relation between an occlusal surface setting instrument and the upper-jaw dentition cast or the articulator according to the modification;
[FIG. 51] is a diagram showing an articulator according to a seventh embodiment, (a) is a perspective view, and (b) is a sectional view in the vicinity of a front side of a top plate;
[FIG. 52] is a side view showing the articulator according to the seventh embodiment;
[FIG. 53] is a side view showing a state in which an occlusal surface transfer instrument is attached to the articulator according to the seventh embodiment;
[FIG. 54] is a side view showing a state in which the occlusal surface transfer instrument is attached to the articulator according to the seventh embodiment;
[FIG. 55] is a plan view showing a state in which upper and lower jaw dentition casts are fixed to the articulator according to the seventh embodiment;
[FIG. 56] is a detailed sectional view showing the vicinity of a top plate of FIG. 55;
[FIG. 57] is a side view showing a state in which the upper and lower jaw dentition casts are fixed to the articulator according to the seventh embodiment;
[FIG. 58] is a diagram showing a state in which the upper-jaw dentition cast is attached to a top plate main body constituting the articulator according to the seventh embodiment, (a) is an arrow view along line C-C in FIG. 54, and (b) is an arrow view along line D-D in FIG. 57;
[FIG. 59] is a perspective view showing an articulator according to a modification;
[FIG. 60] is a perspective view showing the articulator according to the modification;
[FIG. 61] is a perspective view showing the articulator according to the modification;
[FIG. 62] is a diagram showing the articulator according to the modification, (a) is a perspective view, and (b) is a detailed sectional view in the vicinity of a front side of a top plate;
[FIG. 63] is a diagram showing the articulator according to the modification, (a) is a perspective view, and (b) is a sectional view of an occlusal surface setting mechanism;
[FIG. 64] is a looking-upward diagram (diagram in which one looks up at the above) showing the top plate main body constituting the articulator according to the modification, (a) is a diagram showing a relative positional relation between the occlusal surface setting mechanism and the top plate main body, and (b) is a diagram showing a relative positional relation between an occlusal surface transfer instrument and the upper-jaw dentition cast or the articulator;
[FIG. 65] is a diagram showing an articulator according to an eighth embodiment, (a) is a perspective view, and (b) is a sectional view in the vicinity of a front side of a top plate;
[FIG. 66] is a side view showing the articulator according to the eighth embodiment;
[FIG. 67] is a front view showing a state in which an occlusal surface transfer instrument is attached to the articulator according to the eighth embodiment;
[FIG. 68] is a side view showing a state in which the occlusal surface transfer instrument is attached to the articulator according to the eighth embodiment;
[FIG. 69] is a front view showing a state in which upper and lower jaw dentition casts are fixed to the articulator according to the eighth embodiment;
[FIG. 70] is a detailed front view showing the vicinity of a top plate of FIG. 69;
[FIG. 71] is a side view showing a state in which the upper and lower jaw dentition casts are fixed to the articulator according to the eighth embodiment;
[FIG. 72] is a diagram showing a state in which the upper-jaw dentition cast is attached to a top plate main body constituting the articulator according to the eighth embodiment, (a) is an arrow view along line E-E in FIG. 68, and (b) is an arrow view along line F-F in FIG. 71;
[FIG. 73] is a perspective view showing an articulator according to a modification;
[FIG. 74] is a diagram showing the articulator according to the modification, (a) is a perspective view, and (b) is a detailed sectional view in the vicinity of a front side of a top plate;
[FIG. 75] is a diagram showing the articulator according to the modification, (a) is a perspective view, and (b) is a sectional view showing an occlusal surface setting mechanism;
[FIG. 76] is a looking-upward diagram (diagram in which one looks up at the above) showing the top plate main body constituting the articulator according to the modification, (a) is a diagram showing a relative positional relation between the occlusal surface transfer instrument and an upper-jaw dentition cast or the articulator, and (b) is a diagram showing a relative positional relation between an occlusal surface setting mechanism and the upper-jaw dentition cast or the articulator;
[FIG. 77] is a diagram showing an articulator according to a ninth embodiment, (a) is a perspective view, and (b) is a sectional view in the vicinity of a front side of a top plate;
[FIG. 78] is a side view showing the articulator according to the ninth embodiment;
[FIG. 79] is a front view showing a state in which an occlusal surface transfer instrument is attached to the articulator according to the ninth embodiment;
[FIG. 80] is a side view showing a state in which the occlusal surface transfer instrument is attached to the articulator according to the ninth embodiment;
[FIG. 81] is a front view showing a state in which upper and lower jaw dentition casts are fixed to the articulator according to the ninth embodiment;
[FIG. 82] is a detailed front view showing the vicinity of a top plate of FIG. 81;
[FIG. 83] is a side view showing a state in which the upper and lower jaw dentition casts are fixed to the articulator according to the ninth embodiment;
[FIG. 84] is a diagram showing a state in which the upper-jaw dentition cast is attached to a top plate main body constituting the articulator according to the ninth embodiment, (a) is an arrow view along line G-G in FIG. 80, and (b) is an arrow view along line H-H in FIG. 83;
[FIG. 85] is a perspective view showing an articulator according to a modification;
[FIG. 86] is a diagram showing the articulator according to the modification, (a) is a perspective view, and (b) is a sectional view showing the vicinity of a front side of a top plate;
[FIG. 87] is a diagram showing the articulator according to the modification, (a) is a perspective view, and (b) is a sectional view showing an occlusal surface setting mechanism constituting the articulator;
[FIG. 88] is a looking-upward diagram (diagram in which one looks up at the above) showing the top plate main body constituting the articulator according to the modification, (a) is a diagram showing a relative positional relation between the occlusal surface transfer instrument and an upper-jaw dentition cast or the articulator, and (b) is a diagram showing a relative positional relation between an occlusal surface setting mechanism and the upper-jaw dentition cast or the articulator;
[FIG. 89] is a diagram showing an articulator according to a tenth embodiment, (a) is a perspective view, and (b) is a sectional view in the vicinity of a front side of a top plate;
[FIG. 90] is a side view showing the articulator according to the tenth embodiment;
[FIG. 91] is a front view showing a state in which an occlusal surface transfer instrument is attached to the articulator according to the tenth embodiment;
[FIG. 92] is a side view showing a state in which the occlusal surface transfer instrument is attached to the articulator according to the tenth embodiment;
[FIG. 93] is a front view showing a state in which upper and lower jaw dentition casts are fixed to the articulator according to the tenth embodiment;
[FIG. 94] is a detailed front view showing the vicinity of a top plate of FIG. 93;
[FIG. 95] is a side view showing a state in which the upper and lower jaw dentition casts are fixed to the articulator according to the tenth embodiment;
[FIG. 96] is a diagram showing a state in which the upper-jaw dentition cast is attached to a top plate main body constituting the articulator according to the tenth embodiment, (a) is an arrow view along line I-I in FIG. 92, and (b) is an arrow view along line J-J in FIG. 95;
[FIG. 97] is a perspective view showing an articulator according to a modification;
[FIG. 98] is a diagram showing the articulator according to the modification, (a) is a perspective view, and (b) is a sectional view showing the vicinity of a front side of a top plate;
[FIG. 99] is a diagram showing the articulator according to the modification, (a) is a perspective view, and (b) is a sectional view showing an occlusal surface setting mechanism constituting the articulator; and
[FIG. 100] is a looking-upward diagram (diagram in which one looks up at the above) of the top plate main body constituting the articulator according to the modification, (a) is a diagram showing a relative positional relation between the occlusal surface transfer instrument and an upper-jaw dentition cast or the articulator, and (b) is a diagram showing a relative positional relation between an occlusal surface setting mechanism and the upper-jaw dentition cast or the articulator; Description of Reference Numerals

1, 1' bite material
2, 102 bite material holding member
3 connection member
4 pupil line setting rod
5, 125, 225, 325 median line setting rod
6 insertion hole
7 inserting portion
10, 120, 120a, 170, 220, 220a, 320, 320a occlusal surface transfer instrument
11, 131 fitting portion
13 inserting portion fixing mechanism
14, 134 fitting portion fixing mechanism
25', 27' side bite material
50, 80, 140, 180, 190, 195, 240, 280, 290, 300, 340, 380, 390, 400, 600, 630, 640, 650, 660, 670, 700, 710, 720, 730, 740, 750, 760, 770, 780, 790, 810 articulator
51, 141, 196, 241, 301, 341, 441, 601, 641, 661, 721, 761, 801 bottom plate
52, 142, 197, 242, 302, 342, 442, 602, 642, 662, 682, 701, 709, 722, 742, 749, 762, 781, 789, 791, 802 top plate main body
53, 113 top plate base member
54, 144, 184, 198, 244, 284, 303, 344, 384, 444, 604, 634, 644, 654, 663, 702, 711, 723, 743, 751, 763, 782, 792, 803 top plate
56 height adjusting rod (support mechanism)
58a, 58b, 610a, 610b median line setting rod groove
59a, 59b, 203a, 203b pupil line reference line
60a, 60b median line reference line
71 upper-jaw dentition cast
72 lower-jaw dentition cast
73, 74 front teeth
75, 76, 77, 78 upper and lower molar teeth
91 rod hole
93 fixing mechanism
99 hinge
115 support rod (support mechanism)
135, 335 rod body
136, 336 protruding member
150a, 150b, 351a, 351b fitting groove
160, 160a, 200, 210, 260, 260a, 305, 306, 360, 360a, 500, 550 occlusal surface setting instrument
161, 361 median line guiding rod body
162, 362 median line guiding protruding member
163, 263, 363 median line guide member
164, 264, 364 elevator member
165, 193 incisor guide member
166 pupil line guide member
250a, 250b, 350a, 350b rod fitting recessed portion
612 elevator rod
613 pupil line guide member
614, 673 incisor guide member
615 through hole
620, 674 occlusal surface setting mechanism

### Best Mode for Carrying out the Invention

A mode for carrying out an occlusal surface transfer instrument, an articulator, an occlusal surface setting instrument, and a method of making artificial tooth by using of them according to the present invention will be described hereinafter with reference to the accompanying drawings.

(First Embodiment)

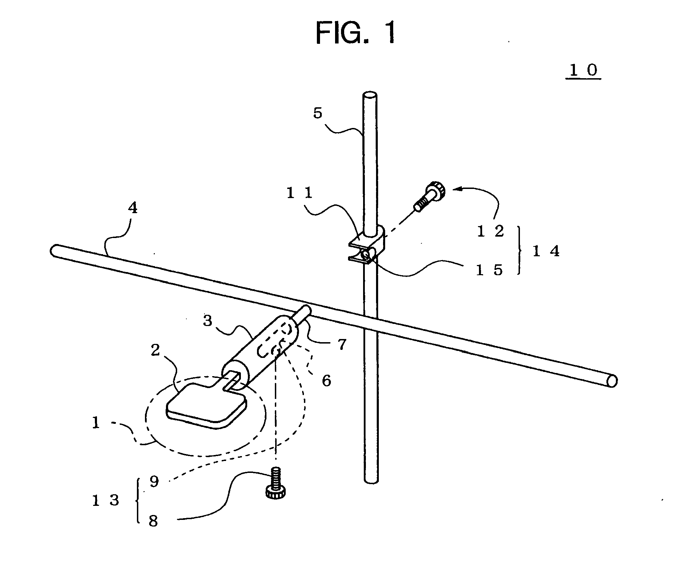

FIG. 1 is an exploded perspective view showing an occlusal surface transfer instrument according to the present embodiment. As shown in the drawing, an occlusal surface transfer instrument 10 according to the present embodiment is constituted of a bite material holding member 2 for holding a non-hardened bite material 1 in a bitable state, a connection member 3 the one end of which the bite material holding member 2 is disposed in, a pupil line setting rod 4 connected to other end of the connection member 3 and a median line setting rod 5, the median line setting rod 5 being attachable to the pupil line setting rod 4 at right angles and in an arbitrary angular position around a material axis of the pupil line setting rod 4.

the connection member 3 is provided with the insertion hole 6 having a circular sectional shape in the other end, and the pupil line setting rod 4 is provided with an inserting portion 7 which protrudes near the center region of the pupil line setting rod 4 and which has circular sectional shape, the inserting portion 7 being fitted into the insertion hole 6. The occlusal surface transfer instrument 10 is constituted so that the pupil line setting rod 4 can be swung or rotated around the material axis of the connection member 3 by inserting the inserting portion 7 into the insertion hole 6.

Furthermore, the connection member 3 is provided with an inserting portion fixing mechanism 13 so that the inserting portion 7 is fixed into the insertion hole 6 at an arbitrary angle to an axial line of the insertion hole 6.

The inserting portion fixing mechanism 13 is constituted of a first female screw hole 9 formed in the peripheral surface of the connection member 3 in so as to cross the insertion hole 6 at right angles and a first male screw 8 to be fitted into the first female screw hole 9.

The pupil line setting rod 4 is formed to a circular section and the median line setting rod 5 is provided with a fitting portion 11 in the peripheral surface of the median line setting rod 5. The fitting portion 11 is attachable to the pupil line setting rod 4 and is constituted so that the median line setting rod 5 can be slidable along the pupil line setting rod 4 and can be swung or rotated around the material axis of the pupil line setting rod 4 when the median line setting rod 5 is attached to the pupil line setting rod 4.

Furthermore, the fitting portion 11 is provided with a fitting portion fixing mechanism 14 so that the median line setting rod 5 can be fixed in a desired angular position around a material axis of the pupil line setting rod 4 in a state in which the fitting portion 11 is attached to the pupil line setting rod 4.

The fitting portion fixing mechanism 14 is constituted of a second female screw hole 15 formed in a back surface of the fitting portion 11 so as to cross the median line setting rod 5 at right angles and a second male screw 12 to be fitted into the second female screw hole 15.

A case where an artificial tooth for patient's upper-jaw dentition is made will be described in the present embodiment.

To record patient's occlusal surface by use of the occlusal surface transfer instrument 10 according to the present embodiment, first a dentist shaves patient's upper tooth with a turbine or the like to form a support for supporting the artificial tooth.

It is to be noted that in a case where it is difficult to utilize a self tooth, the self tooth is extracted, and instead, an implant is implanted into an upper-jaw bone to use the implant as the support.

Next, before, after, or simultaneously with the above-described support forming step, a gum line is aligned with a lip line with laser if necessary.

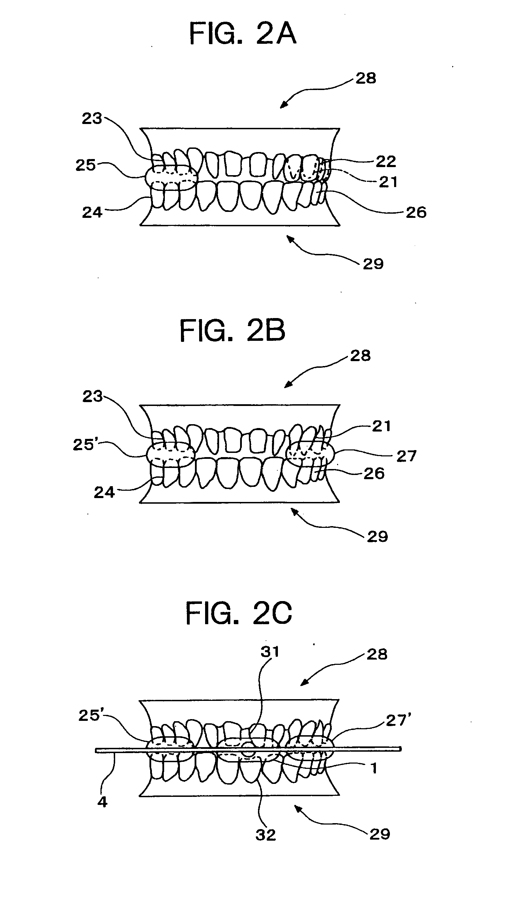

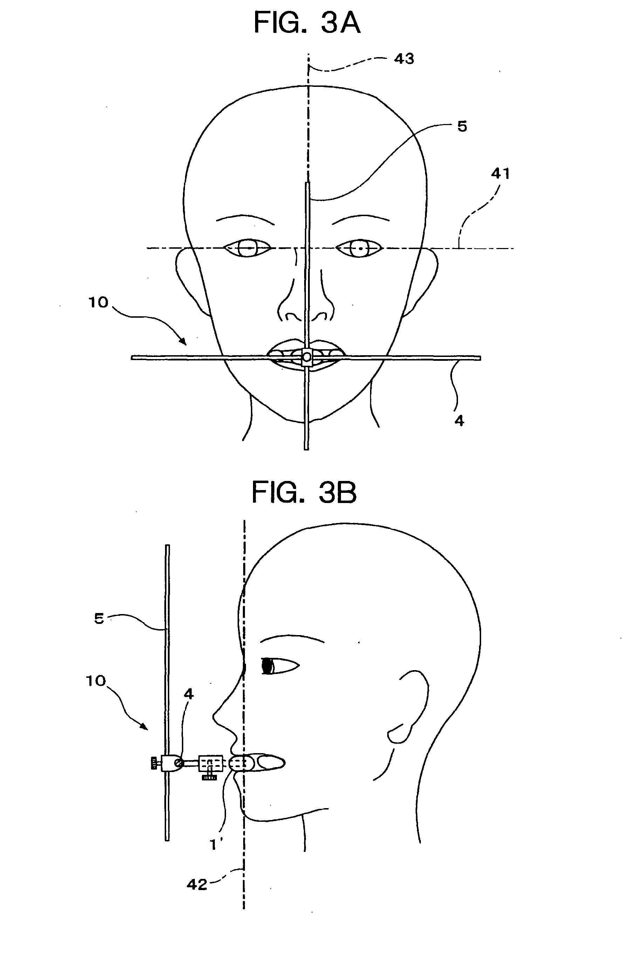

FIG. 2 is a front view of steps to make patient's occlusion mold by use of the occlusal surface transfer instrument 10 according to the present embodiment. FIG. 3 is a view when the occlusal surface transfer instrument 10 according to the present embodiment is attached to the patient, (a) shows a front view, and (b) shows a side view, respectively.

As seen from FIG. 2 (a), to sample the patient's occlusion mold by use of the occlusal surface transfer instrument 10 according to the present embodiment, first, tentative teeth 22 are inserted into supports 21 of left molar teeth respectively in an upper-jaw dentition 28. In such state, a non-hardened side bite material 25 is bitten between supports 23 of right upper-jaw dentition molar teeth and right lower-jaw dentition molar teeth 24 to make the occlusion mold of the upper and lower molar teeth 23, 24.

If it does in this way, in a state in which the tentative tooth 22 is engaged with the lower-jaw dentition molar tooth 26, for example, on a left side, in other words, the upper-jaw dentition 28 is normally engaged with the lower-jaw dentition 29 on the left side, the occlusion mold of the upper and lower molar teeth 23, 24 can be made on a right side that is the other side.

Next, as seen from FIG. 2(b), after hardening the side bite material 25 which has been bitten by the right-side upper and lower molar teeth 23,24, the tentative teeth 22 are removed from the left-side molar teeth supports 21, the side bite material 25' on which the occlusion mold of the right-side upper and lower molar teeth 23,24 has been impressed is bitten by the right-side upper and lower molar teeth 23,24 again so as to correspond to the occlusion mold. In such state, a non-hardened side bite material 27 is bitten by the support 21 of the left molar teeth and the left lower-jaw dentition molar teeth 26 to make the occlusion mold of the upper and lower molar teeth on the left side.

It is to be noted that the side bite material 25' bitten by the right-side upper and lower molar teeth 23, 24 is hardened. Therefore, even when the tentative teeth 22 covering the supports 21 of the left molar teeth are removed from the supports 21, a normal occlusion state of the upper-jaw dentition 28 and the lower-jaw dentition 29 is not hindered.

Next, as seen from FIG. 2(c), after hardening the side bite material 27 bitten by left-side upper and lower molar teeth 21, 26, the side bite material 25' on which the occlusion molds of the right-side upper and lower molar teeth 23, 24 have been impressed is bitten by the right-side upper and lower molar teeth 23, 24 so as to correspond to the occlusion molds. Moreover, a side bite material 27' on which the occlusion molds of the left-side upper and lower molar teeth 21, 26 have been impressed is bitten by the left-side upper and lower molar teeth 23, 24 so as to correspond to the occlusion molds. In such state, the non-hardened bite material 1 is bitten by an upper-jaw front tooth 31 and a lower-jaw front tooth 32. Such non-hardened bite material 1 is held beforehand by the bite material holding member 2 disposed in one end of the connection member 3 constituting the occlusal surface transfer instrument 10 by, for example, intrusion or the like.

It is to be noted that to allow the bite material 1 to be bitten, the bite material 1 is bitten by the patient's upper-jaw front teeth 31 and lower-jaw front teeth 32 so that the pupil line setting rod 4 constituting the occlusal surface transfer instrument 10 becomes parallel to the patient's face.

Next, as seen from FIG. 3, after the bite material 1 bitten by the upper-jaw front teeth 31 and the lower-jaw front teeth 32 is hardened, the inserting portion 7 is fitted into the insertion hole 6 of the connection member 3 so that the pupil line setting rod 4 is attached to the connection member 3. Accordingly the pupil line setting rod 4 is swung or rotated around the material axis of the connection member 3 so that the pupil line setting rod 4 is positioned in parallel with the patient's pupil line 41. Next, the first male screw 8 is fitted into the first female screw hole 9 in such position so that the pupil line setting rod 4 is fixed to the connection member 3.

It is to be noted that even if the bite material 1 is not completely hardened, complete hardening does not have to be waited for as long as the positioning by the swinging or rotating of the pupil line setting rod 4 does not change.

Here, for getting the aesthetic dentition, a dental arch is required to be parallel to the pupil line 41 connecting pupils each other. Additionally, the teeth directions from the gums are required to be parallel to the line 42 directed from the forehead to the jaw. Furthermore, a median line 43 which intersects at right angles the pupil line 41 at its middle point is required to be on a position between the adjacent incisors of the upper jaw.

Therefore, when the pupil line setting rod 4 is positioned as described above, the line parallel to the pupil line 41 is recorded in the pupil line setting rod 4, and one of conditions which determine patient's aesthetic occlusal surface is determined.

Next, while retaining a state in which a hardened bite material 1' held by the bite material holding member 2 is bitten by the upper-jaw front teeth 31 and the lower-jaw front teeth 32, the fitting portion 11 attached to the peripheral surface of the median line setting rod 5 constituting the occlusal surface transfer instrument 10 is attached to the pupil line setting rod 4 so that the median line setting rod 5 is disposed at right angles to the pupil line setting rod 4 along the patient's median line 43 and in parallel with the line 42 connecting the forehead to the jaw. In such state, the second male screw 12 is fitted into the second female screw 15 to thereby fix the median line setting rod 5 to the pupil line setting rod 4.

In this case, another condition which determines the patient's aesthetic occlusal surface is determined. That is, a line extending along the median line 43 and in parallel with the line 42 connecting the forehead to the jaw can be recorded in the median line setting rod 5.

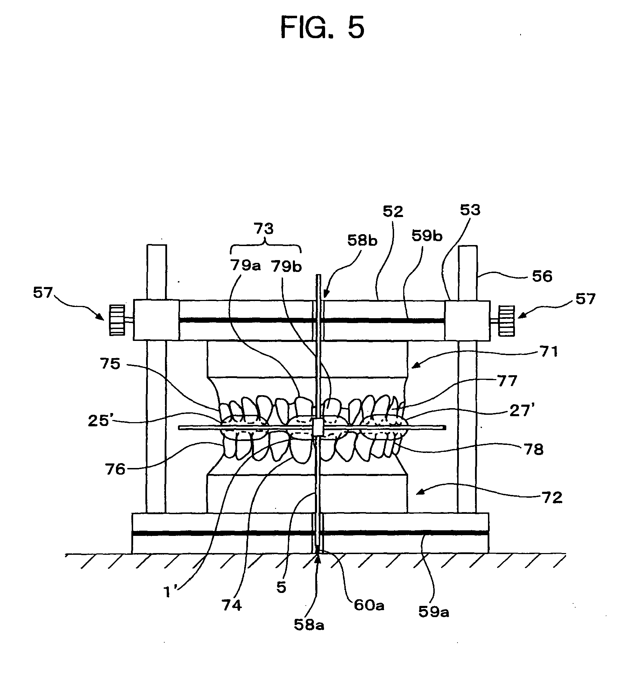

It is to be noted that a non-hardened impression material such as a silicon rubber impression material or a dental agar impression material is applied to the upper-jaw dentition 28 (see FIG. 2) and the lower-jaw dentition 29 (see FIG. 2), respectively, at an appropriate time, for example, after the support is formed, and the molds of the upper and lower jaw dentitions are made. An upper-jaw dentition cast 71 (see FIG. 5) and a lower-jaw dentition cast 72 (see FIG. 5) are made by a conventional method, respectively.

As described above, the occlusal surface transfer instrument 10 according to the present embodiment is constituted of the bite material holding member 2 for holding the non-hardened bite material 1 in a bitable state, the connection member 3 the one end of which the bite material holding member 2 is disposed in, the pupil line setting rod 4 connected to other end of the connection member 3 and the median line setting rod 5, the median line setting rod 5 being attachable to the pupil line setting rod 4 at right angles and in an arbitrary angular position around a material axis of the pupil line setting rod 4. Furthermore, the connection member 3 is provided with the insertion hole 6 having a circular sectional shape in the other end, and the pupil line setting rod 4 is provided with an inserting portion 7 which protrudes near the center region of the pupil line setting rod 4 and which has circular sectional shape, the inserting portion 7 being fitted into the insertion hole 6. The occlusal surface transfer instrument 10 is constituted so that the pupil line setting rod 4 can be swung or rotated around the material axis of the connection member 3 by inserting the inserting portion 7 into the insertion hole 6. In addition, the connection member 3 is provided with an inserting portion fixing mechanism 13 so that the inserting portion 7 is fixed into the insertion hole 6 at an arbitrary angle to an axial line of the insertion hole 6. Therefore, after the bite material 1 bitten by the patient's upper-jaw front teeth 31 and lower-jaw front teeth 32 is hardened, the pupil line setting rod 4 attached to the connection member 3 is swung or rotated around the material axis of the connection member 3. Accordingly, the pupil line setting rod 4 is positioned in parallel with the patient's pupil line 41, and it is possible to fix the pupil line setting rod 4 to the connection member 3 in such position.

Therefore, the line parallel to the patient's pupil line 41 is recorded in the pupil line setting rod 4, and one of the conditions which determine the patient's aesthetic occlusal surface is determined.

Moreover, according to the occlusal surface transfer instrument 10 of the present embodiment, the pupil line setting rod 4 is formed into a circular section and the fitting portion 11 attachable to the pupil line setting rod 4 is attached to the peripheral surface of the median line setting rod 5 so that the median line setting rod 5 can be slidable along the pupil line setting rod 4 and can be swung or rotated around the material axis of the pupil line setting rod 4 when the median line setting rod 5 is attached to the pupil line setting rod 4. Furthermore, the fitting portion 11 is provided with the fitting portion fixing mechanism 14 so that the median line setting rod 5 is fixed to a desired angular position around a material axis of the pupil line setting rod 4 in a state in which the fitting portion 11 is attached to the pupil line setting rod 4. Therefore, while retaining the state in which the hardened bite material 1' held by the bite material holding member 2 is bitten by the upper-jaw front tooth 31 and the lower-jaw front tooth 32, the fitting portion 11 attached to the peripheral surface of the median line setting rod 5 is attached to the pupil line setting rod 4 so that the median line setting rod 5 is disposed at right angles to the pupil line setting rod 4 along the patient's median line 43 and in parallel with the line 42 connecting the forehead to the jaw. In such state, it is possible to fix the median line setting rod 5 to the pupil line setting rod 4.

Therefore, another condition is determined among the conditions which determine the patient's aesthetic occlusal surface, that is, the line extending along the median line 43 and in parallel with the line 42 connecting the forehead to the jaw can be recorded in the median line setting rod 5. Consequently, according to the occlusal surface transfer instrument 10 of the present embodiment, it is possible to record the patient's aesthetic occlusal surface, and the occlusal surface adapted to the patient can be reproduced.

In the present embodiment, the first female screw hole 9 is formed in the peripheral surface of the connection member 3 SO as to cross the insertion hole 6 at right angles, and the first male screw 8 is fitted into the first female screw hole.
However, there is not any restriction as long as the inserting portion 7 of the pupil line setting rod 4 is fixed into the insertion hole at an arbitrary angle to the axial line of the insertion hole 6 of the connection member 3. For example, an adhesive may be injected into the insertion hole 6 to fix the inserting portion 7 into the insertion hole.

Moreover, in the present embodiment, the second female screw hole (not shown) is formed in the back surface of the fitting portion 11 so as to cross the median line setting rod 5 at right angles, and the second male screw 12 is fitted into the second female screw hole. However, there is not any restriction as long as the fitting portion 11 is fixed to the arbitrary position of the pupil line setting rod 4. For example, the fitting portion 11 may be fixed to the pupil line setting rod 4 by using the adhesive.

(Second Embodiment)

Next, a second embodiment will be described. First, substantially the same components as those of the above-described embodiment are denoted with the same reference numerals, and description thereof is omitted.

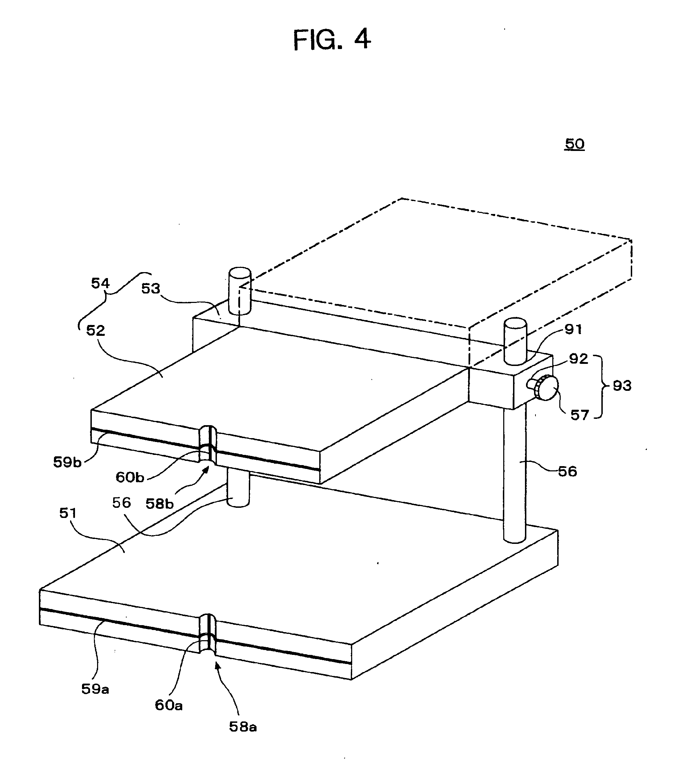

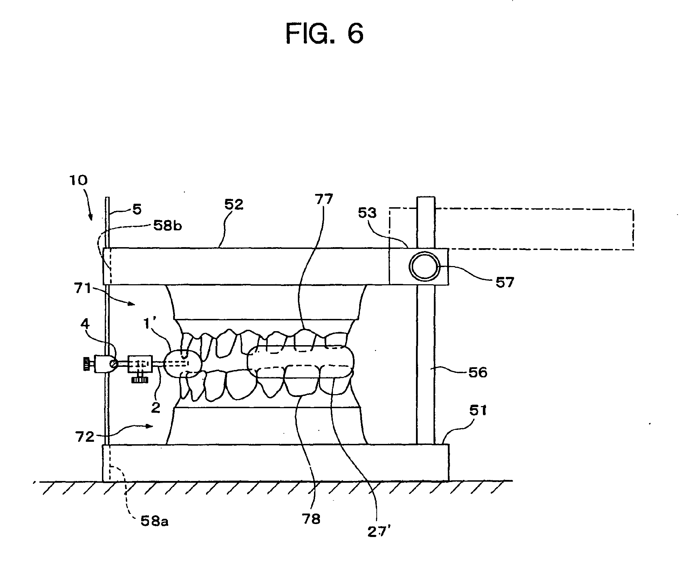

FIG. 4 shows a perspective view of an articulator 50 according to the present embodiment. FIGS. 5 and 6 show a front view and a side view of the articulator 50, respectively.

As seen from the drawing, the articulator 50 according to the present embodiment is constituted of: a bottom plate 51 to whose upper surface a lower-jaw dentition cast 72 is fixed; height adjusting rods 56, 56 as a support mechanism stood in the vicinity of a rear edge portion of the bottom plate; and a top plate 54 whose rear edge portion is rotatably attached to the height adjusting rods so that the upper and lower sides can be reversed and to whose lower surface an upper-jaw dentition cast 71 is fixed. The top plate 54 is directed frontwards and attached to the height adjusting rods 56 in a cantilever form.

Here, the bottom plate 51 and the top plate 54 are disposed facing each other in parallel with each other, and the front end surface of the top plate 54 is positioned on a surface perpendicular to the front end surface of the bottom plate 51. The lower-jaw dentition cast 72 can be fixed to the upper surface of the bottom plate 51, and the upper-jaw dentition cast 71 can be fixed to the lower surface of the top plate 54, respectively.

The bottom plate 51 and the top plate 54 can be constituted of, for example, rectangular steel plates having predetermined thicknesses. The upper surface of the bottom plate 51 and the lower surface of the top plate 54 may be finished by using a known technology such as rough surface working or emboss working so that the lower-jaw dentition cast 72 and the upper-jaw dentition cast 71 can be fixed via a predetermined bonding material such as plaster, respectively.

Moreover, a pair of height adjusting rods 56,56 stands in a state in which the rods are separated from each other along the rear edge portion of the bottom plate 51. The top plate 54 is constituted of: a top plate base member 53 whose opposite end portions are provided with two rod holes 91, 91 for passing the height adjusting rods 56, 56; and a top plate main body 52 connected to the top plate base member via a hinge (not shown) . According to such constitution, the top plate 54 as a whole can be elevated and lowered along the height adjusting rods 56,56. Moreover, the top plate main body 52 can be rotated around the top plate base member 53 to reverse the upper and lower sides of the top plate main body 52.

Furthermore, as to the top plate 54, the top plate main body 52 can be rotated around the top plate base member 53 as described above. However, when a rear end surface of the top plate main body 52 abuts on the top plate base member 53, the rotation of the top plate main body 52 is limited. In such state, the top plate main body 52 is directed horizontally frontwards with respect to the bottom plate 51, and constituted into the cantilever form.

Opposite end surfaces of the top plate base member 53 in a longitudinal direction are provided with fixing mechanisms 93,93 constituted of third female screw holes 92, 92 and third male screws 57, 57 to be fitted into the third female screw holes, and the top plate base member 53, and the top plate 54 as a whole can be attached to desired positions of the height adjusting rods 56, 56.

As described above, since the rotation of the top plate main body 52 is restricted to the position directed horizontally frontwards, and the top plate 54 as a whole can be attached to the desired positions of the height adjusting rods 56, 56, a relative positional relation between the bottom plate 51 and the top plate main body 52 can be retained before and after removing a bite material 1' and two side bite materials 25', 27' after the fixing. Moreover, a relative positional relation between the bottom plate 51 and the top plate main body 52 can be retained before and after the reversing.

In addition, median line setting rod grooves 58a, 58b into which a median line setting rod 5 is to be fitted are formed in front end surfaces of the bottom plate 51 and the top plate main body 52, respectively, and the median line setting rod grooves 58a, 58b are set to an equal depth so that the median line setting rod 5 becomes perpendicular to the bottom plate 51, when the median line setting rod 5 is fitted into the median line setting rod grooves 58a, 58b, respectively.

Moreover, inner surfaces of the median line setting rod grooves 58a, 58b are provided with median line reference lines 60a, 60b perpendicular to the bottom plate 51, respectively, and front end surfaces of the top plate main body 52 and the bottom plate 51 are provided with pupil line reference lines 59a, 59b at right angles to the median line reference lines 60a, 60b, respectively.

In the articulator 50 according to the present embodiment, the hardened bite material 1' held by a bite material holding member 2 constituting an occlusal surface transfer instrument 10 is bitten by front teeth 73 of the upper-jaw dentition cast 71 and front teeth 74 of the lower-jaw dentition cast 72 so as to correspond to the occlusion mold impressed on the bite material. Moreover, the side bite material 25' on which occlusion molds of right-side upper and lower molar teeth 75, 76 have been impressed, and the side bite material 27' on which occlusion molds of left-side upper and lower molar teeth 77, 78 have been impressed are bitten by opposite sides of the upper-jaw dentition cast 71 and the lower-jaw dentition cast 72, respectively, so as to correspond to the respective occlusion molds. In such state, the median line setting rod 5 constituting the occlusal surface transfer instrument 10 is fitted into the median line setting rod grooves 58a, 58b formed perpendicularly to the bottom plate in the respective front end surfaces of the bottom plate 51 and the top plate main body 52 to fix the lower-jaw dentition cast to the upper surface of the bottom plate, and fix the upper-jaw dentition cast to the lower surface of the top plate, respectively.

In this case, the median line setting rod 5 becomes perpendicular to the bottom plate 51, and a pupil line setting rod 4 constituting the occlusal surface transfer instrument 10 is at right angles to the median line setting rod 5. Therefore, the pupil line setting rod automatically becomes parallel to the bottom plate 51. In addition, patient's front surface, that is, a virtual surface having an equal distance from a forehead and a jaw can be transferred to the articulator, as a surface perpendicular to the bottom plate.

Next, in such positions, the third male screws 57, 57 are fitted into a pair of third female screw holes 92, 92 formed in the top plate base member 53, and the top plate base member 53 is fixed to the height adjusting rods 56, 56, respectively.

Next, the bite material 1' and two side bite materials 25', 27' bitten by the upper-jaw dentition cast 71 and the lower-jaw dentition cast 72 are removed, respectively.

Subsequently, an artificial tooth is made in accordance with a method of making the artificial tooth by use of the occlusal surface transfer instrument 10 and the articulator 50 as described in the third embodiment, and the incisors are made so that the median line just agrees between incisors 79a, 79b by use of the median line reference lines 60a, 60b.

Moreover, the other artificial teeth are made so that the occlusal surface is parallel to the pupil line reference lines 59a, 59b.

As described above, according to the articulator 50 of the present embodiment, in a state in which the bite material 1' and two side bite materials 25' , 27' are bitten by the upper-jaw dentition cast 71 and the lower-jaw dentition cast 72, the median line setting rod 5 is fitted into the median line setting rod grooves 58a, 58b formed in the front end surfaces of the top plate main body 52 and the bottom plate 51, respectively. The lower-jaw dentition cast 72 is fixed to the upper surface of the bottom plate 51, and the upper-jaw dentition cast 71 is fixed to the lower surface of the top plate main body 52, respectively. Therefore, it is possible to mount the upper-jaw dentition cast 71 and the lower-jaw dentition cast 72 in the same three-dimensional absolute coordinate positions as those of the dentitions in the patient's oral cavity.

Moreover, according to the articulator 50 of the present embodiment, after fixing of the lower-jaw dentition cast 72 and the upper-jaw dentition cast 71, the top plate 54 and the height adjusting rods 56, 56 are constituted so that a relative positional relation between the bottom plate 51 and top plate 54 is retained before and after removing of the bite material 1' and two side bite materials 25', 27' , and a relative positional relation between the bottom plate 51 and the top plate 54 is retained before and after reversing of the top plate 54.
Therefore, even after the bite material 1' and two side bite materials 25' , 27' are removed, an interval between the lower-jaw dentition cast 72 and the upper-jaw dentition cast 71 does not change.

Therefore, it is possible to make the artificial tooth in the relative positional relation in which the normal occlusion is performed. Moreover, even when the top plate main body 52 constituting the top plate 54 is rotated to its former state with respect to the top plate base member 53 in order to check the occlusion state as needed during the making of the artificial tooth, the relative positional relation between the lower-jaw dentition cast 72 and the upper-jaw dentition cast 71 does not change. Therefore, it is possible to check as needed whether or not the normal occlusion has been performed during the making of the artificial tooth.

Moreover, according to the articulator 50 of the present embodiment, since the predetermined pupil line reference lines 59a, 59b are disposed in parallel with the bottom plate 51 in the front end surfaces of the bottom plate 51 and the top plate main body 52. Therefore, when the occlusal surface is matched with the pupil line reference lines 59a, 59b in a case where the artificial tooth is made, it is possible to make a high-precision artificial tooth.

Furthermore, according to the articulator 50 of the present embodiment, the median line reference lines 60a, 60b are disposed in perpendicular to the bottom plate 51 on the inner surfaces of the median line setting rod grooves 58a, 58b formed in the front end surfaces of the bottom plate 51 and the top plate main body 52, respectively. Therefore, if only the artificial tooth is made so that the median line reference lines 60a, 60b are just brought between the incisor 79a, 79b, it is possible to make the artificial tooth so that the dentition is arranged more, in other words, the aesthetic dentition is obtained.

In the present embodiment, the predetermined pupil line reference lines 59a, 59b are disposed in parallel with the bottom plate 51 on the front end surfaces of the bottom plate 51 and the top plate main body 52, and the median line reference lines 60a, 60b are disposed in perpendicular to the bottom plate 51 on the inner surfaces of the median line setting rod grooves 58a, 58b formed in the front end surfaces of the bottom plate 51 and the top plate main body 52, respectively. However, according to circumstances, the pupil line reference lines 59a, 59b and the median line reference lines 60a, 60b can be omitted. In this case, the occlusal surface may be matched with the bottom plate 51, and a center of the median line setting rod grooves 58a, 58b may be brought between the incisor 79a, 79b.

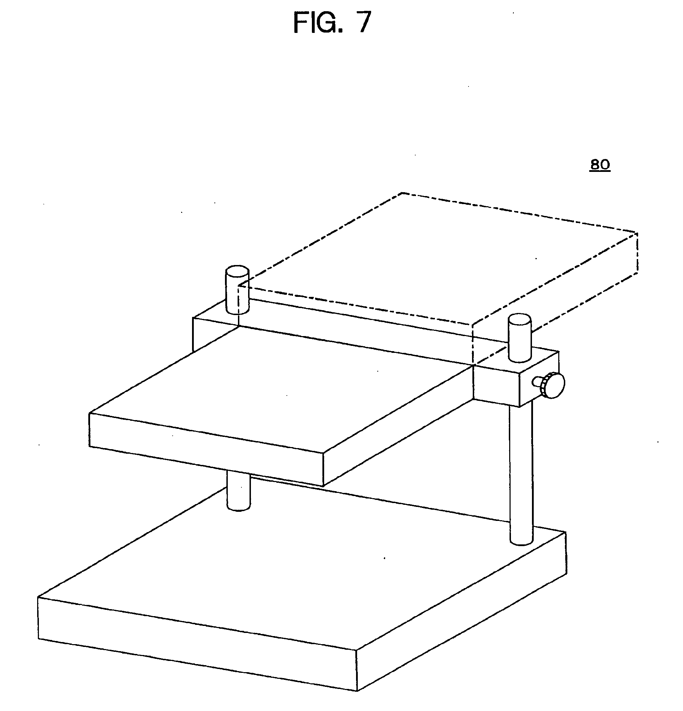

Moreover, in the present embodiment, the median line setting rod grooves 58a, 58b are formed in the front end surfaces of the bottom plate 51 and the top plate main body 52, respectively. However, as seen from the perspective view of an articulator 80 shown in FIG. 7, this may be omitted, and the lower-jaw dentition cast 72 and the upper-jaw dentition cast 71 may be fixed to the upper surface of the bottom plate 51 and the lower surface of the top plate main body 52, respectively, so that the median line setting rod 5 becomes perpendicular to the bottom plate 51.

(Third Embodiment)

Next, a third embodiment will be described. First, substantially the same components as those of the above-described embodiment are denoted with the same reference numerals, and description thereof is omitted.

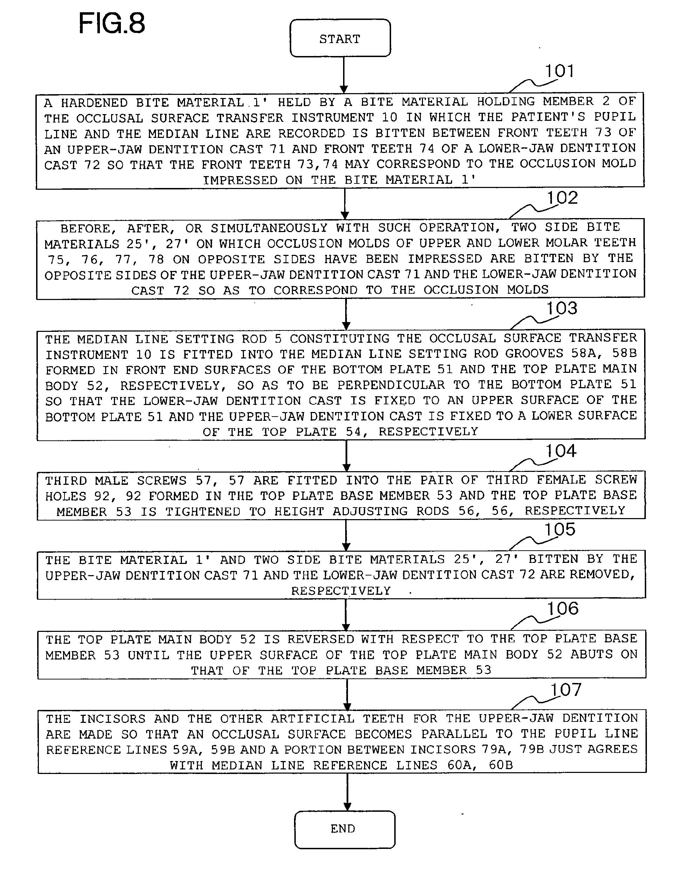

To make the artificial tooth for the upper-jaw dentition by use of an occlusal surface transfer instrument 10 according to the first embodiment and an articulator 50 according to the second embodiment, as shown in the flowchart of FIG. 8, first, a hardened bite material 1' held by a bite material holding member 2 of the occlusal surface transfer instrument 10 in which the patient's pupil line and the median line are recorded is bitten between front teeth 73 of an upper-jaw dentition cast 71 and front teeth 74 of a lower-jaw dentition cast 72 so that the front teeth 73,74 may correspond to the occlusion mold impressed on the bite material 1' (step 101).

Next, before, after, or simultaneously with such operation, two side bite materials 25', 27' on which occlusion molds of upper and lower molar teeth 75, 76, 77, 78 on opposite sides have been impressed are bitten by the opposite sides of the upper-jaw dentition cast 71 and the lower-jaw dentition cast 72 so as to correspond to the occlusion molds(step 102).

In such state, the median line setting rod 5 constituting the occlusal surface transfer instrument 10 is fitted into the median line setting rod grooves 58a, 58b formed in front end surfaces of the bottom plate 51 and the top plate main body 52, respectively, so as to be perpendicular to the bottom plate 51 so that the lower-jaw dentition cast is fixed to an upper surface of the bottom plate 51 and the upper-jaw dentition cast is fixed to a lower surface of the top plate 54, respectively (step 103).

In this case, since the median line setting rod 5 becomes perpendicular to the bottom plate 51, and the pupil line setting rod 4 constituting the occlusal surface transfer instrument 10 is at right angles to the median line setting rod 5, the pupil line setting rod 4 automatically becomes perpendicular to the bottom plate 51. In addition, patient's front surface, that is, a virtual surface having equal distances from a forehead and a jaw can be transferred as a surface perpendicular to the bottom plate 51 to the articulator 50.

Next, in this position, third male screws 57, 57 are fitted into the pair of third female screw holes 92, 92 formed in the top plate base member 53 and the top plate base member 53 is tightened to height adjusting rods 56, 56, respectively (step 104).

Next, the bite material 1' and two side bite materials 25', 27' bitten by the upper-jaw dentition cast 71 and the lower-jaw dentition cast 72 are removed, respectively (step 105).

Next, the top plate main body 52 is reversed with respect to the top plate base member 53 until the upper surface of the top plate main body 52 abuts on that of the top plate base member 53 (step 106).

In such state, the incisors and the other artificial teeth for the upper-jaw dentition are made so that an occlusal surface becomes parallel to the pupil line reference lines 59a, 59b and a portion between incisors 79a, 79b just agrees with median line reference lines 60a, 60b (step 107).

Here, to make an artificial tooth for an upper-jaw dentition by use of the above-described method, a conventional technology may be used, but since the most important factor for a person to make a natural smile is an upper-jaw dentition 28, especially occlusion with the lower-jaw dentition cast 72 is not checked, and an aesthetic upper-jaw dentition artificial tooth adapted to the patient is formed insistently.

As described above, according to the method of making the artificial tooth for the upper-jaw dentition in the present embodiment, in the state in which the bite material 1' and two side bite materials 25' , 27' are bitten by the upper-jaw dentition cast 71 and the lower-jaw dentition cast 72, the median line setting rod 5 is fitted into the median line setting rod grooves 58a, 58b formed in the front end surfaces of the top plate main body 52 and the bottom plate 51, respectively. The lower-jaw dentition cast 72 is fixed to the upper surface of the bottom plate 51, and the upper-jaw dentition cast 71 is fixed to the lower surface of the top plate main body 52, respectively.
Therefore, it is possible to mount the upper-jaw dentition cast 71 and the lower-jaw dentition cast 72 in the same three-dimensional absolute coordinate position as that of the dentition in patient's oral cavity.

Moreover, according to the method of making the artificial tooth for the upper-jaw dentition of the present embodiment, the top plate 54 and the height adjusting rods 56, 56 of the articulator 50 are constituted so that a relative positional relation between the bottom plate 51 and the top plate 54 is retained before and after the removing of the bite material 1' and two side bite materials 25', 27' and a relative positional relation between the bottom plate 51 and the top plate 54 is retained before and after the reversing of the top plate 54, after the fixing of the lower-jaw dentition cast 72 and the upper-jaw dentition cast 71. Therefore, even after the bite material 1' and two side bite materials 25', 27' are removed, the interval between the lower-jaw dentition cast 72 and the upper-jaw dentition cast 71 does not change at all.

Therefore, it is possible to make the artificial tooth for the upper-jaw dentition in the relative positional relation in which the normal occlusion is performed. Moreover, even when the top plate main body 52 constituting the top plate 54 is rotated to its former state with respect to the top plate base member 53 in order to check the occlusion state as needed during the making of the artificial tooth for the upper-jaw dentition, the relative positional relation between the lower-jaw dentition cast 72 and the upper-jaw dentition cast 71 does not change at all. Therefore, it is possible to check as needed whether or not the normal occlusion is performed during the making of the artificial tooth for the upper-jaw dentition.

Moreover, according to the method of making the artificial tooth for the upper-jaw dentition of the present embodiment, the predetermined pupil line reference lines 59a, 59b are disposed in parallel with the bottom plate 51 on the front end surfaces of the bottom plate 51 and the top plate main body 52 of the articulator 50. Therefore, in a case where the artificial tooth for the upper-jaw dentition is made, when the occlusal surface is matched with the pupil line reference lines 59a, 59b, it is possible to make the high-precision artificial tooth.

Furthermore, according to the method of making the artificial tooth for the upper-jaw dentition of the present embodiment, the median line reference lines 60a, 60b are disposed in perpendicular to the bottom plate 51 on the inner surfaces of the median line setting rod grooves 58a, 58b formed in the front end surfaces of the bottom plate 51 and the top plate main body 52 of the articulator 50, respectively. Therefore, when the incisors and the other artificial teeth for the upper-jaw dentition are made so that the median line reference lines 60a, 60b just fall between the incisors 79a, 79b, it is possible to make the artificial tooth for the upper-jaw dentition so as to obtain a more arranged dentition, in other words, an aesthetic dentition.

(Fourth Embodiment)

Next, a fourth embodiment will be described. It is to be noted that substantially the same components as those of the above-described embodiment are denoted with the same reference numerals, and description thereof is omitted.

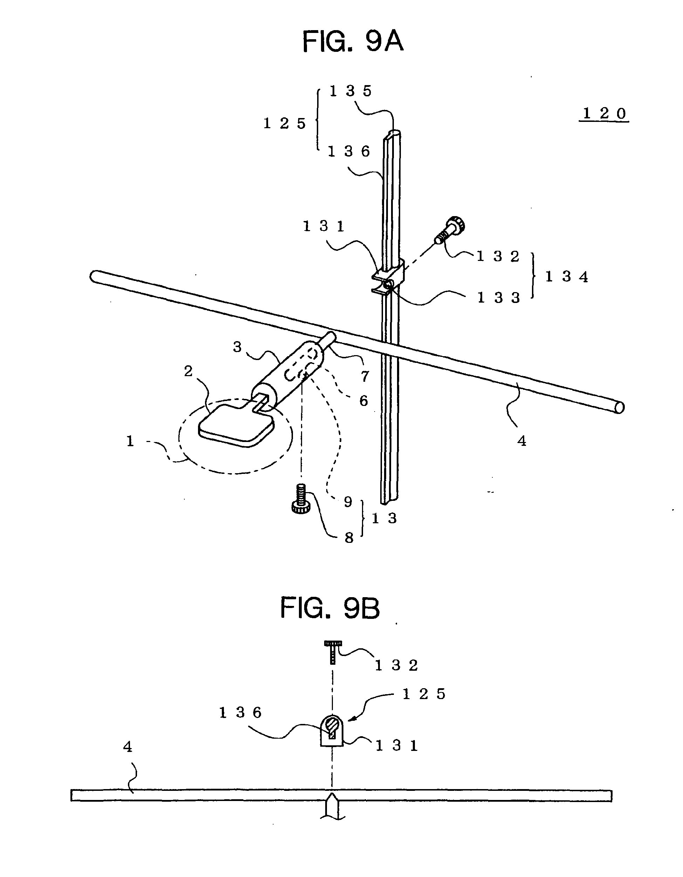

FIG. 9 is a diagram showing an occlusal surface transfer instrument according to the present embodiment, (a) is an exploded perspective view, and (b) is a sectional view. As seen from the drawing, an occlusal surface transfer instrument 120 according to the present embodiment is constituted of:
a bite material holding member 2 for holding a non-hardened bite material 1 in a bitable state; a connection member 3 the one end of which the bite material holding member 1 is disposed in; a pupil line setting rod 4 connected near a center region thereof to other end of the connection member 3; and a median line setting rod 125 which is attachable to the pupil line setting rod 4 at right angles and in an arbitrary angular position around a material axis of the pupil line setting rod 4. The pupil line setting rod 4 is constituted to be attached to the connection member 3 so as to be at right angles to the material axis of the connection member 3 and so as to be swingable or rotatable around the material axis of the connection member 3.

It is to be noted that since constitutions of the connection member 3 and the pupil line setting rod 4 have been already described in the first embodiment, description thereof is omitted here.

Here, the median line setting rod 125 includes: a rod body 135 having a circular section and having a diameter of about 3 mm and a protruding member 136 having a rectangular section and protruded from a peripheral surface of the rod body 135 along a material axis of the rod body 135, and either of the components is made of plastic.

The median line setting rod 125 is provided with a fitting portion 131 at a center region of the median line setting rod 125 and is constituted to be detachably attached to the pupil line setting rod 4 via the fitting portion 131.

The fitting portion 131 and the pupil line setting rod 4 are constituted so that the median line setting rod 125 can be slidable along the pupil line setting rod 4 and can be swung or rotated around the material axis of the pupil line setting rod 4 when the median line setting rod 125 is attached to the pupil line setting rod 4.

Here, the median line setting rod 125 and the fitting portion 131 are constituted so that a protruding direction of the protruding member 136 is at right angles with respect to the material axis of the pupil line setting rod 4, when the median line setting rod is attached to the pupil line setting rod 4. In other words, the median line setting rod 125 and the fitting portion 131 are constituted so that the material axis of the pupil line setting rod 4 crosses a protrusion plane including the protruding member of the median line setting rod 125 at right angles.

The fitting portion 131 is provided with a fitting portion fixing mechanism 134 so that the median line setting rod 125 can be fixed in a desired angular position around a material axis of the pupil line setting rod 4 in a state in which the fitting portion 131 is attached to the pupil line setting rod 4.

The fitting portion fixing mechanism 134 is constituted of a second female screw hole 133 formed in a back surface of the fitting portion 131 so as to cross the median line setting rod 125 at right angles and a second male screw 132 to be fitted into the second female screw hole 133.

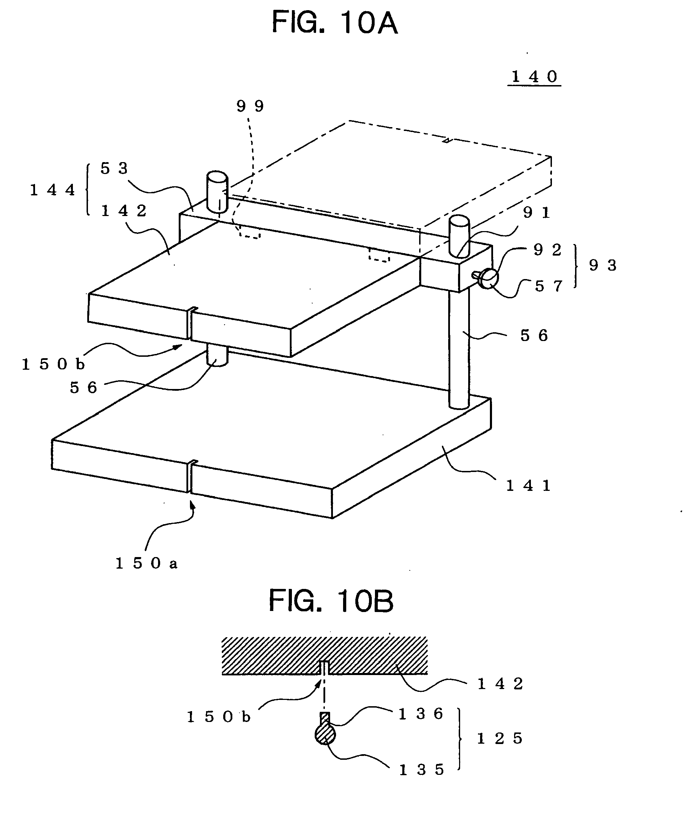

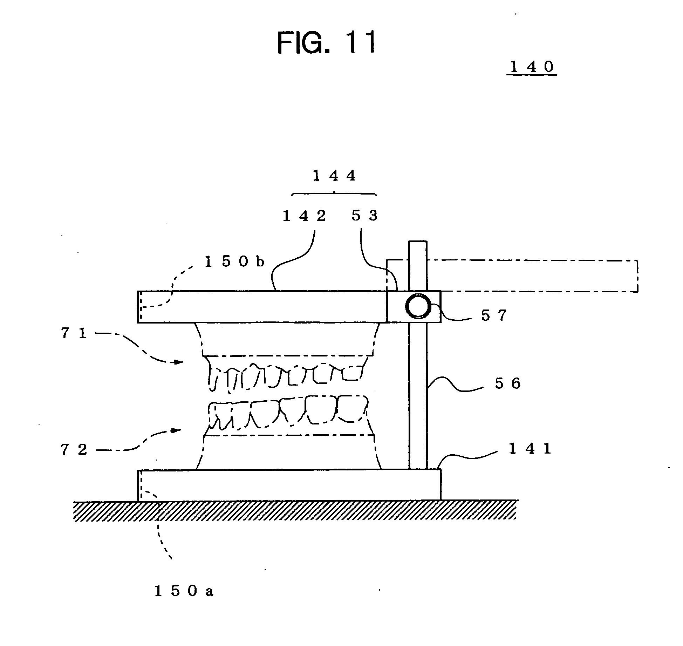

FIG. 10 is a diagram showing an articulator according to the present embodiment, (a) is a perspective view, and (b) is a detailed sectional view in the vicinity of a front side of the articulator. FIG. 11 shows a side view of the articulator according to the present embodiment. As seen from these drawings, an articulator 140 according to the present embodiment is constituted of: a bottom plate 141 to whose upper surface a lower-jaw dentition cast 72 is fixed; height adjusting rods 56, 56 as a support mechanism stood in the vicinity of a rear edge portion of the bottom plate; and a top plate 144 whose rear edge portion is rotatably attached to the height adjusting rods so that the upper and lower sides can be reversed and to whose lower surface an upper-jaw dentition cast 71 is fixed. The top plate 144 is directed frontwards and attached to the height adjusting rods 56 in a cantilever form.

Here, the bottom plate 141 and the top plate 144 are disposed facing each other in parallel with each other, and the front end surface of the top plate 144 is positioned on a surface perpendicular to the front end surface of the bottom plate 141. The lower-jaw dentition cast 72 can be fixed to the upper surface of the bottom plate 141, and the upper-jaw dentition cast 71 can be fixed to the lower surface of the top plate 144, respectively.

The bottom plate 141 and the top plate 144 can be constituted of, for example, rectangular steel plates having predetermined thicknesses. The upper surface of the bottom plate 141 and the lower surface of the top plate 144 may be finished by using a known technology such as rough surface working or emboss working so that the lower-jaw dentition cast 72 and the upper-jaw dentition cast 71 can be fixed via a predetermined bonding material such as plaster, respectively.

Moreover, a pair of height adjusting rods 56,56 stands in a state in which the rods are separated from each other along the rear edge portion of the bottom plate 141. The top plate 144 is constituted of: a top plate base member 53 whose opposite end portions are provided with two rod holes 91, 91 for passing the height adjusting rods 56, 56; and a top plate main body 142 connected to the top plate base member via a hinge 99,99.
According to such constitution, the top plate 144 as a whole can be elevated and lowered along the height adjusting rods 56,56. Moreover, the top plate main body 142 can be rotated around the top plate base member 53 to reverse the upper and lower sides of the top plate main body 142.

Furthermore, as to the top plate 144, the top plate main body 142 can be rotated around the top plate base member 53 as described above. However, when a rear end surface of the top plate main body 142 abuts on the top plate base member 53, the rotation of the top plate main body 142 is limited. In such state, the top plate main body 142 is directed horizontally frontwards with respect to the bottom plate 141, and constituted into the cantilever form.

Since the rotation of the top plate main body 142 is restricted to the position directed horizontally frontwards, and a relative positional relation between the bottom plate 141 and the top plate 144 can be retained before and after the reversing.

Moreover, opposite end surfaces of the top plate base member 53 in a longitudinal direction are provided with fixing mechanisms 93, 93, and the top plate base member 53, and the whole top plate 144 can be attached to desired positions of the height adjusting rods 56, 56. However, since such constitution has been already described in the second embodiment, the description is omitted.

Here, the articulator 140 according to the present embodiment is provided with fitting grooves 150a, 150b which are formed in front end surfaces of the bottom plate 141 and the top plate 144 and into which a protruding member 136 of the median line setting rod 125 is detachably fitted. Moreover, two fitting grooves 150a, 150b are formed along the same straight line perpendicular to the bottom plate 141 and constituted to be able to hold temporarily the median line setting rod 125 so that the median line setting rod 125 is perpendicular to the bottom plate 141 and the median line setting rod 125 is positioned at a specific angle around an axial line perpendicular to the bottom plate 141 when the protruding member 136 of the median line setting rod 125 is fitted into the fitting grooves 150a, 150b.

On the other hand, as described above, the median line setting rod 125 and the fitting portion 131 are constituted so that the protruding direction of the protruding member 136 is at right angles with respect to the material axis of the pupil line setting rod 4, when the median line setting rod 125 is attached to the pupil line setting rod 4.

Therefore, when such protruding member 136 is fitted into the fitting grooves 150a, 150b, the median line setting rod 125 and the pupil line setting rod 4 are disposed in parallel with a plane constituted by front edge portions of the bottom plate 141 and the top plate 144, in other words, the front surface of the articulator 140. When the articulator is used together with an occlusal surface setting instrument 160 described later, it is possible to make the artificial tooth with a high precision.

It is to be noted that to attach and detach the median line setting rod 125 with respect to the fitting grooves 150a, 150b, an outer dimension of the protruding member 136 and inner dimensions of the fitting grooves 150a, 150b are appropriately adjusted beforehand so that the median line setting rod 125 is tentatively attached with a predetermined strength at an attaching time, and is detached with such a force as to be manually pulled forwards at a detaching time.

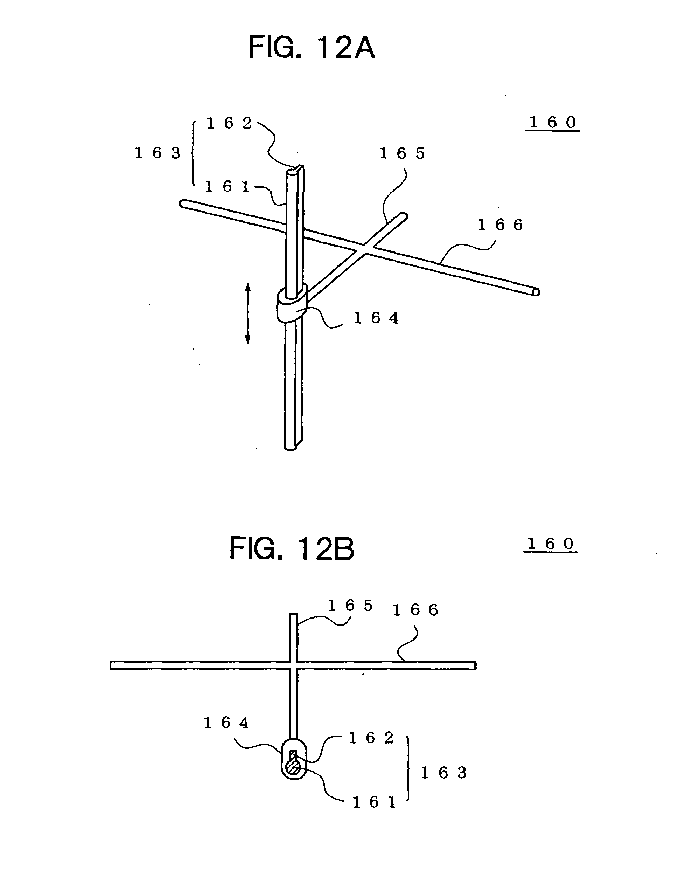

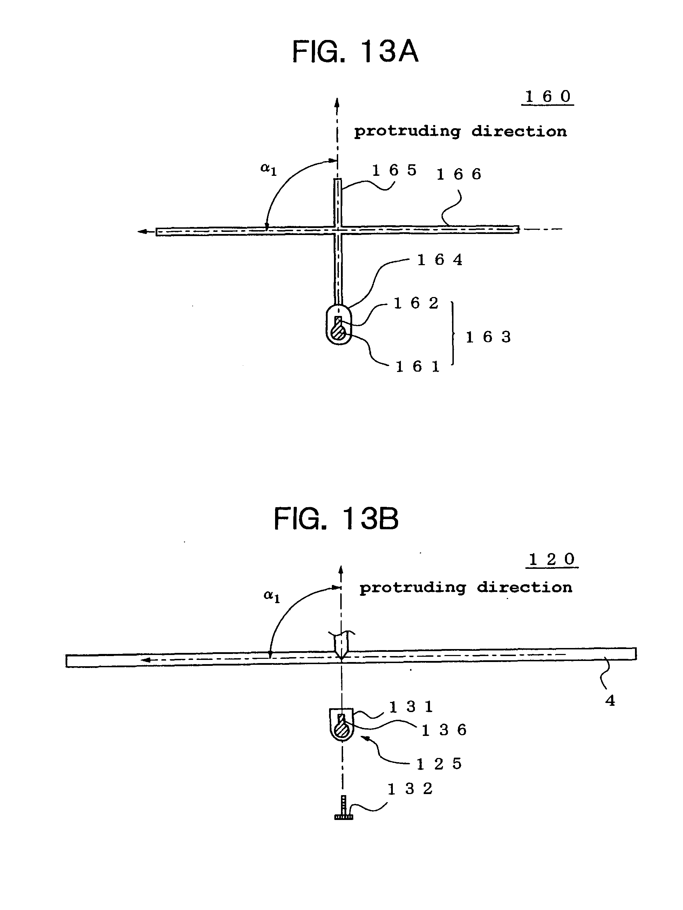

FIG. 12 is a diagram showing the occlusal surface setting instrument 160 according to the present embodiment, (a) is a perspective view, and (b) is a sectional view. FIG. 13 is a diagram showing a relation between the occlusal surface setting instrument 160 and the occlusal surface transfer instrument 120, (a) is a sectional view of the occlusal surface setting instrument 160, and (b) is a sectional view of the occlusal surface transfer instrument 120.

As seen from these drawings, the occlusal surface setting instrument 160 according to the present embodiment is constituted of: a predetermined median line guide member 163; an elevator member 164 attached so as to be elevatable along the median line guide member; an incisor guide member 165 protruded from the elevator member at right angles to the median line guide member 163; and a pupil line guide member 166 the vicinity of whose center is attached to the incisor guide member 165 at right angles to a material axis of the incisor guide member 165 and that of the median line guide member 163.

As means for fixing the elevator member 164 to a desired height of the median line guide member 163, a known technology may be approximately selected.

Here, the median line guide member 163 includes: a median line guiding rod body 161 having a circular section; and a median line guiding protruding member 162 which is protruded from a peripheral surface of the median line guiding rod body 161 along the material axis of the median line guiding rod body 161 and whose sectional shape is formed into the same sectional shape as that of the protruding member 136 of the median line setting rod 125 constituting the occlusal surface transfer instrument 120. Either of the components is formed of plastic.

Moreover, as seen from FIG. 13, the pupil line guide member 166 is positioned with respect to the median line guide member 163 so that a disposing angle α 1 of the pupil line guide member 166 with respect to a protruding direction of the median line guiding protruding member 162 is equal to that of the pupil line setting rod 4 with respect to the protruding direction of the protruding member 136. That is, the occlusal surface setting instrument 160 according to the present embodiment is constituted by protruding the incisor guide member 165 from the peripheral surface of the elevator member 164 at such disposing angle. Additionally, in the present embodiment, *α* 1 is set to 90° .

Next, there will be described a procedure for making an artificial tooth by use of the occlusal surface transfer instrument 120, the articulator 140, and the occlusal surface setting instrument 160 according to the present embodiment in accordance with an example of a case where the artificial tooth for the patient's upper-jaw dentition is made.

To make the artificial tooth for the patient's upper-jaw dentition in the above-described procedure, first, an occlusal surface in patient's oral cavity is recorded in the occlusal surface transfer instrument 120, in the form of patient's pupil line 41, median line 43, and specific median line 42. Next, the upper-jaw dentition cast 71 and the lower-jaw dentition cast 72 are fixed to the articulator 140 by use of the occlusal surface transfer instrument 120 in which these pupil line 41, median line 43, and specific median line 42 are recorded. Thereafter, the occlusal surface setting instrument 160 is attached to the articulator 140, and the artificial tooth for the upper-jaw dentition is made using the upper-jaw dentition cast 71 and the lower-jaw dentition cast 72 in such state.

A typical procedure will be described hereinafter in detail.

To record the patient's occlusal surface by use of the occlusal surface transfer instrument 120, first, a dentist shaves patient's upper teeth with turbine or the like to form a support for supporting the artificial tooth. It is to be noted that in a case where it is difficult to utilize a self tooth, the self tooth is extracted, and instead an implant is implanted in a bone of an upper jaw to use the implant as the support.

Next, in the same manner as in the first embodiment, occlusion molds of patient's right upper and lower molar teeth 23, 24 and left upper and lower molar teeth 21, 26 are made by means of two non-hardened side bite materials 25, 27. Next, occlusion molds of upper-jaw front tooth 31 and lower-jaw front tooth 32 are made by means of a non-hardened bite material 1 using the hardened side bite materials 25', 27'.

For example, immediately polymerized resins may be used as the side bite materials 25, 27, and a dental rubber elastic impression material (putty type) may be used as the bite material 1.

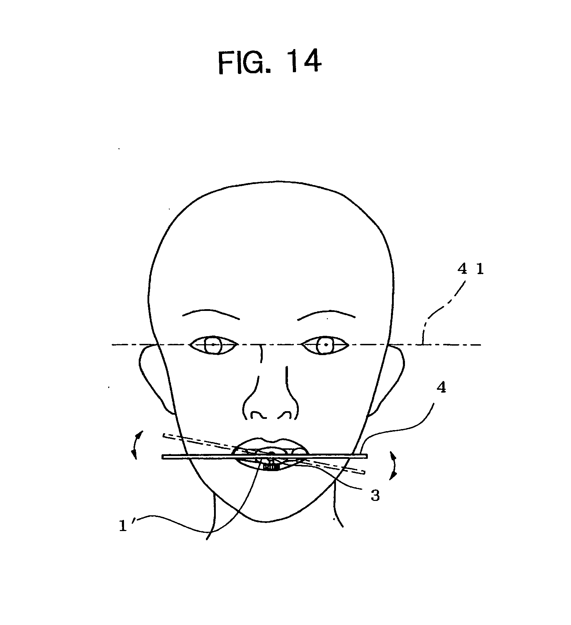

Next, after the bite material 1 is hardened as a bite material 1', as shown in FIG. 14, the pupil line setting rod 4 attached to the bite material holding member 2 (see FIG. 9) inserted into the bite material 1' via the connection member 3 is rotated around the material axis of the connection member, and accordingly the pupil line setting rod 4 is positioned in parallel with the patient's pupil line 41.

Next, when the first male screw 8 constituting the inserting portion fixing mechanism 13 is turned in the same manner as in the first embodiment, the inserting portion 7 of the pupil line setting rod 4 inserted into the insertion hole 6 of the connection member 3 is fixed in the above-described position (see FIG. 9).

It is to be noted that when the positioning by the swinging or rotating of the pupil line setting rod 4 does not change without completely hardening the bite material 1, it is not necessary to wait for the complete hardening.

One condition of the aesthetic dentition is that a dental arch, that is, the occlusal surface is parallel to the pupil line 41 which is a line connecting opposite pupils.

Therefore, when the pupil line setting rod 4 is positioned as described above, the pupil line 41 is recorded in the pupil line setting rod 4 as the relative positional relation of the upper-jaw dentition 28 and the lower-jaw dentition 29 with respect to the occlusal surface, and one of conditions that determine the patient's aesthetic occlusal surface is determined as described in the first embodiment.

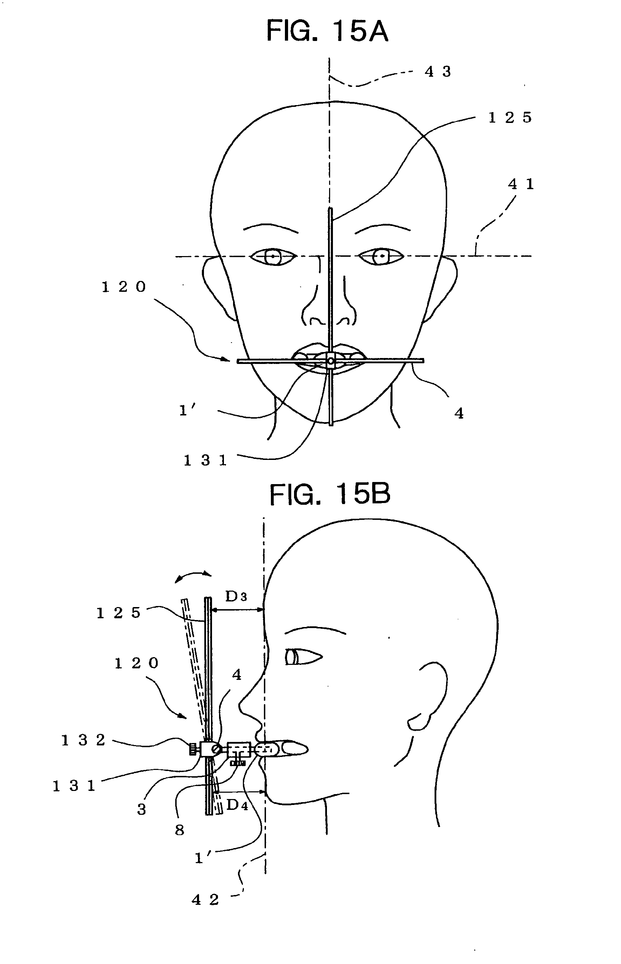

Next, while retaining a state in which the hardened bite material 1' is bitten by the upper-jaw front tooth 31 and the lower-jaw front tooth 32 as shown in FIG. 15 and in the same manner as in the first embodiment, the median line setting rod 125 is attached to the pupil line setting rod 4 via the fitting portion 131 so that the median line setting rod 125 agrees with the median line 43 and becomes parallel to the specific median line 42, when the patient's face is viewed from the front, that is, a distance D3 between the median line setting rod 125 and the forehead is equal to a distance D4 between the median line setting rod 125 and the jaw. Thereafter, the attached median line setting rod 125 is appropriately moved along the pupil line setting rod 4, or approximately rotated around a material axis of the pupil line setting rod to thereby position the pupil line setting rod.

Next, the second male screw 132 is fitted into a second female screw hole 133 (see FIG. 9) in such state to thereby fix the median line setting rod 125 to the pupil line setting rod 4.

Here, a second condition of the aesthetic dentition is that, as shown in FIG. 15, the median line 43 crossing a midpoint of the pupil line 41 at right angles is positioned between the upper-jaw adjacent incisors, when the patient's face is viewed from the front. An additional condition is that directions from the gums are parallel to the line connecting the forehead to the jaw, that is, the specific median line 42. However, when the median line setting rod 125 is attached to the pupil line setting rod 4 as described above, the median line 43 is recorded in the median line setting rod 125, and the specific median line 42 is recorded in the median line setting rod 125, as a relative positional relation with respect to the pupil line setting rod 4 in the same manner as in the median line 43. Therefore, a second condition is determined among the conditions which determine the patient's aesthetic occlusal surface.

It is to be noted that in a case where the bite material 1 is bitten by the upper-jaw front tooth 31 and the lower-jaw front tooth 32, needless to say, fluctuations are generated back and forth and right and left depending a portion of the bite material to be bitten, but such fluctuation does not raise any problem. Rather than that, the median line 43 or the specific median line 42 is recorded in the median line setting rod 125 regardless of the dentition state in the oral cavity, and the recording is transferred to the articulator 140, so that the aesthetically superior artificial tooth can be made.

Next, a non-hardened impression material such as a silicon rubber impression material or a dental agar impression material is attached to the upper-jaw dentition 28 and the lower-jaw dentition 29, respectively, at an appropriate time, for example, after the support is formed, and the molds of the upper and lower jaw dentitions are made. The upper-jaw dentition cast 71 and the lower-jaw dentition cast 72 are made by a conventional method, respectively.

Next, the upper-jaw dentition cast 71 and the lower-jaw dentition cast 72 are fixed to the articulator 140 by use of the occlusal surface transfer instrument 120.

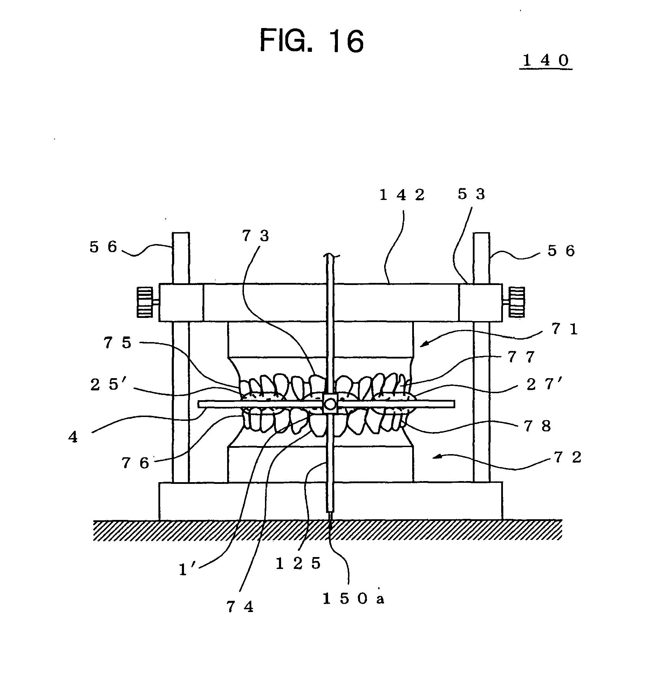

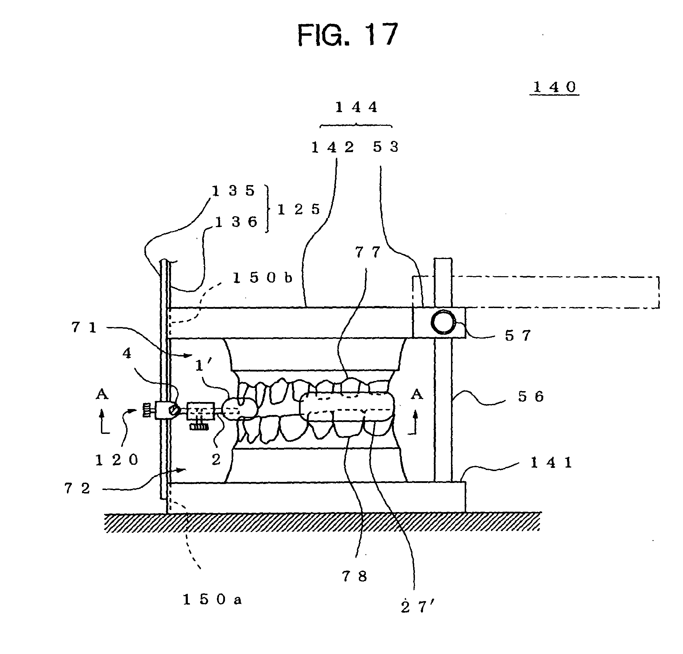

FIGS. 16 and 17 are a front view and a side view showing a state in which the occlusal surface transfer instrument 120 is attached to the articulator 140 according to the present embodiment.

As seen from these drawings, to fix the upper-jaw dentition cast 71 and the lower-jaw dentition cast 72 to the articulator 140 by use of the occlusal surface transfer instrument 120, first, the hardened bite material 1' held by the bite material holding member 2 of the occlusal surface transfer instrument 120 is bitten by the front teeth 73 of the upper-jaw dentition cast 71 and the front teeth 74 of the lower-jaw dentition cast 72 so as to correspond to the occlusion mold impressed on the bite material 1' . Moreover, a side bite material 25' on which the occlusion molds of the right-side upper and lower molar teeth 23, 24 (see FIG. 2) have been impressed, and a side bite material 27' on which the occlusion molds of the left-side upper and lower molar teeth 21, 26 (see FIG. 2) have been impressed are bitten by right upper and lower molar teeth 75, 76 and left upper and lower molar teeth 77, 78 of the upper-jaw dentition cast 71 and the lower-jaw dentition cast 72, respectively, so as to correspond to the occlusion mold impressed on the side bite material 25' and the side bite material 27' respectively. In such state, the protruding member 136 of the median line setting rod 125 constituting the occlusal surface transfer instrument 120 is fitted into the fitting grooves 150a, 150b formed in the front end surfaces of the bottom plate 141 and the top plate main body 142. Thereafter, the lower-jaw dentition cast 72 is fixed to the upper surface of the bottom plate 141, and the upper-jaw dentition cast 71 is fixed to the lower surface of the top plate main body 142 by use of plaster.

When the protruding member 136 of the median line setting rod 125 is fitted into the fitting grooves 150a, 150b as described above, the recording of the patient' s pupil line 41 is transferred to the articulator, as a relation parallel to the bottom plate 141 constituting the articulator 140. The recordings of the median line 42 and the specific median line 42 are transferred to the articulator, as the relation perpendicular to the bottom plate 141 constituting the articulator 140.

Especially, the articulator 140 is formed so that the fitting grooves 150a, 150b are perpendicular with respect to the front edge portions of the bottom plate 141 and the top plate 144. Therefore, the median line setting rod 125 and the pupil line setting rod 4 are attached so as to be parallel to the plane constituted by the front edge portions of the bottom plate 141 and the top plate 144, in other words, the front surface of the articulator 140.

To fix the lower-jaw dentition cast 72 and the upper-jaw dentition cast 71 to the upper surface of the bottom plate 141 and the lower surface of the top plate main body 142, respectively, the top plate 144 is elevated and lowered along the height adjusting rods 56, 56. Next, after the third male screws 57, 57 are operated to thereby fix the top plate 144 to a desired position, the protruding member 136 of the median line setting rod 125 is fitted into the fitting grooves 150a, 150b. In such state, the lower-jaw dentition cast 72 may be fixed to the upper surface of the bottom plate 141, and the upper-jaw dentition cast 71 may be fixed to the lower surface of the top plate main body 142, respectively, via plaster or the like.

It is to be noted that if necessary, a predetermined support member (not shown) stands disposed on the upper surface of the bottom plate 141, and weights of the upper-jaw dentition cast 71 and the lower-jaw dentition cast 72 may be supported by the support member until the plaster is solidified. In such case, the support member is buried in the plaster between the bottom plate 141 and the lower-jaw dentition cast 72.

Here, when immediately plastered resins are used as materials of the side bite materials 25, 27, and a dental rubber elastic impression material (putty type) is used as a material of the bite material 1 as described above, the dental rubber elastic impression material (putty type) has an adequate elasticity even after hardened. Therefore, there is not any possibility that the front teeth 73 of the upper-jaw dentition cast 71 are cracked in a case where the bite material 1' is bitten by the front teeth 73, 74 of the upper-jaw dentition cast 71 and the lower-jaw dentition cast 72 so as to correspond to the occlusion mold impressed on the bite material 1'.

Moreover, since the immediately polymerized resin becomes considerably hard after hardened, in a case where the side bite materials 25', 27' are bitten by the upper and lower molar teeth 75, 76 and the upper and lower molar teeth 77, 78 of the upper-jaw dentition cast 71 and the lower-jaw dentition cast 72 so as to correspond to the respective occlusion molds impressed on the side bite materials, respectively, even when the bite material 1' has the elasticity, there is not any possibility that the occlusion position of the upper-jaw dentition cast 71 and the lower-jaw dentition cast 72 deviates.

When the lower-jaw dentition cast 72 is fixed to the upper surface of the bottom plate 141, and the upper-jaw dentition cast 71 is fixed to the lower surface of the top plate main body 142, respectively, the bite material 1' and two side bite materials 25', 27' bitten by the upper-jaw dentition cast 71 and the lower-jaw dentition cast 72 are removed together with the occlusal surface transfer instrument 120 from the upper-jaw dentition cast 71 and the lower-jaw dentition cast 72, respectively.

Here, a relative positional relation between the bottom plate 141 and the top plate 144 is retained before and after removing the bite material 1' and two side bite materials 25', 27', and the relative positional relation between the bottom plate 141 and the top plate 144 is retained before and after reversing the top plate main body 142. Therefore, even after the bite material 1' and two side bite materials 25', 27' are removed, the relative positional relation between the upper-jaw dentition cast 71 and the lower-jaw dentition cast 72 does not change.

Next, the occlusal surface setting instrument 160 is attached to the articulator 140.

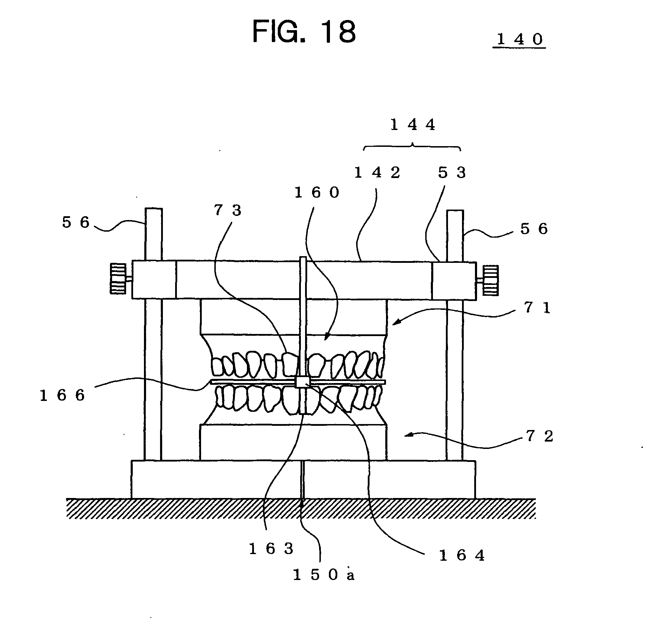

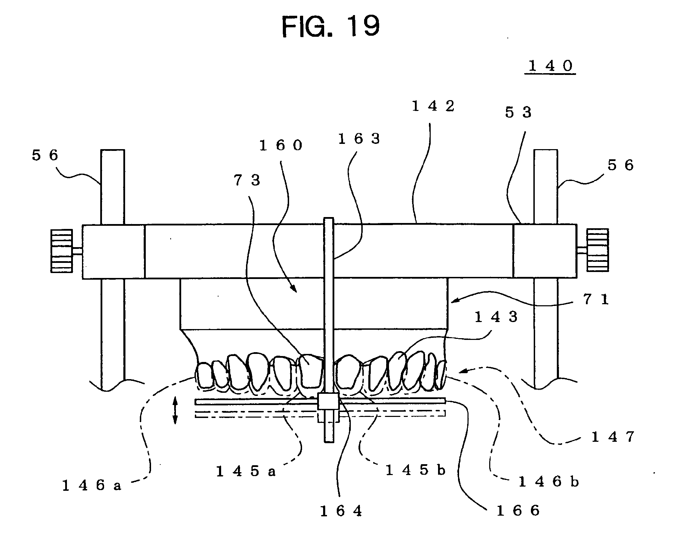

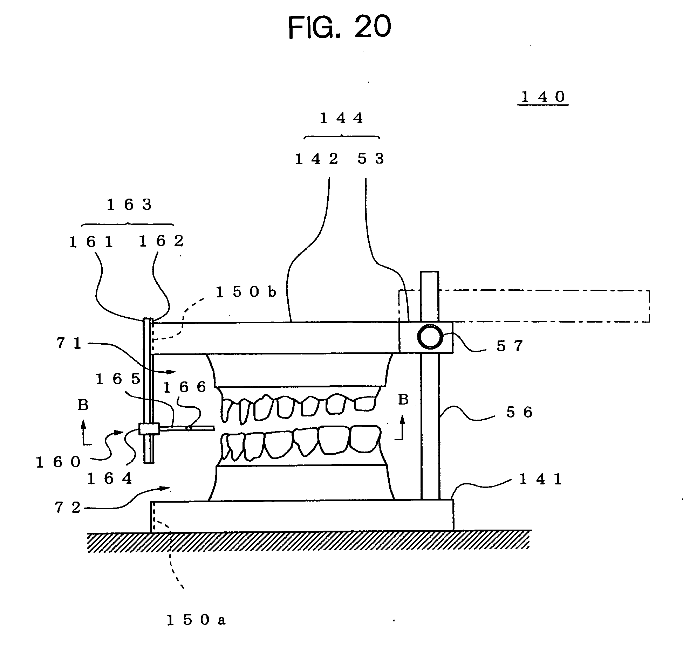

FIG. 18 is a front view showing a state in which the occlusal surface setting instrument 160 is attached to the articulator 140, FIG. 19 is a detailed front view showing a periphery of a top plate main body 142 in FIG. 18, and FIG. 20 is a side view showing a state in which the occlusal surface setting instrument 160 is attached to the articulator 140.

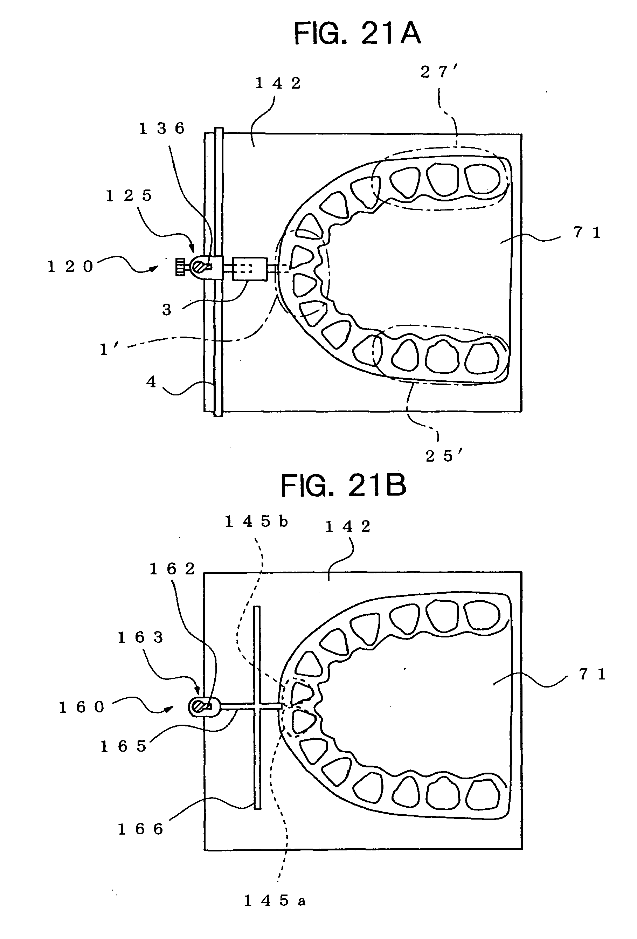

Moreover, FIG. 21 is a diagram showing a state in which an upper-jaw dentition cast 71 is attached to a top plate main body 142 constituting the articulator 140, (a) is an arrow view along line A-A in FIG. 17, and (b) is an arrow view along line B-B in FIG. 20.

As seen from these drawings, to attach the occlusal surface setting instrument 160 to the articulator 140 instead after the occlusal surface transfer instrument 120 is removed, the median line guiding protruding member 162 constituting the median line guide member 163 is fitted into the fitting groove 150b formed in the front end surface of the top plate main body 142.

Here, as well seen from FIG. 21, the occlusal surface setting instrument 160 is formed so that the sectional shape of the median line guiding protruding member 162 is the same as that of the protruding member 136 of the median line setting rod 125 constituting the occlusal surface transfer instrument 120.
Moreover, the pupil line guide member 166 is positioned with respect to the median line guide member 163 so that a disposing angle of the pupil line guide member 166 with respect to the protruding direction of the median line guiding protruding member 162 is equal to that of the pupil line setting rod 4 with respect to the protruding direction of the protruding member 136.

On the other hand, since the pupil line setting rod 4 is attached to the bite material holding member 2 via the connection member 3, the directions of the upper-jaw dentition cast 71 and the lower-jaw dentition cast 72 fixed to the articulator 140 by use of the occlusal surface transfer instrument 120 are determined by the disposing angle of the pupil line setting rod 4 with respect to protruding direction (direction of the fitting groove 150b of the articulator 140) of the protruding member 136 of the occlusal surface transfer instrument 120.

Therefore, in a case where the pupil line guide member 166 is positioned beforehand with respect to the median line guide member 163 so that the disposing angle of the pupil line guide member 166 with respect to the protruding direction of the median line guiding protruding member 162 is equal to that of the pupil line setting rod 4 with respect to the protruding direction of the protruding member 136, the direction of the pupil line setting rod 4 at a time when the upper-jaw dentition cast 71 and the lower-jaw dentition cast 72 are fixed is reproduced, and becomes the same as that of the pupil line guide member 166.

That is, even in a case where the upper-jaw dentition cast 71 and the lower-jaw dentition cast 72 are fixed to the articulator 140 in any directions, when the occlusal surface setting instrument 160 is constituted beforehand as described above, the direction of the pupil line guide member 166 with respect to the upper-jaw dentition cast 71 and the lower-jaw dentition cast 72 is the same as that of the pupil line setting rod 4 at the fixing time.

Therefore, the relative positional relation between the patient's pupil line 41, median line 43, and specific median line 42, and the occlusal surface in the oral cavity is exactly reproduced on the articulator 140, as the relative positional relation between the pupil line guide member 166 and median line guide member 163, and the upper-jaw dentition cast 71 and lower-jaw dentition cast 72.

Next, the artificial tooth is made on the basis of the pupil line guide member 166 and the median line guide member 163.

Specifically, as shown in FIG. 19, it is possible to make the artificial tooth so that the upper-jaw dentition is horizontally symmetrical on the basis of the pupil line guide member 166. That is, the artificial tooth can be made horizontally symmetrically so that the upper-jaw dentition formed at a time when a support 143 of the upper-jaw dentition cast 71 is covered with an artificial tooth 147 for the upper-jaw dentition gradually becomes high from artificial teeth 145a, 145b newly constituting incisor to artificial teeth 146a, 146b newly constituting molar teeth as viewed from the front surface of the articulator 140.

It is to be noted that the occlusal surface gradually becomes high from the incisor 73 as the front teeth toward the molar, in other words toward the inside of the oral cavity, in a case where the specific median line 42 is regarded as a reference. However, as seen from FIG. 19, the elevator member 164 can be elevated and lowered along the median line guide member 163. Therefore, the occlusal surface can be exactly reproduced to the upper-jaw dentition cast 71 while appropriately elevating and lowering the elevator member 164 along the median line guide member 163 depending on a type of the artificial tooth 147 for the upper-jaw dentition.

Moreover, as well seen from FIGS. 19 and 21, the artificial tooth 147 for the upper-jaw dentition is made so that an extended line of a material axis of the incisor guide member 165 falls between the incisor 145a, 145b in the artificial tooth 147 for the upper-jaw dentition as viewed from the front surface of the articulator 140. Even in such case, the height of the incisor guide member 165 may be matched with positions of the incisor 73 by appropriately elevating and lowering the elevator member 164.

It is to be noted that for the sake of convenience of operation, the artificial tooth 147 for the upper-jaw dentition is made while the top plate main body 142 constituting the articulator 140 is reversed around the top plate base member with respect to the top plate base member 53 until the upper surface of the top plate main body 142 abuts on that of the top plate base member 53. In such case, The artificial tooth for the upper-jaw dentition is attached to the upper-jaw dentition cast 71, and the top plate main body 142 is rotated to its former state with respect to the top plate base member 53 to confirm the occlusion state with the lower-jaw dentition cast 72.

As described above, according to the occlusal surface transfer instrument 120 of the present embodiment, after the bite material 1 bitten by the patient's upper-jaw front tooth 31 and lower-jaw front tooth 32 is hardened, the pupil line setting rod 4 attached to the connection member 3 is swung or rotated around the material axis of the connection member. Accordingly, the pupil line setting rod 4 is positioned in parallel with the patient's pupil line 41, and it is possible to fix the pupil line setting rod 4 to the connection member 3 in such position.

Therefore, it is possible to record the patient's pupil line 41 in the pupil line setting rod 4, as a relative positional relation of the upper-jaw dentition 28 and the lower-jaw dentition 29 with respect to the occlusal surface.

Moreover, according to the occlusal surface transfer instrument 120 of the present embodiment, while retaining a state in which the hardened bite material 1' held by the bite material holding member 2 is bitten by the upper-jaw front tooth 31 and the lower-jaw front tooth 32, the fitting portion 131 attached to the peripheral surface of the median line setting rod 125 is attached to the pupil line setting rod 4 so that the median line setting rod 125 is disposed at right angles to the pupil line setting rod 4 along the patient's median line 43 and in parallel with the specific median line 42. In such state, the median line setting rod 125 can be attached to the pupil line setting rod 4.

Therefore, it is possible to record the patient's median line 43 and the specific median line 42 in the median line setting rod 125, as the relative positional relation with respect to the pupil line setting rod 4.

Moreover, since the patient's occlusal surface in the oral cavity, and a group of aesthetic information constituted of the pupil line 41, the median line 43, and the specific median line 42 can be recorded in the pupil line setting rod 4 and the median line setting rod 125 in a state in which they are associated with each other, it is possible to make the artificial tooth having the aesthetic dentition.

Furthermore, according to the occlusal surface transfer instrument 120 and the articulator 140 of the present embodiment, the patient's pupil line 41 can be transferred as a relation parallel to the bottom plate 141 of the articulator 140 to the articulator via the pupil line setting rod 4. Moreover, the recordings of the median line 43 and the specific median line 42 can be transferred as a relation perpendicular to the bottom plate 141 of the articulator 140 to the articulator via the median line setting rod 125.

Therefore, the upper-jaw dentition cast 71 and the lower-jaw dentition cast 72 can be fixed to the articulator 140 so that the occlusal surface becomes the same as that in the patient's oral cavity in a three-dimensional coordinate.
Therefore, it is possible to make the aesthetically superior artificial tooth in a state in which such occlusal surface in the oral cavity is reproduced in the articulator 140.

In addition, according to the occlusal surface transfer instrument 120 and the articulator 140 of the present embodiment, the occlusal surface transfer instrument 120 is constituted so that the protruding direction of the protruding member 136 is disposed at right angles to the material axis of the pupil line setting rod 4. Moreover, the articulator 140 is constituted so that the fitting grooves 150a, 150b become perpendicular to the front end surfaces of the top plate main body 142 and the bottom plate 141. Therefore, when the protruding member 136 fits into the fitting grooves 150a, 150b, the median line setting rod 125 automatically becomes perpendicular to the bottom plate 141 and the top plate main body 142, and the pupil line setting rod 4 becomes parallel to the front end portions of the bottom plate 141 and the top plate main body 142.

Therefore, the upper-jaw dentition cast 71 and the lower-jaw dentition cast 72 can be mounted in the articulator 140 in a state in which the front surfaces of these casts agree with the front surface of the articulator 140. When the upper-jaw dentition cast 71 and the lower-jaw dentition cast 72 are viewed from the front surface of the articulator 140, it is possible to reproduce the same situation as that in a case where the dentition in the patient's oral cavity is viewed from the patient's front. Therefore, it is possible to make the artificial tooth more exactly.

Moreover, according to the occlusal surface transfer instrument 120 and the articulator 140 of the present embodiment, the protruding member 136 of the median line setting rod 125 is constituted of a plastic rod having a rectangular section.
Moreover, a width of each of the fitting grooves 150a, 150b is constituted to be slightly smaller than that of the protruding member 136. Therefore, when the protruding member 136 fits into the fitting grooves 150a, 150b, respectively, the occlusal surface transfer instrument 120 can be detachably attached to the articulator 140. The occlusal surface transfer instrument 120 can be tentatively attached to the articulator 140 at the attaching time, and can be easily removed from the articulator 140 at a detaching time.

Therefore, an operation to fix the upper-jaw dentition cast 71 and the lower-jaw dentition cast 72 to the lower surface of the top plate main body 142 and the upper surface of the bottom plate 141, respectively, is facilitated.

Moreover, according to the articulator 140 of the present embodiment, the top plate 144 and the height adjusting rods 56, 56 are constituted so that the relative positional relation between the bottom plate 141 and the top plate 144 is retained before and after the removing in the case where the bite material 1' and two side bite materials 25' , 27' are removed after the attaching, and the relative positional relation between the bottom plate 141 and the top plate 144 is retained before and after reversing the top plate 144. Therefore, even after the bite material 1' and two side bite materials 25' , 27' are removed, the interval between the upper-jaw dentition cast 71 and the lower-jaw dentition cast 72 does not change at all.

Therefore, it is possible to make the artificial tooth 147 for the upper-jaw dentition in the relative positional relation in which the normal occlusion is performed. Moreover, even when the top plate main body 142 constituting the top plate 144 is rotated to its former state with respect to the top plate base member 53 in order to check the occlusion state as needed during the making of the artificial tooth for the upper-jaw dentition, the relative positional relation between the upper-jaw dentition cast 71 and the lower-jaw dentition cast 72 does not change at all. Therefore, it is possible to check as needed whether or not the normal occlusion is performed during the making of the artificial tooth 147 for the upper-jaw dentition.

Moreover, according to the articulator 160 of the present embodiment, the relative positions of the median line guide member 163 and the pupil line guide member 166 with respect to the upper-jaw dentition cast 71 and the lower-jaw dentition cast 72 have the same directions as those of the median line setting rod 125 and the pupil line setting rod 4 with respect to the upper-jaw dentition cast 71 and the lower-jaw dentition cast 72.

Therefore, the relative positional relation between the patient's pupil line 41, median line 43, and specific median line 42, and the occlusal surface in the oral cavity is exactly reproduced on the articulator 140, as the relative positional relation between the pupil line guide member 166 and median line guide member 163, and the upper-jaw dentition cast 71 and lower-jaw dentition cast 72.

Therefore, it is possible to make the artificial tooth 147 for the upper-jaw dentition with a high precision on the basis of the median line guide member 163 and the pupil line guide member 166.

Moreover, according to the occlusal surface setting instrument 160 of the present embodiment, when the median line guiding protruding member 162 is fitted into the fitting groove 150b of the articulator 140, the median line guide member 163 having a perpendicular posture with respect to the top plate main body 142 can be tentatively detachably attached to the top plate main body in the same manner as in the median line setting rod 125. Operability in making the artificial tooth 147 for the upper-jaw dentition can be enhanced.

Furthermore, according to the occlusal surface setting instrument 160 of the present embodiment, since the elevator member 164 is attached so as to be elevatable along the median line guide member 163, it is possible to match the pupil line guide member 166 attached to the elevator member 164 with the dentition of the upper-jaw dentition cast 71 and set the guide member to a desired height, and precision in making the artificial tooth 147 for the upper-jaw dentition is enhanced.

In addition, according to the occlusal surface setting instrument 160 of the present embodiment, since the incisor guide member 165 is constituted along an extended line of the protruding direction of the median line guiding protruding member 162, it is possible to make the artificial tooth 147 for the upper-jaw dentition so that the extended line of an axial direction of the incisor guide member 165 falls between the incisor 145a, 145b. The precision and operability in making the artificial tooth for the upper-jaw dentition are largely enhanced even in this respect.

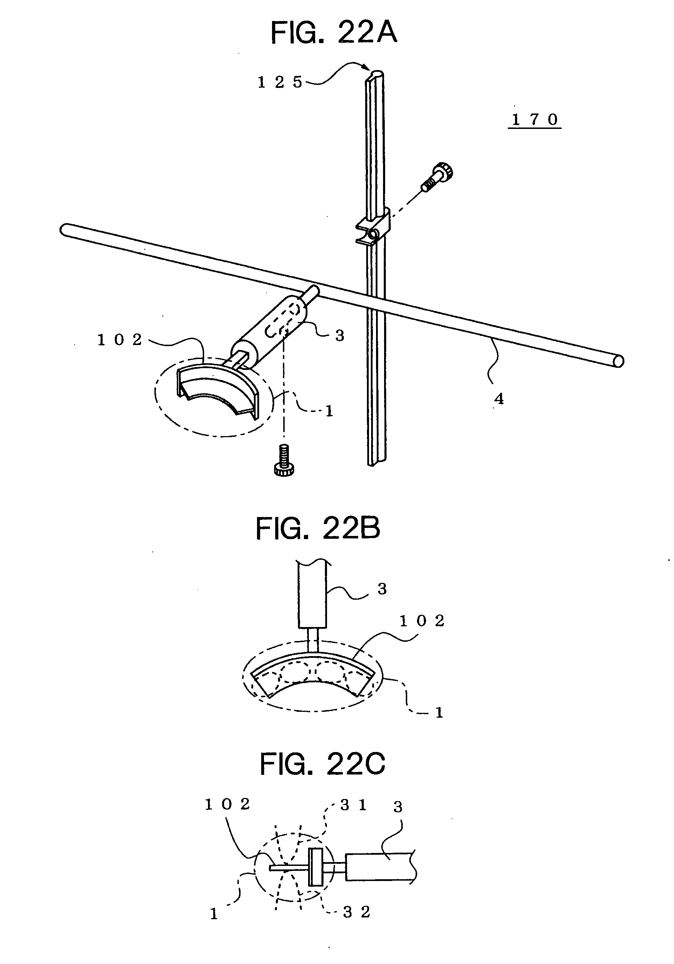

Although not especially mentioned in the present embodiment, the bite material holding member may be formed into any shape as long as the non-hardened bite material 1 is held. FIG. 22 is a diagram showing an occlusal surface transfer instrument according to a modification, (a) is a perspective view, and (b) and (c) are a detailed plan view and a side view showing the vicinity of the bite material holding member.

As shown in the drawing, in an occlusal surface transfer instrument 170 according to the modification, a bite material holding member 102 is attached to a connection member 3 instead of a bite material holding member 2 of an occlusal surface transfer instrument 120.

Such bite material holding member 102 is formed into an arch shape matched with an arch of opposite front teeth 31, 32 of patient's upper-jaw dentition 28 and lower-jaw dentition 29. According to such constitution, it is possible to sample occlusion molds of the front tooth 31 of the upper-jaw dentition 28 and the front tooth 32 of the lower-jaw dentition 29 in a stable state.

Moreover, in the present embodiment, the first female screw hole 9 is formed in the peripheral surface of the connection member 3 constituting the occlusal surface transfer instrument 120 so as to cross the insertion hole 6 at right angles, and the first male screw 8 is fitted into the first female screw hole. However, there is not any restriction on the constitution as long as the inserting portion 7 of the pupil line setting rod 4 is attached into the insertion hole at the arbitrary angle around the axial line of the insertion hole 6 of the connection member 3. For example, an adhesive may be injected into the insertion hole 6 to fit the inserting portion 7 into the insertion hole.

Furthermore, in the present embodiment, the fitting portion 131 of the occlusal surface transfer instrument 120 is provided with the second female screw hole 133 so as to cross the median line setting rod 125 at right angles, and the second male screw 132 is fitted into the second female screw hole.
However, there is not any restriction on the constitution as long as the fitting portion 131 is attached to the arbitrary position of the pupil line setting rod 4 at the arbitrary angle. For example, the fitting portion 131 may be attached to the pupil line setting rod 4 via the adhesive.

Moreover, in the present embodiment, the articulator of the present invention is constituted so that the top plate 142 is elevatable along height adjusting rods 56, 56, but the top plate does not have to be elevatable as long as there is not any trouble in attachment of the upper-jaw dentition cast 71 and the lower-jaw dentition cast 72 and the top plate does not have to be constituted to be elevatable.

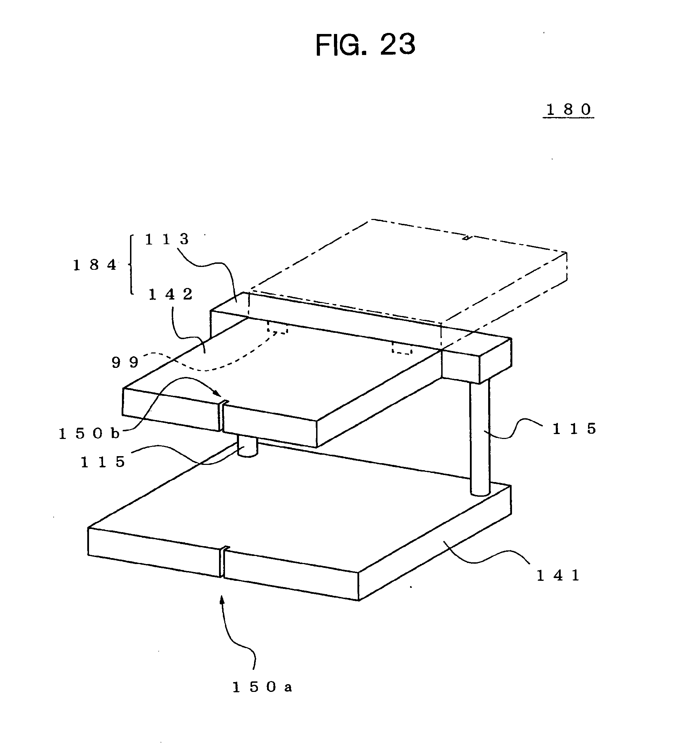

FIG. 23 is a perspective view showing an articulator according to the modification.

As seen from the drawing, an articulator 180 according to the modification is constituted of: a bottom plate 141; a pair of support rods 115, 115 stood in a state in which the rods are separated from each other along a rear edge portion of the bottom plate; and a top plate 184 attached to upper ends of the support rods. The top plate is constituted of: a top plate base member 113 attached to the upper ends of the support rods 115, 115; and a top plate main body 142 connected to the top plate base member via hinges 99, 99.

According to such constitution, the top plate main body 142 can be rotated around the top plate base member 113 to reverse upper and lower sides of the top plate main body. Moreover, when a rear end surface of the top plate main body 142 abuts on the top plate base member 113, rotation of the top plate main body 142 is restricted. In such state, the top plate main body is directed horizontally frontwards with respect to the bottom plate 141 and constitute in a cantilever form. It is to be noted that since constitutions of the bottom plate 141, the top plate main body 142, and fitting grooves 150a, 150b constituting the articulator 180 are similar to those of the present embodiment, description thereof is omitted here.

Moreover, in the present embodiment, an artificial tooth is made using an occlusal surface setting instrument 160, but instead the occlusal surface setting instrument 160 is omitted. An artificial tooth 147 for an upper-jaw dentition is made horizontally symmetrically on the basis of the bottom plate 141 or the top plate 144 of the articulator 140. Moreover, the center of the incisor 145a, 145b may be set in the artificial tooth 147 for the upper-jaw dentition on the basis of the fitting grooves 150a, 150b formed in the front end surfaces of the bottom plate 141 and the top plate main body 142.

In such constitution, the precision or operability in making the artificial tooth slightly drops, but any face-bow is not required, and remarkable functions and effects similar to those described above are produced as ever.

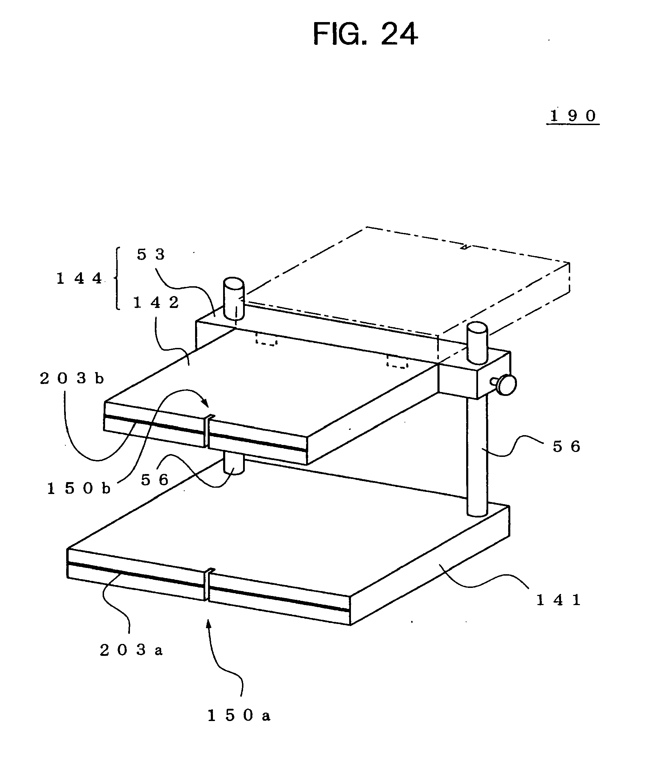

Moreover, in the present embodiment, the artificial tooth is made using the occlusal surface setting instrument 160, but when an articulator shown in FIG. 24 is used, the occlusal surface setting instrument 160 can be omitted.

FIG. 24 is a perspective view showing an articulator 190 according to a modification.

As shown in the drawing, an articulator 190 according to the modification is constituted of: a bottom plate 141 to whose upper surface a lower-jaw dentition cast 72 is attached; height adjusting rods 56, 56 as a support mechanism stood in the vicinity of a rear edge portion of the bottom plate; and a top plate 144 whose rear edge portion is rotatably attached to the height adjusting rods so that the upper and lower sides can be reversed and to whose lower surface an upper-jaw dentition cast 71 is attached in the same manner as in the articulator 140 according to the present embodiment. The top plate 144 is directed frontwards and attached to the height adjusting rods 56, 56 in a cantilever form, but in the present modification, pupil line reference lines 203a, 203b are disposed in parallel with the bottom plate in front end surfaces of the bottom plate 141 and a top plate main body 142.

According to such constitution, an artificial tooth 147 for the upper-jaw dentition is made horizontally symmetrically on the basis of the pupil line reference lines 203a, 203b.
Moreover, the center between incisor 145a, 145b can be set in the artificial tooth 147 for the upper-jaw dentition on the basis of fitting grooves 150a, 150b formed in the front end surfaces of the bottom plate 141 and the top plate main body 142. It is to be noted that since constitutions of the height adjusting rods 56, 56, a top plate base member 53, and the fitting grooves 150a, 150b are similar to those of the present embodiment, description thereof is omitted here.

Moreover, in the present embodiment, the top plate 144 and the bottom plate 141 constituting the articulator 140 are constituted of rectangular steel plates having predetermined thicknesses, but the shape does not have to be limited to the rectangular shape.

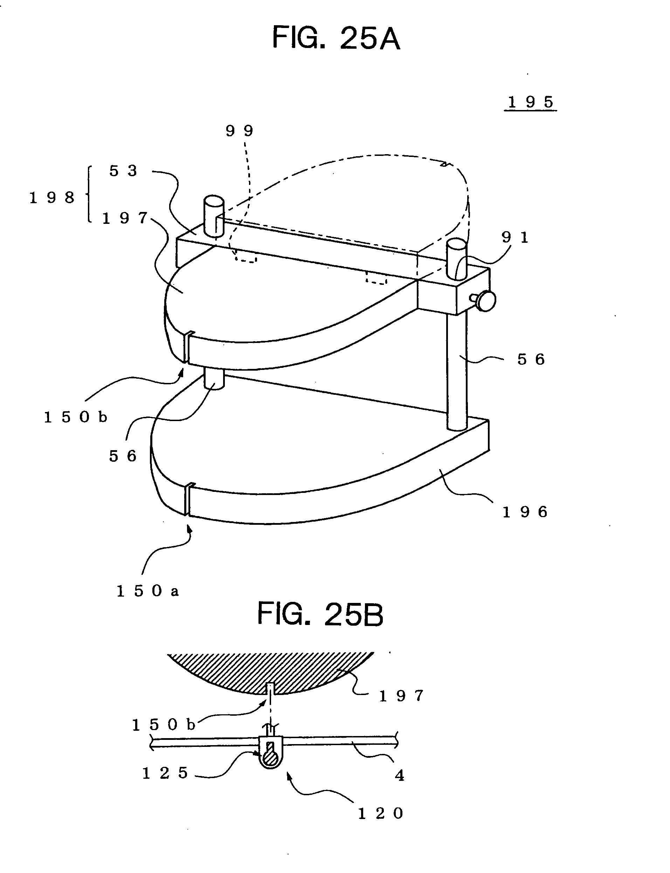

FIG. 25 is a perspective view showing an articulator 195 according to a modification.

As shown in the drawing, in the same manner as in the articulator 140, the articulator 195 according to the modification is constituted of: a bottom plate 196 to whose upper surface a lower-jaw dentition cast 72 is attached; height adjusting rods 56, 56 as a support mechanism stood in the vicinity of a rear edge portion of the bottom plate; and a top plate 198 whose rear edge portion is rotatably attached to the height adjusting rods so that the upper and lower sides can be reversed and to whose lower surface an upper-jaw dentition cast 71 is attached. The top plate 198 is directed frontwards and attached to the height adjusting rods 56, 56 in a cantilever form.

The top plate 198 is constituted of: a top plate base member 53 whose end portions are provided with two rod holes 91, 91 for passing through the height adjusting rods 56, 56; and a top plate main body 197 connected to the top plate base member via hinges 99, 99.

Moreover, the bottom plate 196 and the top plate 198 are disposed facing each other in parallel with each other, and constituted so that opposite front end surfaces are positioned on a surface perpendicular to the bottom plate 196. The lower-jaw dentition cast 72 can be fixed to the upper surface of the bottom plate 196, and the upper-jaw dentition cast 71 can be fixed to the lower surface of the top plate 198, respectively.

Here, unlike the articulator 140, the bottom plate 196 and the top plate main body 197 are formed of semi-elliptical steel plates having predetermined thicknesses. The upper surface of the bottom plate 196 and the lower surface of the top plate main body 197 may be subjected to a known technology such as rough surface working or emboss working so that the lower-jaw dentition cast 72 and the upper-jaw dentition cast 71 can be attached via a predetermined bonding material such as plaster, respectively.

Fitting grooves 150a, 150b are formed in the front end surfaces of the bottom plate 196 and the top plate main body 197 in the same manner as in the articulator 140.

Since the articulator 195 according to the present modification is similar to the articulator 140 except that shapes of the bottom and top plates are different, descriptions of another constitution, and functions and effects are omitted.

Moreover, in the present embodiment, as seen well from FIGS. 19 and 20, the occlusal surface setting instrument 160 is attached and detached with respect to the only fitting groove 150b of the top plate 144 on the assumption that the artificial tooth for the upper-jaw dentition is made using the upper-jaw dentition cast 71, but the device may be attached and detached with respect to the fitting groove 150a of the bottom plate 141. The device may be attached and detached with respect to the only fitting groove 150a of the bottom plate 141 in a case where the artificial tooth for the lower-jaw dentition is made using the lower-jaw dentition cast 72.

To be more specific, the median line guide member 163 of the occlusal surface setting instrument 160 includes: the median line guiding rod body 161 having the circular section; and the median line guiding protruding member 162 which is protruded from the peripheral surface of the median line guiding rod body along the material axis of the main body and whose sectional shape is formed into the same sectional shape as that of the protruding member 136 of the median line setting rod 125 constituting the occlusal surface transfer instrument 120. Such median line guiding protruding member 162 does not have to be disposed over a whole length of the median line guiding rod body 161, and the protruding member is sufficiently protruded over a region in which the member fits into the fitting grooves 150a, 150b.

Moreover, in the present embodiment, when the elevator member 164 is elevated and lowered along the median line guide member 163, the heights of the incisor guide member 165 and the pupil line guide member 166 can be changed, but such elevator member 164 may be omitted.

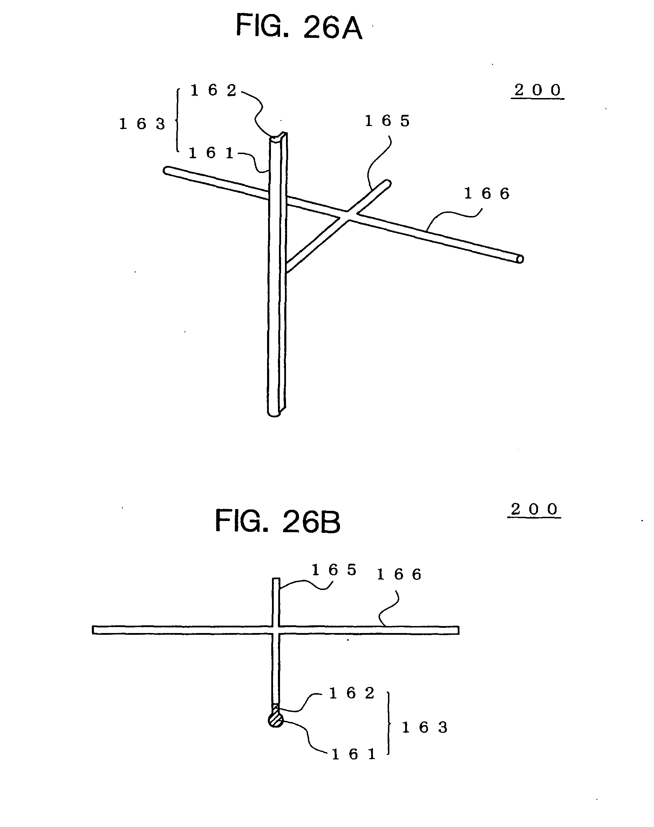

FIG. 26 shows a perspective view and a sectional view of an occlusal surface setting instrument 200 according to the modification. The occlusal surface setting instrument 200 shown in the drawing is constituted of: a median line guide member 163; an incisor guide member 165 protruded at right angles to the median line guide member; and a pupil line guide member 166 the vicinity of whose center is attached to the incisor guide member at right angles to the material axis of the incisor guide member and that of the median line guide member 163. Ends of a median line guiding protruding member 162 are detachably fitted into fitting grooves 150a, 150b.

In such constitution, since heights of the incisor guide member 165 and the pupil line guide member 166 cannot be changed, the precision in making the artificial tooth slightly drops. Moreover, since frequency of the attaching/detaching increases during the making of the artificial tooth, operability slightly drops, but any face-bow is not required, and remarkable functions and effects similar to those described above are produced as ever.

On the other hand, when the median line guiding protruding member 162 is simply detachably fitted into either of the fitting grooves 150a, 150b only, an attaching height of the median line guide member can be changed by attaching and detaching the median line guide member 163 as needed.

Therefore, in such constitution, the heights of the incisor guide member 165 and the pupil line guide member 166 can be changed. Moreover, since the frequency of the attaching/detaching does not increase during the making of the artificial tooth, the operability does not drop.

Moreover, the incisor guide member 165 may be constituted to be stretchable, though this is not especially mentioned in the present embodiment.

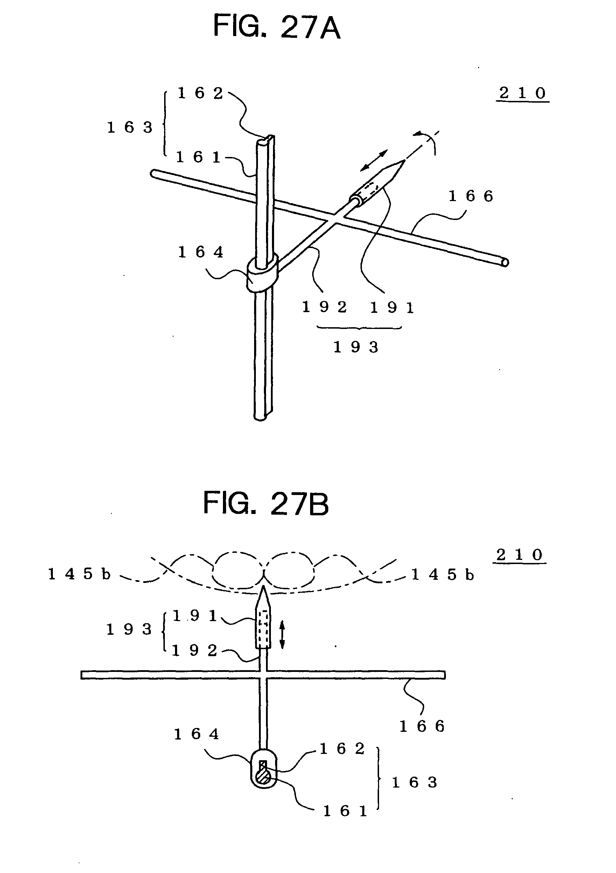

FIG. 27 shows a perspective view and a sectional view showing an occlusal surface setting instrument 210 according to the modification. The occlusal surface setting instrument 210 shown in the drawing is constituted of: a median line guide member 163; an elevator member 164 attached so as to be elevatable along the median line guide member; an incisor guide member 193 protruded from the elevator member at right angles to the median line guide member 163; and a pupil line guide member 166 the vicinity of whose center is attached to the incisor guide member at right angles to a material axis of the incisor guide member and that of the median line guide member 163. In the present modification, the incisor guide member 193 is constituted of an incisor guide main body 192 attached to the elevator member 164, and an extendable guide 191 attached to a tip of the main body and formed to be sharp-pointed. The extendable guide 191 is constituted to be stretchable with respect to the incisor guide main body 192.

The stretchable constitution includes a constitution in which the extendable guide 191 is screwed into the incisor guide main body 192, a constitution in which the extendable guide 191 is expanded and contracted in a rod antenna form or the like, but such constitution may be appropriately selected from known constitutions.

In such constitution, the incisor guide member 193 is appropriately expanded and contracted to bring a tip of the member close to a front tooth 73 of an upper-jaw dentition cast 71 regardless of a distant length (length along a line parallel to a bottom plate 141) between a position where the upper-jaw dentition cast 71 and a lower-jaw dentition cast 72 are attached and a position where the occlusal surface setting instrument 210 is disposed. Moreover, as shown in FIG. 27(b), it is possible to make the artificial tooth for the upper-jaw dentition so that the sharp tip just comes between adjacent incisors 145a, 145b, and the precision in making the artificial tooth for the upper-jaw dentition is enhanced more.

In other words, it is possible to match a position between the incisor 145a, 145b precisely with a median line 43 or a specific median line 42 without reproducing horizontal lengths of a median line setting rod 125 constituting the occlusal surface transfer instrument 120 and a bite material holding member 2 on an articulator 140. Moreover, fluctuations of an occlusion position at a time when a bite material 1 is bitten can be absorbed by expanding and contracting the incisor guide member 193.

Moreover, although this is not especially mentioned in the present embodiment, in the present invention, a disposing angle of the pupil line guide member is arbitrary with respect to the protruding direction of the median line guiding protruding member constituting the occlusal surface setting instrument as long as the pupil line guide member is positioned with respect to the median line guide member so that the disposing angle is equal to that of the pupil line setting rod with respect to the protruding direction of the protruding member constituting the occlusal surface transfer instrument, and the angle does not have to be set to 90° as in the present embodiment.

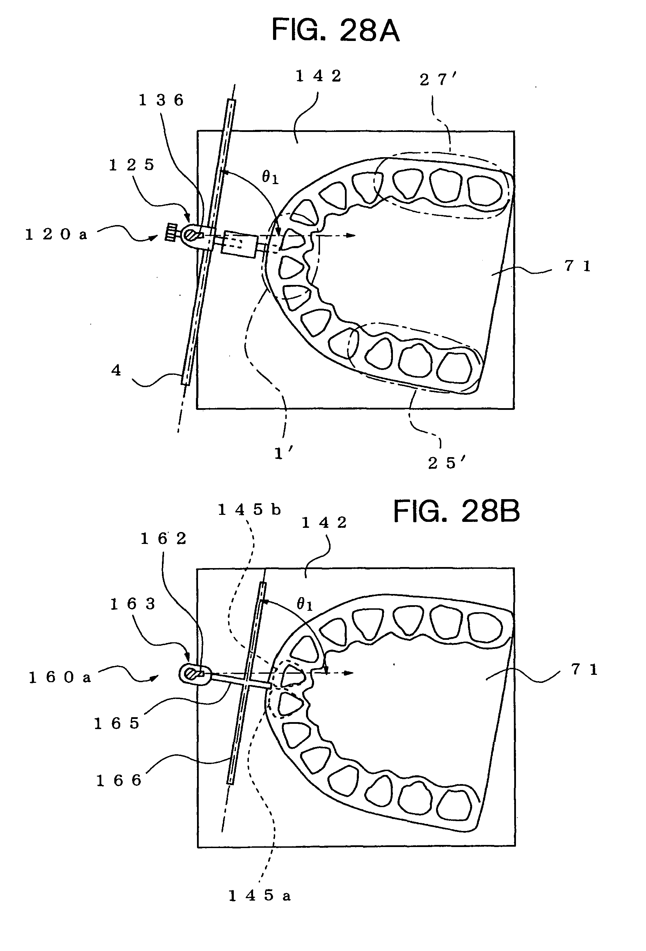

FIG. 28 is a looking-upward diagram (diagram in which one looks up at the above) of the top plate main body 142 constituting the articulator 140, (a) is a diagram showing a relative positional relation between an occlusal surface transfer instrument 120a and an upper-jaw dentition cast 71 or an articulator 140 in a case where the above-described disposing angle is an arbitrary angle θ1 other than 90° , and (b) is a diagram showing a relative positional relation between an occlusal surface setting instrument 160a and the upper-jaw dentition cast 71 or the articulator 140.

In such case, as apparent from the drawing, the front surface of the upper-jaw dentition cast 71 does not agree with that of the articulator 140, and deviates therefrom as much as the angle θ1, but an angle deviation at a time when the upper-jaw dentition cast 71 is attached using the occlusal surface transfer instrument 120a can be reproduced by the occlusal surface setting instrument 160a. Therefore, any problem is not generated in making the artificial tooth, and a high-precision artificial tooth can be made in the same manner as described above.

It is to be noted that the occlusal surface transfer instrument 120a is the same as the occlusal surface transfer instrument 120 except that the disposing angle of the pupil line setting rod 4 with respect to the protruding direction of the protruding member 136 is not 90° but the angle θ1, and therefore description thereof is omitted.

Similarly, since the occlusal surface setting instrument 160a is the same as the occlusal surface setting instrument 160 except that the disposing angle of the pupil line guide member 166 with respect to the protruding direction of the median line guiding protruding member 162 is not 90° but the angle θ1, description thereof is omitted here.

Moreover, in the present embodiment, the process has been described in a case where the artificial tooth 147 for the upper-jaw dentition is made using the occlusal surface transfer instrument 120, the articulator 140, and the occlusal surface setting instrument 160. This also applies to a case where the artificial tooth for the lower-jaw dentition is made. First, the lower-jaw dentition is shaved with turbine or the like to form a support for supporting the artificial tooth, and two side bite materials 25, 27 and the bite material 1 are bitten by the patient by the above-described procedure. In such state, the patient's pupil line 41 is recorded in the pupil line setting rod 4, and the patient's median line 43 and the specific median line 42 are recorded in the median line setting rod 125, respectively. Next, after mounting the lower and upper jaw dentition casts on the articulator 140 by use of the occlusal surface transfer instrument 120, the artificial tooth for the lower-jaw dentition may be made using the occlusal surface setting instrument 160.

In such case, as described above, when the median line guiding protruding member 162 of the median line guide member 163 is fitted into the fitting groove 150a formed in the bottom plate 141, the occlusal surface setting instrument 160 does not have to be detached from the articulator 140 every time the artificial tooth for the lower-jaw dentition is made while reversing the top plate main body 142 in order to confirm the occlusion.

Moreover, to make the artificial tooth for the lower-jaw dentition, unlike the process of making the artificial tooth 147 for the upper-jaw dentition, the occlusion states of the dentition of the upper-jaw dentition cast and the corresponding dentition of the lower-jaw dentition cast are confirmed one by one with respect to the upper-jaw dentition cast corresponding to the already completed artificial tooth 147 for the upper-jaw dentition.

It is to be noted that although this is not especially mentioned in the present embodiment, needless to say, the materials of the bite material 1 and the side bite materials 25, 27 are also similar to those of the occlusal surface transfer instrument 10 according to the first embodiment.

(Fifth Embodiment)

Next, a fifth embodiment will be described. It is to be noted that substantially the same components as those of the above-described embodiment are denoted with the same reference numerals, and description thereof is omitted.

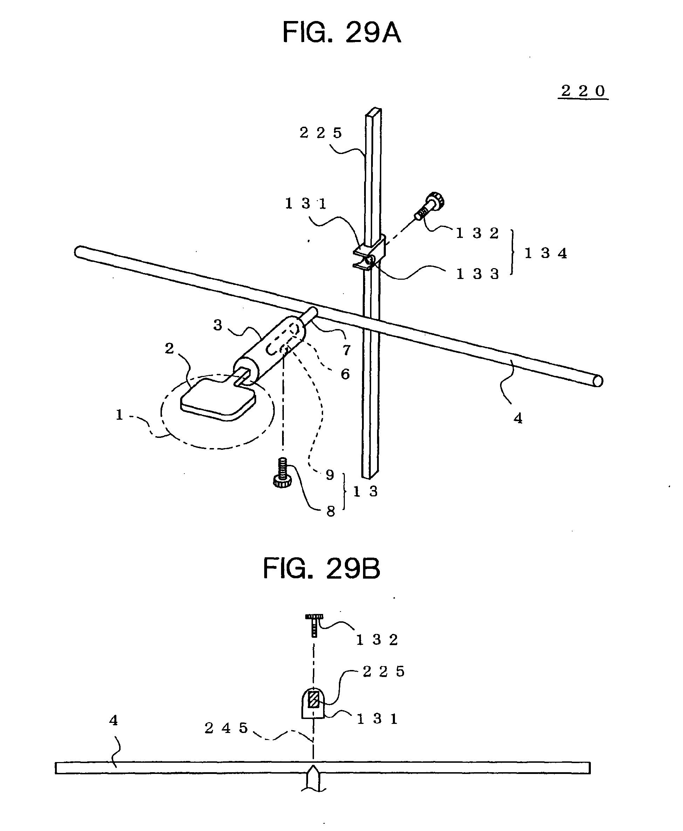

FIG. 29 is a diagram showing an occlusal surface transfer instrument according to the present embodiment, (a) is an exploded perspective view, and (b) is a sectional view. As seen from the drawing, an occlusal surface transfer instrument 220 of the present embodiment is constituted of: a bite material holding member 2 which holds a non-hardened bite material 1 in a bitable state; a connection member 3 whose one end is provided with the bite material holding member; a pupil line setting rod 4 disposed in the other end of the connection member near the center; and a median line setting rod 225 which is detachably attachable at right angles to the pupil line setting rod and in an arbitrary angular position around a material axis of the pupil line setting rod. The pupil line setting rod 4 is attached to the connection member 3 at right angles to the material axis of the connection member 3 and so as to be rotatable around the material axis.

Here, the median line setting rod 225 is constituted of a rectangular plastic rod having a non-circular section, a fitting portion 131 attachable to the pupil line setting rod 4 is attached to the vicinity of the center of the rod, and the rod can be detachably attached to the pupil line setting rod 4 via the fitting portion.

The fitting portion 131 and the pupil line setting rod 4 are constituted so that the median line setting rod 225 is slidable along the pupil line setting rod 4 and rotatable around the material axis, when the median line setting rod 225 is attached to the pupil line setting rod 4.

Here, the median line setting rod 225 and the fitting portion 131 are constituted so that a sectional axis 245 parallel to the material axis of the connection member 3 is disposed at right angles to the material axis of the pupil line setting rod 4 in two sectional axes of the median line setting rod 225, when the median line setting rod is attached to the pupil line setting rod 4.

The fitting portion 131 is provided with a fitting portion fixing mechanism 134 so that the median line setting rod 225 is attached to a desired angular position around the material axis of the pupil line setting rod 4 in a state in which the fitting portion is attached to the pupil line setting rod 4.

Since constitutions of the connection member 3, the pupil line setting rod 4, the fitting portion 131, and the fitting portion fixing mechanism 134 have been already described in the first or fourth embodiment, description thereof is omitted hereinafter.

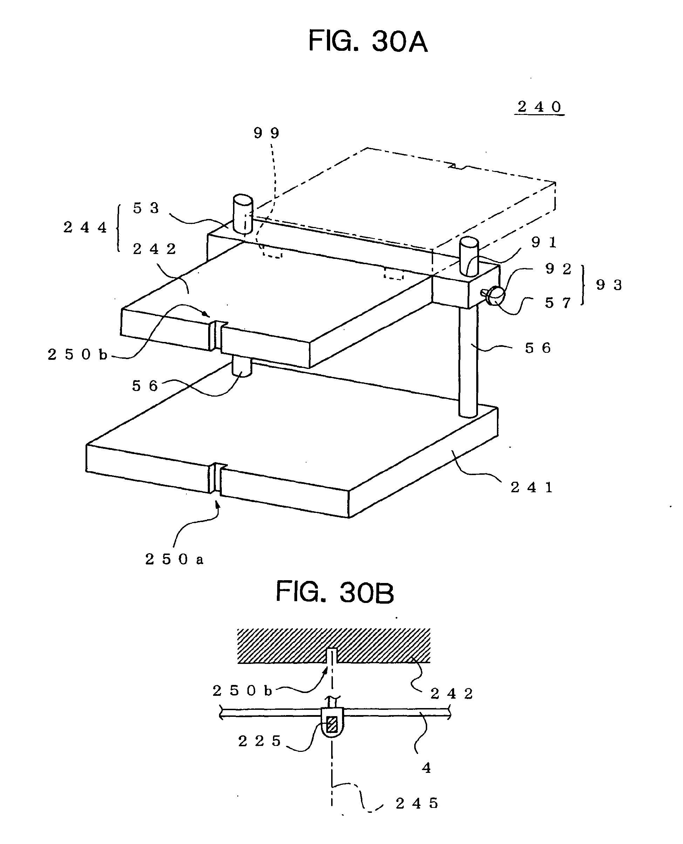

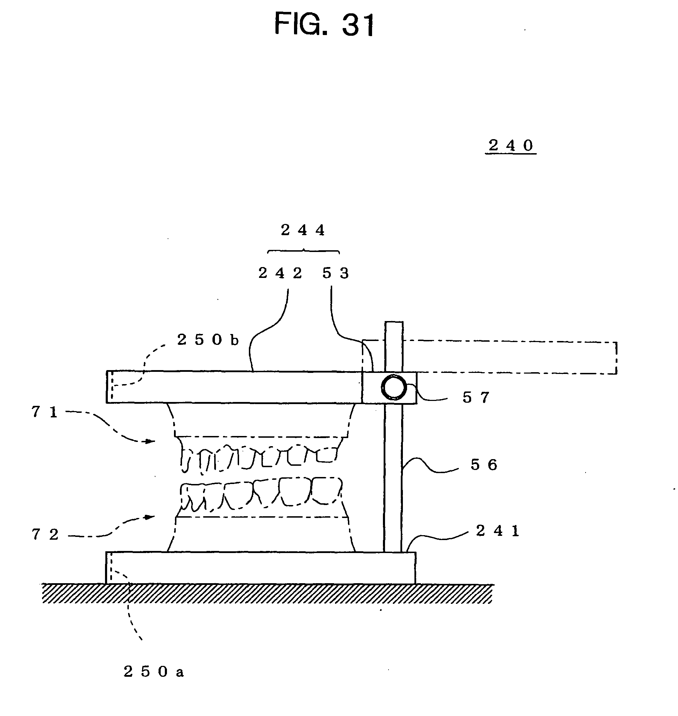

FIG. 30 is a diagram showing an articulator according to the present embodiment, (a) is a perspective view, and (b) is a detailed sectional view around a front side of the articulator. FIG. 31 shows a sectional view of the articulator according to the present embodiment. As seen from these drawings, an articulator 240 according to the present embodiment is constituted of: a bottom plate 241 to whose upper surface a lower-jaw dentition cast 72 is attached; height adjusting rods 56, 56 as a support mechanism stood in the vicinity of a rear edge portion of the bottom plate; and a top plate 244 whose rear edge portion is rotatably attached to the height adjusting rods so that the upper and lower sides can be reversed and to whose lower surface an upper-jaw dentition cast 71 is attached. The top plate 244 is directed frontwards and attached to the height adjusting rods 56, 56 in a cantilever form.

Here, the bottom plate 241 and the top plate 244 are disposed facing each other in parallel with each other, and constituted so that opposite front end surfaces are positioned on a surface perpendicular to the bottom plate 241. The lower-jaw dentition cast 72 can be fixed to the upper surface of the bottom plate 241, and the upper-jaw dentition cast 71 can be fixed to the lower surface of the top plate 244, respectively.

The bottom plate 241 and the top plate 244 can be constituted of, for example, rectangular steel plates having predetermined thicknesses, and the upper surface of the bottom plate 241 and the lower surface of the top plate 244 may be subjected to a known technology such as rough surface working or emboss working so that the lower-jaw dentition cast 72 and the upper-jaw dentition cast 71 can be attached via a predetermined bonding material such as plaster, respectively, in the same manner as in the bottom plate 141 and the top plate 144.

Moreover, a pair of height adjusting rods 56, 56 is stood in a state in which the rods are separated from each other along the rear edge portion of the bottom plate 241. The top plate 244 is constituted of: a top plate base member 53 whose opposite end portions are provided with two rod holes 91, 91 for passing the height adjusting rods 56, 56; and a top plate main body 242 connected to the top plate base member via hinges 99, 99.
According to such constitution, the whole top plate 244 can be elevated and lowered along the height adjusting rods 56, 56.
Moreover, the top plate main body 242 can be rotated around the top plate base member 53 to reverse the upper and lower sides of the top plate main body.

Furthermore, as to the top plate 244, the top plate main body 242 can be rotated around the top plate base member 53 as described above. However, when a rear end surface of the top plate main body 242 abuts on the top plate base member 53, the rotation of the top plate main body 242 is limited. In such state, the top plate main body is directed horizontally frontwards with respect to the bottom plate 241, and constituted into the cantilever form.

Since the rotation is restricted in a position where the top plate main body 242 horizontally turns to the front in this manner, it is possible to retain a relative positional relation between the bottom plate 241 and the top plate 244 before and after the reversing of the upper and lower surfaces of the top plate main body 242.

Moreover, opposite end surfaces of the top plate base member 53 in a longitudinal direction are provided with fixing mechanisms 93, 93, but since such fixing mechanisms have been already described in the fourth embodiment, description thereof is omitted here.

Here, in the articulator 240 according to the present embodiment, rod fitting recessed portions 250a, 250b are formed in front end surfaces of the bottom plate 241 and the top plate main body 242 so that the median line setting rod 225 of the occlusal surface transfer instrument 220 is detachably fitted into the recessed portions. Moreover, two rod fitting recessed portions are formed on the same perpendicular line with respect to the bottom plate 241. When the median line setting rod 225 is fitted into the rod fitting recessed portions 250a, 250b, the median line setting rod becomes perpendicular to the bottom plate 241. The rod fitting recessed portions 250a, 250b are constituted so that the median line setting rod 225 is positioned and tentatively attached at a specific angle around an axial line perpendicular to the bottom plate 241.

Here, the positioning at the specific angle means that the median line setting rod is positioned so that the sectional axis 245 parallel to the material axis of the connection member 3 is disposed at right angles to the front edge portions of the bottom plate 241 and the top plate 244 in two sectional axes of the median line setting rod 225, when the median line setting rod 225 fits into the rod fitting recessed portions 250a, 250b.

On the other hand, as described above, the median line setting rod 225 and the fitting portion 131 are constituted so that the sectional axis 245 parallel to the material axis of the connection member 3 is disposed at right angles to the material axis of the pupil line setting rod 4 in two sectional axes of the median line setting rod 225, when the median line setting rod is attached to the pupil line setting rod 4.

Therefore, when such median line setting rod 225 is fitted into the rod fitting recessed portions 250a, 250b, the median line setting rod 225 and the pupil line setting rod 4 are attached in parallel with a plane constituted by the front edge portions of the bottom plate 241 and the top plate 244, in other words, the front surface of the articulator 240. When the articulator is used together with an occlusal surface setting instrument 260 described later, the artificial tooth can be made with a high precision.

It is to be noted that to attach and detach the median line setting rod 225 with respect to the rod fitting recessed portions 250a, 250b, an outer dimension of the median line setting rod 225 and inner dimensions of the rod fitting recessed portions 250a, 250b are appropriately adjusted beforehand so that the median line setting rod is tentatively attached with a predetermined strength at an attaching time, and the rod is detached with such a force as to manually pull the rod forwards at a detaching time.

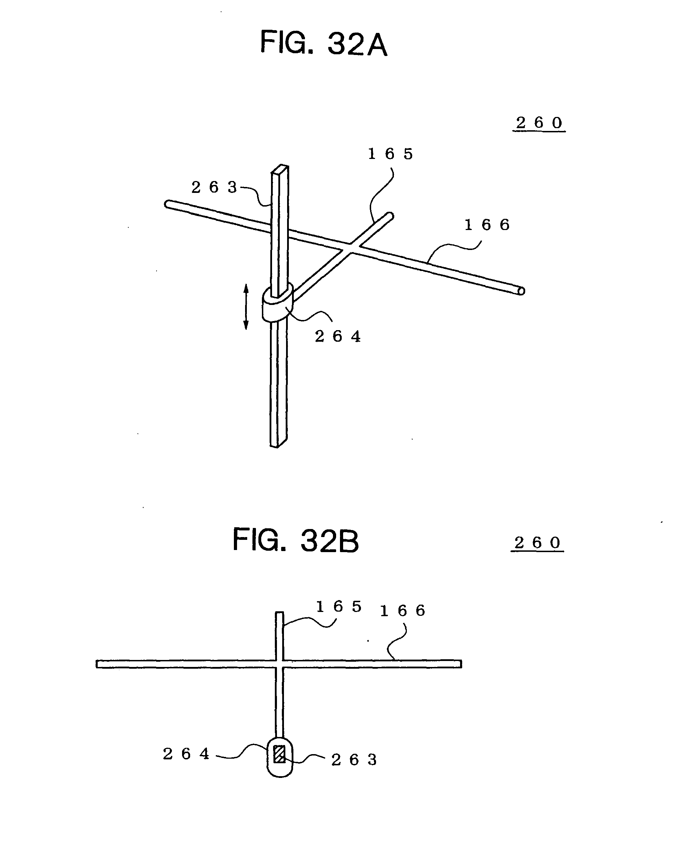

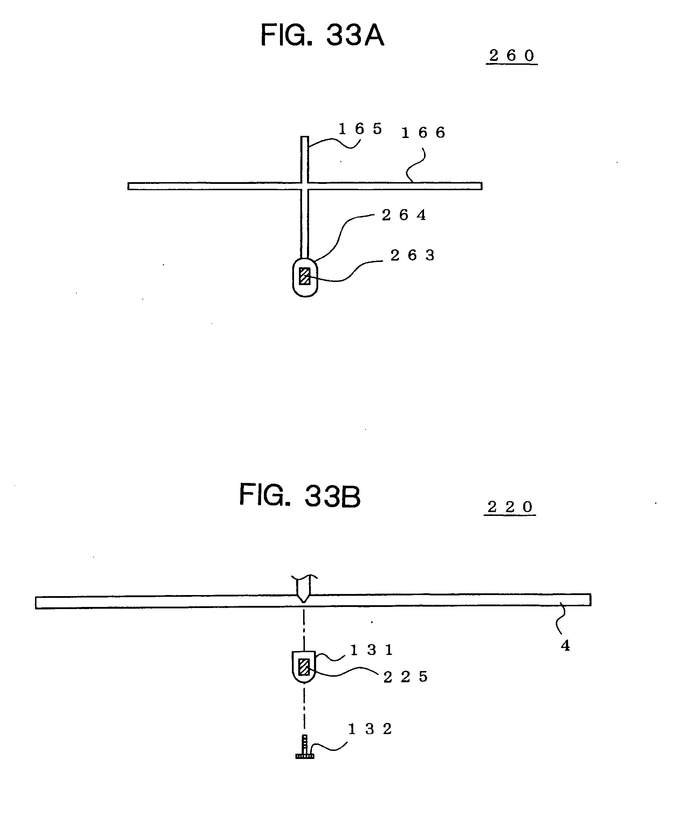

FIG. 32 is a diagram showing the occlusal surface setting instrument 260 according to the present embodiment, (a) is a perspective view, and (b) is a sectional view. FIG. 33 is a diagram showing a relation between the occlusal surface setting instrument 260 and the occlusal surface transfer instrument 220, (a) is a sectional view of the occlusal surface setting instrument 260, and (b) is a sectional view of the occlusal surface transfer instrument 220.

As seen from these drawings, the occlusal surface setting instrument 260 according to the present embodiment is constituted of: a median line guide member 263 having a rectangular section; an elevator member 264 attached so as to be elevatable along the median line guide member; an incisor guide member 165 protruded from the elevator member at right angles to the median line guide member 263; and a pupil line guide member 166 the vicinity of whose center is attached to the incisor guide member at right angles to a material axis of the incisor guide member and that of the median line guide member 263.

As means for attaching the elevator member 264 to a desired height of the median line guide member 263, a known technology may be approximately selected.

Here, a sectional shape of the median line guide member 263 is constituted to be the same sectional shape as that of the median line setting rod 225 constituting the occlusal surface transfer instrument 220, and the median line guide member is formed of plastic.

Moreover, as seen well from FIG. 33, the pupil line guide member 166 is positioned with respect to the median line guide member 263 so that a disposing angle of the pupil line guide member 166 with respect to the median line guide member 263 is equal to that of the pupil line setting rod 4 with respect to the median line setting rod 225. That is, in the occlusal surface setting instrument 260, the incisor guide member 165 is protruded from a peripheral surface of the elevator member 264 so as to have such disposing angle. Additionally, in the present embodiment, the above-described disposing angle is set to 90° .

Next, there will be described a procedure for making an artificial tooth by use of the occlusal surface transfer instrument 220, the articulator 240, and the occlusal surface setting instrument 260 according to the present embodiment in accordance with an example of a case where the artificial tooth for the patient's upper-jaw dentition is made.

To make the artificial tooth for the patient's upper-jaw dentition in the above-described procedure, in the same manner as in the fourth embodiment, first, an occlusal surface in patient's oral cavity is recorded in the occlusal surface transfer instrument 220, in the form of patient's pupil line 41, median line 43, and specific median line 42. Next, the upper-jaw dentition cast 71 and the lower-jaw dentition cast 72 are fixed to the articulator 240 by use of the occlusal surface transfer instrument 220 in which these pupil line 41, median line 43, and specific median line 42 are recorded. Thereafter, the occlusal surface setting instrument 260 is attached to the articulator 240, and the artificial tooth for the upper-jaw dentition is made using the upper-jaw dentition cast 71 and the lower-jaw dentition cast 72 in such state.

Here, to make such artificial tooth, the median line setting rod 225 of the occlusal surface transfer instrument 220 is fitted into the rod fitting recessed portions 250a, 250b formed in the front end surfaces of the bottom plate 241 and the top plate main body 242, respectively, to fix the lower-jaw dentition cast 72 to the upper surface of the bottom plate 241 and the upper-jaw dentition cast 71 to the lower surface of the top plate main body 242, respectively. Moreover, the median line guide member 263 is fitted into the rod fitting recessed portion 250b formed in the front end surface of the top plate main body 242 of the articulator 240 to make the artificial tooth. Since the specific procedure is substantially similar to that of the fourth embodiment, description thereof is omitted here, and only contents to be specially noticed will be described hereinafter.

First, in the articulator 240, the rod fitting recessed portions 250a, 250b are constituted so that the median line setting rod 225 becomes perpendicular to the bottom plate 241 and is tentatively attached in a state in which the sectional axis 245 parallel to the material axis of the connection member 3 is positioned at 90° with respect to the front edge portion of the bottom plate 241 in two sectional axes of the median line setting rod 225.

Therefore, when the median line setting rod 225 of the occlusal surface transfer instrument 220 is fitted into the rod fitting recessed portions 250a, 250b of the articulator 240, the median line setting rod 225 and the pupil line setting rod 4 are attached in parallel with a plane constituted by the front edge portions of the bottom plate 241 and the top plate 244, in other words, the front surface of the articulator 240.

Secondly, the occlusal surface setting instrument 260 is constituted so that the disposing angle of the pupil line guide member 166 with respect to the median line guide member 263 is equal to that of the pupil line setting rod 4 with respect to the median line setting rod 225.

On the other hand, since the pupil line setting rod 4 is attached to the bite material holding member 2 via the connection member 3, the directions of the upper-jaw dentition cast 71 and the lower-jaw dentition cast 72 fixed to the articulator 240 by use of the occlusal surface transfer instrument 220 are determined by the disposing angle of the pupil line setting rod 4 with respect to the median line setting rod 225 of the occlusal surface transfer instrument 220.

Therefore, the direction of the pupil line guide member 166 becomes the same as the reproduced direction of the pupil line setting rod 4 at a time when the upper-jaw dentition cast 71 and the lower-jaw dentition cast 72 are attached. A relative positional relation between the patient's pupil line 41, median line 43, and specific median line 42, and the occlusal surface in the oral cavity is exactly reproduced on the articulator 240, as a relative positional relation between the pupil line guide member 166 and median line guide member 263, and the upper-jaw dentition cast 71 and the lower-jaw dentition cast 72. It is possible to make the artificial tooth with a high precision on the basis of the pupil line guide member 166 and the median line guide member 263.

As described above, according to the occlusal surface transfer instrument 220 of the present embodiment, after the bite material 1 bitten by the patient's upper-jaw front tooth 31 and lower-jaw front tooth 32 is hardened, the pupil line setting rod 4 attached to the connection member 3 is swung or rotated around the material axis of the connection member. Accordingly, the pupil line setting rod 4 is positioned in parallel with the patient's pupil line 41, and it is possible to fix the pupil line setting rod 4 to the connection member 3 in such position.

Therefore, the patient's pupil line 41 can be recorded in the pupil line setting rod 4, as the relative positional relation with respect to the occlusal surface of the upper-jaw dentition 28 and lower-jaw dentition 29.

Moreover, according to the occlusal surface transfer instrument 220 of the present embodiment, while retaining a state in which the hardened bite material 1' held by the bite material holding member 2 is bitten by the upper-jaw front tooth 31 and the lower-jaw front tooth 32, the fitting portion 131 attached to the peripheral surface of the median line setting rod 225 is attached to the pupil line setting rod 4 so that the median line setting rod 225 is disposed at right angles to the pupil line setting rod 4 along the patient's median line 43 and in parallel with the specific median line 42. In such state, the median line setting rod 125 can be attached to the pupil line setting rod 4.

Therefore, it is possible to record the patient's median line 43 and the specific median line 42 in the median line setting rod 225, as the relative positional relation with respect to the pupil line setting rod 4.

Moreover, since the patient's occlusal surface in the oral cavity, and a group of aesthetic information constituted of the pupil line 41, the median line 43, and the specific median line 42 can be recorded in the pupil line setting rod 4 and the median line setting rod 225 in a state in which they are associated with each other, it is possible to make the artificial tooth having the aesthetic dentition.

Furthermore, according to the occlusal surface transfer instrument 220 and the articulator 240 of the present embodiment, the patient's pupil line 41 can be transferred as a relation parallel to the bottom plate 241 of the articulator 240 to the articulator via the pupil line setting rod 4. Moreover, the recordings of the median line 43 and the specific median line 42 can be transferred as a relation perpendicular to the bottom plate 241 of the articulator 240 to the articulator via the median line setting rod 225.

Therefore, the upper-jaw dentition cast 71 and the lower-jaw dentition cast 72 can be fixed to the articulator 240 so that the occlusal surface becomes the same as that in the patient's oral cavity in a three-dimensional coordinate. Therefore, it is possible to make the aesthetically superior artificial tooth in a state in which such occlusal surface in the oral cavity is reproduced in the articulator 240.

In addition, according to the occlusal surface transfer instrument 220 and the articulator 240 of the present embodiment, the rod fitting recessed portions 250a, 250b are constituted so that the median line setting rod 225 becomes perpendicular to the bottom plate 241 and is tentatively attached in a state in which the sectional axis 245 parallel to the material axis of the connection member 3 is positioned at 90° with respect to the front edge portion of the bottom plate 241 in two sectional axes of the median line setting rod 225. Therefore, when the median line setting rod 225 of the occlusal surface transfer instrument 220 is fitted into the rod fitting recessed portions 250a, 250b of the articulator 240, the median line setting rod 225 automatically becomes perpendicular to the bottom plate 241 and the top plate main body 242, and the pupil line setting rod 4 becomes parallel to the front edge portions of the bottom plate 241 and the top plate main body 242.

Therefore, the upper-jaw dentition cast 71 and the lower-jaw dentition cast 72 can be mounted in the articulator 240 in a state in which the front surfaces of these casts agree with the front surface of the articulator 240. When the upper-jaw dentition cast 71 and the lower-jaw dentition cast 72 are viewed from the front surface of the articulator 240, it is possible to reproduce the same situation as that in a case where the dentition in the patient's oral cavity is viewed from the patient's front. Therefore, it is possible to make the artificial tooth more exactly.

Moreover, according to the occlusal surface transfer instrument 220 and the articulator 240 of the present embodiment, the occlusal surface transfer instrument 220 can be detachably attached to the articulator 240. The occlusal surface transfer instrument 220 can be tentatively attached to the articulator 240 at the attaching time, and can be easily detached from the articulator 240 at a detaching time.

Therefore, an operation to fix the upper-jaw dentition cast 71 and the lower-jaw dentition cast 72 to the lower surface of the top plate main body 242 and the upper surface of the bottom plate 241, respectively, is facilitated.

Moreover, according to the articulator 240 of the present embodiment, the top plate 244 and the height adjusting rods 56, 56 are constituted so that the relative positional relation between the bottom plate 241 and the top plate 244 is retained before and after the removing in the case where the bite material 1' and two side bite materials 25' , 27' are removed after the attaching, and the relative positional relation between the bottom plate 241 and the top plate 244 is retained before and after reversing the top plate 244. Therefore, even after the bite material 1' and two side bite materials 25', 27' are removed, the interval between the upper-jaw dentition cast 71 and the lower-jaw dentition cast 72 does not change at all.

Therefore, it is possible to make the artificial tooth 147 for the upper-jaw dentition in the relative positional relation in which the normal occlusion is performed. Moreover, even when the top plate main body 242 constituting the top plate 244 is rotated to its former state with respect to the top plate base member 53 in order to check the occlusion state as needed during the making of the artificial tooth for the upper-jaw dentition, the relative positional relation between the upper-jaw dentition cast 71 and the lower-jaw dentition cast 72 does not change at all. Therefore, it is possible to check as needed whether or not the normal occlusion is performed during the making of the artificial tooth 147 for the upper-jaw dentition.

Moreover, according to the occlusal surface setting instrument 260 of the present embodiment, the relative positions of the median line guide member 263 and the pupil line guide member 166 with respect to the upper-jaw dentition cast 71 and the lower-jaw dentition cast 72 have the same directions as those of the median line setting rod 225 and the pupil line setting rod 4 with respect to the upper-jaw dentition cast 71 and the lower-jaw dentition cast 72.

Therefore, the relative positional relation between the patient's pupil line 41, median line 43, and specific median line 42, and the occlusal surface in the oral cavity is exactly reproduced on the articulator 240, as the relative positional relation between the pupil line guide member 166 and median line guide member 263, and the upper-jaw dentition cast 71 and lower-jaw dentition cast 72.

Therefore, it is possible to make the artificial tooth 147 for the upper-jaw dentition with the high precision on the basis of the median line guide member 263 and the pupil line guide member 166.

Moreover, according to the occlusal surface setting instrument 260 of the present embodiment, in the same manner as in the median line setting rod 225, the median line guide member 263 having a perpendicular posture with respect to the top plate main body 242 can be tentatively detachably attached to the top plate main body, and operability in making the artificial tooth 147 for the upper-jaw dentition can be enhanced.

Furthermore, according to the occlusal surface setting instrument 260 of the present embodiment, since the elevator member 264 is attached so as to be elevatable along the median line guide member 263, the pupil line guide member 166 attached to the elevator member 264 can be set to a desired height in accordance with the dentition of the upper-jaw dentition cast 71, and precision in making the artificial tooth 147 for the upper-jaw dentition is enhanced.

In addition, according to the occlusal surface setting instrument 260 of the present embodiment, the incisor guide member 165 is constituted so as to falls on an extended line of a sectional axis at right angles to the pupil line guide member 166 in two sectional axes of the median line guide member 263. Therefore, it is possible to make the artificial tooth 147 for the upper-jaw dentition so that the intervention of the incisor 145a, 145b comes on the extended line of the axial direction of the incisor guide member 165. The precision and operability in making the artificial tooth for the upper-jaw dentition are largely enhanced even in this respect.

Although this is not especially mentioned in the present embodiment, the bite material holding member may be formed into any shape as long as the non-hardened bite material 1 is held. That is, the bite material holding member 102 can be attached to the connection member 3 instead of the bite material holding member 2 of the occlusal surface transfer instrument 220 in the same manner as in FIG. 22.

It is to be noted that constitutions or functions and effects of the bite material holding member 102 have been already described in the fourth embodiment, and the description is omitted here.

Moreover, the present embodiment is similar to the fourth embodiment in that an adhesive may be injected into the insertion hole 6 to fit the inserting portion 7 into the insertion hole, the fitting portion 131 may be attached to the pupil line setting rod 4 via the adhesive, and the occlusal surface setting instrument 260 can be omitted, but this has been described in the fourth embodiment in detail, and the description is omitted here.

Furthermore, in the present embodiment, the articulator of the present invention is constituted so that the top plate 242 is elevatable along the height adjusting rods 56, 56, but the top plate does not have to be elevatable, if there is not any trouble in attaching the upper-jaw dentition cast 71 and the lower-jaw dentition cast 72 and the top plate does not have to be constituted to be elevatable.

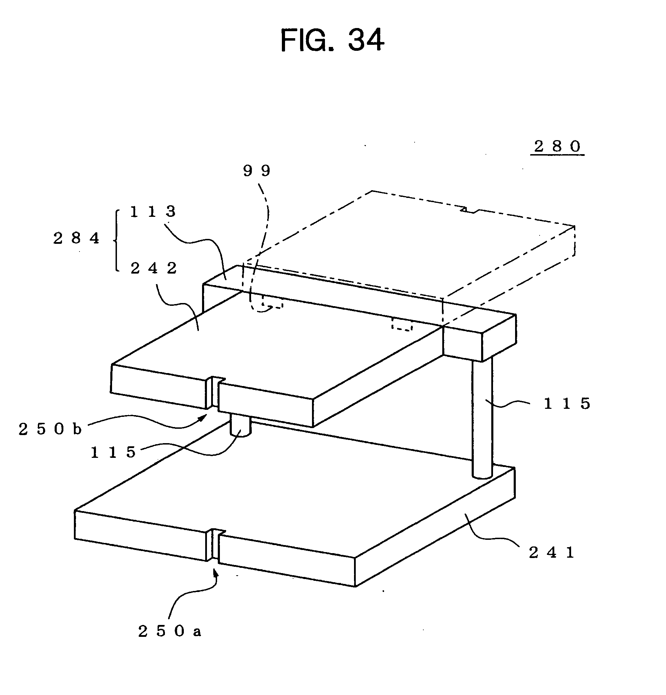

FIG. 34 is a perspective view showing an articulator according to a modification.

As seen from the drawing, an articulator 280 according to the modification is constituted of: a bottom plate 241; a pair of support rods 115, 115 stood in a state in which the rods are separated from each other along a rear edge portion of the bottom plate; and a top plate 284 attached to upper ends of the support rods. The top plate is constituted of: a top plate base member 113 attached to the upper ends of the support rods 115, 115; and a top plate main body 242 connected to the top plate base member via hinges 99, 99. Since the present modification has been described in detail in the fourth embodiment, the description is omitted hereinafter.

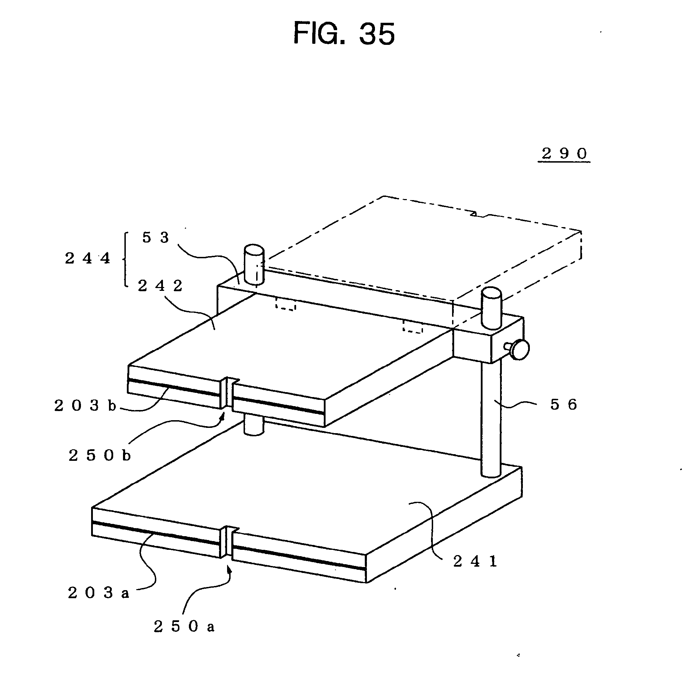

Moreover, in the present embodiment, the artificial tooth is made using the occlusal surface setting instrument 260, but the occlusal surface setting instrument 260 can be omitted by use of the articulator shown in FIG. 35.

FIG. 35 is a perspective view showing an articulator 290 according to the modification.

As shown in the drawing, in the same manner as in the articulator 240 according to the present embodiment, the articulator 290 according to the modification is constituted of: a bottom plate 241 to whose upper surface a lower-jaw dentition cast 72 is attached; height adjusting rods 56, 56 as a support mechanism stood in the vicinity of a rear edge portion of the bottom plate; and a top plate 244 whose rear edge portion is rotatably attached to the height adjusting rods so that the upper and lower sides can be reversed and to whose lower surface an upper-jaw dentition cast 71 is attached. The top plate 244 is directed frontwards, and attached to the height adjusting rods 56, 56 in a cantilever form, but in the present modification, pupil line reference lines 203a, 203b are disposed in parallel with the bottom plate on front end surfaces of the bottom plate 241 and a top plate main body 242.

It is to be noted that functions and effects due to such constitution have been already described in the fourth embodiment, the description is omitted here.

Moreover, in the present embodiment, the top plate 244 and the bottom plate 241 constituting the articulator 240 are constituted of rectangular steel plates having predetermined thicknesses, but a shape does not have to be limited to the rectangular shape.

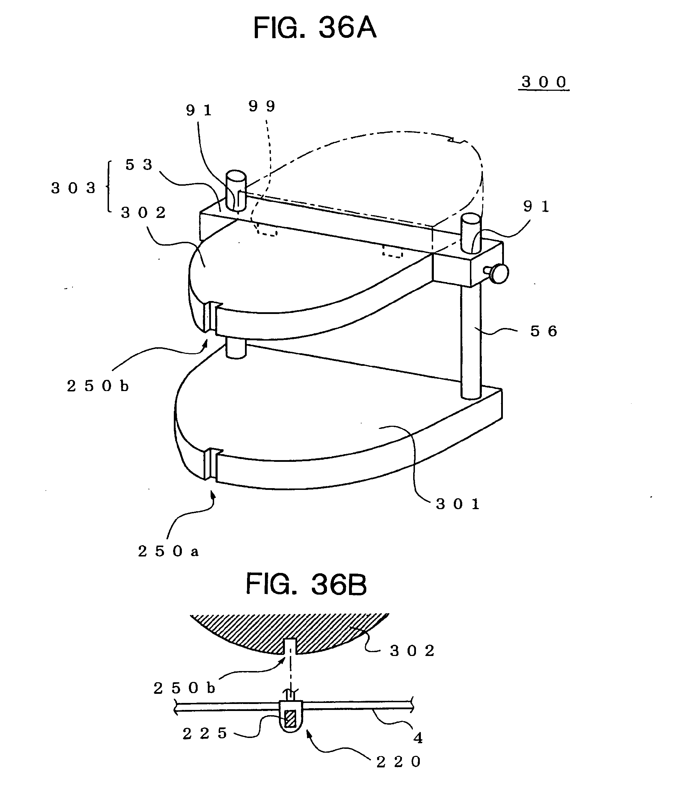

FIG. 36 is a perspective view showing an articulator 300 according to the modification.

As seen from the drawing, substantially in the same manner as in the articulator 240, the articulator 300 according to the modification is constituted of: a bottom plate 301 to whose upper surface a lower-jaw dentition cast 72 is attached; height adjusting rods 56, 56 as a support mechanism stood in the vicinity of a rear edge portion of the bottom plate; and a top plate 303 whose rear edge portion is rotatably attached to the height adjusting rods so that the upper and lower sides can be reversed and to whose lower surface an upper-jaw dentition cast 71 is attached. The top plate 303 is directed frontwards and attached to the height adjusting rods 56, 56 in a cantilever form.

Moreover, the bottom plate 301 and the top plate 303 are disposed facing each other in parallel with each other, and constituted so that the opposite front end surfaces are positioned on a surface perpendicular to the bottom plate 301. The lower-jaw dentition cast 72 can be fixed to the upper surface of the bottom plate 301, and the upper-jaw dentition cast 71 can be fixed to the lower surface of the top plate 303, respectively.

The top plate 303 is constituted of: a top plate base member 53 whose opposite end portions are provided with two rod holes 91, 91 for passing the height adjusting rods 56, 56; and a top plate main body 302 connected to the top plate base member via hinges 99, 99.

Here, unlike the articulator 240, the bottom plate 301 and the top plate main body 302 are formed of semi-elliptical steel plates having predetermined thicknesses. The upper surface of the bottom plate 301 and the lower surface of the top plate main body 302 may be subjected to a known technology such as rough surface working or emboss working so that the lower-jaw dentition cast 72 and the upper-jaw dentition cast 71 can be attached via a predetermined bonding material such as plaster, respectively.

Rod fitting recessed portions 250a, 250b are formed in the front end surfaces of the bottom plate 301 and the top plate main body 302 in the same manner as in the articulator 240.

Since the articulator 300 according to the present modification is similar to the articulator 240 except that shapes of the bottom and top plates are different, descriptions of another constitution, and functions and effects are omitted hereinafter.

Moreover, in the present embodiment, in the same manner as in FIGS. 19 and 20 according to the fourth embodiment, the occlusal surface setting instrument 260 is attached and detached with respect to the only fitting groove 250b of the top plate 244 on the assumption that the artificial tooth for the upper-jaw dentition is made using the upper-jaw dentition cast 71, but the device may be attached and detached with respect to the fitting groove 250a of the bottom plate 241. The device may be attached and detached with respect to the only fitting groove 250a of the bottom plate 241 in a case where the artificial tooth for the lower-jaw dentition is made using the lower-jaw dentition cast 72.

To be more specific, the median line guide member 263 of the occlusal surface setting instrument 260 is formed into a rectangular sectional shape, but such sectional shape does not have to be the same over a whole length of the median line guide member 263, and the rectangular section is sufficiently disposed over a region in which the member fits into the rod fitting recessed portions 250a, 250b.

Moreover, in the present embodiment, when the elevator member 264 is elevated and lowered along the median line guide member 263, the heights of the incisor guide member 165 and the pupil line guide member 166 can be changed, but such elevator member 264 may be omitted.

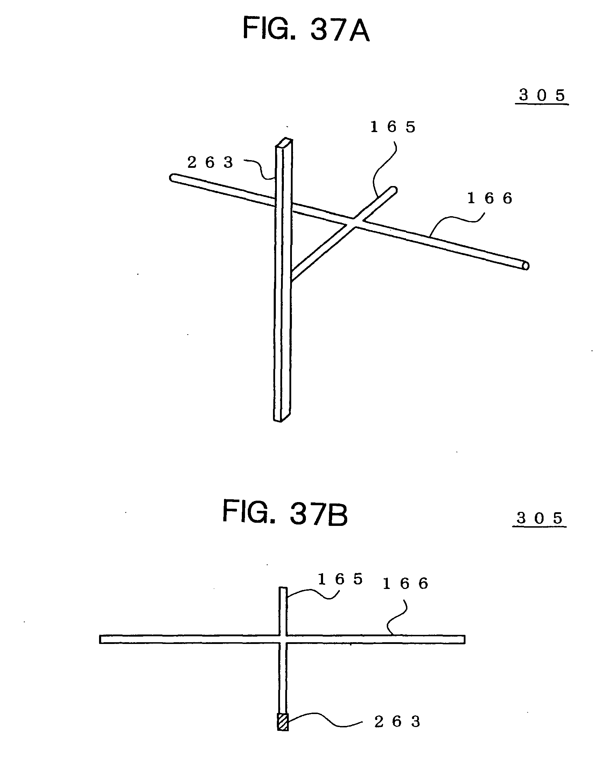

FIG. 37 shows a perspective view and a sectional view of an occlusal surface setting instrument 305 according to the modification. The occlusal surface setting instrument 305 shown in the drawing is constituted of: a median line guide member 263; an incisor guide member 165 protruded at right angles to the median line guide member; and a pupil line guide member 166 the vicinity of whose center is attached to the incisor guide member at right angles to the material axis of the incisor guide member and that of the median line guide member 263. Ends of the median line guide member 263 are detachably fitted into rod fitting recessed portions 250a, 250b.

In such constitution, since heights of the incisor guide member 165 and the pupil line guide member 166 cannot be changed, the precision in making the artificial tooth slightly drops. Moreover, since frequency of the attaching/detaching increases during the making of the artificial tooth, operability slightly drops, but any face-bow is not required, and remarkable functions and effects similar to those described above are produced as ever.

On the other hand, when the median line guide member 263 is detachably fitted into either of the rod fitting recessed portions 250a, 250b only, an attaching height of the median line guide member can be changed by attaching and detaching the median line guide member 263 as needed.

Therefore, in such constitution, the heights of the incisor guide member 165 and the pupil line guide member 166 can be changed. Moreover, since the frequency of the attaching/detaching does not increase during the making of the artificial tooth, the operability does not drop.

Moreover, the incisor guide member 165 may be constituted to be stretchable, though this is not especially mentioned in the present embodiment.

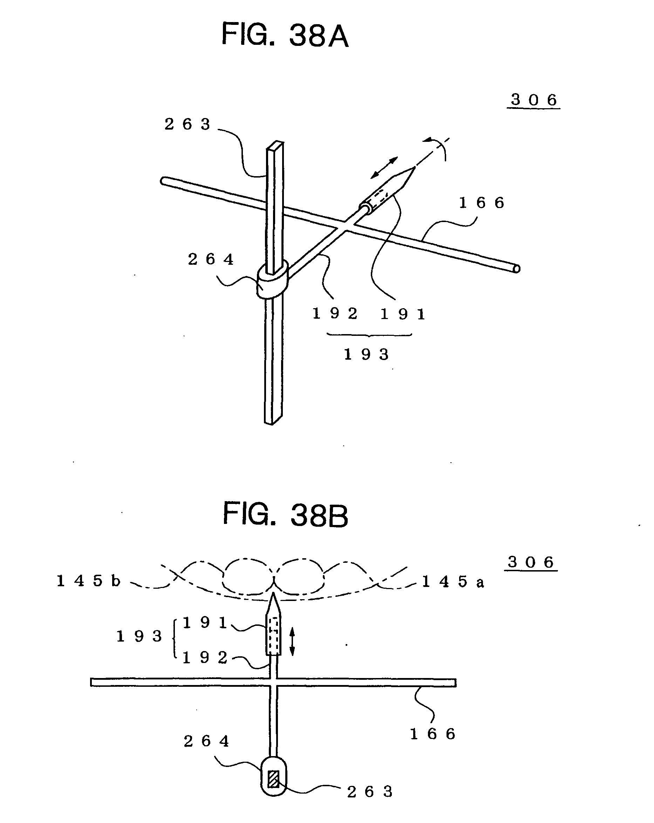

FIG. 38 shows a perspective view and a sectional view showing an occlusal surface setting instrument 306 according to the modification. The occlusal surface setting instrument 306 shown in the drawing is constituted of: a median line guide member 263; an elevator member 264 attached so as to be elevatable along the median line guide member; an incisor guide member 193 protruded from the elevator member at right angles to the median line guide member 263; and a pupil line guide member 166 the vicinity of whose center is attached to the incisor guide member at right angles to a material axis of the incisor guide member and that of the median line guide member 263. In the present modification, the incisor guide member 193 is constituted of an incisor guide main body 192 attached to the elevator member 264, and an extendable guide 191 attached to a tip of the main body and formed to be sharp-pointed. The extendable guide 191 is constituted to be stretchable with respect to the incisor guide main body 192.

Since the extendable guide 191 has been described in detail in the modification of the fourth embodiment, the description is omitted hereinafter.

Moreover, although this is not especially mentioned in the present embodiment, in the present invention, a disposing angle of the pupil line guide member is arbitrary with respect to the median line guide member constituting the occlusal surface setting instrument as long as the disposing angle is constituted to be equal to that of the pupil line setting rod with respect to the median line setting rod, and the angle does not have to be set to 90° as in the present embodiment.

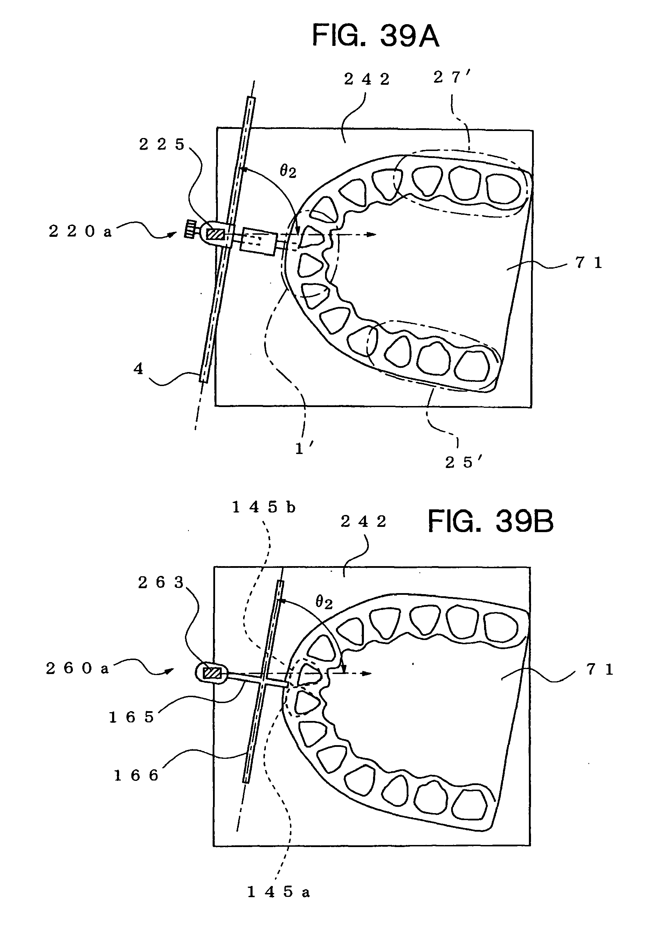

FIG. 39 is a looking-upward diagram (diagram in which one looks up at the above) of the top plate main body 242 constituting the articulator 240, (a) is a diagram showing a relative positional relation between an occlusal surface transfer instrument 220a and an upper-jaw dentition cast 71 or an articulator 240 in a case where the above-described disposing angle is an arbitrary angle θ2 other than 90° , and (b) is a diagram showing a relative positional relation between an occlusal surface setting instrument 260a and the upper-jaw dentition cast 71 or the articulator 240.

In such case, as apparent from the drawing, the front surface of the upper-jaw dentition cast 71 does not agree with that of the articulator 240, and deviates therefrom as much as the angle θ2, but an angle deviation at a time when the upper-jaw dentition cast 71 is attached using the occlusal surface transfer instrument 220a can be reproduced by the occlusal surface setting instrument 260a. Therefore, any problem is not generated in making the artificial tooth, and a high-precision artificial tooth can be made in the same manner as described above.

It is to be noted that the occlusal surface transfer instrument 220a is the same as the occlusal surface transfer instrument 220 except that the disposing angle of the pupil line setting rod 4 with respect to the median line setting rod 225 is not 90° but the angle θ2, and therefore description thereof is omitted here.

Similarly, since the occlusal surface setting instrument 260a is the same as the occlusal surface setting instrument 260 except that the disposing angle of the pupil line guide member 166 with respect to the median line guide member 263 is not 90° but the angle θ2, description thereof is omitted here.

Moreover, in the present embodiment, the process has been described in a case where the artificial tooth 147 for the upper-jaw dentition is made using the occlusal surface transfer instrument 220, the articulator 240, and the occlusal surface setting instrument 260. This also applies to a case where the artificial tooth for the lower-jaw dentition is made. First, the lower-jaw dentition is shaved with turbine or the like to form a support for supporting the artificial tooth, and two side bite materials 25, 27 and the bite material 1 are bitten by the patient by the above-described procedure. In such state, the patient's pupil line 41 is recorded in the pupil line setting rod 4, and the patient's median line 43 and the specific median line 42 are recorded in the median line setting rod 225, respectively. Next, after mounting the lower and upper jaw dentition casts on the articulator 240 by use of the occlusal surface transfer instrument 220, the artificial tooth for the lower-jaw dentition may be made using the occlusal surface setting instrument 260.

In such case, as described above, when the median line guide member 263 is fitted into the fitting groove 250a formed in the bottom plate 241, the occlusal surface setting instrument 260 does not have to be detached from the articulator 240 every time the artificial tooth for the lower-jaw dentition is made while reversing the top plate main body 242 in order to confirm the occlusion.

Moreover, to make the artificial tooth for the lower-jaw dentition, unlike the process of making the artificial tooth 147 for the upper-jaw dentition, the occlusion states of the dentition of the upper-jaw dentition cast and the corresponding dentition of the lower-jaw dentition cast are confirmed one by one with respect to the upper-jaw dentition cast corresponding to the already completed artificial tooth 147 for the upper-jaw dentition.

(Sixth Embodiment)

Next, a sixth embodiment will be described. It is to be noted that substantially the same components as those of the above-described embodiment are denoted with the same reference numerals, and description thereof is omitted.

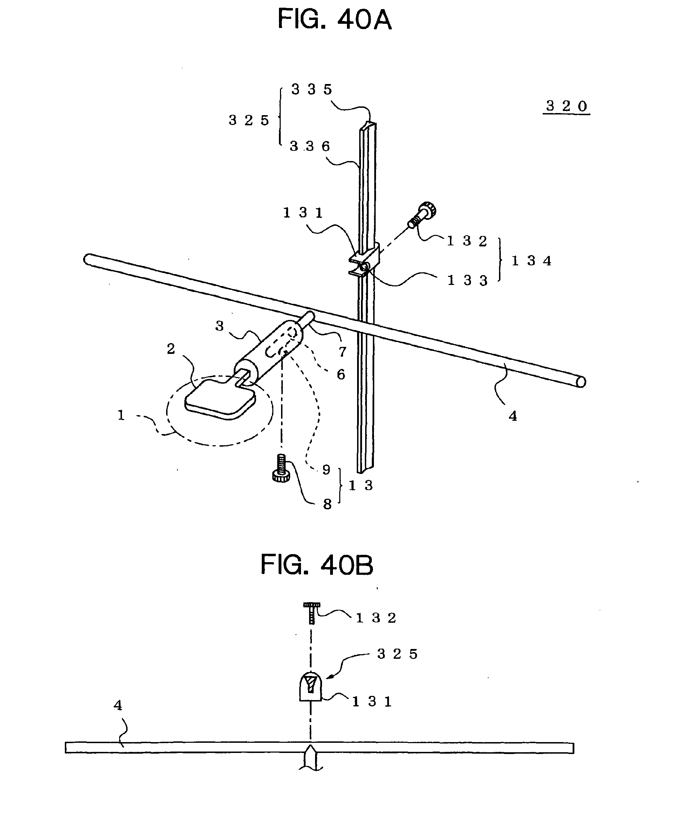

FIG. 40 is a diagram showing an occlusal surface transfer instrument according to the present embodiment, (a) is an exploded perspective view, and (b) is a sectional view. As seen from the drawing, an occlusal surface transfer instrument 320 of the present embodiment is constituted of: a bite material holding member 2 which holds a non-hardened bite material 1 in a bitable state; a connection member 3 whose one end is provided with the bite material holding member; a pupil line setting rod 4 disposed in the other end of the connection member near the center; and a median line setting rod 325 which is detachably attachable at right angles to the pupil line setting rod and in an arbitrary angular position around a material axis of the pupil line setting rod. The pupil line setting rod 4 is attached to the connection member 3 at right angles to the material axis of the connection member 3 and so as to be rotatable around the material axis.

Here, the median line setting rod 325 is constituted of: a triangular rod body 335 having a non-circular section; and a protruding member 336 having a rectangular section protruded from a peripheral surface of the rod body and along one ridge of the peripheral surface. Either of the components is made of plastic. Moreover, a fitting portion 131 attachable to the pupil line setting rod 4 is attached to the vicinity of the center of the median line setting rod, and the median line setting rod can be detachably attached to the pupil line setting rod 4 via the fitting portion.

The fitting portion 131 and the pupil line setting rod 4 are constituted so that the median line setting rod 325 is slidable along the pupil line setting rod 4 and rotatable around the material axis, when the median line setting rod 325 is attached to the pupil line setting rod 4.

Here, the median line setting rod 325 and the fitting portion 131 are constituted so that a protruding direction of the protruding member 336 is disposed at right angles to the material axis of the pupil line setting rod 4, when the median line setting rod is attached to the pupil line setting rod 4. In other words, the median line setting rod 325 and the fitting portion 131 are constituted so that the material axis of the pupil line setting rod 4 crosses a protrusion plane including the protruding member of the median line setting rod 325.

The fitting portion 131 is provided with a fitting portion fixing mechanism 134 so that the median line setting rod 325 is attached to a desired angular position around the material axis of the pupil line setting rod 4 in a state in which the fitting portion is attached to the pupil line setting rod 4.

Since constitutions of the connection member 3, the pupil line setting rod 4, the fitting portion 131, and the fitting portion fixing mechanism 134 have been already described in the first or fourth embodiment, description thereof is omitted hereinafter.

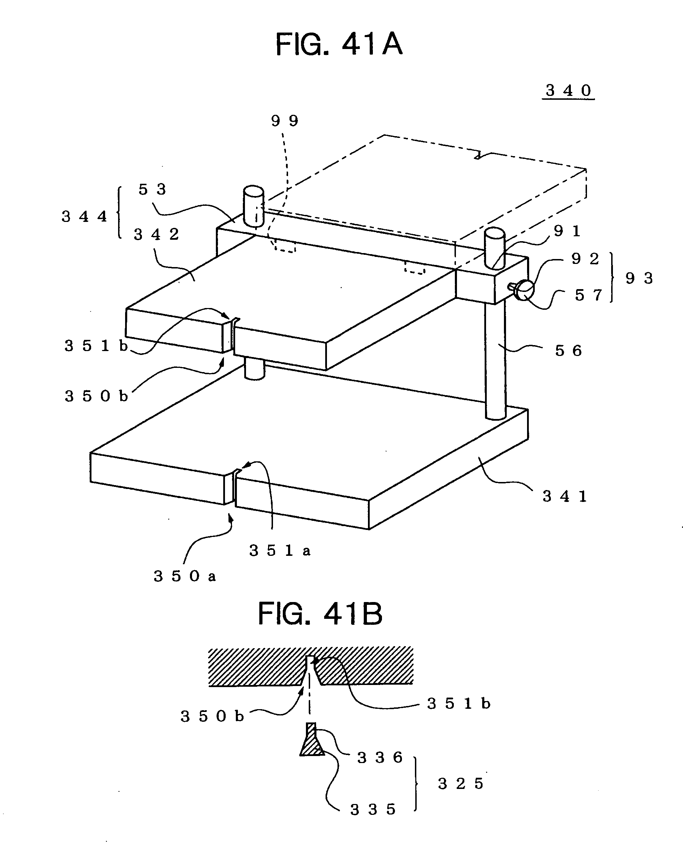

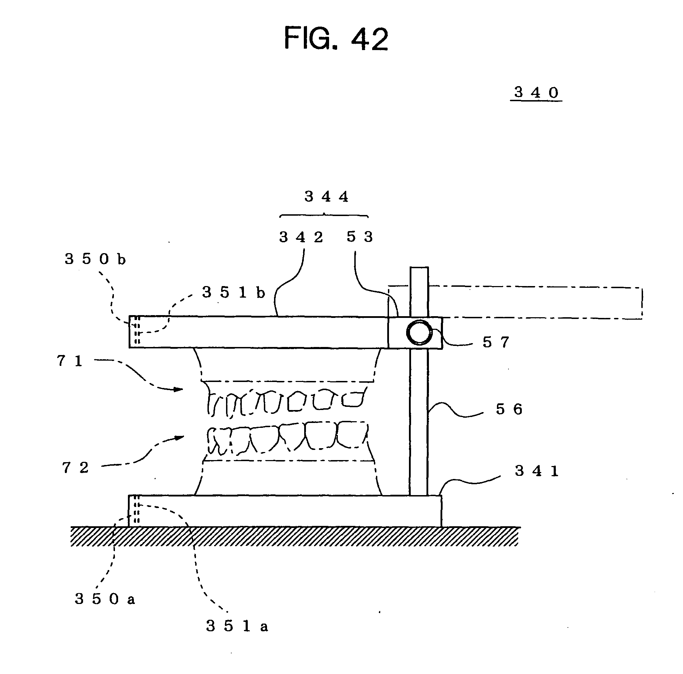

FIG. 41 is a diagram showing an articulator according to the present embodiment, (a) is a perspective view, and (b) is a detailed sectional view around a front side of the articulator. FIG. 42 shows a side view of the articulator according to the present embodiment. As seen from these drawings, an articulator 340 according to the present embodiment is constituted of: a bottom plate 341 to whose upper surface a lower-jaw dentition cast 72 is attached; height adjusting rods 56, 56 as a support mechanism stood in the vicinity of a rear edge portion of the bottom plate; and a top plate 344 whose rear edge portion is rotatably attached to the height adjusting rods so that the upper and lower sides can be reversed and to whose lower surface an upper-jaw dentition cast 71 is attached. The top plate 344 is directed frontwards and attached to the height adjusting rods 56, 56 in a cantilever form.

Here, the bottom plate 341 and the top plate 344 are disposed facing each other in parallel with each other, and constituted so that opposite front end surfaces are positioned on a surface perpendicular to the bottom plate 341. The lower-jaw dentition cast 72 can be fixed to the upper surface of the bottom plate 341, and the upper-jaw dentition cast 71 can be fixed to the lower surface of the top plate 344, respectively.

The bottom plate 341 and the top plate 344 can be constituted of, for example, rectangular steel plates having predetermined thicknesses, and the upper surface of the bottom plate 341 and the lower surface of the top plate 344 may be subjected to a known technology such as rough surface working or emboss working so that the lower-jaw dentition cast 72 and the upper-jaw dentition cast 71 can be attached via a predetermined bonding material such as plaster, respectively, in the same manner as in the bottom plate 141 and the top plate 144.

Moreover, a pair of height adjusting rods 56, 56 stands in a state in which the rods are separated from each other along the rear edge portion of the bottom plate 341. The top plate 344 is constituted of: a top plate base member 53 whose opposite end portions are provided with two rod holes 91, 91 for passing the height adjusting rods 56, 56; and a top plate main body 342 connected to the top plate base member via hinges 99, 99.
According to such constitution, the whole top plate 344 can be elevated and lowered along the height adjusting rods 56, 56.
Moreover, the top plate main body 342 can be rotated around the top plate base member 53 to reverse the upper and lower sides of the top plate main body.

Furthermore, as to the top plate 344, the top plate main body 342 can be rotated around the top plate base member 53 as described above. However, when a rear end surface of the top plate main body 342 abuts on the top plate base member 53, the rotation of the top plate main body 342 is limited. In such state, the top plate main body is directed horizontally frontwards with respect to the bottom plate 341, and constituted into the cantilever form.

Since the rotation is restricted in a position where the top plate main body 342 horizontally turns to the front in this manner, it is possible to retain a relative positional relation between the bottom plate 341 and the top plate main body 342 before and after the reversing of the upper and lower surfaces of the top plate main body 342.

Moreover, opposite end surfaces of the top plate base member 53 in a longitudinal direction are provided with fixing mechanisms 93, 93, but since such fixing mechanisms have been already described in the fourth embodiment, description thereof is omitted here.

Here, in the articulator 340 according to the present embodiment, rod fitting recessed portions 350a, 350b are formed in front end surfaces of the top plate 344 and the bottom plate 341 so that the rod body 335 of the median line setting rod 325 is detachably fitted into the recessed portions. Moreover, fitting grooves 351a, 351b are formed in inner surfaces of the rod fitting recessed portions 350a, 350b so that the protruding member 336 of the median line setting rod 325 is detachably fitted into the grooves. The rod fitting recessed portions 350a, 350b and the fitting grooves 351a, 351b are constituted so that the median line setting rod 325 is tentatively attached in a state in which the median line setting rod 325 becomes perpendicular to the bottom plate 341, and the rod is positioned at a specific angle around an axial line perpendicular to the bottom plate 341, when the rod body 335 and the protruding member 336 are fitted into the rod fitting recessed portions 350a, 350b and the fitting grooves 351a, 351b, respectively.

On the other hand, as described above, the median line setting rod 325 and the fitting portion 331 are constituted so that the protruding direction of the protruding member 336 is disposed at right angles to the material axis of the pupil line setting rod 4, when the median line setting rod is attached to the pupil line setting rod 4.

Therefore, when such protruding member 336 is fitted into the fitting grooves 350a, 350b, the median line setting rod 325 and the pupil line setting rod 4 are attached in parallel with a plane constituted by the front edge portions of the bottom plate 341 and the top plate 344, in other words, the front surface of the articulator 340. When the articulator is used together with an occlusal surface setting instrument 360 described later, the artificial tooth can be made with a high precision.

It is to be noted that to attach and detach the median line setting rod 325 with respect to the fitting grooves 350a, 350b, an outer dimension of the protruding member 336 and inner dimensions of the fitting grooves 350a, 350b are appropriately adjusted beforehand so that the median line setting rod is tentatively attached with a predetermined strength at an attaching time, and the rod is detached with such a force as to manually pull the rod forwards at a detaching time.

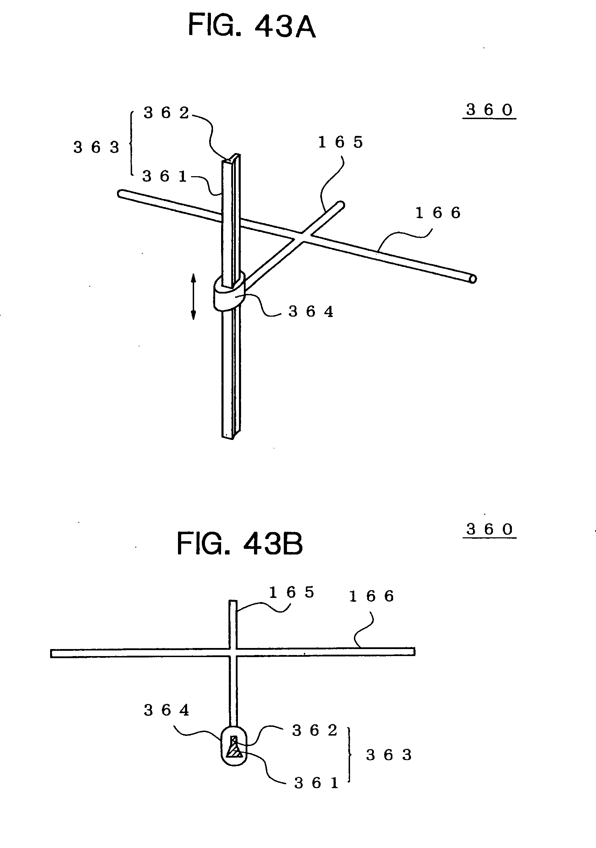

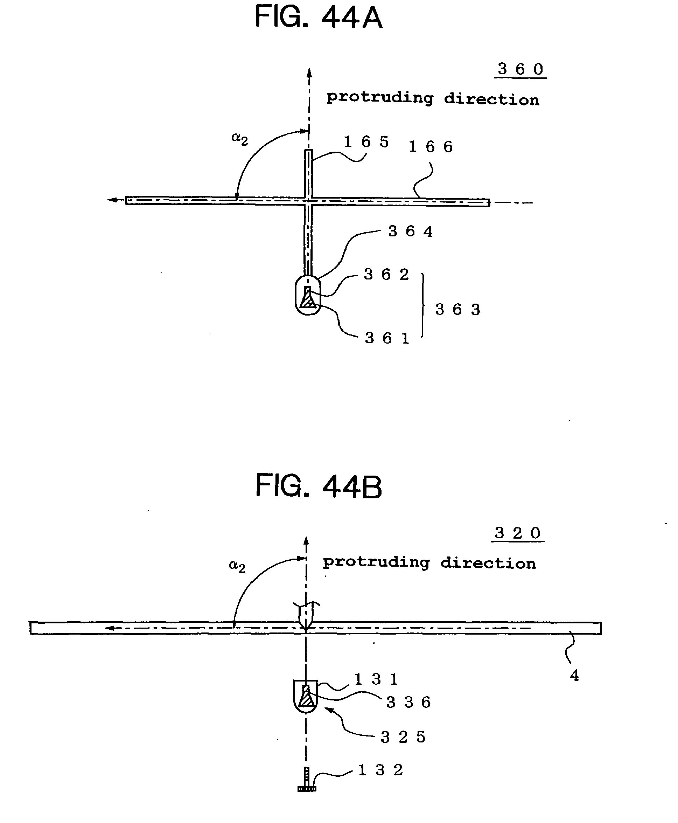

FIG. 43 is a diagram showing the occlusal surface setting instrument 360 according to the present embodiment, (a) is a perspective view, and (b) is a sectional view. FIG. 44 is a diagram showing a relation between the occlusal surface setting instrument 360 and the occlusal surface transfer instrument 220, (a) is a sectional view of the occlusal surface setting instrument 360, and (b) is a sectional view of the occlusal surface transfer instrument 320.

As seen from these drawings, the occlusal surface setting instrument 360 according to the present embodiment is constituted of: a predetermined median line guide member 363; an elevator member 364 attached so as to be elevatable along the median line guide member; an incisor guide member 165 protruded from the elevator member at right angles to the median line guide member 363; and a pupil line guide member 166 the vicinity of whose center is attached to the incisor guide member at right angles to a material axis of the incisor guide member and that of the median line guide member 363.

As means for attaching the elevator member 364 to a desired height of the median line guide member 363, a known technology may be approximately selected.

Here, the median line guide member 363 is constituted of: a median line guiding rod body 361 having a triangular section; and a median line guiding protruding member 362 protruded from a peripheral surface of the median line guiding rod body along a material axis of the rod body. Either of the components is formed of plastic.

A sectional shape of the median line guide member 363 is formed into the same sectional shape as that of the median line setting rod 325 constituting the occlusal surface transfer instrument 320.

Moreover, as seen from FIG. 44, the pupil line guide member 166 is positioned with respect to the median line guide member 363 so that a disposing angle α2 of the pupil line guide member with respect to a protruding direction of the median line guiding protruding member 362 is the angle α2 which is equal to that of the pupil line setting rod 4 with respect to the protruding direction of the protruding member 336. That is, the occlusal surface setting instrument 360 according to the present embodiment is constituted by protruding the incisor guide member 165 from the peripheral surface of the elevator member 364 at such disposing angle. Additionally, in the present embodiment, α2 is set to 90° .

Next, there will be described a procedure for making an artificial tooth by use of the occlusal surface transfer instrument 320, the articulator 340, and the occlusal surface setting instrument 360 according to the present embodiment in accordance with an example of a case where the artificial tooth for the patient's upper-jaw dentition is made.

To make the artificial tooth for the patient's upper-jaw dentition in the above-described procedure, in the same manner as in the fourth embodiment, first, an occlusal surface in patient's oral cavity is recorded in the occlusal surface transfer instrument 320, in the form of patient's pupil line 41, median line 43, and specific median line 42. Next, the upper-jaw dentition cast 71 and the lower-jaw dentition cast 72 are fixed to the articulator 340 by use of the occlusal surface transfer instrument 320 in which these pupil line 41, median line 43, and specific median line 42 are recorded. Thereafter, the occlusal surface setting instrument 360 is attached to the articulator 340, and the artificial tooth for the upper-jaw dentition is made using the upper-jaw dentition cast 71 and the lower-jaw dentition cast 72 in such state.

Here, to make such artificial tooth, the rod body 335 and the protruding member 336 constituting the median line setting rod 325 of the occlusal surface transfer instrument 320 are fitted into the rod fitting recessed portions 350a, 350b and the fitting grooves 351a, 351b, respectively, to fix the lower-jaw dentition cast 72 to the upper surface of the bottom plate 341 and the upper-jaw dentition cast 71 to the lower surface of the top plate main body 342, respectively. Moreover, the median line guiding rod body 361 of the occlusal surface setting instrument 360 and the median line guiding protruding member 362 protruded from the median line guiding rod body are fitted into the rod fitting recessed portions 350a, 350b and the fitting grooves 351a, 351b, respectively, to make the artificial tooth. Since a specific procedure is approximately similar to that of the fourth embodiment, description thereof is omitted here, and only contents to be specially noted will be described hereinafter.

Firstly, in the articulator 340, the rod fitting recessed portions 350a, 350b and the fitting grooves 351a, 351b are constituted so that the median line setting rod 325 becomes perpendicular to the bottom plate 341 and the median line setting rod 325 is tentatively attached in a state in which the rod is positioned at a predetermined angle around an axial line perpendicular to the bottom plate 341.

Therefore, when the median line setting rod 325 of the occlusal surface transfer instrument 320 is fitted into the rod fitting recessed portions 350a, 350b and the fitting grooves 351a, 351b of the articulator 340, the median line setting rod 325 and the pupil line setting rod 4 are attached in parallel with a plane constituted by the front edge portions of the bottom plate 341 and the top plate 344, in other words, the front surface of the articulator 340.

Secondly, the occlusal surface setting instrument 360 is constituted so that the disposing angle of the pupil line guide member 166 with respect to the median line guide member 363 is equal to that of the pupil line setting rod 4 with respect to the median line setting rod 325.

On the other hand, since the pupil line setting rod 4 is attached to the bite material holding member 2 via the connection member 3, the directions of the upper-jaw dentition cast 71 and the lower-jaw dentition cast 72 fixed to the articulator 340 by use of the occlusal surface transfer instrument 320 are determined by the disposing angle of the pupil line setting rod 4 with respect to the median line setting rod 325 of the occlusal surface transfer instrument 320.

Therefore, the direction of the pupil line guide member 166 becomes the same as the reproduced direction of the pupil line setting rod 4 at a time when the upper-jaw dentition cast 71 and the lower-jaw dentition cast 72 are attached. A relative positional relation between the patient's pupil line 41, median line 43, and specific median line 42, and the occlusal surface in the oral cavity is exactly reproduced on the articulator 340, as a relative positional relation between the pupil line guide member 166 and median line guide member 363, and the upper-jaw dentition cast 71 and the lower-jaw dentition cast 72. It is possible to make the artificial tooth with a high precision on the basis of the pupil line guide member 166 and the median line guide member 363.

As described above, according to the occlusal surface transfer instrument 320 of the present embodiment, after the bite material 1 bitten by the patient's upper-jaw front tooth 31 and lower-jaw front tooth 32 is hardened, the pupil line setting rod 4 attached to the connection member 3 is swung or rotated around the material axis of the connection member. Accordingly, the pupil line setting rod 4 is positioned in parallel with the patient's pupil line 41, and it is possible to fix the pupil line setting rod 4 to the connection member 3 in such position.

Therefore, the patient's pupil line 41 can be recorded in the pupil line setting rod 4, as the relative positional relation with respect to the occlusal surface of the upper-jaw dentition 28 and lower-jaw dentition 29.

Moreover, according to the occlusal surface transfer instrument 320 of the present embodiment, while retaining a state in which the hardened bite material 1' held by the bite material holding member 2 is bitten by the upper-jaw front tooth 31 and the lower-jaw front tooth 32, the fitting portion 131 attached to the peripheral surface of the median line setting rod 325 is attached to the pupil line setting rod 4 so that the median line setting rod 325 is disposed at right angles to the pupil line setting rod 4 along the patient's median line 43 and in parallel with the specific median line 42. In such state, the median line setting rod 325 can be attached to the pupil line setting rod 4.

Therefore, it is possible to record the patient's median line 43 and the specific median line 42 in the median line setting rod 325, as the relative positional relation with respect to the pupil line setting rod 4.

Moreover, since the patient's occlusal surface in the oral cavity, and a group of aesthetic information constituted of the pupil line 41, the median line 43, and the specific median line 42 can be recorded in the pupil line setting rod 4 and the median line setting rod 325 in a state in which they are associated with each other, it is possible to make the artificial tooth having the aesthetic dentition.

Furthermore, according to the occlusal surface transfer instrument 320 and the articulator 340 of the present embodiment, the patient's pupil line 41 can be transferred as a relation parallel to the bottom plate 341 of the articulator 340 to the articulator via the pupil line setting rod 4. Moreover, the recordings of the median line 43 and the specific median line 42 can be transferred as a relation perpendicular to the bottom plate 341 of the articulator 340 to the articulator via the median line setting rod 325.

Therefore, the upper-jaw dentition cast 71 and the lower-jaw dentition cast 72 can be fixed to the articulator 340 so that the occlusal surface becomes the same as that in the patient's oral cavity in a three-dimensional coordinate.
Therefore, it is possible to make the aesthetically superior artificial tooth in a state in which such occlusal surface in the oral cavity is reproduced in the articulator 340.

In addition, according to the occlusal surface transfer instrument 320 and the articulator 340 of the present embodiment, the occlusal surface transfer instrument 320 is constituted so that the protruding direction of the protruding member 336 is disposed at right angles to the material axis of the pupil line setting rod 4. Moreover, the articulator 340 is constituted so that the fitting grooves 351a, 351b become perpendicular to the front end surfaces of the top plate main body 342 and the bottom plate 341. Therefore, when the protruding member 336 is fitted into the fitting grooves 351a, 351b, the median line setting rod 325 automatically becomes perpendicular to the bottom plate 341 and the top plate main body 342, and the pupil line setting rod 4 becomes parallel to the front edge portions of the bottom plate 341 and the top plate main body 342.

Therefore, the upper-jaw dentition cast 71 and the lower-jaw dentition cast 72 can be mounted in the articulator 340 in a state in which the front surfaces of these casts agree with the front surface of the articulator 340. When the upper-jaw dentition cast 71 and the lower-jaw dentition cast 72 are viewed from the front surface of the articulator 340, it is possible to reproduce the same situation as that in a case where the dentition in the patient's oral cavity is viewed from the patient's front. Therefore, it is possible to make the artificial tooth more exactly.

Moreover, according to the occlusal surface transfer instrument 320 and the articulator 340 of the present embodiment, the occlusal surface transfer instrument 320 can be detachably attached to the articulator 340. The occlusal surface transfer instrument 320 can be tentatively attached to the articulator 340 at the attaching time, and can be easily detached from the articulator 340 at a detaching time.

Therefore, an operation to fix the upper-jaw dentition cast 71 and the lower-jaw dentition cast 72 to the lower surface of the top plate main body 342 and the upper surface of the bottom plate 341, respectively, is facilitated.

Moreover, according to the articulator 340 of the present embodiment, the top plate 344 and the height adjusting rods 56, 56 are constituted so that the relative positional relation between the bottom plate 341 and the top plate 344 is retained before and after the removing in the case where the bite material 1' and two side bite materials 25' , 27' are removed after the attaching, and the relative positional relation between the bottom plate 341 and the top plate 344 is retained before and after reversing the top plate 344. Therefore, even after the bite material 1' and two side bite materials 25', 27' are removed, the interval between the upper-jaw dentition cast 71 and the lower-jaw dentition cast 72 does not change at all.

Therefore, it is possible to make the artificial tooth 147 for the upper-jaw dentition in the relative positional relation in which the normal occlusion is performed. Moreover, even when the top plate main body 342 constituting the top plate 344 is rotated to its former state with respect to the top plate base member 53 in order to check the occlusion state as needed during the making of the artificial tooth for the upper-jaw dentition, the relative positional relation between the upper-jaw dentition cast 71 and the lower-jaw dentition cast 72 does not change at all. Therefore, it is possible to check as needed whether or not the normal occlusion is performed during the making of the artificial tooth 147 for the upper-jaw dentition.

Moreover, according to the occlusal surface setting instrument 360 of the present embodiment, the relative positions of the median line guide member 363 and the pupil line guide member 166 with respect to the upper-jaw dentition cast 71 and the lower-jaw dentition cast 72 have the same directions as those of the median line setting rod 325 and the pupil line setting rod 4 with respect to the upper-jaw dentition cast 71 and the lower-jaw dentition cast 72.

Therefore, the relative positional relation between the patient' s pupil line 41, median line 43, and specific median line 42, and the occlusal surface in the oral cavity is exactly reproduced on the articulator 340, as the relative positional relation between the pupil line guide member 166 and median line guide member 363, and the upper-jaw dentition cast 71 and lower-jaw dentition cast 72.

Therefore, it is possible to make the artificial tooth 147 for the upper-jaw dentition with a high precision on the basis of the median line guide member 363 and the pupil line guide member 166.

Moreover, according to the occlusal surface setting instrument 360 of the present embodiment, in the same manner as in the median line setting rod 325, the median line guide member 363 having a perpendicular posture with respect to the top plate main body 342 can be tentatively detachably attached to the top plate main body, and operability in making the artificial tooth 147 for the upper-jaw dentition can be enhanced.

Furthermore, according to the occlusal surface setting instrument 360 of the present embodiment, since the elevator member 364 is attached so as to be elevatable along the median line guide member 363, it is possible to match the pupil line guide member 166 attached to the elevator member 364 with the dentition of the upper-jaw dentition cast 71 and set the guide member to a desired height, and precision in making the artificial tooth 147 for the upper-jaw dentition is enhanced.

In addition, according to the occlusal surface setting instrument 360 of the present embodiment, since the incisor guide member 165 is constituted to fall on an extended line of the protruding direction of the median line guiding protruding member 362, it is possible to make the artificial tooth 147 for the upper-jaw dentition so that the extended line of an axial direction of the incisor guide member 165 falls between the incisor 145a, 145b. The precision and operability in making the artificial tooth for the upper-jaw dentition are largely enhanced even in this respect.

Although not especially mentioned in the present embodiment, the bite material holding member may be formed into any shape as long as the non-hardened bite material 1 is held. That is, the bite material holding member 102 can be attached to the connection member 3 instead of the bite material holding member 2 of the occlusal surface transfer instrument 320 in the same manner as in FIG. 22.

It is to be noted that since constitutions or functions and effects concerning the bite material holding member 102 have been already described in the fourth embodiment, the description is omitted here.

Moreover, the present embodiment is similar to the fourth embodiment in that an adhesive may be injected into the insertion hole 6 to fit the inserting portion 7 into the insertion hole, the fitting portion 131 may be attached to the pupil line setting rod 4 via the adhesive, and the occlusal surface setting instrument 360 can be omitted, but this has been described in the fourth embodiment in detail, and the description is omitted here.

Furthermore, in the present embodiment, the articulator of the present invention is constituted so that the top plate 344 is elevatable along the height adjusting rods 56, 56, but the top plate does not have to be elevatable, if there is not any trouble in attaching the upper-jaw dentition cast 71 and the lower-jaw dentition cast 72 and the top plate does not have to be constituted to be elevatable.

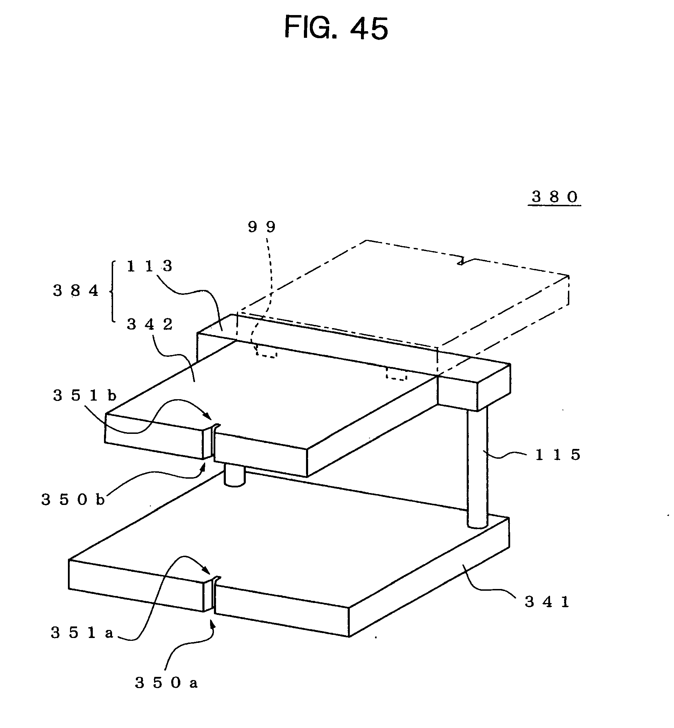

FIG. 45 is a perspective view showing an articulator according to a modification.

As seen from the drawing, an articulator 380 according to the modification is constituted of: a bottom plate 341; a pair of support rods 115, 115 stood in a state in which the rods are separated from each other along a rear edge portion of the bottom plate; and a top plate 384 attached to upper ends of the support rods. The top plate is constituted of: a top plate base member 113 attached to the upper ends of the support rods 115, 115; and a top plate main body 342 connected to the top plate base member via hinges 99, 99. Since the present modification has been described in detail in the fourth embodiment, the description is omitted hereinafter.

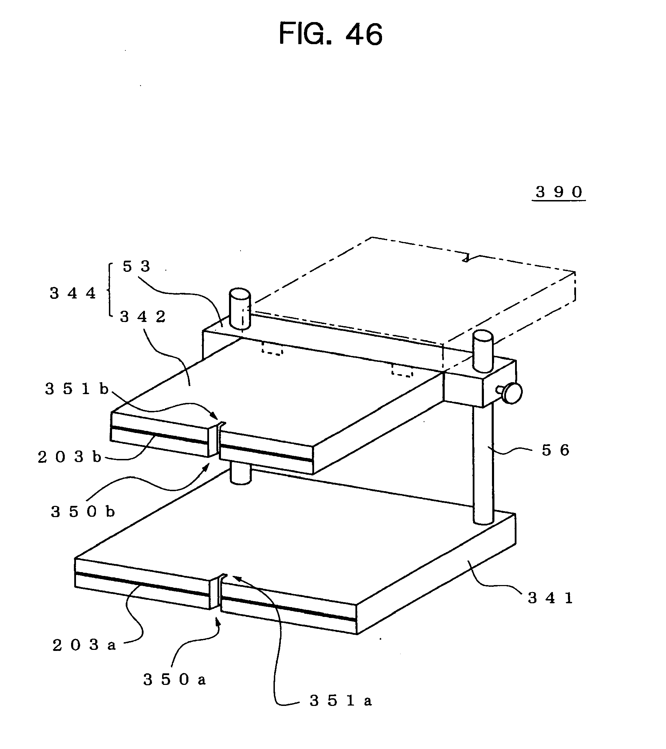

Moreover, in the present embodiment, the artificial tooth is made using the occlusal surface setting instrument 360, but the occlusal surface setting instrument 360 can be omitted by use of the articulator shown in FIG. 46.

FIG. 46 is a perspective view showing an articulator 390 according to the modification.

As shown in the drawing, in the same manner as in the articulator 340 according to the present embodiment, the articulator 390 according to the modification is constituted of: a bottom plate 341 to whose upper surface a lower-jaw dentition cast 72 is attached; height adjusting rods 56, 56 as a support mechanism stood in the vicinity of a rear edge portion of the bottom plate; and a top plate 344 whose rear edge portion is rotatably attached to the height adjusting rods so that the upper and lower sides can be reversed and to whose lower surface an upper-jaw dentition cast 71 is attached. The top plate 344 is directed frontwards, and attached to the height adjusting rods 56, 56 in a cantilever form, but in the present modification, pupil line reference lines 203a, 203b are disposed in parallel with the bottom plate on front end surfaces of the bottom plate 341 and a top plate main body 342.

It is to be noted that functions and effects due to such constitution have been already described in the fourth embodiment, the description is omitted here.

Moreover, in the present embodiment, the top plate 344 and the bottom plate 341 constituting the articulator 340 are constituted of rectangular steel plates having predetermined thicknesses, but a shape does not have to be limited to the rectangular shape.

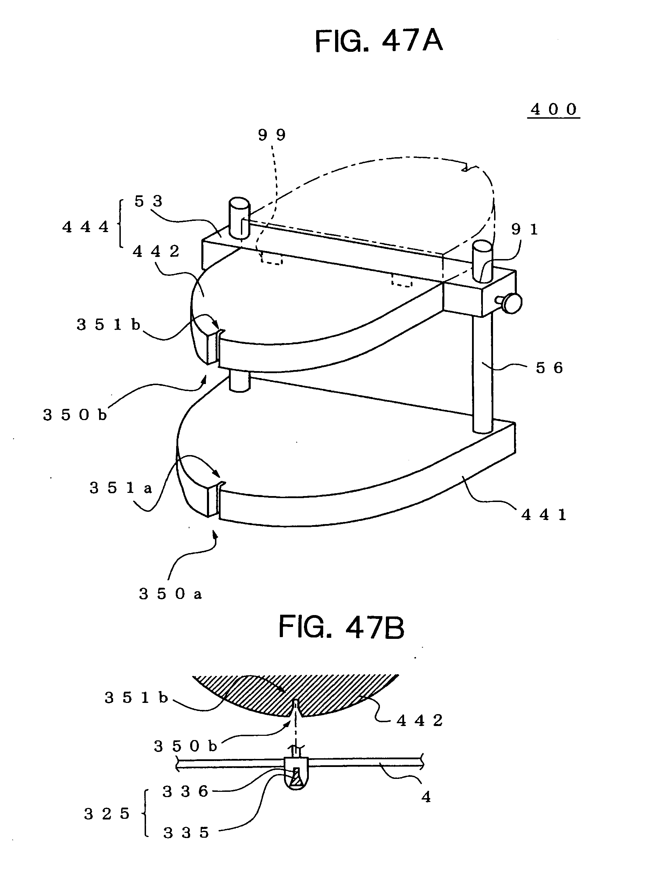

FIG. 47 is a perspective view showing an articulator 400 according to the modification.

As seen from the drawing, substantially in the same manner as in the articulator 340, the articulator 400 according to the modification is constituted of: a bottom plate 441 to whose upper surface a lower-jaw dentition cast 72 is attached; height adjusting rods 56, 56 as a support mechanism stood in the vicinity of a rear edge portion of the bottom plate; and a top plate 444 whose rear edge portion is rotatably attached to the height adjusting rods so that the upper and lower sides can be reversed and to whose lower surface an upper-jaw dentition cast 71 is attached. The top plate 444 is directed frontwards and attached to the height adjusting rods 56, 56 in a cantilever form.

Moreover, the bottom plate 441 and the top plate 444 are disposed facing each other in parallel with each other, and constituted so that the opposite front end surfaces are positioned on a surface perpendicular to the bottom plate 441. The lower-jaw dentition cast 72 can be fixed to the upper surface of the bottom plate 441, and the upper-jaw dentition cast 71 can be fixed to the lower surface of the top plate 444, respectively.

The top plate 444 is constituted of: a top plate base member 53 whose opposite end portions are provided with two rod holes 91, 91 for passing the height adjusting rods 56, 56; and a top plate main body 442 connected to the top plate base member via hinges 99, 99.

Here, unlike the articulator 340, the bottom plate 441 and the top plate main body 442 are formed of semi-elliptical steel plates having predetermined thicknesses. The upper surface of the bottom plate 441 and the lower surface of the top plate main body 442 may be subjected to a known technology such as rough surface working or emboss working so that the lower-jaw dentition cast 72 and the upper-jaw dentition cast 71 can be attached via a predetermined bonding material such as plaster, respectively.

In the same manner as in the articulator 340, rod fitting recessed portions 350a, 350b are formed in the front end surfaces of the bottom plate 441 and the top plate main body 442 so that the rod body 335 of the median line setting rod 325 is detachably fitted into the recessed portions. Moreover, fitting grooves 351a, 351b are formed in inner surfaces of the rod fitting recessed portions 350a, 350b so that the protruding member 336 of the median line setting rod 325 is detachably fitted into the grooves.

Since the articulator 400 according to the present modification is similar to the articulator 340 except that shapes of the bottom and top plates are different, descriptions of another constitution, and functions and effects are omitted hereinafter.

Moreover, in the present embodiment, in the same manner as in FIGS. 19 and 20 according to the fourth embodiment, the occlusal surface setting instrument 360 is attached and detached with respect to the only fitting groove 351b and rod fitting recessed portion 350b of the top plate 344 on the assumption that the artificial tooth for the upper-jaw dentition is made using the upper-jaw dentition cast 71, but the device may be attached and detached with respect to the fitting groove 351a and rod fitting recessed portion 350a of the bottom plate 341. The device may be attached and detached with respect to the only fitting groove 351a and the rod fitting recessed portion 350a of the bottom plate 341 in a case where the artificial tooth for the lower-jaw dentition is made using the lower-jaw dentition cast 72.

To be more specific, the median line guide member 363 of the occlusal surface setting instrument 360 is constituted by protruding a protruding member having a rectangular section on one ridge of a rod body having a triangular section along a material axis of the main body, but such sectional shape does not have to be the same over a whole length of the median line guide member 363, and the above-described section is sufficiently disposed over a region in which the member fits into the fitting groove 351a and the rod fitting recessed portion 350a or the fitting groove 351b and the rod fitting recessed portion 350b.

Moreover, in the present embodiment, when the elevator member 364 is elevated and lowered along the median line guide member 363, the heights of the incisor guide member 165 and the pupil line guide member 166 can be changed, but such elevator member 364 may be omitted.

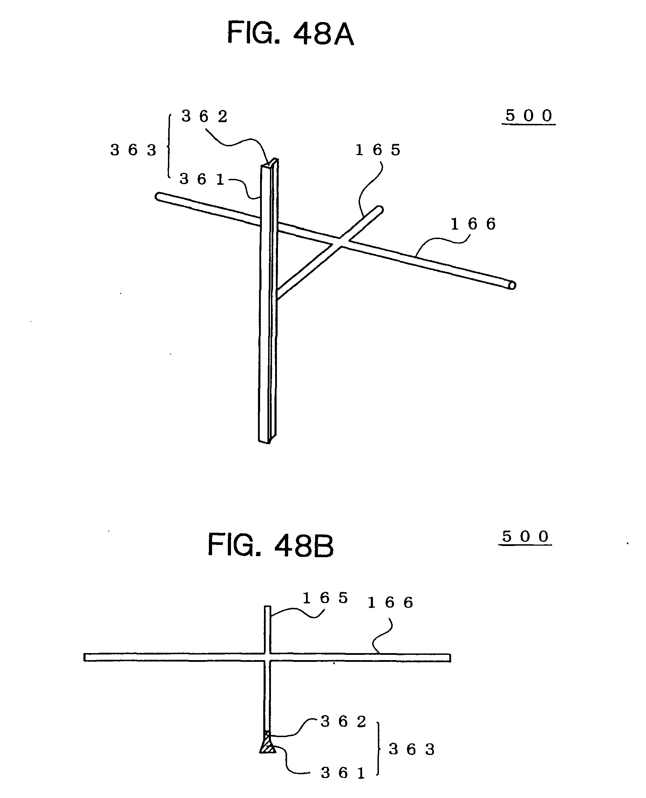

FIG. 48 shows a perspective view and a sectional view of an occlusal surface setting instrument 500 according to the modification. The occlusal surface setting instrument 500 shown in the drawing is constituted of: a median line guide member 363; an incisor guide member 165 protruded at right angles to the median line guide member; and a pupil line guide member 166 the vicinity of whose center is attached to the incisor guide member at right angles to the material axis of the incisor guide member and that of the median line guide member 363. Ends of the median line guide member 363 are detachably fitted into the fitting groove 351a and rod fitting recessed portion 350a, and the fitting groove 351b and rod fitting recessed portion 350b, respectively.

In such constitution, since heights of the incisor guide member 165 and the pupil line guide member 166 cannot be changed, the precision in making the artificial tooth slightly drops. Moreover, since frequency of the attaching/detaching increases during the making of the artificial tooth, operability slightly drops, but any face-bow is not required, and remarkable functions and effects similar to those described above are produced as ever.

On the other hand, when the median line guide member 363 is detachably fitted into either the fitting groove 351a and rod fitting recessed portion 350a, or the fitting groove 351b and rod fitting recessed portion 350b, an attaching height of the median line guide member can be changed by attaching and detaching the median line guide member 363 as needed.

Therefore, in such constitution, the heights of the incisor guide member 165 and the pupil line guide member 166 can be changed. Moreover, since the frequency of the attaching/detaching does not increase during the making of the artificial tooth, the operability does not drop.

Moreover, the incisor guide member 165 may be constituted to be stretchable, though this is not especially mentioned in the present embodiment.

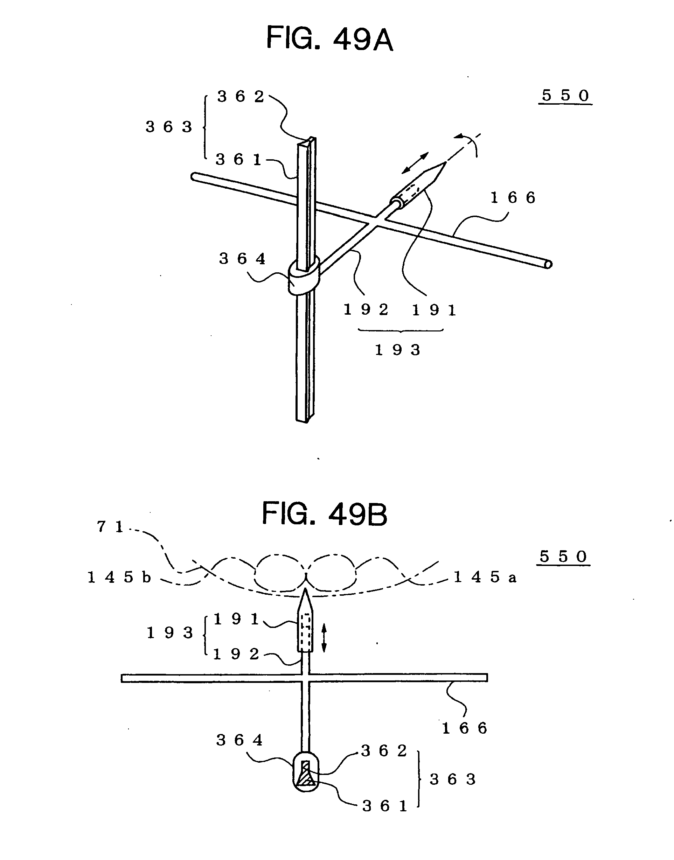

FIG. 49 shows a perspective view and a sectional view showing an occlusal surface setting instrument 550 according to the modification. The occlusal surface setting instrument 550 shown in the drawing is constituted of: a median line guide member 363; an elevator member 364 attached so as to be elevatable along the median line guide member; an incisor guide member 193 protruded from the elevator member at right angles to the median line guide member 363; and a pupil line guide member 166 the vicinity of whose center is attached to the incisor guide member at right angles to a material axis of the incisor guide member and that of the median line guide member 363. In the present modification, the incisor guide member 193 is constituted of an incisor guide main body 192 attached to the elevator member 364, and an extendable guide 191 attached to a tip of the main body and formed to be sharp-pointed. The extendable guide 191 is constituted to be stretchable with respect to the incisor guide main body 192.

Since the extendable guide 191 has been described in the modification of the fourth embodiment, the description is omitted hereinafter.

Moreover, although this is not especially mentioned in the present embodiment, in the present invention, a disposing angle of the pupil line guide member is arbitrary with respect to the median line guide member constituting the occlusal surface setting instrument as long as the disposing angle is constituted to be equal to that of the pupil line setting rod with respect to the median line setting rod, and the angle does not have to be set to 90° as in the present embodiment.

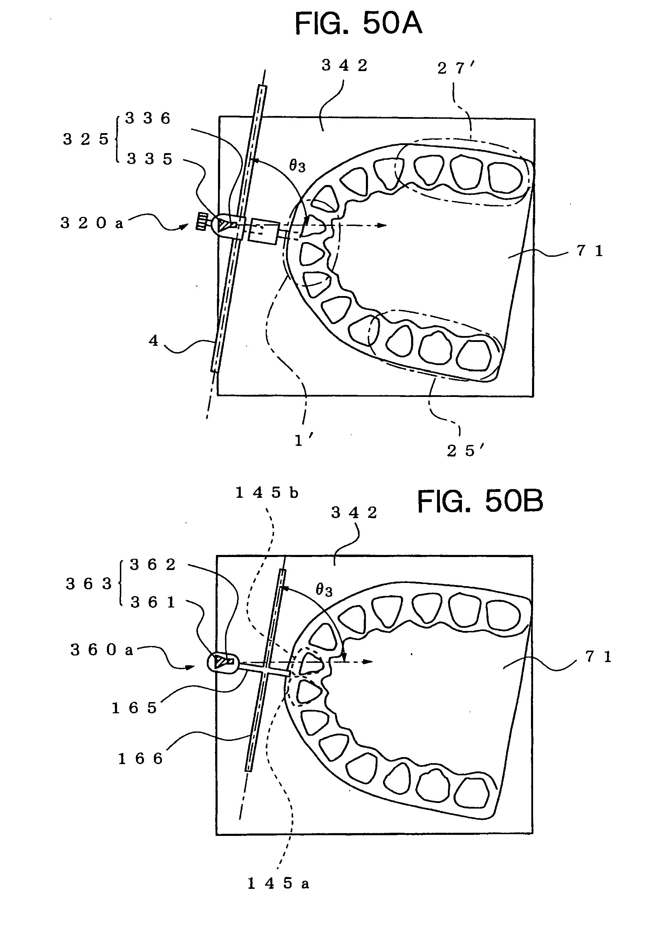

FIG. 50 is a looking-upward diagram (diagram in which one looks up at the above) of the top plate main body 342 constituting the articulator 340, (a) is a diagram showing a relative positional relation between an occlusal surface transfer instrument 320a and an upper-jaw dentition cast 71 or an articulator 340 in a case where the above-described disposing angle is an arbitrary angle θ3 other than 90° , and (b) is a diagram showing a relative positional relation between an occlusal surface setting instrument 360a and the upper-jaw dentition cast 71 or the articulator 140.

In such case, as apparent from the drawing, the front surface of the upper-jaw dentition cast 71 does not agree with that of the articulator 340, and deviates therefrom as much as the angle θ3, but an angle deviation at a time when the upper-jaw dentition cast 71 is attached using the occlusal surface transfer instrument 320a can be reproduced by the occlusal surface setting instrument 360a. Therefore, any problem is not generated in making the artificial tooth, and a high-precision artificial tooth can be made in the same manner as described above.

It is to be noted that the occlusal surface transfer instrument 320a is the same as the occlusal surface transfer instrument 320 except that the disposing angle of the pupil line setting rod 4 with respect to the median line setting rod 325 is not 90° but the angle θ3, and therefore description thereof is omitted here.

Similarly, since the occlusal surface setting instrument 360a is the same as the occlusal surface setting instrument 360 except that the disposing angle of the pupil line guide member 166 with respect to the median line guide member 363 is not 90° but the angle θ3, description thereof is omitted here.

Moreover, in the present embodiment, the process has been described in a case where the artificial tooth 147 for the upper-jaw dentition is made using the occlusal surface transfer instrument 320, the articulator 340, and the occlusal surface setting instrument 360. This also applies to a case where the artificial tooth for the lower-jaw dentition is made. First, the lower-jaw dentition is shaved with turbine or the like to form a support for supporting the artificial tooth, and two side bite materials 25, 27 and the bite material 1 are bitten by the patient by the above-described procedure. In such state, the patient's pupil line 41 is recorded in the pupil line setting rod 4, and the patient's median line 43 and the specific median line 42 are recorded in the median line setting rod 125, respectively. Next, after mounting the lower and upper jaw dentition casts on the articulator 340 by use of the occlusal surface transfer instrument 320, the artificial tooth for the lower-jaw dentition may be made using the occlusal surface setting instrument 360.

In such case, as described above, when the median line guide member 363 is fitted into the fitting groove 351a and the rod fitting recessed portion 350a formed in the bottom plate 341, the occlusal surface setting instrument 360 does not have to be detached from the articulator 340 every time the artificial tooth for the lower-jaw dentition is made while reversing the top plate main body 342 in order to confirm the occlusion.

Moreover, to make the artificial tooth for the lower-jaw dentition, unlike the process of making the artificial tooth 147 for the upper-jaw dentition, the occlusion states of the dentition of the upper-jaw dentition cast and the corresponding dentition of the lower-jaw dentition cast are confirmed one by one with respect to the upper-jaw dentition cast corresponding to the already completed artificial tooth 147 for the upper-jaw dentition.

(Seventh Embodiment)

Next, a seventh embodiment will be described. It is to be noted that substantially the same components as those of the above-described embodiment are denoted with the same reference numerals, and description thereof is omitted.

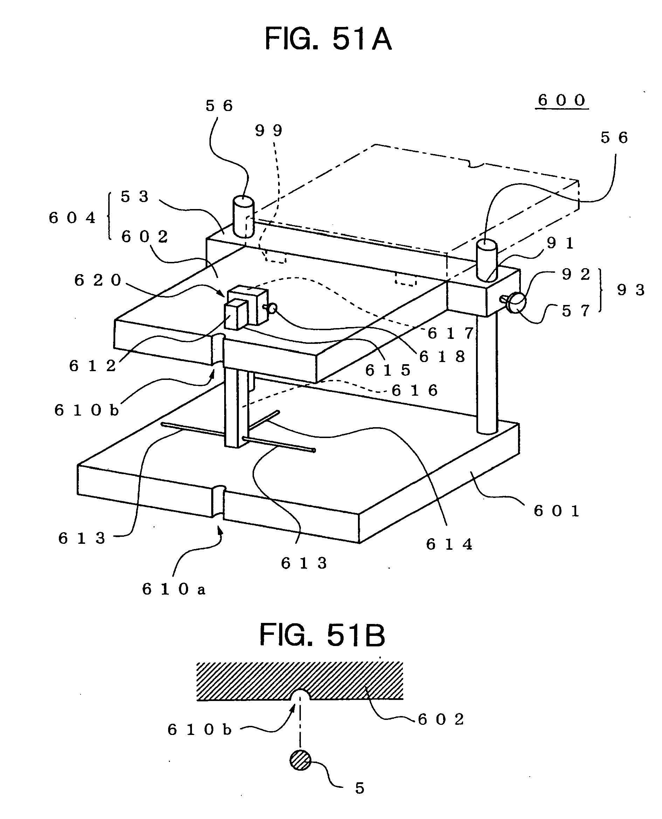

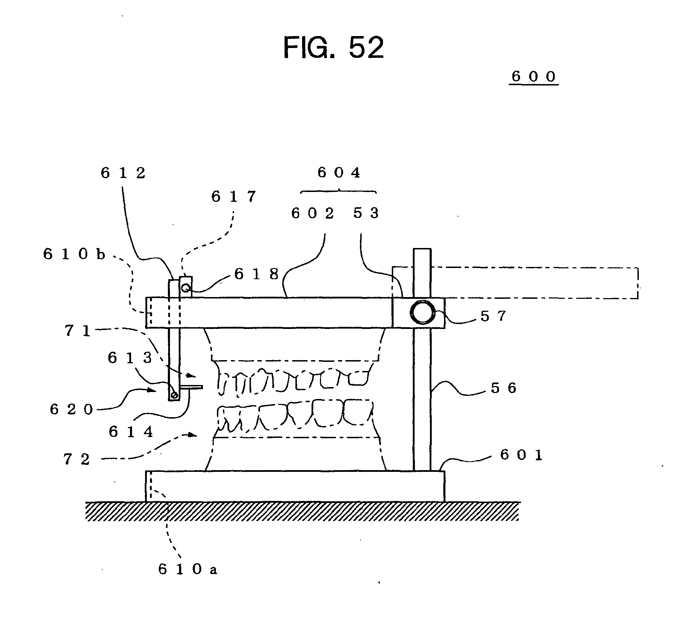

FIG. 51 is a diagram showing an articulator according to the present embodiment, (a) is a perspective view, and (b) is a detailed sectional view around a front side of the articulator. FIG. 52 shows a side view of the articulator according to the present embodiment. As seen from the drawing, an articulator 600 according to the present embodiment is constituted of: a bottom plate 601 to whose upper surface a lower-jaw dentition cast 72 is attached; height adjusting rods 56, 56 as a support mechanism stood in the vicinity of a rear edge portion of the bottom plate; a top plate 604 whose rear edge portion is rotatably attached to the height adjusting rods so that the upper and lower sides can be reversed and to whose lower surface an upper-jaw dentition cast 71 is attached; and an occlusal surface setting mechanism 620. The top plate 604 is directed frontwards and attached to the height adjusting rods 56 in a cantilever form.

Here, the bottom plate 601 and the top plate 604 are disposed facing each other in parallel with each other, and opposite front end surfaces are positioned on a surface perpendicular to the bottom plate 601. The lower-jaw dentition cast 72 can be fixed to the upper surface of the bottom plate 601, and the upper-jaw dentition cast 71 can be fixed to the lower surface of the top plate 604, respectively.

The bottom plate 601 and the top plate 604 can be constituted of, for example, rectangular steel plates having predetermined thicknesses. The upper surface of the bottom plate 601 and the lower surface of the top plate 604 may be subjected to a known technology such as rough surface working or emboss working so that the lower-jaw dentition cast 72 and the upper-jaw dentition cast 71 can be attached via a predetermined bonding material such as plaster, respectively.

Moreover, a pair of height adjusting rods 56 stands in a state in which the rods are separated from each other along the rear edge portion of the bottom plate 601. The top plate 604 is constituted of: a top plate base member 53 whose opposite end portions are provided with two rod holes 91, 91 for passing the height adjusting rods 56, 56; and a top plate main body 602 connected to the top plate base member via hinges 99, 99.
According to such constitution, the whole top plate 604 can be elevated and lowered along the height adjusting rods 56, 56.
Moreover, the top plate main body 602 can be rotated around the top plate base member 53 to reverse the upper and lower sides of the top plate main body.

Furthermore, as to the top plate 604, the top plate main body 602 can be rotated around the top plate base member 53 as described above. However, when a rear end surface of the top plate main body 602 abuts on the top plate base member 53, the rotation of the top plate main body 602 is limited. In such state, the top plate main body is directed horizontally frontwards with respect to the bottom plate 601, and constituted into the cantilever form.

As described above, since the rotation is restricted in a position where the top plate main body 602 horizontally turns to the front, a relative positional relation between the bottom plate 601 and the top plate 604 can be retained before and after reversing the upper and lower surfaces of the top plate main body 602.

Moreover, opposite end surfaces of the top plate base member 53 in a longitudinal direction are provided with fixing mechanisms 93, 93, and the top plate base member 53, and the whole top plate 604 can be attached to desired positions of the height adjusting rods 56, 56. However, since such constitution has been already described in the second embodiment, the description is omitted.

Here, the occlusal surface setting mechanism 620 includes: an elevator rod 612 passed through a through hole 615 formed in the top plate main body 602 so as to be non-rotatable around a material axis, and having a rectangular section; an incisor guide member 614 protruded on a rear side of the bottom plate 601 at right angles to the material axis in the vicinity of a lower end of the elevator rod and so as to cross front edge portions of the top plate 604 and the bottom plate 601 at right angles; and a pupil line guide member 613 disposed at right angles to the material axis of the elevator rod and the incisor guide member 614 in the vicinity of the lower end of the elevator rod 612. The elevator rod 612 is provided with the through hole 615 so as to be elevatable perpendicularly to the top plate main body 602.

It is to be noted that since the incisor guide member 614 is protruded on the rear side of the bottom plate 601 so as to cross the front edge portions of the top plate 604 and the bottom plate 601 at right angles as described above, the pupil line guide member 613 is positioned in parallel with the front edge portions of the top plate 604 and the bottom plate 601.

A rack 616 is disposed on a back surface of the elevator rod 612, and a pinion 617 to be engaged with the rack is disposed on the upper surface of the top plate 604. When a height adjusting knob 618 connected to a rotation shaft of the pinion is turned, the elevator rod 612 can be elevatably attached to a desired position.

On the other hand, in the articulator 600 according to the present embodiment, the front end surfaces of the bottom plate 601 and the top plate 604 are provided with: median line setting rod grooves 610a and 610b into which the median line setting rod 5 of the occlusal surface transfer instrument 10 is detachably fitted, respectively. Moreover, two median line setting rod grooves are formed along the same straight line perpendicular to the bottom plate 601. The median line setting rod grooves 610a, 610b are formed so that the median line setting rod 5 becomes perpendicular to the bottom plate 601, and a material axis of the rod and that of the incisor guide member 614 are included in the same plane, when the median line setting rod 5 is fitted into the median line setting rod grooves 610a, 610b.

Therefore, when the median line setting rod 5 is fitted into the median line setting rod grooves 610a, 610b so that the pupil line setting rod 4 becomes parallel to the pupil line guide member 613 constituting the occlusal surface setting mechanism 620, the median line setting rod 5 and the pupil line setting rod 4 are attached in parallel with a plane constituted by the front edge portions of the bottom plate 601 and the top plate 604, in other words, the front surface of the articulator 600.

It is to be noted that to attach and detach the median line setting rod 5 with respect to the median line setting rod grooves 610a, 610b, an outer dimension of the median line setting rod 5 and inner diameters of the median line setting rod grooves 610a, 610b are appropriately adjusted beforehand so that the rod is tentatively attached with a predetermined strength at an attaching time, and the rod is detached with such a force as to manually pull the rod forwards at a detaching time.

Next, there will be described a procedure for making an artificial tooth by use of the occlusal surface transfer instrument 10 and the articulator 600 according to the present embodiment in accordance with an example of a case where an artificial tooth for patient's upper-jaw dentition is made.

To make the artificial tooth for the patient's upper-jaw dentition in the above-described procedure, first, an occlusal surface in patient's oral cavity is recorded in the occlusal surface transfer instrument 10, in the form of patient's pupil line 41, median line 43, and specific median line 42. Next, the upper-jaw dentition cast 71 and the lower-jaw dentition cast 72 are fixed to the articulator 600 by use of the occlusal surface transfer instrument 10 in which these pupil line 41, median line 43, and specific median line 42 have been recorded, and the artificial tooth for the upper-jaw dentition is made using the upper-jaw dentition cast 71 and the lower-jaw dentition cast 72 in such state.

A typical procedure will be described hereinafter in detail.

It is to be noted that there has been already described in the first embodiment a procedure for shaving an upper-jaw dentition with turbine or the like to form a support for supporting the artificial tooth, allowing two side bite materials 25, 27 and a bite material 1 to be bitten by a patient, and recording the patient's pupil line 41 in the pupil line setting rod 4, and the patient's median line 43 and the specific median line 42 in the median line setting rod 5, respectively, by use of the occlusal surface transfer instrument 10 in such state. Therefore, the description is omitted here.

First, the upper-jaw dentition cast 71 and the lower-jaw dentition cast 72 are fixed to the articulator 600 by use of the occlusal surface transfer instrument 10.

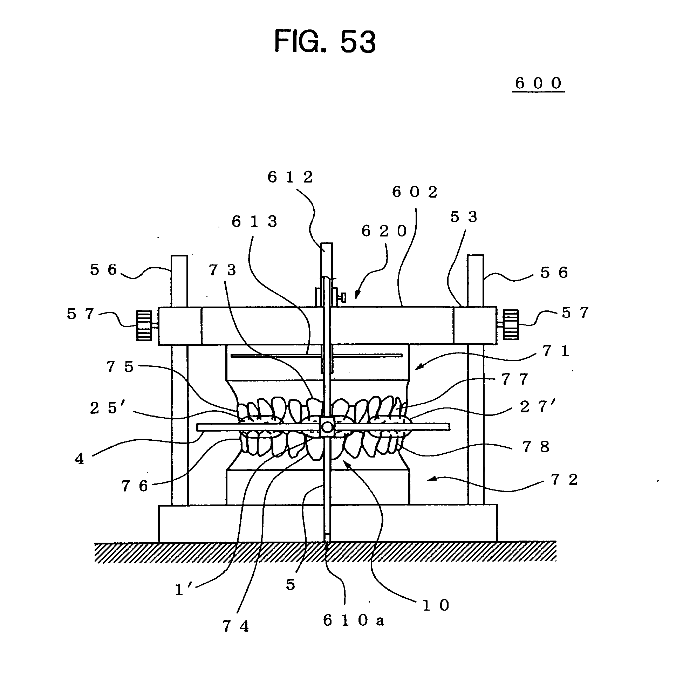

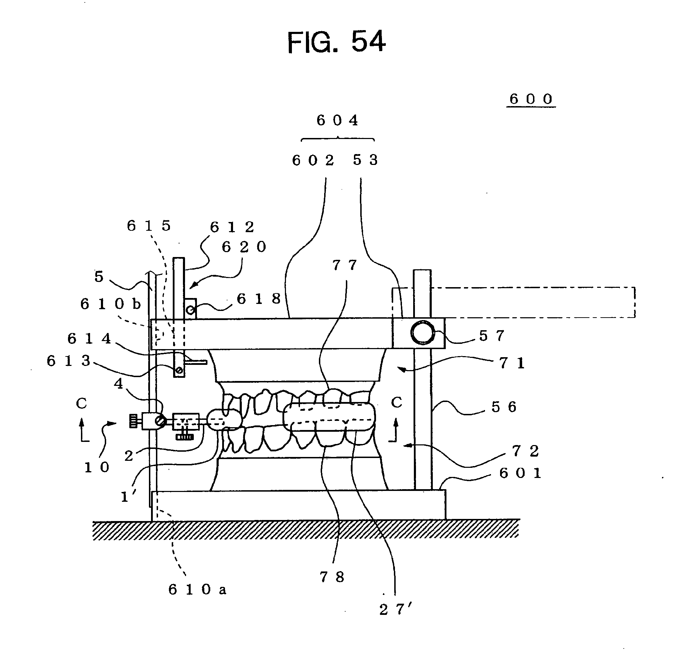

FIGS. 53 and 54 are a front view and a side view showing a case where the occlusal surface transfer instrument 10 is attached to the articulator 600 according to the present embodiment.

As seen from these drawings, to fix the upper-jaw dentition cast 71 and the lower-jaw dentition cast 72 to the articulator 600 by use of the occlusal surface transfer instrument 10, first, the hardened bite material 1' held by the bite material holding member 2 constituting the occlusal surface transfer instrument 10 is bitten by front teeth 73 of the upper-jaw dentition cast 71 and front teeth 74 of the lower-jaw dentition cast 72 so as to correspond to an occlusion mold impressed on the bite material. Moreover, the side bite material 25' on which occlusion molds of right-side upper and lower molar teeth 23, 24 (see FIG. 2) have been impressed, and the side bite material 27' on which occlusion molds of left-side upper and lower molar teeth 21, 26 (see FIG. 2) have been impressed are bitten by right upper and lower molar teeth 75, 76 and left upper and lower molar teeth 77, 78 of the upper-jaw dentition cast 71 and the lower-jaw dentition cast 72 so as to correspond to the respective occlusion molds, respectively. In such state, the median line setting rod 5 constituting the occlusal surface transfer instrument 10 is fitted into the median line setting rod grooves 610a, 610b formed in the front end surfaces of the bottom plate 601 and the top plate main body 602. Thereafter, the lower-jaw dentition cast 72 is fixed to the upper surface of the bottom plate 601, and the upper-jaw dentition cast 71 is fixed to the lower surface of the top plate main body 602, respectively, by use of plaster or the like.

When the median line setting rod 5 is fitted into the median line setting rod grooves 610a, 610b in this manner, the recording of the patient's pupil line 41 is transferred to the articulator, as a relation parallel to the bottom plate 601 constituting the articulator 600, and the recordings of the median line 42 and the specific median line 42 are transferred to the articulator, as a relation perpendicular to the bottom plate 601 constituting the articulator 600.

Here, when the median line setting rod 5 is fitted into the median line setting rod grooves 610a, 610b formed in the front end surfaces of the bottom plate 601 and the top plate main body 602, respectively, the median line setting rod 5 is fitted into the median line setting rod grooves 610a, 610b so as to dispose the pupil line setting rod 4 in parallel with the pupil line guide member 613 of the occlusal surface setting mechanism 620.

It is to be noted that when the median line setting rod 5 is fitted into the median line setting rod grooves 610a, 610b, respectively, so that the pupil line setting rod 4 becomes parallel to the pupil line guide member 613, the elevator rod 612 may be appropriately elevated and lowered to bring the pupil line setting rod 4 close to the pupil line guide member 613.

In this case, it is possible to position the pupil line setting rod 4 with respect to the pupil line guide member 613 more exactly. When the upper-jaw dentition cast 71 and the lower-jaw dentition cast 72 are inserted into the articulator 600, or plaster is piled, the elevator rod 612 is preferably pulled up if necessary to enhance efficiency of the above-described operation.

In a case where the median line setting rod 5 is fitted into the median line setting rod grooves 610a, 610b, respectively, since the median line setting rod 5 is constituted of a plastic rod having a circular section, and inner diameters of the median line setting rod grooves 610a, 610b are formed to be slightly smaller than an outer diameter of the median line setting rod 5, the occlusal surface transfer instrument 10 can be tentatively attached to the articulator 600 at the attaching time, and easily detached from the articulator 600 at the detaching time.

In the occlusal surface setting mechanism 620, the elevator rod 612 is constituted to be perpendicularly elevatable with respect to the top plate main body 602, and the incisor guide member 614 is protruded on the rear side of the bottom plate 601 so as to cross the front edge portions of the top plate 604 and the bottom plate 601 at right angles. Therefore, the pupil line guide member 613 is positioned in parallel with the front edge portions of the top plate 604 and the bottom plate 601.

On the other hand, in the occlusal surface transfer instrument 10, the pupil line 41 is recorded in the pupil line setting rod 4, and the median line 43 and the specific median line 42 are recorded in the median line setting rod 5, respectively, as a relative positional relation with respect to the occlusal surface in the patient's oral cavity.

Therefore, when the median line setting rod 5 is fitted into the median line setting rod grooves 610a, 610b, respectively, so that the pupil line setting rod 4 becomes parallel to the pupil line guide member 613, the recording of the pupil line 41 is transferred to the pupil line guide member 613, and the recordings of the median line 43 and the specific median line 42 are transferred to the elevator rod 612, respectively.

In addition, the pupil line guide member 613 is positioned in parallel with the front edge portions of the top plate 604 and the bottom plate 601. Therefore, when the median line setting rod 5 is fitted into the median line setting rod grooves 610a, 610b so that the pupil line setting rod 4 becomes parallel to the pupil line guide member 613, the median line setting rod 5 and the pupil line setting rod 4 are attached in parallel with the plane constituted by the front edge portions of the bottom plate 601 and the top plate 604, in other words, the front surface of the articulator 600. Therefore, the upper-jaw dentition cast 71 and the lower-jaw dentition cast 72 are mounted on the articulator so that front surfaces of the casts agree with the front surface of the articulator 600.

To fix the lower-jaw dentition cast 72 and the upper-jaw dentition cast 71 to the upper surface of the bottom plate 601 and the lower surface of the top plate main body 602, respectively, the top plate 604 is elevated and lowered along the height adjusting rods 56, 56. Next, after third male screws 57, 57 are operated to thereby fix the top plate 604 to a desired position, the median line setting rod 5 is fitted into the median line setting rod grooves 610a, 610b. In such state, the lower-jaw dentition cast 72 may be fixed to the upper surface of the bottom plate 601, and the upper-jaw dentition cast 71 may be fixed to the lower surface of the top plate main body 602, respectively, via the plaster or the like.

It is to be noted that if necessary, a predetermined support member (not shown) stands on the upper surface of the bottom plate 601, and weights of the upper-jaw dentition cast 71 and the lower-jaw dentition cast 72 may be supported by the support member until the plaster is solidified. In such case, the support member is buried in the plaster between the bottom plate 601 and the lower-jaw dentition cast 72.

Here, when immediately plastered resins are used as materials of the side bite materials 25, 27, and a dental rubber elastic impression material (putty type) is used as a material of the bite material 1 as described above, the dental rubber elastic impression material (putty type) has an adequate elasticity even after hardened. Therefore, there is not any possibility that the front teeth 73 of the upper-jaw dentition cast 71 are cracked which are supports in a case where the bite material 1' is bitten by the front teeth 73, 74 of the upper-jaw dentition cast 71 and the lower-jaw dentition cast 72 so as to correspond to the occlusion mold impressed on the bite material 1'.

Moreover, since the immediately polymerized resin becomes considerably hard after hardened, the side bite materials 25', 27' are bitten by the upper and lower molar teeth 75, 76 and the upper and lower molar teeth 77, 78 of the upper-jaw dentition cast 71 and the lower-jaw dentition cast 72 so as to correspond to the respective occlusion molds impressed on the side bite materials, respectively. Accordingly, even when the bite material 1' has the elasticity, there is not any possibility that the occlusion position of the upper-jaw dentition cast 71 and the lower-jaw dentition cast 72 deviates.

When the lower-jaw dentition cast 72 is fixed to the upper surface of the bottom plate 601, and the upper-jaw dentition cast 71 is fixed to the lower surface of the top plate main body 602, respectively, the bite material 1' and two side bite materials 25', 27' bitten by the upper-jaw dentition cast 71 and the lower-jaw dentition cast 72 are removed together with the occlusal surface transfer instrument 10 from the upper-jaw dentition cast 71 and the lower-jaw dentition cast 72, respectively.

Here, a relative positional relation between the bottom plate 601 and the top plate 604 is retained before and after removing the bite material 1' and two side bite materials 25', 27', and the relative positional relation between the bottom plate 601 and the top plate 604 is retained before and after reversing the top plate main body 602. Therefore, even after the bite material 1' and two side bite materials 25', 27' are removed, the relative positional relation between the upper-jaw dentition cast 71 and the lower-jaw dentition cast 72 does not change at all.

Next, the artificial tooth is made on the basis of the pupil line guide member 613 and the incisor guide member 614.

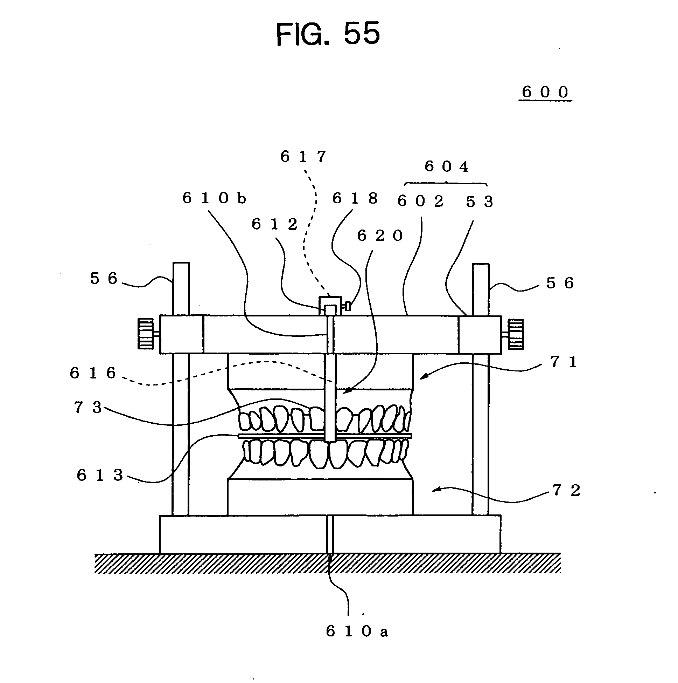

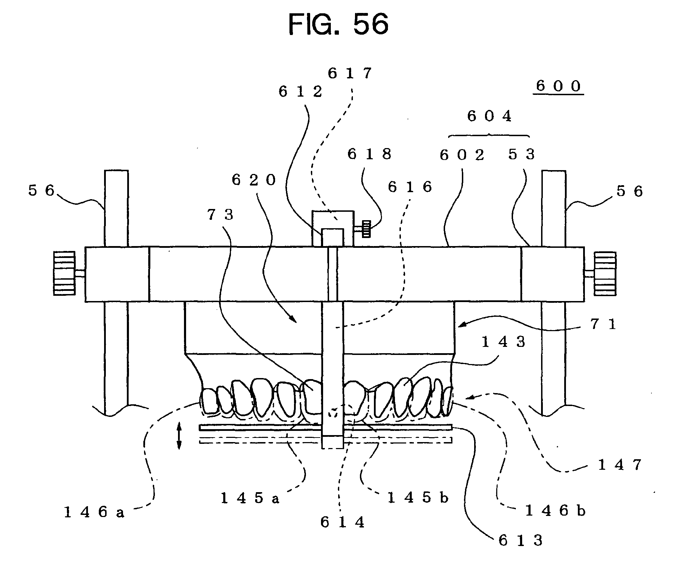

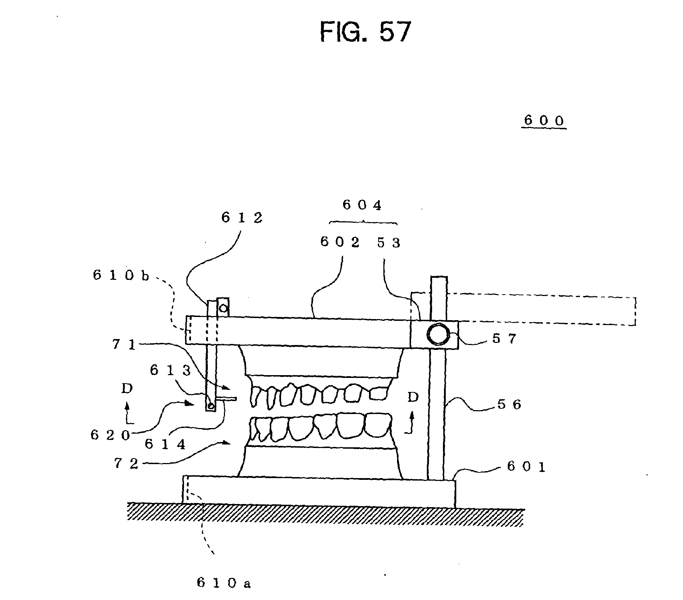

FIG. 55 is a front view showing a state in which the upper-jaw dentition cast 71 and the lower-jaw dentition cast 72 are fixed to the articulator 600, FIG. 56 is a detailed front view showing a periphery of the top plate main body 602 in FIG. 55, and FIG. 57 is a side view showing a state in which the upper-jaw dentition cast 71 and the lower-jaw dentition cast 72 are fixed to the articulator 600.

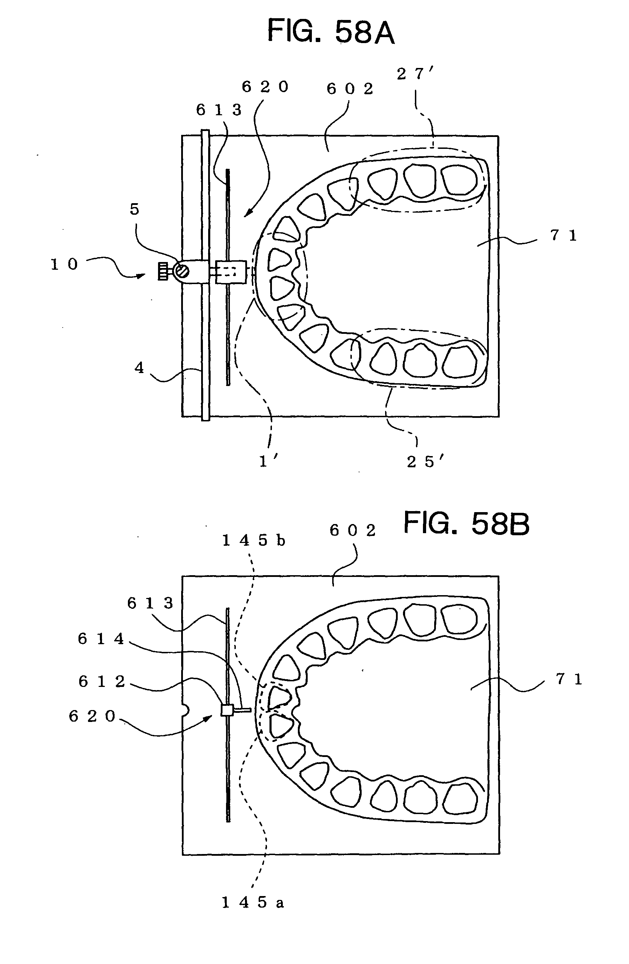

Moreover, FIG. 58 is a diagram showing a state in which the upper-jaw dentition cast 71 is attached to the top plate main body 602 constituting the articulator 600, (a) is an arrow view along line C-C in FIG. 54, and (b) is an arrow view along line D-D in FIG. 57.

As seen from these drawings, to make the artificial tooth by use of the upper-jaw dentition cast 71 fixed to the articulator 600, while turning the height adjusting knob 618 connected to the rotation shaft of the pinion 617 to elevate or lower the elevator rod 612 constituting the occlusal surface setting mechanism 620 to a desired position in accordance with the upper-jaw dentition cast 71, the artificial tooth is made.

Specifically, as shown in FIG. 56, it is possible to make the artificial tooth on the basis of the pupil line guide member 613 so that the upper-jaw dentition becomes horizontally symmetrical. That is, the artificial tooth can be made horizontally symmetrically so that the upper-jaw dentition formed at a time when a support 143 of the upper-jaw dentition cast 71 is covered with an artificial tooth 147 for the upper-jaw dentition gradually becomes high from artificial teeth 145a, 145b newly constituting incisor to artificial teeth 146a, 146b newly constituting molar teeth as viewed from the front surface of the articulator 600.

It is to be noted that the occlusal surface gradually becomes high from the incisor 73 as the front teeth toward the molar and the inside of the oral cavity in a case where the specific median line 42 is regarded as a reference. However, as seen from FIG. 56, the elevator rod 612 can be elevated and lowered with respect to the top plate main body 602 by turning the height adjusting knob 618 connected to the rotation shaft of the pinion 617. Therefore, the occlusal surface can be exactly reproduced to the upper-jaw dentition cast 71 while appropriately elevating and lowering the elevator rod 612 depending on a type of the artificial tooth 147 for the upper-jaw dentition.

Moreover, as well seen from FIGS. 56 and 58, the artificial tooth 147 for the upper-jaw dentition is made so that an extended line of a material axis of the incisor guide member 614 falls between the incisor 145a, 145b in the artificial tooth 147 for the upper-jaw dentition as viewed from the front surface of the articulator 600. Even in such case, the height of the incisor guide member 614 may be matched with positions of the incisor 73 by appropriately elevating and lowering the elevator rod 612.

It is to be noted that for the sake of convenience of operation, the top plate main body 602 is reversed around the top plate base member with respect to the top plate base member 53 until the upper surface abuts on that of the top plate base member to make the artificial tooth 147 for the upper-jaw dentition. The artificial tooth for the upper-jaw dentition is attached to the upper-jaw dentition cast 71, and the top plate main body 602 is rotated to its former state with respect to the top plate base member 53 to confirm the occlusion state with the lower-jaw dentition cast 72.

As described above, according to the occlusal surface transfer instrument 10 and the articulator 600 of the present embodiment, the patient's pupil line 41 can be transferred as a relation parallel to the bottom plate 601 of the articulator 600 to the articulator via the pupil line setting rod 4. Moreover, the recordings of the median line 43 and the specific median line 42 can be transferred as a relation perpendicular to the bottom plate 601 of the articulator 600 to the articulator via the median line setting rod 5.

Therefore, the upper-jaw dentition cast 71 and the lower-jaw dentition cast 72 can be fixed to the articulator 600 so that the occlusal surface becomes the same as that in the patient's oral cavity in a three-dimensional coordinate.
Therefore, it is possible to make the aesthetically superior artificial tooth in a state in which such occlusal surface in the oral cavity is reproduced in the articulator 600.

Moreover, according to the articulator 600 of the present embodiment, the occlusal surface setting mechanism 620 and the through hole 615 are constituted so that the elevator rod 612 is elevatable perpendicularly to the top plate main body 602, and the pupil line guide member 613 is positioned in parallel with the front edge portions of the top plate 604 and the bottom plate 601. The median line setting rod grooves 610a, 610b are formed in the front end surfaces of the bottom plate 601 and the top plate 604 so that the material axis of the median line setting rod and that of the incisor guide member 614 are included in the same plane, when the median line setting rod 5 is fitted into the median line setting rod grooves. The median line setting rod 5 is fitted into the median line setting rod grooves 610a, 610b so that the pupil line setting rod 4 becomes parallel to the pupil line guide member 613. Therefore, the relative positional relation between the patient's pupil line 41, median line 43, and specific median line 42, and the occlusal surface in the oral cavity is exactly reproduced on the articulator 600 as the relative positional relation between the pupil line guide member 613 and elevator rod 612, and the upper-jaw dentition cast 71 and lower-jaw dentition cast 72.

In addition, the upper-jaw dentition cast 71 and the lower-jaw dentition cast 72 can be mounted in the articulator 600 in a state in which the front surfaces of these casts agree with the front surface of the articulator 600. Therefore, when the upper-jaw dentition cast 71 and the lower-jaw dentition cast 72 are viewed from the front surface of the articulator 600, it is possible to reproduce the same situation as that in a case where the dentition in the patient's oral cavity is viewed from the patient's front.

Therefore, it is possible to make the artificial tooth 147 for upper-jaw dentition with a high precision on the basis of the elevator rod 612 and the pupil line guide member 613.

Moreover, according to the occlusal surface transfer instrument 10 and the articulator 600 of the present embodiment, the median line setting rod 5 is constituted of a plastic rod having a circular section. Moreover, the inner diameters of the median line setting rod grooves 610a, 610b are constituted to be slightly smaller than the outer diameter of the median line setting rod 5. Therefore, when the median line setting rod fits into the median line setting rod grooves 610a, 610b, respectively, the occlusal surface transfer instrument 10 can be detachably attached to the articulator 600. The occlusal surface transfer instrument 10 can be tentatively attached to the articulator 600 at the attaching time, and the upper-jaw dentition cast 71 and the lower-jaw dentition cast 72 can be tentatively held and positioned.

Therefore, an operation to fix the upper-jaw dentition cast 71 and the lower-jaw dentition cast 72 to the lower surface of the top plate main body 602 and the upper surface of the bottom plate 601, respectively, is facilitated.

Moreover, according to the articulator 600 of the present embodiment, the top plate 604 and the height adjusting rods 56, 56 are constituted so that the relative positional relation between the bottom plate 601 and the top plate 604 is retained before and after the removing in the case where the bite material 1' and two side bite materials 25', 27' are removed after the attaching, and the relative positional relation between the bottom plate 601 and the top plate 604 is retained before and after reversing the top plate main body 602. Therefore, even after the bite material 1' and two side bite materials 25', 27' are removed, an interval between the upper-jaw dentition cast 71 and the lower-jaw dentition cast 72 does not change at all.

Therefore, it is possible to make the artificial tooth 147 for the upper-jaw dentition in the relative positional relation in which the normal occlusion is performed. Moreover, even when the top plate main body 602 constituting the top plate 604 is rotated to its former state with respect to the top plate base member 53 in order to check the occlusion state as needed during the making of the artificial tooth for the upper-jaw dentition, the relative positional relation between the upper-jaw dentition cast 71 and the lower-jaw dentition cast 72 does not change at all. Therefore, it is possible to check as needed whether or not the normal occlusion is performed during the making of the artificial tooth 147 for the upper-jaw dentition.

Moreover, according to the articulator 600 of the present embodiment, the upper-jaw dentition cast 71 and the lower-jaw dentition cast 72 are constituted so that the front surfaces thereof agree with the front surface of the articulator 600. Therefore, the artificial tooth can be made horizontally symmetrically so that the upper-jaw dentition formed at a time when the support 143 of the upper-jaw dentition cast 71 is covered with the artificial tooth 147 for the upper-jaw dentition gradually becomes high from the artificial teeth 145a, 145b newly constituting the incisor to the artificial teeth 146a, 146b newly constituting the molar teeth as viewed from the front surface of the articulator 600.

Furthermore, according to the articulator 600 of the present embodiment, since the elevator rod 612 constituting the occlusal surface setting mechanism 620 is attached so as to be elevatable with respect to the top plate main body 602, it is possible to match the pupil line guide member 613 attached to the elevator rod 612 with the dentition of the upper-jaw dentition cast 71 and set the guide member to a desired height, and precision in making the artificial tooth 147 for the upper-jaw dentition is enhanced.

In addition, according to the articulator 600 of the present embodiment, the incisor guide member 614 constituting the occlusal surface setting mechanism 620 is protruded on the rear side of the bottom plate 601 so as to cross the material axis of the elevator rod 612 at right angles. Therefore, it is possible to make the artificial tooth 147 for the upper-jaw dentition so that the extended line of the axial direction of the incisor guide member 614 falls between the incisor 145a, 145b. The precision and operability in making the artificial tooth for the upper-jaw dentition are largely enhanced even in this respect.

Although not especially mentioned in the present embodiment, the articulator of the present invention has been constituted so that the top plate 602 is elevatable along the height adjusting rods 56, 56. However, unless there is any trouble in the attaching of the upper-jaw dentition cast 71 and the lower-jaw dentition cast 72, or the top plate has to be constituted to be elevatable, the top plate does not have to be elevatable.

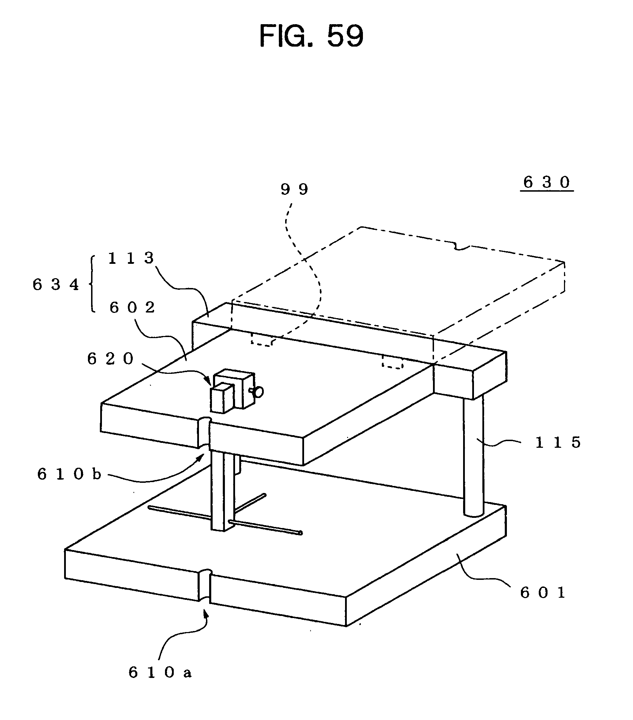

FIG. 59 is a perspective view showing an articulator according to a modification.

As seen from the drawing, an articulator 630 according to the modification is constituted of: a bottom plate 601; a pair of support rods 115, 115 stood in a state in which the rods are separated from each other along a rear edge portion of the bottom plate; a top plate 634 attached to upper ends of the support rods; and an occlusal surface setting mechanism 620 disposed so as to pass through the top plate in the vicinity of the front side of the top plate. The top plate 634 is constituted of: a top plate base member 113 attached to the upper ends of the support rods 115, 115; and a top plate main body 602 connected to the top plate base member via hinges 99, 99. Since the present modification has been described in detail in the fourth embodiment, the description is omitted hereinafter.

Moreover, in the present embodiment, the articulator of the present invention is constituted so that the median line setting rod grooves into which the median line setting rod 5 of the occlusal surface transfer instrument 10 is to be fitted are formed in the front end surfaces of the top and bottom plates. However, if it is possible to fix the upper-jaw dentition cast 71 and the lower-jaw dentition cast 72 to the articulator on the basis of the pupil line guide member 613 and the elevator rod 612, the median line setting rod grooves do not have to be formed in the top and bottom plates.

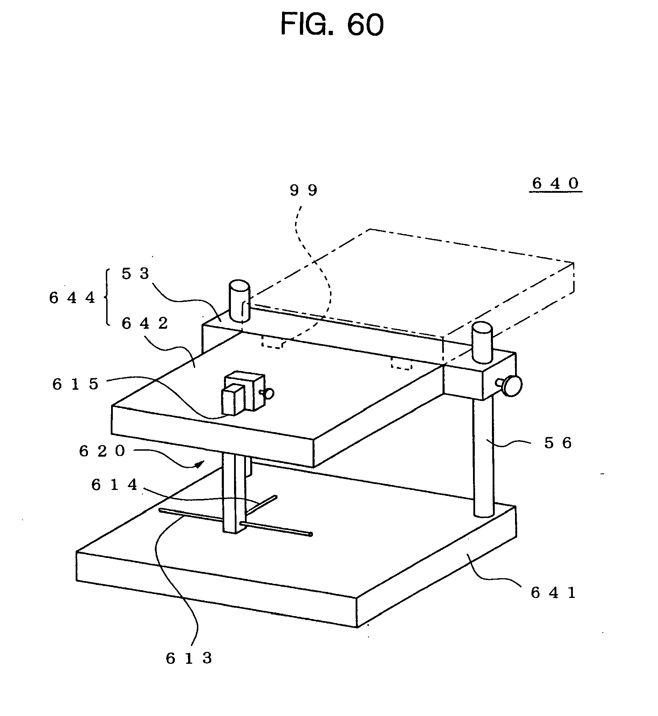

FIG. 60 is a perspective view showing an articulator according to the modification.

As seen from the drawing, an articulator 640 according to the modification is constituted of: a bottom plate 641; a pair of height adjusting rods 56, 56 stood in a state in which the rods are separated from each other along a rear edge portion of the bottom plate; a top plate 644 whose rear edge portion is rotatably attached to the height adjusting rods so that the upper and lower sides can be reversed and to whose lower surface an upper-jaw dentition cast 71 is attached; and an occlusal surface setting mechanism 620 disposed so as to pass through the top plate in the vicinity of a front side of the top plate. The top plate 634 is constituted of: a top plate base member 53 attached to the upper ends of the height adjusting rods 56, 56; and a top plate main body 642 connected to the top plate base member via hinges 99, 99.

Here, the bottom plate 641 and the top plate 644 are disposed facing each other in parallel with each other, and opposite front end surfaces are positioned on a surface perpendicular to the bottom plate 641. The lower-jaw dentition cast 72 can be fixed to the upper surface of the bottom plate 641, and the upper-jaw dentition cast 71 can be fixed to the lower surface of the top plate 644, respectively.

In such constitution, the median line setting rod 5 may be attached to the front end surfaces of the bottom plate 641 and the top plate main body 642 so that the pupil line setting rod 4 of the occlusal surface transfer instrument 10 is parallel to the pupil line guide member 613 of the occlusal surface setting mechanism 620 and the material axis of the median line setting rod 5 and that of the incisor guide member 614 are included in the same plane, so that the lower-jaw dentition cast 72 is fixed to the upper surface of the bottom plate 641, and the upper-jaw dentition cast 71 is fixed to the lower surface of the top plate main body 642, respectively.

Moreover, in the present embodiment, the articulator of the present invention is constituted so that the top plate 604 is elevatable along the height adjusting rods 56, 56, and the median line setting rod grooves 610a, 610b into which the median line setting rod 5 of the occlusal surface transfer instrument 10 is to be fitted are formed in the front end surfaces of the top plate 604 and the bottom plate 601. However, as described above, unless there is any trouble in the attaching of the upper-jaw dentition cast 71 and the lower-jaw dentition cast 72, or the top plate has to be constituted to be elevatable, the top plate does not have to be elevatable. Moreover, if the upper-jaw dentition cast 71 and the lower-jaw dentition cast 72 can be fixed to the articulator on the basis of the pupil line guide member 613 and the elevator rod 612, the median line setting rod grooves do not have to be formed in the top and bottom plates.

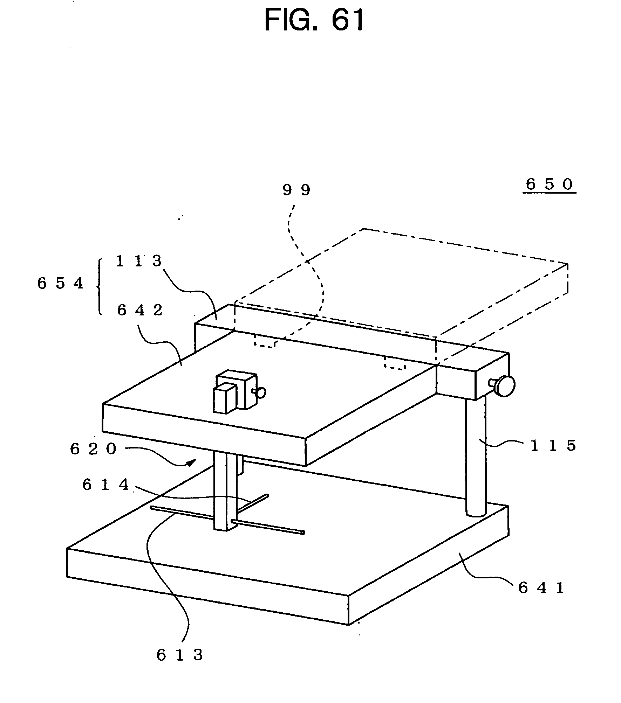

FIG. 61 is a perspective view showing an articulator according to the modification.

As seen from the drawing, an articulator 650 according to the modification is constituted of: a bottom plate 641; a pair of support rods 115, 115 stood in a state in which the rods are separated from each other along a rear edge portion of the bottom plate; a top plate 654 attached to upper ends of the support rods; and an occlusal surface setting mechanism 620 disposed so as to pass through the top plate in the vicinity of the front side of the top plate. The top plate is constituted of: a top plate base member 113 attached to the upper ends of the support rods 115, 115; and a top plate main body 642 connected to the top plate base member via hinges 99, 99.

Even in such constitution, as described above, the median line setting rod 5 may be attached to the front end surfaces of the bottom plate 641 and the top plate main body 642 so that the pupil line setting rod 4 becomes parallel to the pupil line guide member 613, and the material axis of the median line setting rod 5 and that of the incisor guide member 614 are included in the same plane, so that the lower-jaw dentition cast 72 is fixed to the upper surface of the bottom plate 641, and the upper-jaw dentition cast 71 is fixed to the lower surface of the top plate main body 642, respectively.

Moreover, in the present embodiment, the top plate 604 and the bottom plate 601 constituting the articulator 600 are constituted of rectangular steel plates having predetermined thicknesses, but shapes do not have to be especially limited to the rectangular shapes.

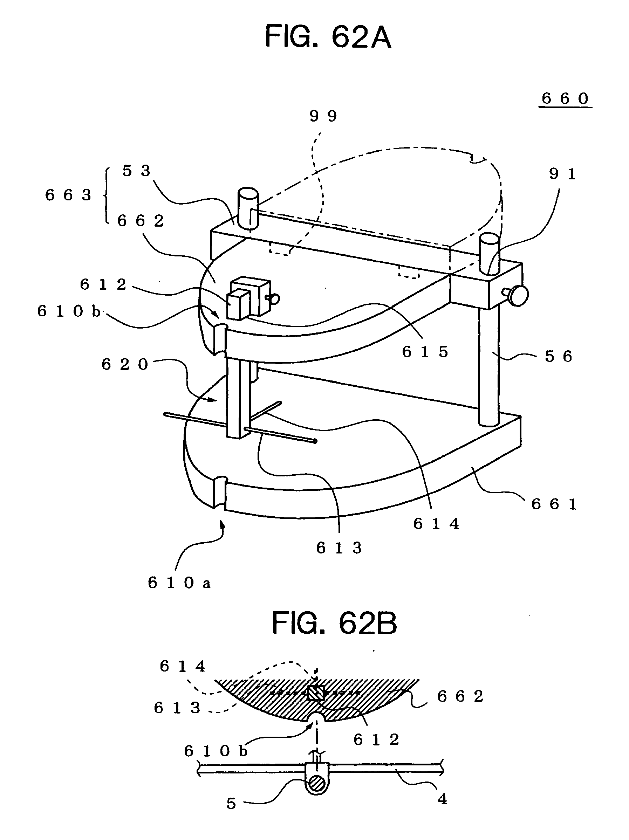

FIG. 62 is a perspective view showing an articulator 660 according to the modification.

As seen from the drawing, substantially in the same manner as in the articulator 600, the articulator 660 according to the modification is constituted of: a bottom plate 661 to whose upper surface a lower-jaw dentition cast 72 is attached; height adjusting rods 56, 56 as a support mechanism stood in the vicinity of the rear edge portion of the bottom plate; a top plate 663 whose rear edge portion is rotatably attached to the height adjusting rods so that the upper and lower sides can be reversed and to whose lower surface an upper-jaw dentition cast 71 is attached; and an occlusal surface setting mechanism 620 disposed so as to pass through the top plate in the vicinity of a front side of the top plate. The top plate 663 is directed frontwards, and attached to the height adjusting rods 56, 56 in a cantilever form.

Moreover, the bottom plate 661 and the top plate 663 are disposed facing each other in parallel with each other, and opposite front end surfaces are positioned on a surface perpendicular to the bottom plate 661. The lower-jaw dentition cast 72 can be fixed to the upper surface of the bottom plate 661, and the upper-jaw dentition cast 71 can be fixed to the lower surface of the top plate 663, respectively.

The top plate 663 is constituted of: a top plate base member 53 whose opposite end portions are provided with two rod holes 91, 91 for passing the height adjusting rods 56, 56; and a top plate main body 662 connected to the top plate base member via hinges 99, 99.

Here, unlike the articulator 600, the bottom plate 661 and the top plate main body 662 are formed of semi-elliptical steel plates having predetermined thicknesses. The upper surface of the bottom plate 661 and the lower surface of the top plate main body 662 may be subjected to a known technology such as rough surface working or emboss working so that the lower-jaw dentition cast 72 and the upper-jaw dentition cast 71 can be attached via a predetermined bonding material such as plaster, respectively.

The front end surfaces of the bottom plate 661 and the top plate main body 662 are provided with median line setting rod grooves 610a, 610b into which the median line setting rod 5 constituting the occlusal surface transfer instrument 10 is to be fitted in the same manner as in the articulator 600.

Since the articulator 660 according to the present modification is similar to the articulator 600 except that the shapes of the bottom and top plates are different, descriptions of another constitution, and functions and effects are omitted hereinafter.

Moreover, the incisor guide member 614 may be constituted to be stretchable, through this has not been mentioned in the present embodiment.

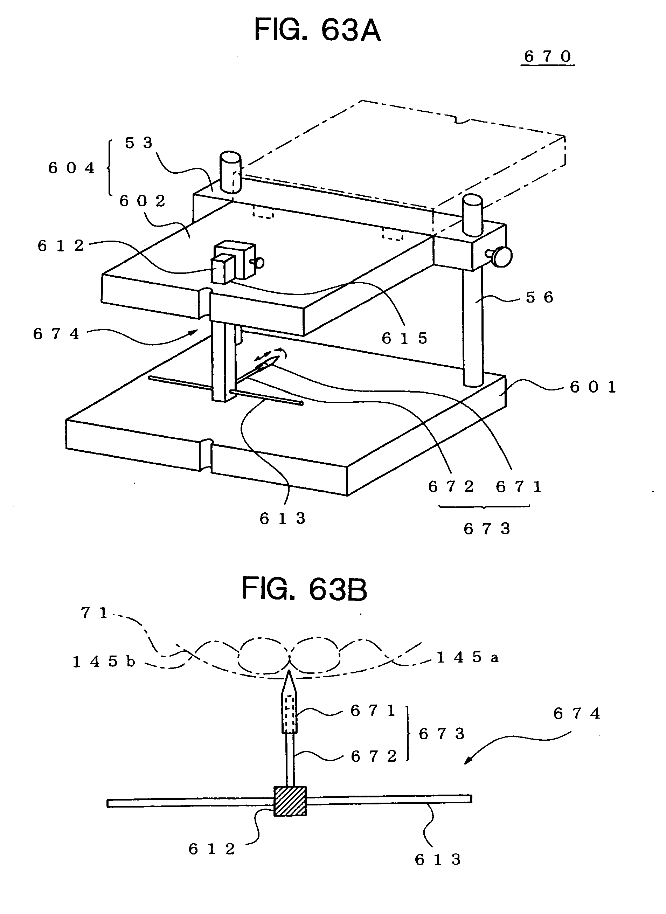

FIG. 63 shows a perspective view showing an articulator 670 according to the modification, and a sectional view of an occlusal surface setting mechanism 674.

Substantially in the same manner as in the articulator 600, an articulator 670 shown in the drawing is constituted of: a bottom plate 601; height adjusting rods 56, 56 as a support mechanism stood in the vicinity of a rear edge portion of the bottom plate; a top plate 604 whose rear edge portion is attached to the height adjusting rods; and an occlusal surface setting mechanism 674 disposed so as to pass through the top plate in the vicinity of a front side of the top plate. The top plate 604 is directed frontwards, and attached to the height adjusting rods 56, 56 in a cantilever form.

The occlusal surface setting mechanism 674 includes: an elevator rod 612 passed through a through hole 615 formed in the top plate main body 602 so as to be non-rotatable around a material axis, and having a rectangular section; an incisor guide member 673 disposed at right angles to the material axis in the vicinity of a lower end of the elevator rod, and protruded rearwards in parallel with the bottom plate 601 and so as to cross front edge portions of the top plate 604 and the bottom plate 601 at right angles; and a pupil line guide member 613 disposed at right angles to the material axis of the elevator rod and the incisor guide member 673 in the vicinity of the lower end of the elevator rod 612.

Here, the incisor guide member 673 is constituted of an incisor guide main body 672 attached to the elevator rod 612, and an extendable guide 671 attached to a tip of the main body and formed to be sharp-pointed. The extendable guide 671 is constituted to be stretchable with respect to the incisor guide main body 672.

The stretchable constitution includes a constitution in which the incisor guide 671 is screwed into the incisor guide main body 672, a constitution in which the incisor guide 671 is expanded and contracted in a rod antenna form or the like, but such constitution may be appropriately selected from known constitutions.

In such constitution, the incisor guide member 673 is appropriately expanded and contracted to bring a tip of the member close to a front tooth of an upper-jaw dentition cast 71. As shown in FIG. 63 (b), it is possible to make the artificial tooth for the upper-jaw dentition so that the sharp tip just comes between adjacent incisors 145a, 145b, and the precision in making the artificial tooth for the upper-jaw dentition is enhanced more.

In other words, it is possible to match a position between the incisor 145a, 145b precisely with a median line 43 or a specific median line 42 without reproducing horizontal lengths of a median line setting rod 5 constituting the occlusal surface transfer instrument 10 and a bite material holding member 2 on the articulator 670. Moreover, fluctuations of an occlusion position at a time when a bite material 1 is bitten can be absorbed by expanding and contracting the incisor guide member 673.

Since the articulator 670 according to the present modification is similar to the articulator 600 except that the occlusal surface setting mechanism is different, descriptions of another constitution, and functions and effects are omitted hereinafter.

Moreover, although not especially mentioned in the present embodiment, in the articulator according to the present invention, a disposing angle of the pupil line guide member of the occlusal surface setting mechanism is arbitrary with respect to the front edge portions of the bottom and top plates as long as the median line setting rod grooves are formed so that the median line setting rod becomes perpendicular to the bottom plate, and the material axis of the rod and that of the incisor guide member of the occlusal surface setting mechanism are included in the same plane, when the median line setting rod constituting the occlusal surface transfer instrument is fitted into the median line setting rod grooves. The guide member does not have to be parallel as in the present embodiment.

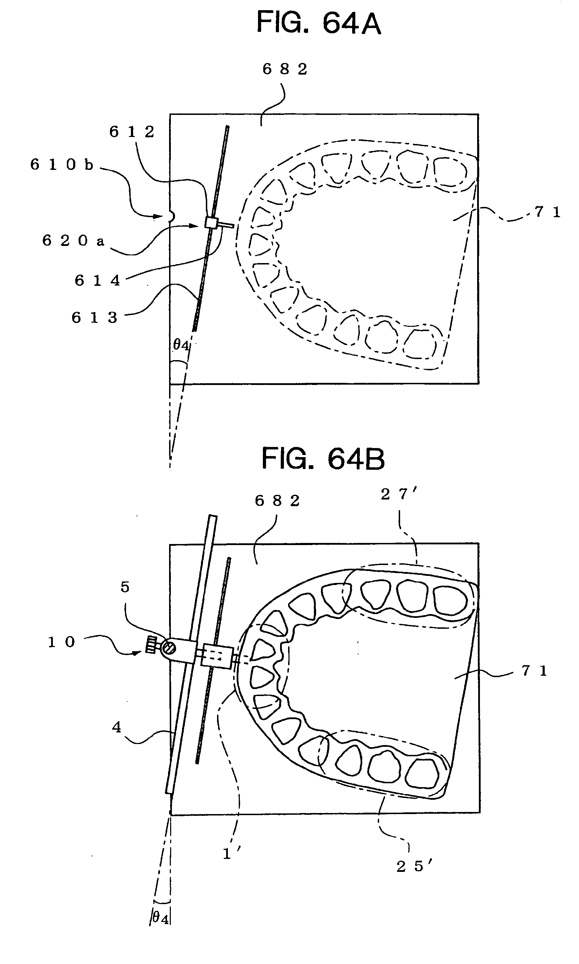

FIG. 64 is a looking-upward diagram (diagram in which one looks up at the above) of the top plate main body 682 according to the modification, (a) is a diagram showing a top plate main body 682 in a case where the above-described disposing angle is an arbitrary angle θ4 other than 90° , and (b) is a diagram showing a relative positional relation between the occlusal surface transfer instrument 10 and the upper-jaw dentition cast 71 or the top plate main body 682.

In such case, as seen from the drawing, the upper-jaw dentition cast 71 is attached to the top plate main body 682 in a state in which the pupil line setting rod 4 is parallel to the pupil line guide member 613, and the front surface of the upper-jaw dentition cast 71 does not agree with that of the top plate main body, and deviates therefrom as much as the angle θ4, but any problem is not generated in making the artificial tooth, and a high-precision artificial tooth can be made in the same manner as described above.

It is to be noted that the occlusal surface setting mechanism 620a is the same as the occlusal surface setting mechanism 620 except that the pupil line guide member 613 is not parallel to the front edge portion of the top plate main body 682, and has the angle θ4, and therefore description thereof is omitted here.

Moreover, in the present embodiment, the process has been described in a case where the artificial tooth 147 for the upper-jaw dentition is made using the occlusal surface transfer instrument 10 and the articulator 600. This also applies to a case where the artificial tooth for the lower-jaw dentition is made. First, the lower-jaw dentition is shaved with turbine or the like to form a support for supporting the artificial tooth, and two side bite materials and the bite material are bitten by the patient by the above-described procedure. In such state, the patient's pupil line 41 is recorded in the pupil line setting rod 4, and the patient's median line 43 and the specific median line 42 are recorded in the median line setting rod 5, respectively. Next, after fitting the median line setting rod 5 into the median line setting rod grooves 610a, 610b, respectively, so that the pupil line setting rod 4 of the occlusal surface transfer instrument 10 becomes parallel to the pupil line guide member 613 to mount the lower-jaw dentition cast 72 and the upper jaw dentition cast 71 on the articulator 600, the artificial tooth for the lower-jaw dentition may be made on the basis of the pupil line guide member 613, the elevator rod 612, and the incisor guide member 614.

Moreover, to make the artificial tooth for the lower-jaw dentition, unlike the process of making the artificial tooth 147 for the upper-jaw dentition, the occlusion states of the dentition of the upper-jaw dentition cast and the corresponding dentition of the lower-jaw dentition cast are confirmed one by one with respect to the upper-jaw dentition cast corresponding to the already completed artificial tooth 147 for the upper-jaw dentition.

(Eighth Embodiment)

Next, an eighth embodiment will be described. It is to be noted that substantially the same components as those of the above-described embodiment are denoted with the same reference numerals, and description thereof is omitted.

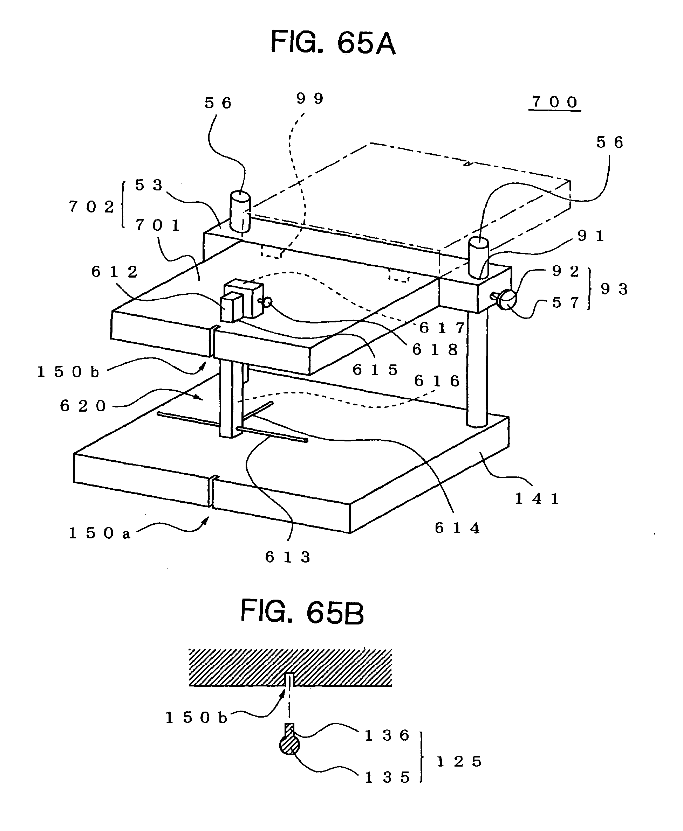

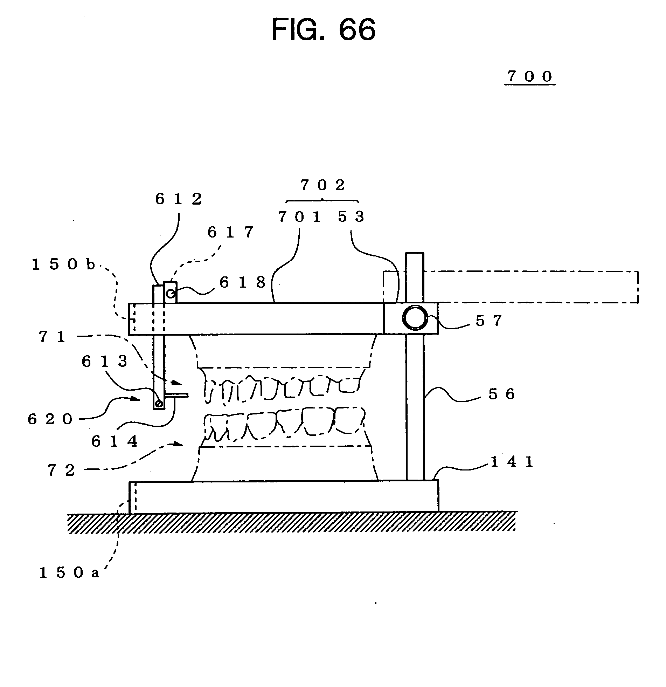

FIG. 65 is a diagram showing an articulator according to the present embodiment, (a) is a perspective view, and (b) is a detailed sectional view around a front side of the articulator. FIG. 66 shows a side view of the articulator according to the present embodiment. As seen from the drawing, an articulator 700 according to the present embodiment is constituted of: a bottom plate 141 to whose upper surface a lower-jaw dentition cast 72 is attached; height adjusting rods 56, 56 as a support mechanism stood in the vicinity of a rear edge portion of the bottom plate; a top plate 702 whose rear edge portion is rotatably attached to the height adjusting rods so that the upper and lower sides can be reversed and to whose lower surface an upper-jaw dentition cast 71 is attached; and an occlusal surface setting mechanism 620 disposed so as to pass through the top plate in the vicinity of a front side of the top plate. The top plate 702 is directed frontwards and attached to the height adjusting rods 56, 56 in a cantilever form.

Here, the bottom plate 141 and the top plate 702 are disposed facing each other in parallel with each other, and opposite front end surfaces are positioned on a surface perpendicular to the bottom plate 141. The lower-jaw dentition cast 72 can be fixed to the upper surface of the bottom plate 141, and the upper-jaw dentition cast 71 can be fixed to the lower surface of the top plate 702, respectively.

The bottom plate 141 and the top plate 702 can be constituted of, for example, rectangular steel plates having predetermined thicknesses. The upper surface of the bottom plate 141 and the lower surface of the top plate 702 may be subjected to a known technology such as rough surface working or emboss working so that the lower-jaw dentition cast 72 and the upper-jaw dentition cast 71 can be attached via a predetermined bonding material such as plaster, respectively.

Moreover, a pair of height adjusting rods 56, 56 stands in a state in which the rods are separated from each other along the rear edge portion of the bottom plate 141. The top plate 702 is constituted of: a top plate base member 53 whose opposite end portions are provided with two rod holes 91, 91 for passing the height adjusting rods 56, 56; and a top plate main body 701 connected to the top plate base member via hinges 99, 99.
According to such constitution, the whole top plate 702 can be elevated and lowered along the height adjusting rods 56, 56.
Moreover, the top plate main body 701 can be rotated around the top plate base member 53 to reverse the upper and lower sides of the top plate main body.

Furthermore, as to the top plate 702, the top plate main body 701 can be rotated around the top plate base member 53 as described above. However, when a rear end surface of the top plate main body 701 abuts on the top plate base member 53, the rotation of the top plate main body 701 is limited. In such state, the top plate main body is directed horizontally frontwards with respect to the bottom plate 141, and constituted into the cantilever form.

As described above, since the rotation is restricted in a position where the top plate main body 701 horizontally turns to the front, a relative positional relation between the bottom plate 141 and the top plate main body 701 can be retained before and after reversing the upper and lower surfaces of the top plate main body 701.

Moreover, opposite end surfaces of the top plate base member 53 in a longitudinal direction are provided with fixing mechanisms 93, 93, and the top plate base member 53, and the whole top plate 702 can be attached to desired positions of the height adjusting rods 56, 56. However, since such constitution has been already described in the second embodiment, the description is omitted.

Here, the occlusal surface setting mechanism 620 includes: an elevator rod 612 passed through a through hole 615 formed in the top plate main body 701 so as to be non-rotatable around a material axis, and having a rectangular section; an incisor guide member 614 disposed at right angles to the material axis in the vicinity of a lower end of the elevator rod, and protruded rearwards in parallel with the bottom plate 141 so as to cross front edge portions of the top plate 702 and the bottom plate 141 at right angles; and a pupil line guide member 613 disposed at right angles to the material axis of the elevator rod and the incisor guide member 614 in the vicinity of the lower end of the elevator rod 612. The elevator rod 612 is provided with the through hole 615 so as to be elevatable perpendicularly to the top plate main body 701.

Since the occlusal surface setting mechanism 620 has been described in detail in the seventh embodiment, the description is omitted hereinafter.

Here, fitting grooves 150a, 150b into which a protruding member 136 of a median line setting rod 125 is detachably fitted are formed in front end surfaces of the bottom plate 141 and the top plate 702.

Such fitting grooves 150a, 150b are formed along the same straight line perpendicular to the bottom plate 141, respectively. The fitting grooves are formed so that the median line setting rod is tentatively attached in a state in which the rod becomes perpendicular to the bottom plate 141 and that the pupil line setting rod 4 of the occlusal surface transfer instrument 120 becomes parallel to the front edge portions of the bottom plate 141 and the top plate 702, when the protruding member 136 of the median line setting rod 125 is fitted into the grooves.

It is to be noted that to attach and detach the median line setting rod 125 with respect to the fitting grooves 150a, 150b, an outer dimension of the protruding member 136 and inner dimensions of the fitting grooves 150a, 150b are appropriately adjusted beforehand so that the median line setting rod is tentatively attached with a predetermined strength at an attaching time, and the rod is detached with such a force as to manually pull the rod forwards at a detaching time.

Next, a procedure to make an artificial tooth by use of the occlusal surface transfer instrument 120 and the articulator 700 will be described in accordance with an example of a case where the artificial tooth for patient's upper-jaw dentition is made.

To make the artificial tooth for the patient's upper-jaw dentition in the above-described procedure, first, an occlusal surface in patient's oral cavity is recorded in the occlusal surface transfer instrument 120, in the form of patient's pupil line 41, median line 43, and specific median line 42. Next, the upper-jaw dentition cast 71 and the lower-jaw dentition cast 72 are fixed to the articulator 700 by use of the occlusal surface transfer instrument 120 in which these pupil line 41, median line 43, and specific median line 42 have been recorded, and the artificial tooth for the upper-jaw dentition is made using the upper-jaw dentition cast 71 and the lower-jaw dentition cast 72 in such state.

A typical procedure will be described hereinafter in detail.

It is to be noted that there has been already described in the fourth embodiment a procedure for shaving an upper-jaw dentition with turbine or the like to form a support for supporting the artificial tooth, allowing two side bite materials 25, 27 and a bite material 1 to be bitten by a patient, and recording the patient's pupil line 41 in the pupil line setting rod 4, and the patient's median line 43 and the specific median line 42 in the median line setting rod 125, respectively, by use of the occlusal surface transfer instrument 120 in such state. Therefore, the description is omitted here.

First, the upper-jaw dentition cast 71 and the lower-jaw dentition cast 72 are fixed to the articulator 700 by use of the occlusal surface transfer instrument 120.

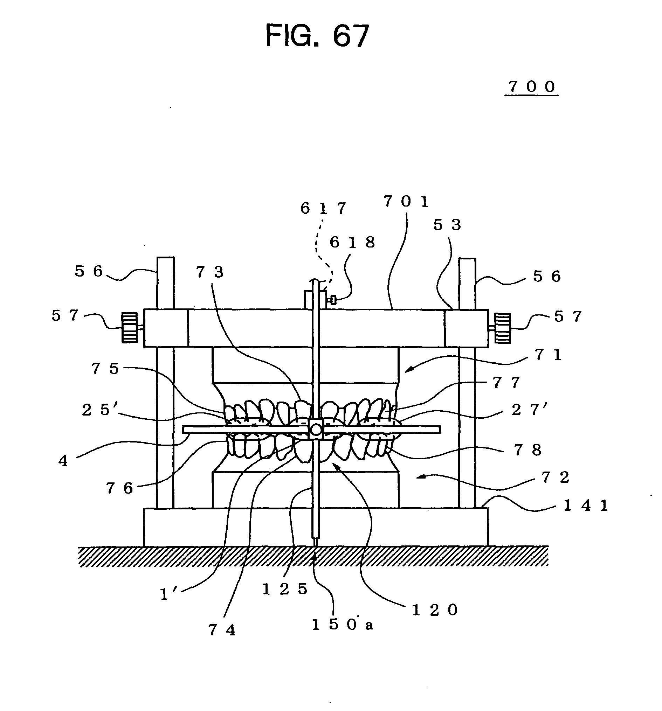

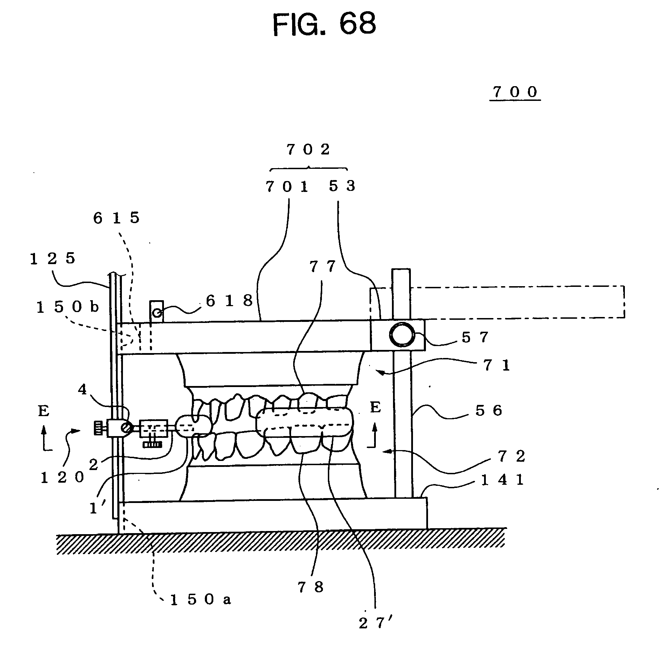

FIGS. 67 and 68 are a front view and a side view showing a case where the occlusal surface transfer instrument 120 is attached to the articulator 700 according to the present embodiment.

As seen from these drawings, to fix the upper-jaw dentition cast 71 and the lower-jaw dentition cast 72 to the articulator 700 by use of the occlusal surface transfer instrument 120, first, the elevator rod 612 is extracted beforehand from the through hole 615 formed in the top plate main body 701 to make preparations so that an operation to fix the upper-jaw dentition cast 71 and the lower-jaw dentition cast 72 is efficiently performed.

Next, the hardened bite material 1' held by the bite material holding member 2 of the occlusal surface transfer instrument 120 is bitten by front teeth 73 of the upper-jaw dentition cast 71 and front teeth 74 of the lower-jaw dentition cast 72 so as to correspond to an occlusion mold impressed on the bite material. Moreover, the side bite material 25' on which occlusion molds of right-side upper and lower molar teeth 23, 24 (see FIG. 2) have been impressed, and the side bite material 27' on which occlusion molds of left-side upper and lower molar teeth 21, 26 (see FIG. 2) have been impressed are bitten by right upper and lower molar teeth 75, 76 and left upper and lower molar teeth 77, 78 of the upper-jaw dentition cast 71 and the lower-jaw dentition cast 72 so as to correspond to the respective occlusion molds, respectively. In such state, the protruding member 136 of the median line setting rod 125 constituting the occlusal surface transfer instrument 120 is fitted into the fitting grooves 150a, 150b formed in the front end surfaces of the bottom plate 141 and the top plate main body 701. Thereafter, the lower-jaw dentition cast 72 is fixed to the upper surface of the bottom plate 141, and the upper-jaw dentition cast 71 is fixed to the lower surface of the top plate main body 701, respectively, by use of plaster or the like.

Here, when the protruding member 136 of the median line setting rod 125 is fitted into the fitting grooves 150a, 150b formed in the front end surfaces of the bottom plate 141 and the top plate main body 701, the recording of the patient's pupil line 41 is transferred to the articulator, as a relation parallel to the bottom plate 141 and parallel to the front edge portions of the bottom plate 141 and the top plate 702, and the recordings of the median line 43 and the specific median line 42 are transferred to the articulator, as a relation perpendicular to the bottom plate 141.

On the other hand, as to the occlusal surface transfer instrument 120, the pupil line 41 is recorded in the pupil line setting rod 4, and the median line 43 and the specific median line 42 are recorded in the median line setting rod 125, respectively, as a relative positional relation with respect to the occlusal surface in the patient's oral cavity.

Therefore, when the protruding member 136 of the median line setting rod 125 is fitted into the fitting grooves 150a, 150, respectively, and the upper-jaw dentition cast 71 and the lower-jaw dentition cast 72 are simply fixed to the articulator 700 in such state, the upper-jaw dentition cast 71 and the lower-jaw dentition cast 72 are mounted on the articulator so that the front surfaces of the casts agree with the front surface of the articulator 700.

To fix the lower-jaw dentition cast 72 and the upper-jaw dentition cast 71 to the upper surface of the bottom plate 141 and the lower surface of the top plate main body 701, respectively, the top plate 702 is elevated and lowered along the height adjusting rods 56, 56. Next, after the third male screws 57, 57 are operated to thereby fix the top plate 702 to a desired position, the protruding member 136 of the median line setting rod 125 is fitted into the fitting grooves 150a, 150b. In such state, the lower-jaw dentition cast 72 may be fixed to the upper surface of the bottom plate 141, and the upper-jaw dentition cast 71 may be fixed to the lower surface of the top plate main body 701, respectively, via plaster or the like.

It is to be noted that if necessary, a predetermined support member (not shown) stands on the upper surface of the bottom plate 141, and weights of the upper-jaw dentition cast 71 and the lower-jaw dentition cast 72 may be supported by the support member until the plaster is solidified. In such case, the support member is buried in the plaster between the bottom plate 141 and the lower-jaw dentition cast 72.

It is to be noted that since the side bite materials and the bite material have been already described in the above-described embodiment, the description is omitted here.

When the lower-jaw dentition cast 72 is fixed to the upper surface of the bottom plate 141, and the upper-jaw dentition cast 71 is fixed to the lower surface of the top plate main body 701, respectively, the bite material 1' and two side bite materials 25', 27' bitten by the upper-jaw dentition cast 71 and the lower-jaw dentition cast 72 are removed together with the occlusal surface transfer instrument 120 from the upper-jaw dentition cast 71 and the lower-jaw dentition cast 72, respectively.

Here, in the constitution, the relative positional relation between the bottom plate 141 and the top plate 702 is retained before and after removing the bite material 1' and two side bite materials 25', 27', and the relative positional relation between the bottom plate 141 and the top plate 702 is retained before and after reversing the top plate main body 701. Therefore, even after the bite material 1' and two side bite materials 25', 27' are removed, the relative positional relation between the upper-jaw dentition cast 71 and the lower-jaw dentition cast 72 does not change at all.

Next, the elevator rod 612 is inserted into the through hole 615, and thereafter the artificial tooth is made on the basis of the pupil line guide member 613 attached to the elevator rod 612, and the elevator rod 612.

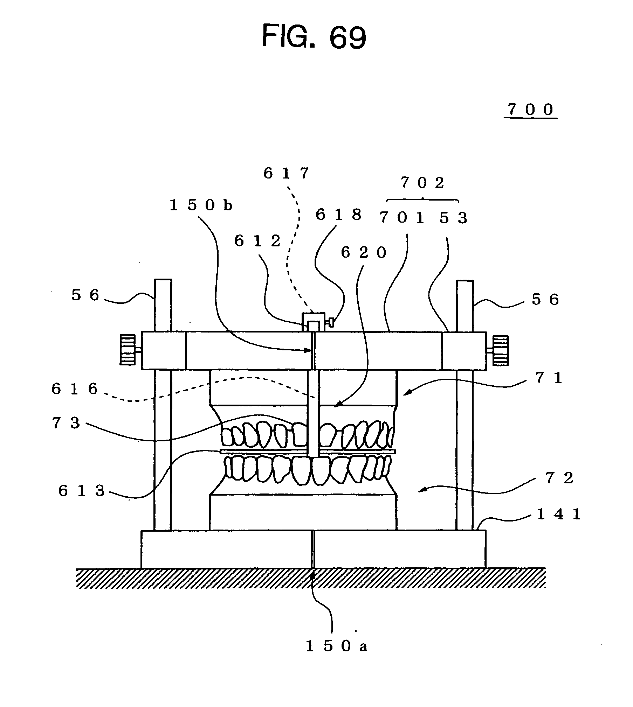

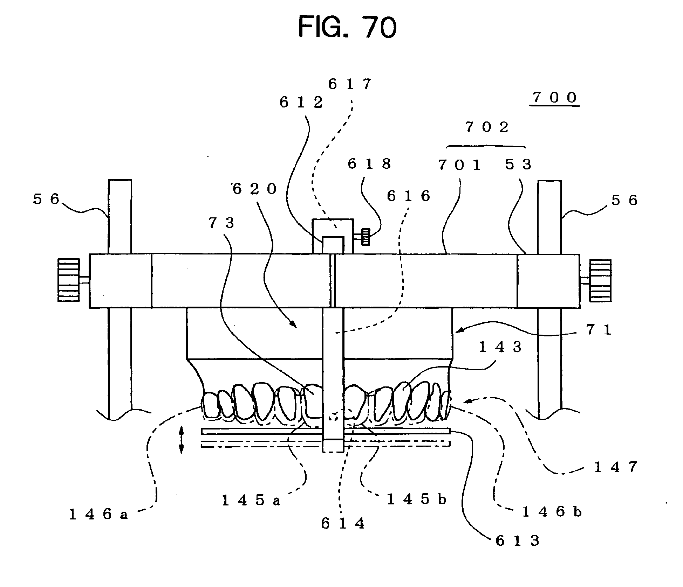

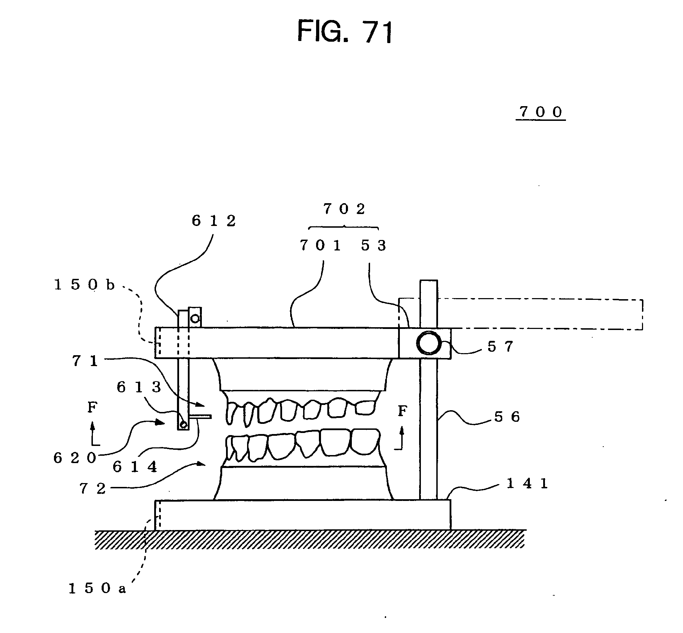

FIG. 69 is a front view showing a state in which the upper-jaw dentition cast 71 and the lower-jaw dentition cast 72 are fixed to the articulator 700, FIG. 70 is a detailed front view showing a periphery of the top plate main body 701 in FIG. 69, and FIG. 71 is a side view showing a state in which the upper-jaw dentition cast 71 and the lower-jaw dentition cast 72 are fixed to the articulator 700.

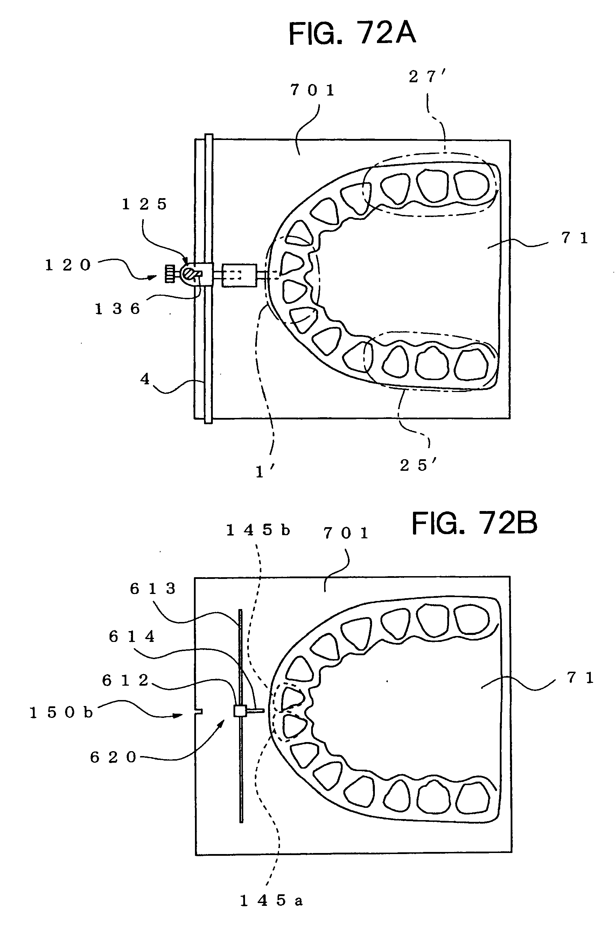

Moreover, FIG. 72 is a diagram showing a state in which the upper-jaw dentition cast 71 is attached to the top plate main body 701 constituting the articulator 700, (a) is an arrow view along line E-E in FIG. 68, and (b) is an arrow view along line F-F in FIG. 71.

As seen from these drawings, to make the artificial tooth by use of the upper-jaw dentition cast 71 fixed to the articulator 700, while turning the height adjusting knob 618 connected to the rotation shaft of the pinion 617 to match the elevator rod 612 constituting the occlusal surface setting mechanism 620 with the upper-jaw dentition cast 71 and elevate and lower the rod to a desired position, the artificial tooth is made.

Specifically, as shown in FIG. 70, the artificial tooth is made so that the upper-jaw dentition becomes horizontally symmetrical on the basis of the pupil line guide member 613. That is, the artificial tooth is made horizontally symmetrically so that the upper-jaw dentition formed at a time when the support 143 of the upper-jaw dentition cast 71 is covered with the artificial tooth 147 for the upper-jaw dentition gradually becomes high from artificial teeth 145a, 145b newly constituting incisor to artificial teeth 146a, 146b newly constituting molar teeth as viewed from the front surface of the articulator 700.

It is to be noted that the occlusal surface gradually becomes high from the incisor 73 as the front teeth toward the molar and the inside of the oral cavity in a case where the specific median line 42 is regarded as a reference. However, as seen from FIG. 70, the elevator rod 612 can be elevated and lowered with respect to the top plate main body 701 by turning the height adjusting knob 618 connected to the rotation shaft of the pinion 617. Therefore, the occlusal surface can be exactly reproduced to the upper-jaw dentition cast 71 while appropriately elevating and lowering the elevator rod 612 depending on a type of the artificial tooth 147 for the upper-jaw dentition.

Moreover, as well seen from FIG. 70, the artificial tooth 147 for the upper-jaw dentition is made so that an extended line of a material axis of the incisor guide member 614 falls between the incisor 145a, 145b in the artificial tooth 147 for the upper-jaw dentition as viewed from the front surface of the articulator 700. Even in such case, the height of the incisor guide member 614 may be matched with positions of the incisor 73 by appropriately elevating and lowering the elevator rod 612.

It is to be noted that for the sake of convenience of operation, the top plate main body 701 is reversed around the top plate base member with respect to the top plate base member 53 until the upper surface abuts on that of the top plate base member to make the artificial tooth 147 for the upper-jaw dentition. The artificial tooth for the upper-jaw dentition is attached to the upper-jaw dentition cast 71, and the top plate main body 701 is rotated to its former state with respect to the top plate base member 53 to confirm the occlusion state with the lower-jaw dentition cast 72.

As described above, according to the articulator 700 of the present embodiment, the patient's pupil line 41 can be transferred as a relation parallel to the bottom plate 141 of the articulator 700 to the articulator via the pupil line setting rod 4 of the occlusal surface transfer instrument 120. Moreover, the recordings of the median line 43 and the specific median line 42 can be transferred as a relation perpendicular to the bottom plate 141 of the articulator 700 to the articulator via the median line setting rod 125.

Therefore, the upper-jaw dentition cast 71 and the lower-jaw dentition cast 72 can be fixed to the articulator 700 so that the occlusal surface becomes the same as that in the patient's oral cavity in a three-dimensional coordinate.
Therefore, it is possible to make the aesthetically superior artificial tooth in a state in which such occlusal surface in the oral cavity is reproduced in the articulator 700.

Moreover, according to the articulator 700 of the present embodiment, the fitting grooves 150a, 150b are formed along the same line perpendicular to the bottom plate 141.
Moreover, the grooves are formed so that the median line setting rod is tentatively attached in a state in which the rod becomes perpendicular to the bottom plate 141, and the pupil line setting rod 4 of the occlusal surface transfer instrument 120 becomes parallel to the front edge portions of the bottom plate 141 and the top plate 702, when the protruding member 136 of the median line setting rod 125 is fitted into the grooves. Therefore, the relative positional relation between the patient's pupil line 41, median line 43, and specific median line 42, and the occlusal surface in the oral cavity is exactly reproduced on the articulator 700, as the relative positional relation between the pupil line guide member 613 and elevator rod 612, and the upper-jaw dentition cast 71 and lower-jaw dentition cast 72.

In addition, the upper-jaw dentition cast 71 and the lower-jaw dentition cast 72 can be mounted in the articulator 700 in a state in which the front surfaces of these casts agree with the front surface of the articulator 700. Therefore, when the upper-jaw dentition cast 71 and the lower-jaw dentition cast 72 are viewed from the front surface of the articulator 700, it is possible to reproduce the same situation as that in a case where the dentition in the patient's oral cavity is viewed from the patient's front.

Therefore, it is possible to make the artificial tooth 147 for upper-jaw dentition with a high precision on the basis of the elevator rod 612 and the pupil line guide member 613.

Moreover, according to the articulator 700 of the present embodiment, when the protruding member 136 of the median line setting rod 125 is fitted into the fitting grooves 150a, 150b, respectively, the occlusal surface transfer instrument 120 can be detachably attached to the articulator 700. At the attaching time, the occlusal surface transfer instrument 120 can be tentatively attached to the articulator 700, and the upper-jaw dentition cast 71 and the lower-jaw dentition cast 72 can be tentatively held and positioned.

Therefore, an operation to fix the upper-jaw dentition cast 71 and the lower-jaw dentition cast 72 to the lower surface of the top plate main body 701 and the upper surface of the bottom plate 141, respectively, is facilitated.

Moreover, according to the articulator 700 of the present embodiment, the top plate 702 and the height adjusting rods 56, 56 are constituted so that the relative positional relation between the bottom plate 141 and the top plate 702 is retained before and after the removing in the case where the bite material 1' and two side bite materials 25' , 27' are removed after the attaching, and the relative positional relation between the bottom plate 141 and the top plate 702 is retained before and after reversing the top plate 702. Therefore, even after the bite material 1' and two side bite materials 25', 27' are removed, an interval between the upper-jaw dentition cast 71 and the lower-jaw dentition cast 72 does not change at all.

Therefore, it is possible to make the artificial tooth 147 for the upper-jaw dentition in the relative positional relation in which the normal occlusion is performed. Moreover, even when the top plate main body 701 constituting the top plate 702 is rotated to its former state with respect to the top plate base member 53 in order to check the occlusion state as needed during the making of the artificial tooth for the upper-jaw dentition, the relative positional relation between the upper-jaw dentition cast 71 and the lower-jaw dentition cast 72 does not change at all. Therefore, it is possible to check as needed whether or not the normal occlusion is performed during the making of the artificial tooth 147 for the upper-jaw dentition.

Moreover, according to the articulator 700 of the present embodiment, the upper-jaw dentition cast 71 and the lower-jaw dentition cast 72 are constituted so that the front surfaces thereof agree with the front surface of the articulator 700. Therefore, the artificial tooth can be made horizontally symmetrically so that the upper-jaw dentition formed at a time when the support 143 of the upper-jaw dentition cast 71 is covered with the artificial tooth 147 for the upper-jaw dentition gradually becomes high from the artificial teeth 145a, 145b newly constituting the incisor to the artificial teeth 146a, 146b newly constituting the molar teeth as viewed from the front surface of the articulator 700.

Furthermore, according to the articulator 700 of the present embodiment, since the elevator rod 612 constituting the occlusal surface setting mechanism 620 is attached so as to be elevatable with respect to the top plate main body 701, it is possible to match the pupil line guide member 613 attached to the elevator rod 612 with the dentition of the upper-jaw dentition cast 71 and set the guide member to a desired height, and precision in making the artificial tooth 147 for the upper-jaw dentition is enhanced.

In addition, according to the articulator 700 of the present embodiment, the incisor guide member 614 constituting the occlusal surface setting mechanism 620 is protruded on the rear side of the bottom plate 141 so as to cross the material axis of the elevator rod 612 at right angles. Therefore, it is possible to make the artificial tooth 147 for the upper-jaw dentition so that the extended line of the axial direction of the incisor guide member 614 falls between the incisor 145a, 145b. The precision and operability in making the artificial tooth for the upper-jaw dentition are largely enhanced even in this respect.

Although not especially mentioned in the present embodiment, the articulator of the present invention has been constituted so that the top plate 702 is elevatable along the height adjusting rods 56, 56. However, unless there is any trouble in the attaching of the upper-jaw dentition cast 71 and the lower-jaw dentition cast 72, or the top plate has to be constituted to be elevatable, the top plate does not have to be elevatable.

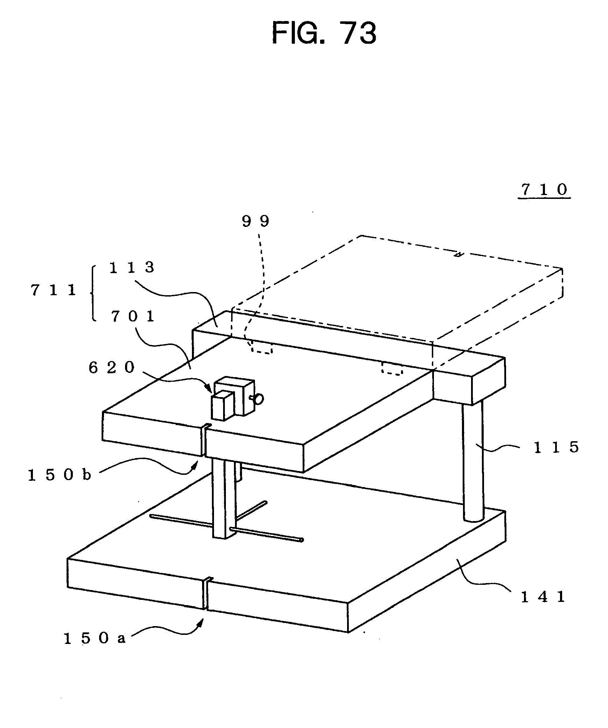

FIG. 73 is a perspective view showing an articulator according to a modification.

As seen from the drawing, an articulator 710 according to the modification is constituted of: a bottom plate 141; a pair of support rods 115, 115 stood in a state in which the rods are separated from each other along a rear edge portion of the bottom plate; a top plate 711 attached to upper ends of the support rods; and an occlusal surface setting mechanism 620 disposed so as to pass through the top plate in the vicinity of the front side of the top plate. The top plate 711 is constituted of: a top plate base member 113 attached to the upper ends of the support rods 115, 115; and a top plate main body 701 connected to the top plate base member via hinges 99, 99. Since the present modification has been described in detail in the fourth embodiment, the description is omitted hereinafter.

Moreover, in the present embodiment, the top plate 702 and the bottom plate 141 constituting the articulator 700 are constituted of rectangular steel plates having predetermined thicknesses, but shapes do not have to be especially limited to rectangular shapes.

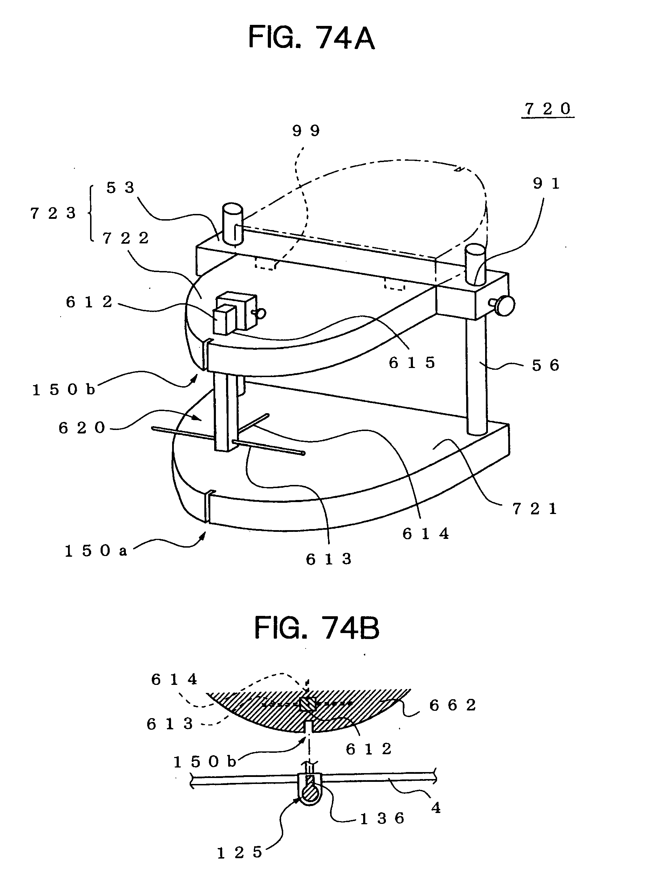

FIG. 74 is a perspective view showing an articulator 720 according to the modification.

As seen from the drawing, substantially in the same manner as in the articulator 700, the articulator 720 according to the modification is constituted of: a bottom plate 721 to whose upper surface a lower-jaw dentition cast 72 is attached; height adjusting rods 56, 56 as a support mechanism stood in the vicinity of a rear edge portion of the bottom plate; a top plate 723 whose rear edge portion is rotatably attached to the height adjusting rods so that the upper and lower sides can be reversed and to whose lower surface an upper-jaw dentition cast 71 is attached; and an occlusal surface setting mechanism 620 disposed so as to pass through the top plate in the vicinity of a front side of the top plate. The top plate is directed frontwards, and attached to the height adjusting rods 56, 56 in a cantilever form.

Here, the bottom plate 721 and the top plate 723 are disposed facing each other in parallel with each other, and opposite front end surfaces are positioned on a surface perpendicular to the bottom plate 721. The lower-jaw dentition cast 72 can be fixed to the upper surface of the bottom plate 721, and the upper-jaw dentition cast 71 can be fixed to the lower surface of the top plate 723, respectively.

The top plate 723 is constituted of: a top plate base member 53 whose opposite end portions are provided with two rod holes 91, 91 for passing the height adjusting rods 56, 56; and a top plate main body 722 connected to the top plate base member via hinges 99, 99.

Here, unlike the articulator 700, the bottom plate 721 and the top plate 723 are formed of semi-elliptical steel plates having predetermined thicknesses. The upper surface of the bottom plate 721 and the lower surface of the top plate main body 722 may be subjected to a known technology such as rough surface working or emboss working so that the lower-jaw dentition cast 72 and the upper-jaw dentition cast 71 can be attached via a predetermined bonding material such as plaster, respectively.

The front end surfaces of the bottom plate 721 and the top plate main body 722 are provided with fitting grooves 150a, 150b into which the protruding member 136 of the median line setting rod 125 constituting the occlusal surface transfer instrument 120 is to be detachably fitted in the same manner as in the articulator 700.

Since the articulator 720 according to the present modification is similar to the articulator 700 except that the shapes of the bottom and top plates are different, descriptions of another constitution, and functions and effects are omitted hereinafter.

Moreover, the incisor guide member 614 may be constituted to be stretchable, through this has not been mentioned in the present embodiment.

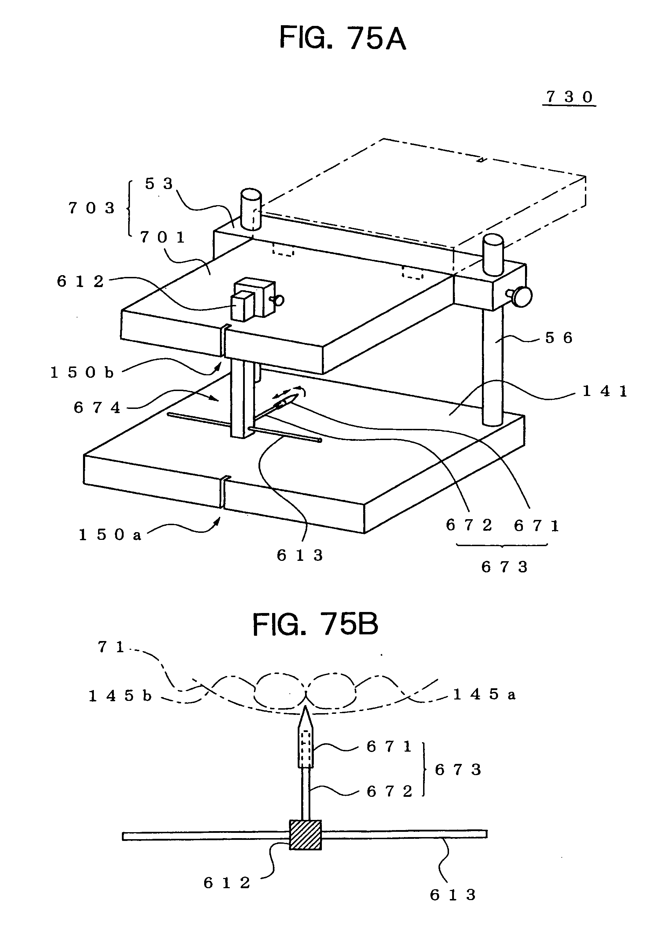

FIG. 75 shows a perspective view and a sectional view showing an articulator 730 according to the modification.
Substantially in the same manner as in the articulator 700, the articulator 730 shown in the drawing is constituted of: a bottom plate 141; height adjusting rods 56, 56 as a support mechanism stood in the vicinity of a rear edge portion of the bottom plate; a top plate 702 whose rear edge portion is attached to the height adjusting rods; and an occlusal surface setting mechanism 674 disposed so as to pass through the top plate in the vicinity of a front side of the top plate. The top plate 702 is directed frontwards, and attached to the height adjusting rods 56, 56 in a cantilever form.

The occlusal surface setting mechanism 674 includes: an elevator rod 612 passed through a through hole 615 formed in the top plate main body 701 so as to be non-rotatable around a material axis, and having a rectangular section; an incisor guide member 673 disposed at right angles to the material axis in the vicinity of a lower end of the elevator rod, and protruded rearwards in parallel with the bottom plate 141 and so as to cross front edge portions of the top plate 702 and the bottom plate 141 at right angles; and a pupil line guide member 613 disposed at right angles to the material axis of the elevator rod and the incisor guide member 673 in the vicinity of the lower end of the elevator rod 612.

Here, the incisor guide member 673 is constituted of an incisor guide main body 672 attached to the elevator rod 612, and an extendable guide 671 attached to a tip of the main body and formed to be sharp-pointed. The extendable guide 671 is constituted to be stretchable with respect to the incisor guide main body 672.

The stretchable constitution includes a constitution in which the incisor guide 671 is screwed into the incisor guide main body 672, a constitution in which the incisor guide 671 is expanded and contracted in a rod antenna form or the like, but such constitution may be appropriately selected from known constitutions.

In such constitution, the incisor guide member 673 is appropriately expanded and contracted to bring a tip of the member close to a front tooth of an upper-jaw dentition cast 71. As shown in FIG. 75 (b), it is possible to make the artificial tooth for the upper-jaw dentition so that the sharp tip just comes between adjacent incisors 145a, 145b, and the precision in making the artificial tooth for the upper-jaw dentition is enhanced more.

In other words, it is possible to match a position between the incisor 145a, 145b precisely with a median line 43 or a specific median line 42 without reproducing horizontal lengths of a median line setting rod 125 constituting the occlusal surface transfer instrument 120 and a bite material holding member 2 on the articulator 730. Moreover, fluctuations of an occlusion position at a time when a bite material 1 is bitten can be absorbed by expanding and contracting the incisor guide member 673.

Moreover, although not especially mentioned in the present embodiment, in the articulator according to the present invention, the fitting grooves may be formed so that the rod is tentatively attached in a state in which the pupil line setting rod of the occlusal surface transfer instrument becomes parallel to the pupil line guide member, the median line setting rod becomes perpendicular to the bottom plate, and the material axis of the rod and that of the incisor guide member are included in the same plane, when the protruding member of the median line setting rod constituting the occlusal surface transfer instrument is fitted into the fitting grooves. In this case, the shape or the direction is arbitrary. The pupil line setting rod 4 of the occlusal surface transfer instrument 120 does not have to be parallel to the front edge portions of the bottom plate 141 and the top plate 702, when the protruding member 136 of the median line setting rod 125 is fitted as in the present embodiment. The pupil line setting rod 4 or the pupil line guide member 613 may be constituted so as to form a predetermined angle with respect to the front edge portions of the bottom plate 141 and the top plate 702.

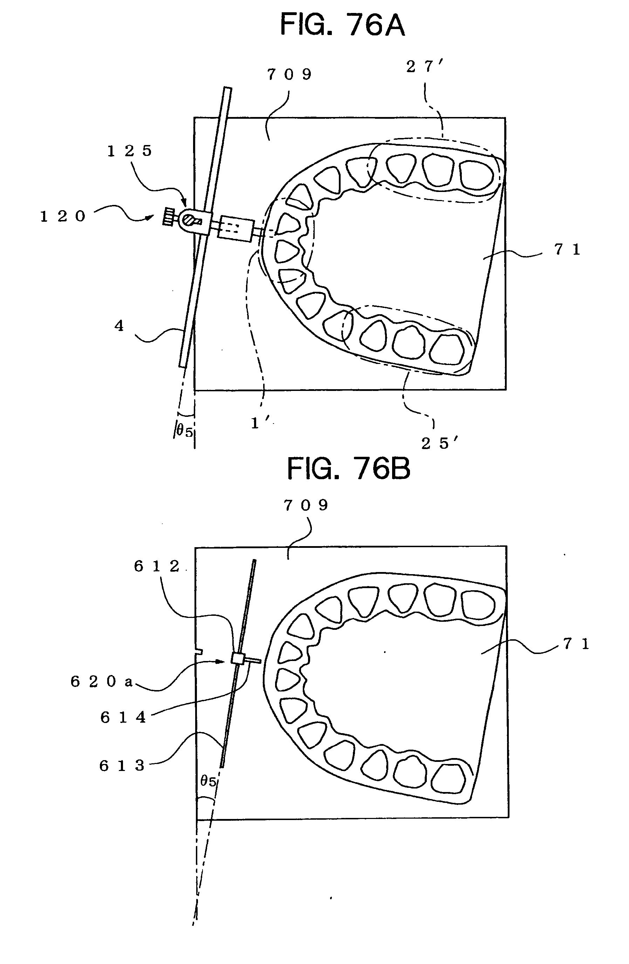

FIG. 76 is a looking-upward diagram (diagram in which one looks up at the above) of the top plate main body 709 according to the modification, (a) is a diagram showing a relative positional relation between the occlusal surface transfer instrument 120 and the upper-jaw dentition cast 71 or the top plate main body 709 in a case where the above-described disposing angle is an arbitrary angle θ5 other than 90° , and (b) is a diagram showing a relative positional relation between the occlusal surface setting mechanism 620a and the upper-jaw dentition cast 71 or the top plate main body 709.

In such case, as apparent from the drawing, the front surface of the upper-jaw dentition cast 71 does not agree with that of the top plate main body 709, and deviates therefrom as much as the angle θ5, but any problem is not generated in making the artificial tooth, and a high-precision artificial tooth can be made in the same manner as described above.

It is to be noted that the occlusal surface setting mechanism 620a is the same as the occlusal surface setting mechanism 620 except that the pupil line guide member 613 is not parallel to the front edge portion of the top plate main body 709, and has the angle θ5, and therefore description thereof is omitted here.

Moreover, in the present embodiment, the process has been described in a case where the artificial tooth 147 for the upper-jaw dentition is made using the occlusal surface transfer instrument 120 and the articulator 700. This also applies to a case where the artificial tooth for the lower-jaw dentition is made. First, the lower-jaw dentition is shaved with turbine or the like to form a support for supporting the artificial tooth, and two side bite materials and the bite material are bitten by the patient by the above-described procedure. In such state, the patient's pupil line 41 is recorded in the pupil line setting rod 4, and the patient's median line 43 and the specific median line 42 are recorded in the median line setting rod 125, respectively. Next, after mounting the lower and upper jaw dentition casts on the articulator 700 by use of the occlusal surface transfer instrument 120, the artificial tooth for the lower-jaw dentition may be made by use of the occlusal surface setting mechanism 620.

Moreover, to make the artificial tooth for the lower-jaw dentition, unlike the process of making the artificial tooth 147 for the upper-jaw dentition, the occlusion states of the dentition of the upper-jaw dentition cast and the corresponding dentition of the lower-jaw dentition cast are confirmed one by one with respect to the upper-jaw dentition cast corresponding to the already completed artificial tooth 147 for the upper-jaw dentition.

(Ninth Embodiment)

Next, a ninth embodiment will be described. It is to be noted that substantially the same components as those of the above-described embodiment are denoted with the same reference numerals, and description thereof is omitted.

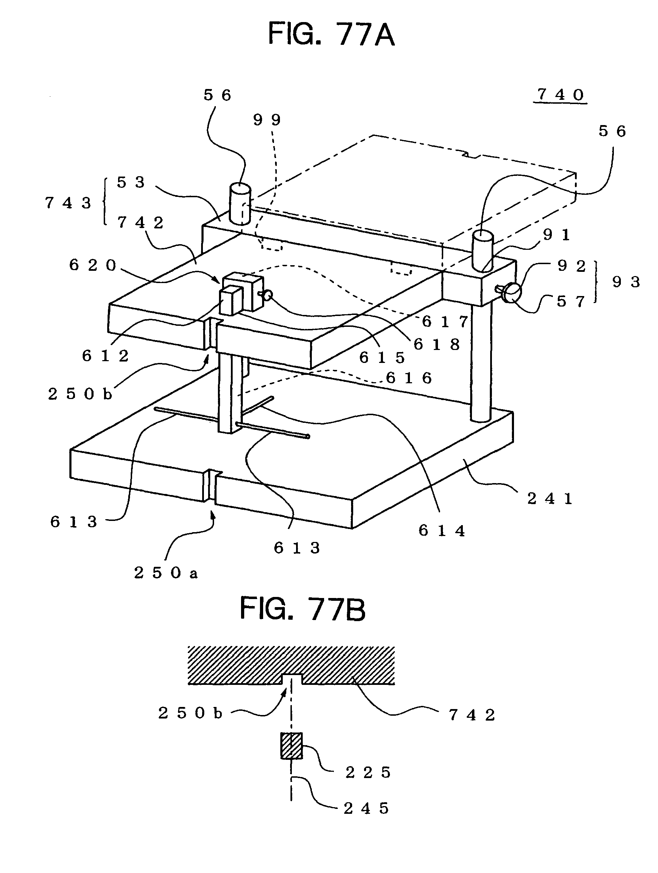

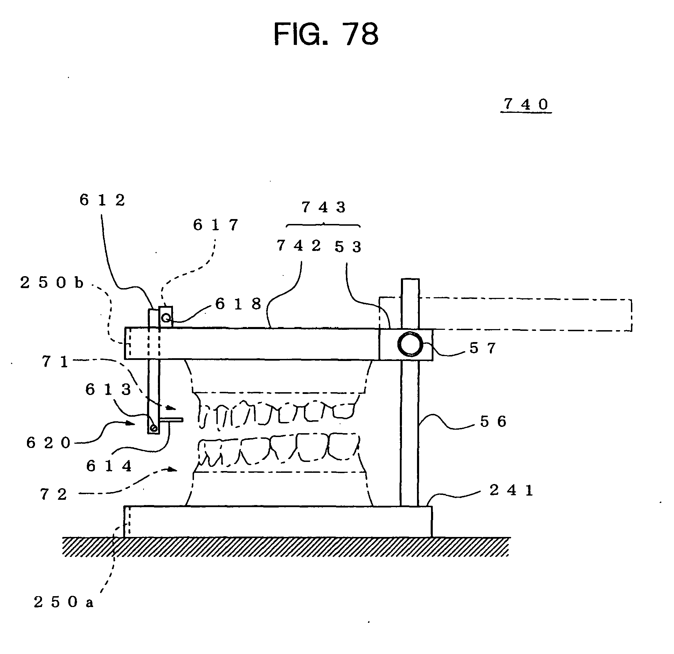

FIG. 77 is a diagram showing an articulator according to the present embodiment, (a) is a perspective view, and (b) is a detailed sectional view around a front side of the articulator. FIG. 78 shows a side view of the articulator according to the present embodiment. As seen from the drawing, an articulator 740 according to the present embodiment is constituted of: a bottom plate 241 to whose upper surface a lower-jaw dentition cast 72 is attached; height adjusting rods 56, 56 as a support mechanism stood in the vicinity of a rear edge portion of the bottom plate; a top plate 743 whose rear edge portion is rotatably attached to the height adjusting rods so that the upper and lower sides can be reversed and to whose lower surface an upper-jaw dentition cast 71 is attached; and an occlusal surface setting mechanism 620 disposed so as to pass through the top plate in the vicinity of a front side of the top plate. The top plate 743 is directed frontwards and attached to the height adjusting rods 56, 56 in a cantilever form.

Here, the bottom plate 241 and the top plate 743 are disposed facing each other in parallel with each other, and opposite front end surfaces are positioned on a surface perpendicular to the bottom plate 241. The lower-jaw dentition cast 72 can be fixed to the upper surface of the bottom plate 241, and the upper-jaw dentition cast 71 can be fixed to the lower surface of the top plate 743, respectively.

The bottom plate 241 and the top plate 743 can be constituted of, for example, rectangular steel plates having predetermined thicknesses. The upper surface of the bottom plate 241 and the lower surface of the top plate 743 may be subjected to a known technology such as rough surface working or emboss working so that the lower-jaw dentition cast 72 and the upper-jaw dentition cast 71 can be attached via a predetermined bonding material such as plaster, respectively.

Moreover, a pair of height adjusting rods 56, 56 stands in a state in which the rods are separated from each other along the rear edge portion of the bottom plate 241. The top plate 743 is constituted of: a top plate base member 53 whose opposite end portions are provided with two rod holes 91, 91 for passing the height adjusting rods 56, 56; and a top plate main body 742 connected to the top plate base member via hinges 99, 99.
According to such constitution, the whole top plate 743 can be elevated and lowered along the height adjusting rods 56, 56.
Moreover, the top plate main body 742 can be rotated around the top plate base member 53 to reverse the upper and lower sides of the top plate main body.

Furthermore, as to the top plate 743, the top plate main body 742 can be rotated around the top plate base member 53 as described above. However, when a rear end surface of the top plate main body 742 abuts on the top plate base member 53, the rotation of the top plate main body 742 is limited. In such state, the top plate main body is directed horizontally frontwards with respect to the bottom plate 241, and constituted into the cantilever form.

As described above, since the rotation is restricted in a position where the top plate main body 742 horizontally turns to the front, a relative positional relation between the bottom plate 241 and the top plate main body 742 can be retained before and after reversing the upper and lower surfaces of the top plate main body 742.

Moreover, opposite end surfaces of the top plate base member 53 in a longitudinal direction are provided with fixing mechanisms 93, 93, and the top plate base member 53, and the whole top plate 743 can be attached to desired positions of the height adjusting rods 56, 56. However, since such constitution has been already described in the second embodiment, the description is omitted.

Here, the occlusal surface setting mechanism 620 includes: an elevator rod 612 passed through a through hole 615 formed in the top plate main body 742 so as to be non-rotatable around a material axis, and having a rectangular section; an incisor guide member 614 disposed at right angles to the material axis in the vicinity of a lower end of the elevator rod, and protruded rearwards in parallel with the bottom plate 241 so as to cross front edge portions of the top plate 743 and the bottom plate 241 at right angles; and a pupil line guide member 613 disposed at right angles to the material axis of the elevator rod and the incisor guide member 614 in the vicinity of the lower end of the elevator rod 612. The elevator rod 612 is provided with the through hole 615 so as to be elevatable perpendicularly to the top plate main body 742.

Since the occlusal surface setting mechanism 620 has been described in detail in the seventh embodiment, the description is omitted hereinafter.

Here, rod fitting recessed portions 250a, 250b into which a median line setting rod 225 of an occlusal surface transfer instrument 220 is detachably fitted are formed in front end surfaces of the bottom plate 241 and the top plate 743.

Two rod fitting recessed portions 250a, 250b are formed along the same straight line perpendicular to the bottom plate 241, respectively, and constituted so that the median line setting rod can be tentatively attached in a state in which the median line setting rod becomes perpendicular to the bottom plate 241, and median line setting rod 225 is positioned at a specific angle around an axial line perpendicular to the bottom plate 241, when the median line setting rod 225 is fitted into the rod fitting recessed portions 250a, 250b.

Here, the positioning at the specific angle means that the median line setting rod is positioned so that the sectional axis 245 parallel to the material axis of the connection member 3 is disposed at right angles to the front edge portions of the bottom plate 241 and the top plate 244 in two sectional axes of the median line setting rod 225, when the median line setting rod 225 fits into the rod fitting recessed portions 250a, 250b.

On the other hand, the median line setting rod 225 of the occlusal surface transfer instrument 220 and the fitting portion 131 are constituted so that the sectional axis 245 parallel to the material axis of the connection member 3 is disposed at right angles to the material axis of the pupil line setting rod 4 in two sectional axes of the median line setting rod 225, when the median line setting rod is attached to the pupil line setting rod 4.

Therefore, when such median line setting rod 225 is fitted into the rod fitting recessed portions 250a, 250b, the median line setting rod 225 and the pupil line setting rod 4 are attached in parallel with a plane constituted by the front edge portions of the bottom plate 241 and the top plate 244, in other words, the front surface of the articulator 240.

It is to be noted that to attach and detach the median line setting rod 225 with respect to the rod fitting recessed portions 250a, 250b, an outer dimension of the median line setting rod 225 and inner dimensions of the rod fitting recessed portions 250a, 250b are appropriately adjusted beforehand so that the median line setting rod is tentatively attached with a predetermined strength at an attaching time, and the rod is detached with such a force as to manually pull the rod forwards at a detaching time. Next, a procedure to make an artificial tooth by use of the occlusal surface transfer instrument 220 and the articulator 740 will be described in accordance with an example of a case where the artificial tooth for patient's upper-jaw dentition is made.

To make the artificial tooth for the patient's upper-jaw dentition in the above-described procedure, first, an occlusal surface in patient's oral cavity is recorded in the occlusal surface transfer instrument 220, in the form of patient's pupil line 41, median line 43, and specific median line 42. Next, the upper-jaw dentition cast 71 and the lower-jaw dentition cast 72 are fixed to the articulator 740 by use of the occlusal surface transfer instrument 220 in which these pupil line 41, median line 43, and specific median line 42 have been recorded, and the artificial tooth for the upper-jaw dentition is made using the upper-jaw dentition cast 71 and the lower-jaw dentition cast 72 in such state.

A typical procedure will be described hereinafter in detail.

It is to be noted that there has been already described in the fourth embodiment a procedure for shaving an upper-jaw dentition with turbine or the like to form a support for supporting the artificial tooth, allowing two side bite materials 25, 27 and a bite material 1 to be bitten by a patient, and recording the patient's pupil line 41 in the pupil line setting rod 4, and the patient's median line 43 and the specific median line 42 in the median line setting rod 225, respectively, by use of the occlusal surface transfer instrument 220 in such state. Therefore, the description is omitted here.

First, the upper-jaw dentition cast 71 and the lower-jaw dentition cast 72 are fixed to the articulator 740 by use of the occlusal surface transfer instrument 220.

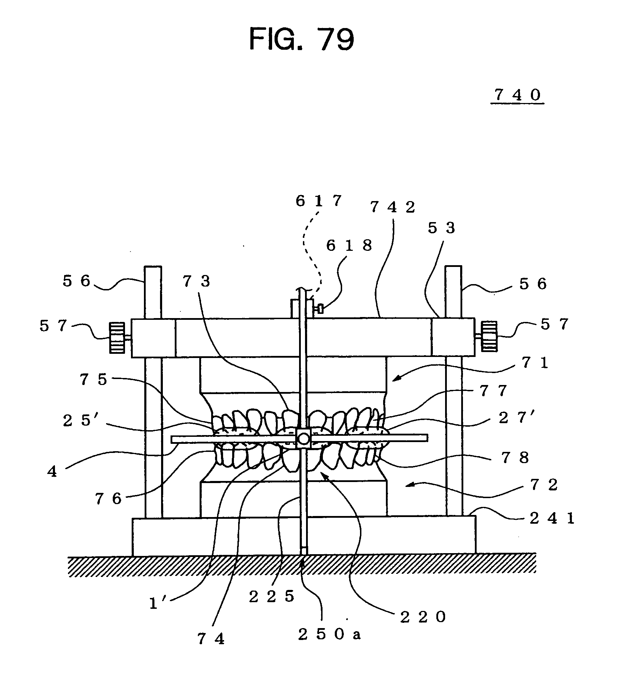

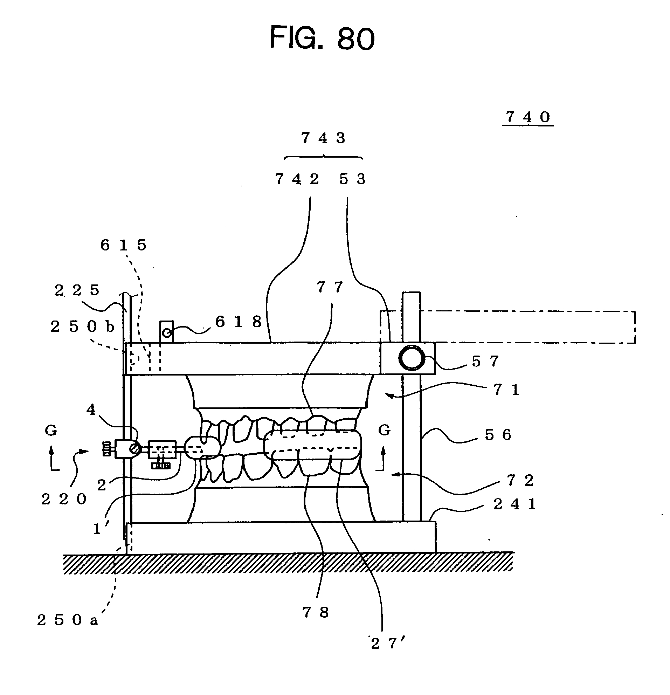

FIGS. 79 and 80 are a front view and a side view showing a case where the occlusal surface transfer instrument 220 is attached to the articulator 740 according to the present embodiment.

As seen from these drawings, to fix the upper-jaw dentition cast 71 and the lower-jaw dentition cast 72 to the articulator 740 by use of the occlusal surface transfer instrument 220, first, the elevator rod 612 is extracted beforehand from the through hole 615 formed in the top plate main body 742 to make preparations so that an operation to fix the upper-jaw dentition cast 71 and the lower-jaw dentition cast 72 is efficiently performed.

Next, the hardened bite material 1' held by the bite material holding member 2 of the occlusal surface transfer instrument 220 is bitten by front teeth 73 of the upper-jaw dentition cast 71 and front teeth 74 of the lower-jaw dentition cast 72 so as to correspond to an occlusion mold impressed on the bite material. Moreover, the side bite material 25' on which occlusion molds of right-side upper and lower molar teeth 23, 24 (see FIG. 2) have been impressed, and the side bite material 27' on which occlusion molds of left-side upper and lower molar teeth 21, 26 (see FIG. 2) have been impressed are bitten by right upper and lower molar teeth 75, 76 and left upper and lower molar teeth 77, 78 of the upper-jaw dentition cast 71 and the lower-jaw dentition cast 72 so as to correspond to the respective occlusion molds, respectively. In such state, the median line setting rod 225 constituting the occlusal surface transfer instrument 220 is fitted into the rod fitting recessed portions 250a, 250b formed in the front end surfaces of the bottom plate 241 and the top plate main body 742. Thereafter, the lower-jaw dentition cast 72 is fixed to the upper surface of the bottom plate 241, and the upper-jaw dentition cast 71 is fixed to the lower surface of the top plate main body 742, respectively, by use of plaster or the like.

Here, when the median line setting rod 225 is fitted into the rod fitting recessed portions 250a, 250b, the recording of the patient's pupil line 41 is transferred to the articulator, as a relation parallel to the bottom plate 241 and parallel to the front edge portions of the bottom plate 241 and the top plate 743, and the recordings of the median line 43 and the specific median line 42 are transferred to the articulator, as a relation perpendicular to the bottom plate 241.

On the other hand, as to the occlusal surface transfer instrument 220, the pupil line 41 is recorded in the pupil line setting rod 4, and the median line 43 and the specific median line 42 are recorded in the median line setting rod 225, respectively, as a relative positional relation with respect to the occlusal surface in the patient's oral cavity.

Therefore, when the median line setting rod 225 is fitted into the rod fitting recessed portions 250a, 250b, respectively, and the upper-jaw dentition cast 71 and the lower-jaw dentition cast 72 are simply fixed to the articulator 740 in such state, the upper-jaw dentition cast 71 and the lower-jaw dentition cast 72 are mounted on the articulator so that the front surfaces of the casts agree with the front surface of the articulator 740.

To fix the lower-jaw dentition cast 72 and the upper-jaw dentition cast 71 to the upper surface of the bottom plate 241 and the lower surface of the top plate main body 742, respectively, the top plate 743 is elevated and lowered along the height adjusting rods 56, 56. Next, after the third male screws 57, 57 are operated to thereby fix the top plate 743 to a desired position, the median line setting rod 225 is fitted into the rod fitting recessed portions 250a, 250b. In such state, the lower-jaw dentition cast 72 may be fixed to the upper surface of the bottom plate 241, and the upper-jaw dentition cast 71 may be fixed to the lower surface of the top plate main body 742, respectively, via plaster or the like.

It is to be noted that if necessary, a predetermined support member (not shown) stands on the upper surface of the bottom plate 241, and weights of the upper-jaw dentition cast 71 and the lower-jaw dentition cast 72 may be supported by the support member until the plaster is solidified. In such case, the support member is buried in the plaster between the bottom plate 241 and the lower-jaw dentition cast 72.

It is to be noted that since the side bite materials 25, 27 and the bite material 1 have been already described in the above-described embodiment, the description is omitted here.

When the lower-jaw dentition cast 72 is fixed to the upper surface of the bottom plate 241, and the upper-jaw dentition cast 71 is fixed to the lower surface of the top plate main body 742, respectively, the bite material 1' and two side bite materials 25', 27' bitten by the upper-jaw dentition cast 71 and the lower-jaw dentition cast 72 are removed together with the occlusal surface transfer instrument 220 from the upper-jaw dentition cast 71 and the lower-jaw dentition cast 72, respectively.

Here, in the constitution, the relative positional relation between the bottom plate 241 and the top plate 743 is retained before and after removing the bite material 1' and two side bite materials 25', 27', and the relative positional relation between the bottom plate 241 and the top plate 743 is retained before and after reversing the top plate main body 742. Therefore, even after the bite material 1' and two side bite materials 25', 27' are removed, the relative positional relation between the upper-jaw dentition cast 71 and the lower-jaw dentition cast 72 does not change at all.

Next, the elevator rod 612 is inserted into the through hole 615, and thereafter the artificial tooth is made on the basis of the pupil line guide member 613 attached to the elevator rod 612, and the elevator rod 612.

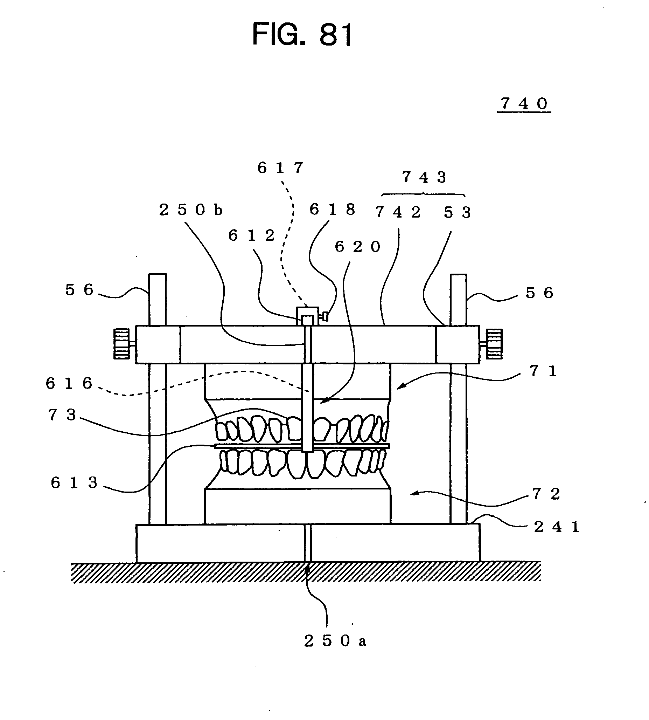

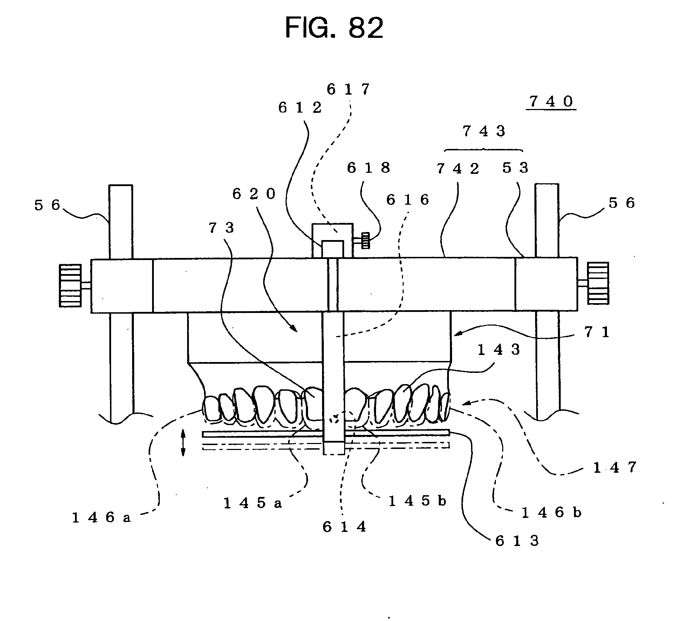

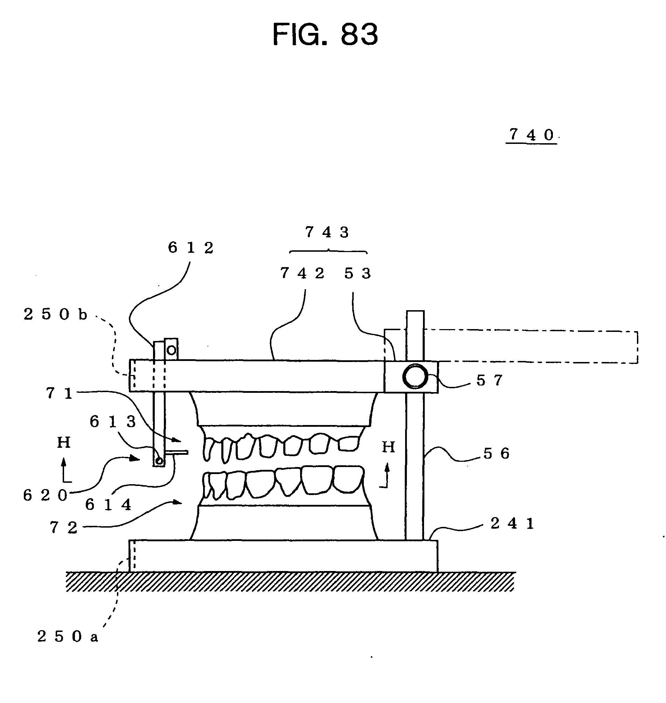

FIG. 81 is a front view showing a state in which the upper-jaw dentition cast 71 and the lower-jaw dentition cast 72 are fixed to the articulator 740, FIG. 82 is a detailed front view showing a periphery of the top plate main body 742 in FIG. 81, and FIG. 83 is a side view showing a state in which the upper-jaw dentition cast 71 and the lower-jaw dentition cast 72 are fixed to the articulator 740.

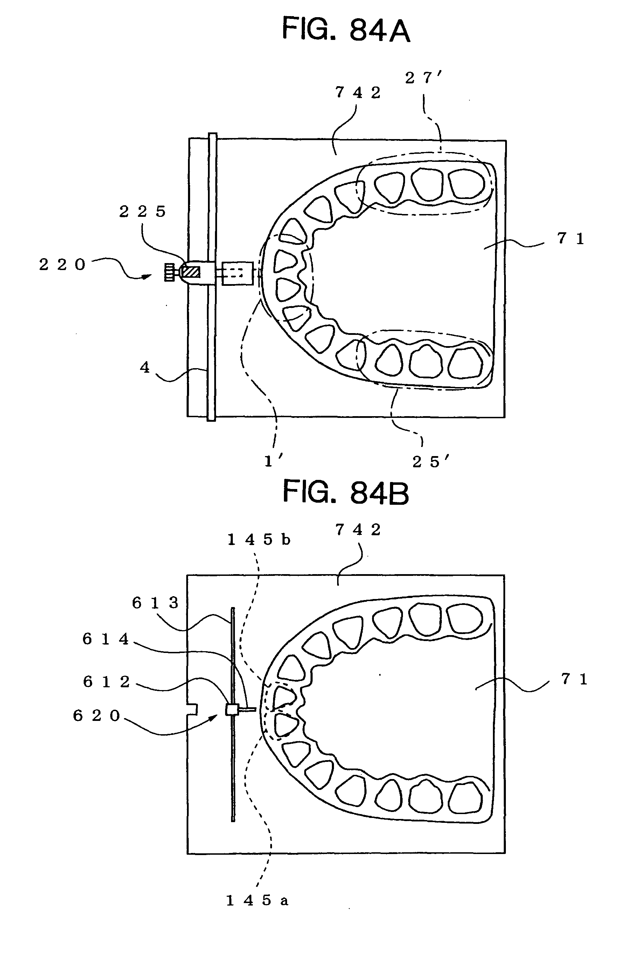

Moreover, FIG. 84 is a diagram showing a state in which the upper-jaw dentition cast 71 is attached to the top plate main body 742 constituting the articulator 740, (a) is an arrow view along line G-G in FIG. 80, and (b) is an arrow view along line H-H in FIG. 83.

As seen from these drawings, to make the artificial tooth by use of the upper-jaw dentition cast 71 fixed to the articulator 740, while turning the height adjusting knob 618 connected to the rotation shaft of the pinion 617 to match the elevator rod 612 constituting the occlusal surface setting mechanism 620 with the upper-jaw dentition cast 71 and elevate and lower the rod to a desired position, the artificial tooth is made.

Specifically, as shown in FIG. 82, the artificial tooth is made so that the upper-jaw dentition becomes horizontally symmetrical on the basis of the pupil line guide member 613. That is, the artificial tooth is made horizontally symmetrically so that the upper-jaw dentition formed at a time when the support 143 of the upper-jaw dentition cast 71 is covered with the artificial tooth 147 for the upper-jaw dentition gradually becomes high from artificial teeth 145a, 145b newly constituting incisor to artificial teeth 146a, 146b newly constituting molar teeth as viewed from the front surface of the articulator 740.

It is to be noted that the occlusal surface gradually becomes high from the incisor 73 as the front teeth toward the molar and the inside of the oral cavity in a case where the specific median line 42 is regarded as a reference. However, as seen from FIG. 82, the elevator rod 612 can be elevated and lowered with respect to the top plate main body 742 by turning the height adjusting knob 618 connected to the rotation shaft of the pinion 617. Therefore, the occlusal surface can be exactly reproduced to the upper-jaw dentition cast 71 while appropriately elevating and lowering the elevator rod 612 depending on a type of the artificial tooth 147 for the upper-jaw dentition.

Moreover, as well seen from FIG. 82, the artificial tooth 147 for the upper-jaw dentition is made so that an extended line of a material axis of the incisor guide member 614 falls between the incisor 145a, 145b in the artificial tooth 147 for the upper-jaw dentition as viewed from the front surface of the articulator 740. Even in such case, the height of the incisor guide member 614 may be matched with positions of the incisor 73 by appropriately elevating and lowering the elevator rod 612.

It is to be noted that for the sake of convenience of operation, the top plate main body 742 is reversed around the top plate base member with respect to the top plate base member 53 until the upper surface abuts on that of the top plate base member to make the artificial tooth 147 for the upper-jaw dentition. The artificial tooth for the upper-jaw dentition is attached to the upper-jaw dentition cast 71, and the top plate main body 742 is rotated to its former state with respect to the top plate base member 53 to confirm the occlusion state with the lower-jaw dentition cast 72.

As described above, according to the articulator 740 of the present embodiment, the patient's pupil line 41 can be transferred as a relation parallel to the bottom plate 241 of the articulator 740 to the articulator via the pupil line setting rod 4 of the occlusal surface transfer instrument 220. Moreover, the recordings of the median line 43 and the specific median line 42 can be transferred as a relation perpendicular to the bottom plate 241 of the articulator 740 to the articulator via the median line setting rod 225.

Therefore, the upper-jaw dentition cast 71 and the lower-jaw dentition cast 72 can be fixed to the articulator 740 so that the occlusal surface becomes the same as that in the patient's oral cavity in a three-dimensional coordinate. Therefore, it is possible to make the aesthetically superior artificial tooth in a state in which such occlusal surface in the oral cavity is reproduced in the articulator 740.

Moreover, according to the articulator 740 of the present embodiment, the rod fitting recessed portions 250a, 250b are formed along the same line perpendicular to the bottom plate 241. Moreover, the portions are formed so that the median line setting rod is tentatively attached in a state in which the rod becomes perpendicular to the bottom plate 241, and the pupil line setting rod 4 of the occlusal surface transfer instrument 220 becomes parallel to the front edge portions of the bottom plate 241 and the top plate 743, when the median line setting rod 225 is fitted. Therefore, the relative positional relation between the patient's pupil line 41, median line 43, and specific median line 42, and the occlusal surface in the oral cavity is exactly reproduced on the articulator 740, as the relative positional relation between the pupil line guide member 613 and elevator rod 612, and the upper-jaw dentition cast 71 and lower-jaw dentition cast 72.

In addition, the upper-jaw dentition cast 71 and the lower-jaw dentition cast 72 can be mounted in the articulator 740 in a state in which the front surfaces of these casts agree with the front surface of the articulator 740. Therefore, when the upper-jaw dentition cast 71 and the lower-jaw dentition cast 72 are viewed from the front surface of the articulator 740, it is possible to reproduce the same situation as that in a case where the dentition in the patient's oral cavity is viewed from the patient's front.

Therefore, it is possible to make the artificial tooth 147 for upper-jaw dentition with a high precision on the basis of the elevator rod 612 and the pupil line guide member 613.

Moreover, according to the articulator 740 of the present embodiment, when the median line setting rod 225 is fitted into the rod fitting recessed portions 250a, 250b, respectively, the occlusal surface transfer instrument 220 can be detachably attached to the articulator 740. At the attaching time, the occlusal surface transfer instrument 220 can be tentatively attached to the articulator 740, and the upper-jaw dentition cast 71 and the lower-jaw dentition cast 72 can be tentatively held and positioned.

Therefore, an operation to fix the upper-jaw dentition cast 71 and the lower-jaw dentition cast 72 to the lower surface of the top plate main body 742 and the upper surface of the bottom plate 241, respectively, is facilitated.

Moreover, according to the articulator 740 of the present embodiment, the top plate 743 and the height adjusting rods 56, 56 are constituted so that the relative positional relation between the bottom plate 241 and the top plate 743 is retained before and after the removing in the case where the bite material 1' and two side bite materials 25' , 27' are removed after the attaching, and the relative positional relation between the bottom plate 241 and the top plate 743 is retained before and after reversing the top plate 743. Therefore, even after the bite material 1' and two side bite materials 25', 27' are removed, an interval between the upper-jaw dentition cast 71 and the lower-jaw dentition cast 72 does not change at all.

Therefore, it is possible to make the artificial tooth 147 for the upper-jaw dentition in the relative positional relation in which the normal occlusion is performed. Moreover, even when the top plate main body 742 constituting the top plate 743 is rotated to its former state with respect to the top plate base member 53 in order to check the occlusion state as needed during the making of the artificial tooth for the upper-jaw dentition, the relative positional relation between the upper-jaw dentition cast 71 and the lower-jaw dentition cast 72 does not change at all. Therefore, it is possible to check as needed whether or not the normal occlusion is performed during the making of the artificial tooth 147 for the upper-jaw dentition.

Moreover, according to the articulator 740 of the present embodiment, the upper-jaw dentition cast 71 and the lower-jaw dentition cast 72 are mounted on the articulator so that the front surfaces thereof agree with the front surface of the articulator 740. Therefore, the artificial tooth can be made horizontally symmetrically so that the upper-jaw dentition formed at a time when the support 143 of the upper-jaw dentition cast 71 is covered with the artificial tooth 147 for the upper-jaw dentition gradually becomes high from the artificial teeth 145a, 145b newly constituting the incisor to the artificial teeth 146a, 146b newly constituting the molar teeth as viewed from the front surface of the articulator 740.

Furthermore, according to the articulator 740 of the present embodiment, since the elevator rod 612 constituting the occlusal surface setting mechanism 620 is attached so as to be elevatable with respect to the top plate main body 742, it is possible to match the pupil line guide member 613 attached to the elevator rod 612 with the dentition of the upper-jaw dentition cast 71 and set the guide member to a desired height, and precision in making the artificial tooth 147 for the upper-jaw dentition is enhanced.

In addition, according to the articulator 740 of the present embodiment, the incisor guide member 614 constituting the occlusal surface setting mechanism 620 is protruded on the rear side of the bottom plate 241 so as to cross the material axis of the elevator rod 612 at right angles. Therefore, it is possible to make the artificial tooth 147 for the upper-jaw dentition so that the extended line of the axial direction of the incisor guide member 614 falls between the incisor 145a, 145b. The precision and operability in making the artificial tooth for the upper-jaw dentition are largely enhanced even in this respect.

Although not especially mentioned in the present embodiment, the articulator of the present invention has been constituted so that the top plate 743 is elevatable along the height adjusting rods 56, 56. However, unless there is any trouble in the attaching of the upper-jaw dentition cast 71 and the lower-jaw dentition cast 72, or the top plate has to be constituted to be elevatable, the top plate does not have to be elevatable.

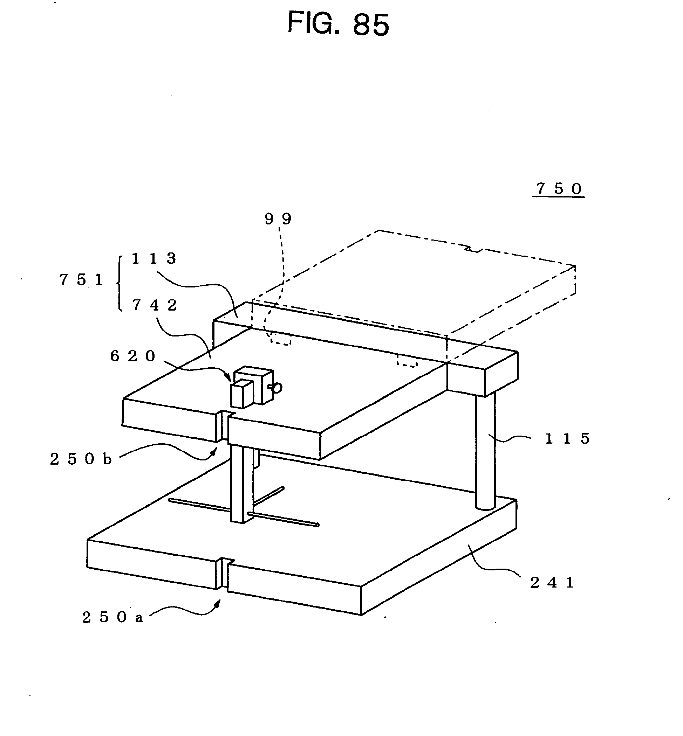

FIG. 85 is a perspective view showing an articulator according to a modification.

As seen from the drawing, an articulator 750 according to the modification is constituted of: a bottom plate 241; a pair of support rods 115, 115 stood in a state in which the rods are separated from each other along a rear edge portion of the bottom plate; a top plate 751 attached to upper ends of the support rods; and an occlusal surface setting mechanism 620 disposed so as to pass through the top plate in the vicinity of the front side of the top plate. The top plate 751 is constituted of: a top plate base member 113 attached to the upper ends of the support rods 115, 115; and a top plate main body 742 connected to the top plate base member via hinges 99, 99. Since the present modification has been described in detail in the fourth embodiment, the description is omitted hereinafter.

Moreover, in the present embodiment, the top plate 743 and the bottom plate 241 constituting the articulator 740 are constituted of rectangular steel plates having predetermined thicknesses, but shapes do not have to be especially limited to rectangular shapes.

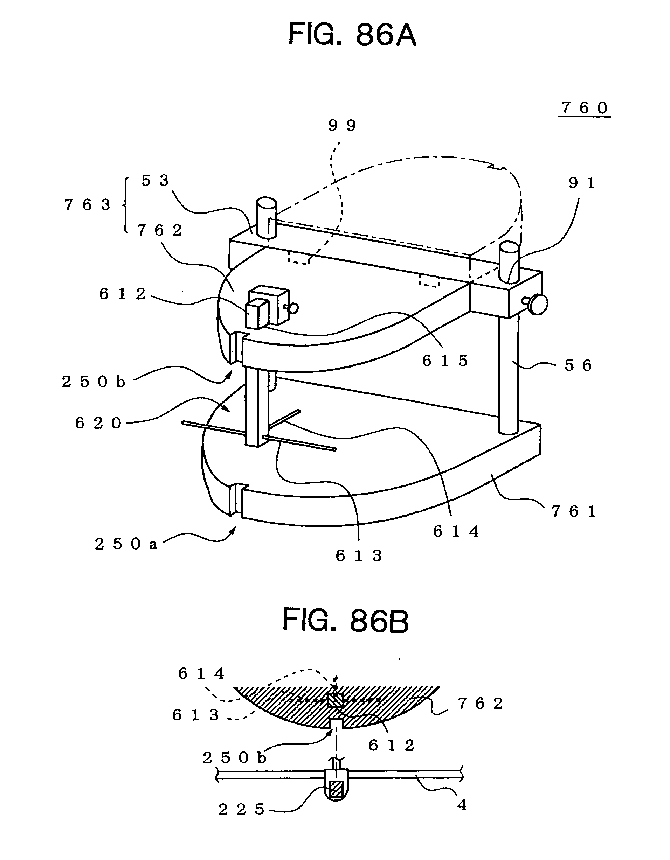

FIG. 86 is a perspective view showing an articulator 760 according to the modification.

As seen from the drawing, substantially in the same manner as in the articulator 740, the articulator 760 according to the modification is constituted of: a bottom plate 761 to whose upper surface a lower-jaw dentition cast 72 is attached; height adjusting rods 56, 56 as a support mechanism stood in the vicinity of a rear edge portion of the bottom plate; a top plate 763 whose rear edge portion is rotatably attached to the height adjusting rods so that the upper and lower sides can be reversed and to whose lower surface an upper-jaw dentition cast 71 is attached; and an occlusal surface setting mechanism 620 disposed so as to pass through the top plate in the vicinity of a front side of the top plate. The top plate is directed frontwards, and attached to the height adjusting rods 56, 56 in a cantilever form.

Here, the bottom plate 761 and the top plate 763 are disposed facing each other in parallel with each other, and opposite front end surfaces are positioned on a surface perpendicular to the bottom plate 761. The lower-jaw dentition cast 72 can be fixed to the upper surface of the bottom plate 761, and the upper-jaw dentition cast 71 can be fixed to the lower surface of the top plate 763, respectively.

The top plate 763 is constituted of: a top plate base member 53 whose opposite end portions are provided with two rod holes 91, 91 for passing the height adjusting rods 56, 56; and a top plate main body 762 connected to the top plate base member via hinges 99, 99.

Here, unlike the articulator 740, the bottom plate 761 and the top plate 763 are formed of semi-elliptical steel plates having predetermined thicknesses. The upper surface of the bottom plate 761 and the lower surface of the top plate 763 may be subjected to a known technology such as rough surface working or emboss working so that the lower-jaw dentition cast 72 and the upper-jaw dentition cast 71 can be attached via a predetermined bonding material such as plaster, respectively.

The front end surfaces of the bottom plate 761 and the top plate main body 763 are provided with rod fitting recessed portions 250a, 250b into which the median line setting rod 225 constituting the occlusal surface transfer instrument 220 is to be detachably fitted in the same manner as in the articulator 740.

Since the articulator 760 according to the present modification is similar to the articulator 740 except that the shapes of the bottom and top plates are different, descriptions of another constitution, and functions and effects are omitted hereinafter.

Moreover, the incisor guide member 614 may be constituted to be stretchable, through this has not been mentioned in the present embodiment.

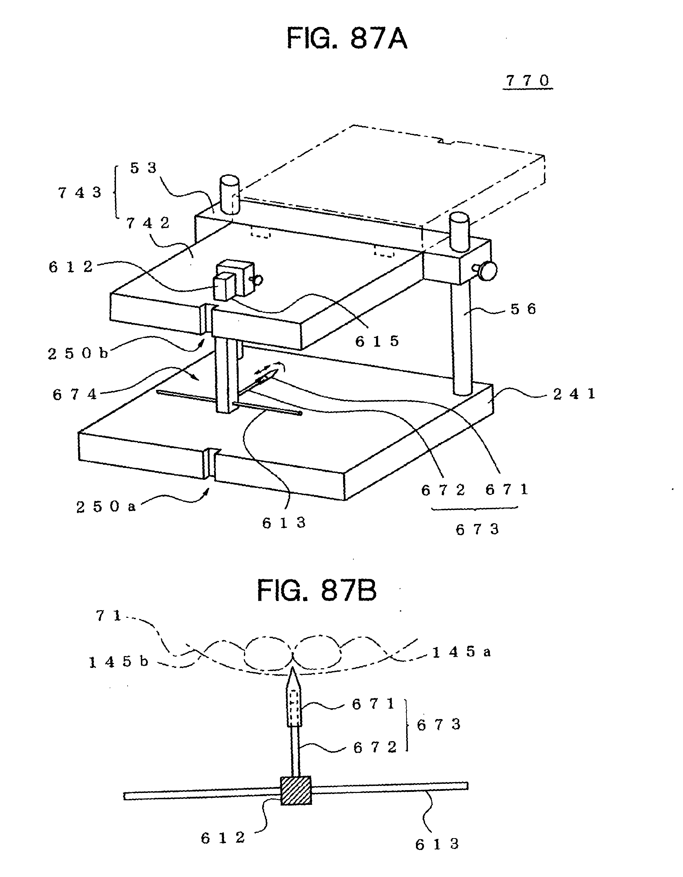

FIG. 87 shows a perspective view and a sectional view showing an articulator 770 according to the modification.
Substantially in the same manner as in the articulator 740, the articulator 770 shown in the drawing is constituted of: a bottom plate 241; height adjusting rods 56, 56 as a support mechanism stood in the vicinity of a rear edge portion of the bottom plate; a top plate 743 whose rear edge portion is attached to the height adjusting rods; and an occlusal surface setting mechanism 674 disposed so as to pass through the top plate in the vicinity of a front side of the top plate. The top plate 743 is directed frontwards, and attached to the height adjusting rods 56, 56 in a cantilever form.

The occlusal surface setting mechanism 674 includes: an elevator rod 612 passed through a through hole 615 formed in the top plate main body 742 so as to be non-rotatable around a material axis, and having a rectangular section; an incisor guide member 673 disposed at right angles to the material axis in the vicinity of a lower end of the elevator rod, and protruded rearwards in parallel with the bottom plate 241 and so as to cross front edge portions of the top plate 743 and the bottom plate 241 at right angles; and a pupil line guide member 613 disposed at right angles to the material axis of the elevator rod and the incisor guide member 673 in the vicinity of the lower end of the elevator rod 612.

Here, the incisor guide member 673 is constituted of an incisor guide main body 672 attached to the elevator rod 612, and an extendable guide 671 attached to a tip of the main body and formed to be sharp-pointed. The extendable guide 671 is constituted to be stretchable with respect to the incisor guide main body 672.

It is to be noted that since the incisor guide member 673 has been already described in detail, the description is omitted here.

Moreover, although not especially mentioned in the present embodiment, in the articulator according to the present invention, the fitting grooves may be formed so that the median line setting rod is tentatively attached in a state in which the pupil line setting rod of the occlusal surface transfer instrument becomes parallel to the pupil line guide member, the median line setting rod becomes perpendicular to the bottom plate, and the material axis of the rod and that of the incisor guide member are included in the same plane, when the median line setting rod constituting the occlusal surface transfer instrument is fitted into the rod fitting recessed portions. In this case, the shape or the direction is arbitrary. The pupil line setting rod 4 of the occlusal surface transfer instrument 220 does not have to be parallel to the front edge portions of the bottom plate 241 and the top plate 743, when the median line setting rod 125 is fitted as in the present embodiment. The pupil line setting rod 4 or the pupil line guide member 613 may be constituted so as to form a predetermined angle with respect to the front edge portions of the bottom plate 241 and the top plate 743.

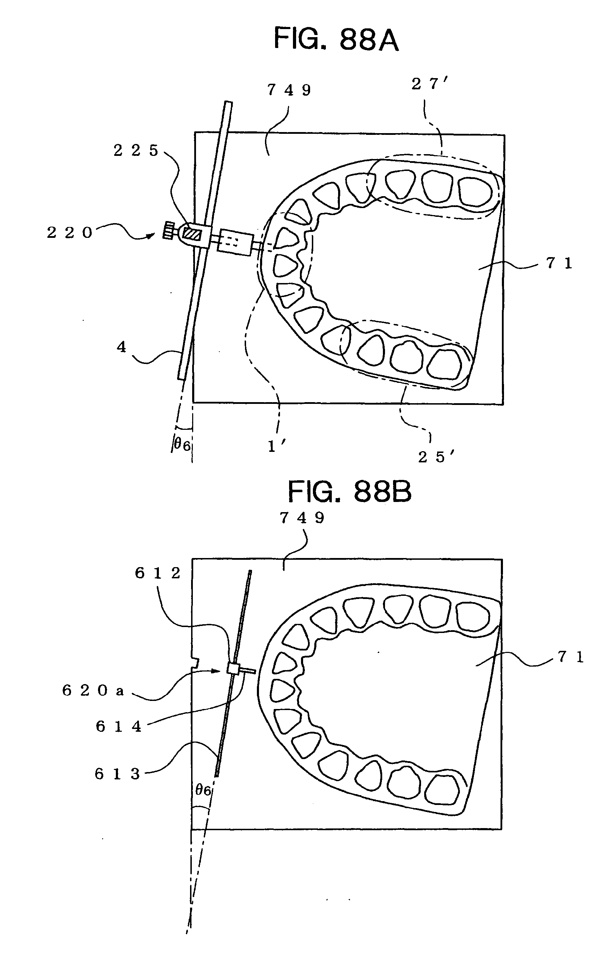

FIG. 88 is a looking-upward diagram (diagram in which one looks up at the above) of the top plate main body 749 according to the modification, (a) is a diagram showing a relative positional relation between the occlusal surface transfer instrument 220 and the upper-jaw dentition cast 71 or the top plate main body 749 in a case where the above-described disposing angle is an arbitrary angle θ6 other than 90° , and (b) is a diagram showing a relative positional relation between the occlusal surface setting mechanism 620a and the upper-jaw dentition cast 71 or the top plate main body 749.

In such case, as apparent from the drawing, the front surface of the upper-jaw dentition cast 71 does not agree with that of the top plate main body 749, and deviates therefrom as much as the angle θ6, but any problem is not generated in making the artificial tooth, and a high-precision artificial tooth can be made in the same manner as described above.

It is to be noted that the occlusal surface setting mechanism 620a is the same as the occlusal surface setting mechanism 620 except that the pupil line guide member 613 is not parallel to the front edge portion of the top plate main body 749, and has the angle θ6, and therefore description thereof is omitted here.

Moreover, in the present embodiment, the process has been described in a case where the artificial tooth 147 for the upper-jaw dentition is made using the occlusal surface transfer instrument 220 and the articulator 740. This also applies to a case where the artificial tooth for the lower-jaw dentition is made. First, the lower-jaw dentition is shaved with turbine or the like to form a support for supporting the artificial tooth, and two side bite materials and the bite material are bitten by the patient by the above-described procedure. In such state, the patient's pupil line 41 is recorded in the pupil line setting rod 4, and the patient's median line 43 and the specific median line 42 are recorded in the median line setting rod 225, respectively. Next, after mounting the lower and upper jaw dentition casts on the articulator 740 by use of the occlusal surface transfer instrument 220, the artificial tooth for the lower-jaw dentition may be made by use of the occlusal surface setting mechanism 620.

Moreover, to make the artificial tooth for the lower-jaw dentition, unlike the process of making the artificial tooth 147 for the upper-jaw dentition, the occlusion states of the dentition of the upper-jaw dentition cast and the corresponding dentition of the lower-jaw dentition cast are confirmed one by one with respect to the upper-jaw dentition cast corresponding to the already completed artificial tooth 147 for the upper-jaw dentition.

(Tenth Embodiment)

Next, a tenth embodiment will be described. It is to be noted that substantially the same components as those of the above-described embodiment are denoted with the same reference numerals, and description thereof is omitted.

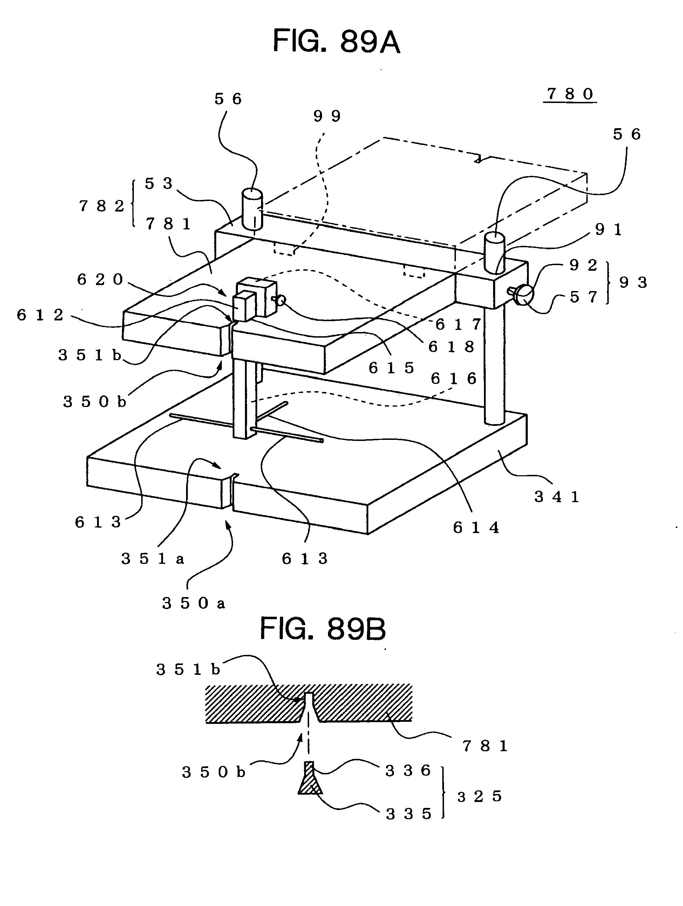

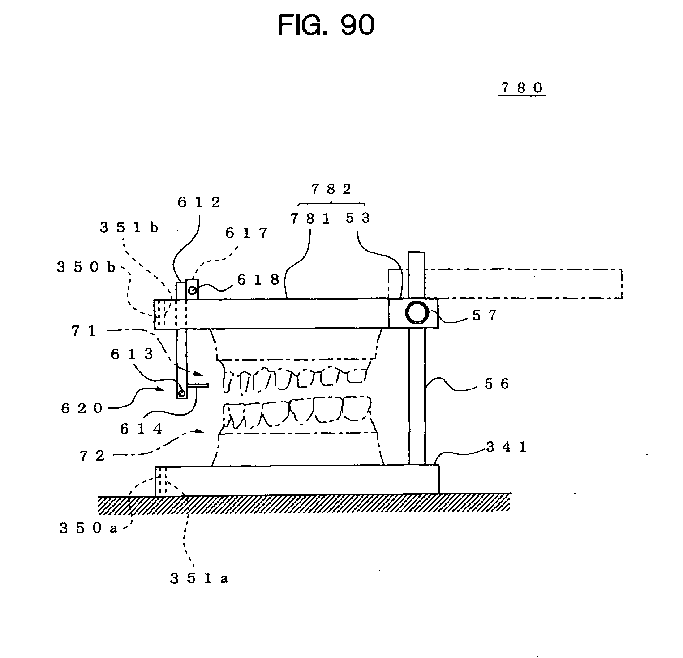

FIG. 89 is a diagram showing an articulator according to the present embodiment, (a) is a perspective view, and (b) is a detailed sectional view around a front side of the articulator. FIG. 90 shows a side view of the articulator according to the present embodiment. As seen from the drawing, an articulator 780 according to the present embodiment is constituted of: a bottom plate 341 to whose upper surface a lower-jaw dentition cast 72 is attached; height adjusting rods 56, 56 as a support mechanism stood in the vicinity of a rear edge portion of the bottom plate; a top plate 782 whose rear edge portion is rotatably attached to the height adjusting rods so that the upper and lower sides can be reversed and to whose lower surface an upper-jaw dentition cast 71 is attached; and an occlusal surface setting mechanism 620 disposed so as to pass through the top plate in the vicinity of a front side of the top plate. The top plate 782 is directed frontwards and attached to the height adjusting rods 56, 56 in a cantilever form.

Here, the bottom plate 341 and the top plate 782 are disposed facing each other in parallel with each other, and opposite front end surfaces are positioned on a surface perpendicular to the bottom plate 341. The lower-jaw dentition cast 72 can be fixed to the upper surface of the bottom plate 341, and the upper-jaw dentition cast 71 can be fixed to the lower surface of the top plate 782, respectively.

The bottom plate 341 and the top plate 782 can be constituted of, for example, rectangular steel plates having predetermined thicknesses. The upper surface of the bottom plate 341 and the lower surface of the top plate 782 may be subjected to a known technology such as rough surface working or emboss working so that the lower-jaw dentition cast 72 and the upper-jaw dentition cast 71 can be attached via a predetermined bonding material such as plaster, respectively.

Moreover, a pair of height adjusting rods 56, 56 stands in a state in which the rods are separated from each other along the rear edge portion of the bottom plate 341. The top plate 782 is constituted of: a top plate base member 53 whose opposite end portions are provided with two rod holes 91, 91 for passing the height adjusting rods 56, 56; and a top plate main body 781 connected to the top plate base member via hinges 99, 99.
According to such constitution, the whole top plate 782 can be elevated and lowered along the height adjusting rods 56, 56. Moreover, the top plate main body 781 can be rotated around the top plate base member 53 to reverse the upper and lower sides of the top plate main body.

Furthermore, as to the top plate 782, the top plate main body 781 can be rotated around the top plate base member 53 as described above. However, when a rear end surface of the top plate main body 781 abuts on the top plate base member 53, the rotation of the top plate main body 781 is limited. In such state, the top plate main body is directed horizontally frontwards with respect to the bottom plate 341, and constituted into the cantilever form.

As described above, since the rotation is restricted in a position where the top plate main body 781 horizontally turns to the front, a relative positional relation between the bottom plate 341 and the top plate main body 781 can be retained before and after reversing the upper and lower surfaces of the top plate main body 781.

Moreover, opposite end surfaces of the top plate base member 53 in a longitudinal direction are provided with fixing mechanisms 93, 93, and the top plate base member 53, and the whole top plate 782 can be attached to desired positions of the height adjusting rods 56, 56. However, since such constitution has been already described in the second embodiment, the description is omitted.

The occlusal surface setting mechanism 620 includes: an elevator rod 612 passed through a through hole 615 formed in the top plate main body 781 so as to be non-rotatable around a material axis, and having a rectangular section; an incisor guide member 614 disposed at right angles to the material axis in the vicinity of a lower end of the elevator rod, and protruded rearwards in parallel with the bottom plate 341 so as to cross front edge portions of the top plate 782 and the bottom plate 341 at right angles; and a pupil line guide member 613 disposed at right angles to the material axis of the elevator rod and the incisor guide member 614 in the vicinity of the lower end of the elevator rod 612. The elevator rod 612 is provided with the through hole 615 so as to be elevatable perpendicularly to the top plate main body 781.

Since the occlusal surface setting mechanism 620 has been described in detail in the seventh embodiment, the description is omitted hereinafter.

Here, rod fitting recessed portions 350a, 350b are formed in front end surfaces of the top plate 782 and the bottom plate 341 so that a median line setting rod 325 of an occlusal surface transfer instrument 320 is detachably fitted. Moreover, fitting grooves 351a, 351b are formed in inner surfaces of the rod fitting recessed portions 350a, 350b so that the protruding member 336 of the median line setting rod 325 is detachably fitted. The rod fitting recessed portions 350a, 350b and the fitting grooves 351a, 351b are constituted so that the rod body 335 and the protruding member 336 are tentatively attached in a state in which the median line setting rod 325 becomes perpendicular to the bottom plate 341, and the median line setting rod 325 is positioned at a specific angle around a axial line perpendicular to the bottom plate 341, when the rod body and the protruding member are fitted into the rod fitting recessed portions 350a, 350b, and the fitting grooves 351a, 351b, respectively.

On the other hand, as described in the sixth embodiment, the median line setting rod 325 and the fitting portion 331 of the occlusal surface transfer instrument 320 are constituted so that the protruding direction of the protruding member 336 is disposed at right angles to the material axis of the pupil line setting rod 4, when the median line setting rod is attached to the pupil line setting rod 4.

Therefore, when such protruding member 336 is fitted into the fitting grooves 351a, 351b, the median line setting rod 325 and the pupil line setting rod 4 are attached in parallel with a plane constituted by the front edge portions of the bottom plate 341 and the top plate 782, in other words, the front surface of the articulator 780.

It is to be noted that to attach and detach the median line setting rod 325 with respect to the fitting grooves 351a, 351b, an outer dimension of the protruding member 336 and inner dimensions of the fitting grooves 350a, 350b are appropriately adjusted beforehand so that the median line setting rod is tentatively attached with a predetermined strength at an attaching time, and the rod is detached with such a force as to manually pull the rod forwards at a detaching time.

Next, a procedure to make an artificial tooth by use of the occlusal surface transfer instrument 320 and the articulator 780 will be described in accordance with an example of a case where the artificial tooth for patient's upper-jaw dentition is made.

To make the artificial tooth for the patient's upper-jaw dentition in the above-described procedure, first; an occlusal surface in patient's oral cavity is recorded in the occlusal surface transfer instrument 320, in the form of patient's pupil line 41, median line 43, and specific median line 42. Next, the upper-jaw dentition cast 71 and the lower-jaw dentition cast 72 are fixed to the articulator 780 by use of the occlusal surface transfer instrument 320 in which these pupil line 41, median line 43, and specific median line 42 have been recorded, and the artificial tooth for the upper-jaw dentition is made using the upper-jaw dentition cast 71 and the lower-jaw dentition cast 72 in such state.

A typical procedure will be described hereinafter in detail.

It is to be noted that there has been already described in the fourth embodiment a procedure for shaving an upper-jaw dentition with turbine or the like to form a support for supporting the artificial tooth, allowing two side bite materials 25, 27 and a bite material 1 to be bitten by a patient, and recording the patient's pupil line 41 in the pupil line setting rod 4, and the patient's median line 43 and the specific median line 42 in the median line setting rod 125, respectively, by use of the occlusal surface transfer instrument 320 in such state. Therefore, the description is omitted here.

First, the upper-jaw dentition cast 71 and the lower-jaw dentition cast 72 are fixed to the articulator 780 by use of the occlusal surface transfer instrument 320.

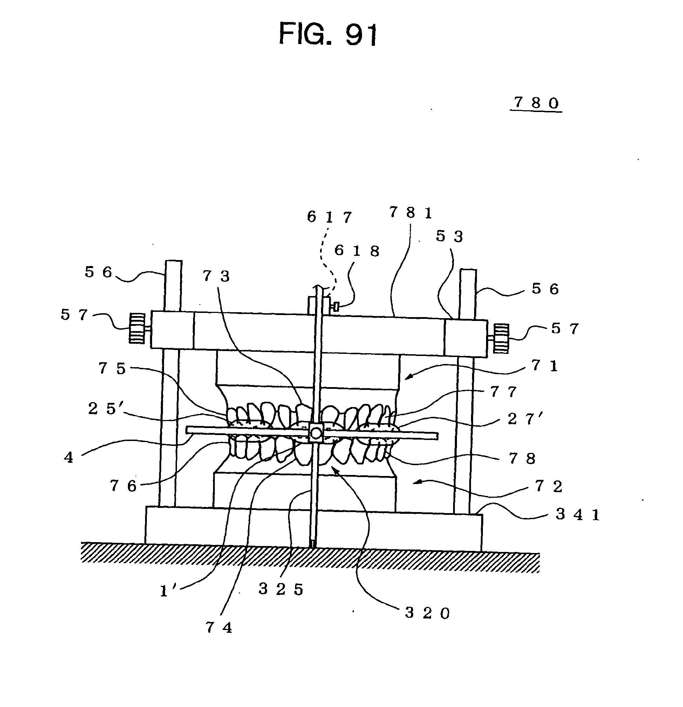

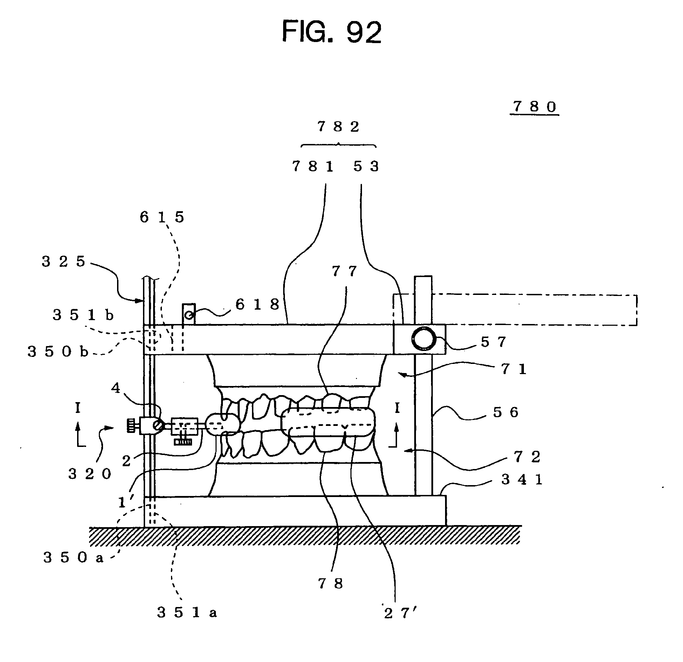

FIGS. 91 and 92 are a front view and a side view showing a case where the occlusal surface transfer instrument 320 is attached to the articulator 780 according to the present embodiment.

As seen from these drawings, to fix the upper-jaw dentition cast 71 and the lower-jaw dentition cast 72 to the articulator 780 by use of the occlusal surface transfer instrument 320, first, the elevator rod 612 is extracted beforehand from the through hole 615 formed in the top plate main body 781 to make preparations so that an operation to fix the upper-jaw dentition cast 71 and the lower-jaw dentition cast 72 is efficiently performed.

Next, the hardened bite material 1' held by the bite material holding member 2 of the occlusal surface transfer instrument 320 is bitten by front teeth 73 of the upper-jaw dentition cast 71 and front teeth 74 of the lower-jaw dentition cast 72 so as to correspond to an occlusion mold impressed on the bite material. Moreover, the side bite material 25' on which occlusion molds of right-side upper and lower molar teeth 23, 24 (see FIG. 2) have been impressed, and the side bite material 27' on which occlusion molds of left-side upper and lower molar teeth 21, 26 (see FIG. 2) have been impressed are bitten by right upper and lower molar teeth 75, 76 and left upper and lower molar teeth 77, 78 of the upper-jaw dentition cast 71 and the lower-jaw dentition cast 72 so as to correspond to the respective occlusion molds, respectively. In such state, the rod body 335 and the protruding member 336 constituting the median line setting rod 325 of the occlusal surface transfer instrument 320 are fitted into the rod fitting recessed portions 350a, 350b and the fitting grooves 351a, 351b, respectively. Thereafter, the lower-jaw dentition cast 72 is fixed to the upper surface of the bottom plate 341, and the upper-jaw dentition cast 71 is fixed to the lower surface of the top plate main body 781, respectively, by use of plaster or the like.

Here, when the rod body 335 and the protruding member 336 of the median line setting rod 325 are fitted into the rod fitting recessed portions 350a, 350b and the fitting grooves 351a, 351b, respectively, the recording of the patient's pupil line 41 is transferred to the articulator, as a relation parallel to the bottom plate 341 and parallel to the front edge portions of the bottom plate 341 and the top plate 782, and the recordings of the median line 43 and the specific median line 42 are transferred to the articulator, as a relation perpendicular to the bottom plate 341.

On the other hand, as to the occlusal surface transfer instrument 320, the pupil line 41 is recorded in the pupil line setting rod 4, and the median line 43 and the specific median line 42 are recorded in the median line setting rod 325, respectively, as a relative positional relation with respect to the occlusal surface in the patient's oral cavity.

Therefore, when the rod body 335 and the protruding member 336 of the median line setting rod 325 are fitted into the rod fitting recessed portions 350a, 350b and the fitting grooves 351a, 351b, respectively, and the upper-jaw dentition cast 71 and the lower-jaw dentition cast 72 are simply fixed to the articulator 780 in such state, the upper-jaw dentition cast 71 and the lower-jaw dentition cast 72 are mounted on the articulator so that the front surfaces of the casts agree with the front surface of the articulator 780.

To fix the lower-jaw dentition cast 72 and the upper-jaw dentition cast 71 to the upper surface of the bottom plate 341 and the lower surface of the top plate main body 781, respectively, the top plate 782 is elevated and lowered along the height adjusting rods 56, 56. Next, after the third male screws 57, 57 are operated to thereby fix the top plate 782 to a desired position, the median line setting rod 325 is fitted into the rod fitting recessed portions 350a, 350b and the fitting grooves 351a, 351b, respectively. In such state, the lower-jaw dentition cast 72 may be fixed to the upper surface of the bottom plate 341, and the upper-jaw dentition cast 71 may be fixed to the lower surface of the top plate main body 781, respectively, via plaster or the like.

It is to be noted that if necessary, a predetermined support member (not shown) stands on the upper surface of the bottom plate 341, and weights of the upper-jaw dentition cast 71 and the lower-jaw dentition cast 72 may be supported by the support member until the plaster is solidified. In such case, the support member is buried in the plaster between the bottom plate 341 and the lower-jaw dentition cast 72.

It is to be noted that since the side bite materials and the bite material have been already described in the above-described embodiment, the description is omitted here.

When the lower-jaw dentition cast 72 is fixed to the upper surface of the bottom plate 341, and the upper-jaw dentition cast 71 is fixed to the lower surface of the top plate main body 781, respectively, the bite material 1' and two side bite materials 25', 27' bitten by the upper-jaw dentition cast 71 and the lower-jaw dentition cast 72 are removed together with the occlusal surface transfer instrument 320 from the upper-jaw dentition cast 71 and the lower-jaw dentition cast 72, respectively.

Here, in the constitution, the relative positional relation between the bottom plate 341 and the top plate 782 is retained before and after removing the bite material 1' and two side bite materials 25', 27', and the relative positional relation between the bottom plate 341 and the top plate 782 is retained before and after reversing the top plate main body 781. Therefore, even after the bite material 1' and two side bite materials 25', 27' are removed, the relative positional relation between the upper-jaw dentition cast 71 and the lower-jaw dentition cast 72 does not change at all.

Next, the elevator rod 612 is inserted into the through hole 615, and thereafter the artificial tooth is made on the basis of the pupil line guide member 613 and incisor guide member 614 attached to the elevator rod 612.

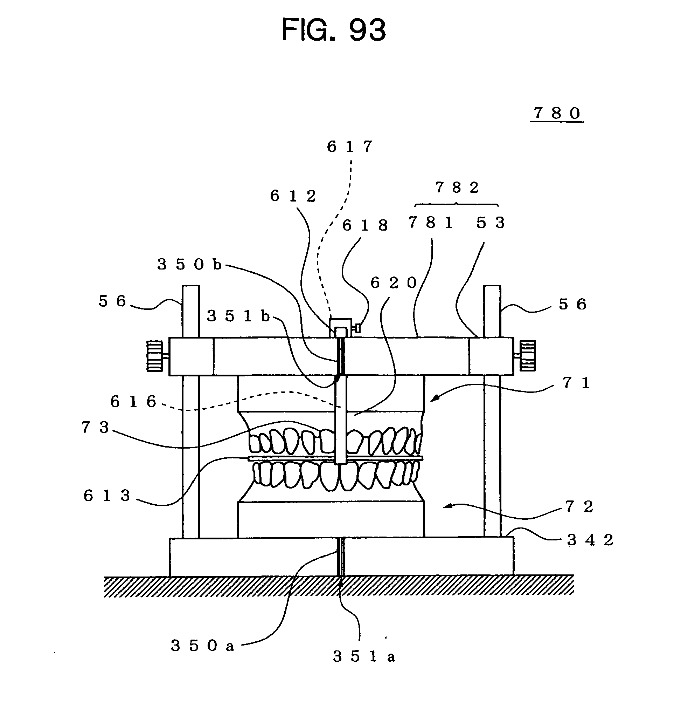

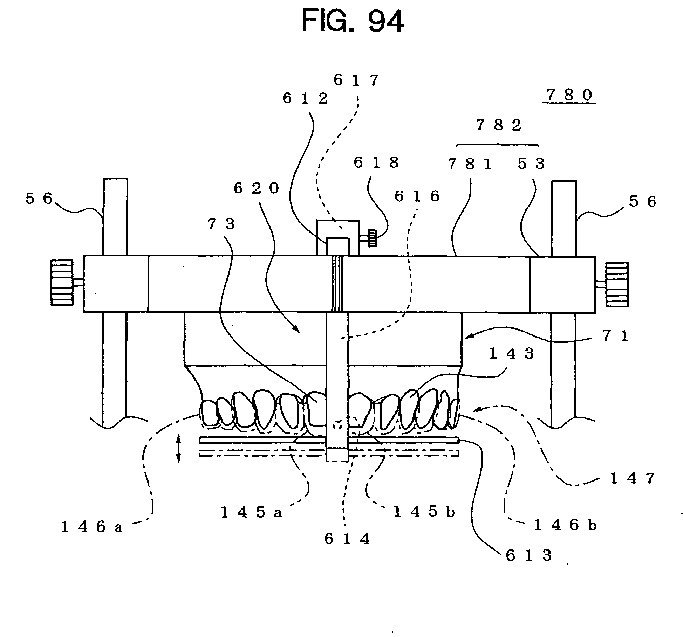

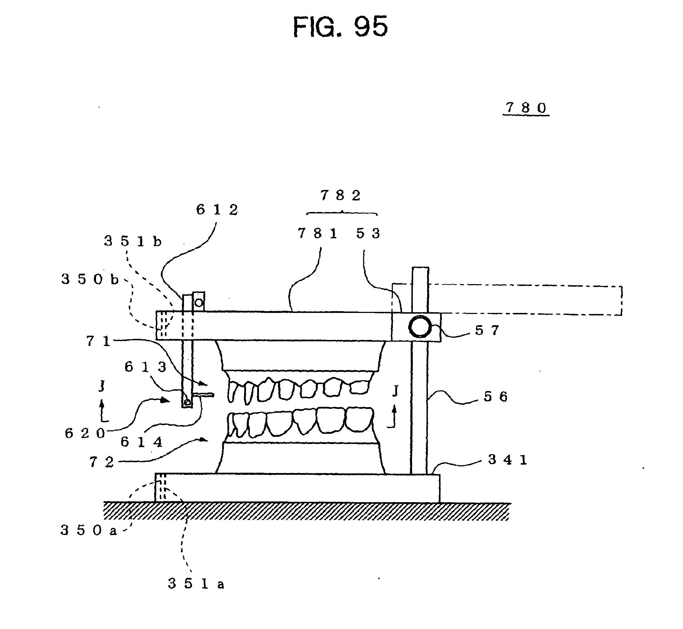

FIG. 93 is a front view showing a state in which the upper-jaw dentition cast 71 and the lower-jaw dentition cast 72 are fixed to the articulator 780, FIG. 94 is a detailed front view showing a periphery of the top plate main body 781 in FIG. 93, and FIG. 95 is a side view showing a state in which the upper-jaw dentition cast 71 and the lower-jaw dentition cast 72 are fixed to the articulator 780.

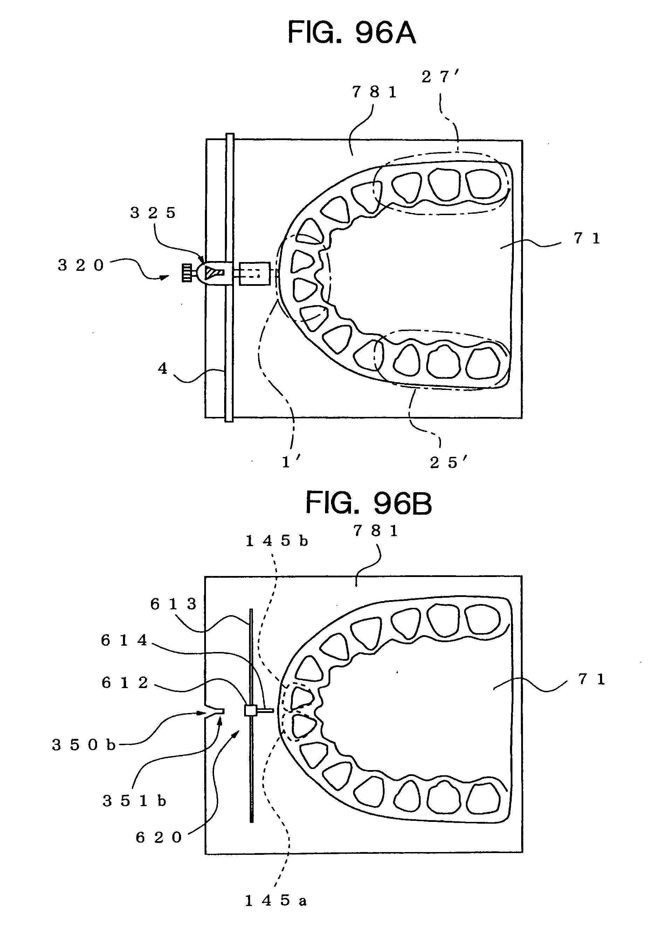

Moreover, FIG. 96 is a diagram showing a state in which the upper-jaw dentition cast 71 is attached to the top plate main body 781 constituting the articulator 780, (a) is an arrow view along line I-I in FIG. 92, and (b) is an arrow view along line J-J in FIG. 95.

As seen from these drawings, to make the artificial tooth by use of the upper-jaw dentition cast 71 fixed to the articulator 780, while turning the height adjusting knob 618 connected to the rotation shaft of the pinion 617 to match the elevator rod 612 constituting the occlusal surface setting mechanism 620 with the upper-jaw dentition cast 71 and elevate and lower the rod to a desired position, the artificial tooth is made.

Specifically, as shown in FIG. 94, the artificial tooth is made so that the upper-jaw dentition becomes horizontally symmetrical on the basis of the pupil line guide member 613. That is, the artificial tooth is made horizontally symmetrically so that the upper-jaw dentition formed at a time when the support 143 of the upper-jaw dentition cast 71 is covered with the artificial tooth 147 for the upper-jaw dentition gradually becomes high from artificial teeth 145a, 145b newly constituting incisor to artificial teeth 146a, 146b newly constituting molar teeth as viewed from the front surface of the articulator 780.

It is to be noted that the occlusal surface gradually becomes high from the incisor 73 as the front teeth toward the molar and the inside of the oral cavity in a case where the specific median line 42 is regarded as a reference. However, as seen from FIG. 94, the elevator rod 612 can be elevated and lowered with respect to the top plate main body 781 by turning the height adjusting knob 618 connected to the rotation shaft of the pinion 617. Therefore, the occlusal surface can be exactly reproduced to the upper-jaw dentition cast 71 while appropriately elevating and lowering the elevator rod 612 depending on a type of the artificial tooth 147 for the upper-jaw dentition.

Moreover, as well seen from FIG. 94, the artificial tooth 147 for the upper-jaw dentition is made so that an extended line of a material axis of the incisor guide member 614 falls between the incisor 145a, 145b in the artificial tooth 147 for the upper-jaw dentition as viewed from the front surface of the articulator 780. Even in such case, the height of the incisor guide member 614 may be matched with positions of the incisor 73 by appropriately elevating and lowering the elevator rod 612.

It is to be noted that for the sake of convenience of operation, the top plate main body 781 is reversed around the top plate base member with respect to the top plate base member 53 until the upper surface abuts on that of the top plate base member to make the artificial tooth 147 for the upper-jaw dentition. The artificial tooth for the upper-jaw dentition is attached to the upper-jaw dentition cast 71, and the top plate main body 781 is rotated to its former state with respect to the top plate base member 53 to confirm the occlusion state with the lower-jaw dentition cast 72.

As described above, according to the articulator 780 of the present embodiment, the patient's pupil line 41 can be transferred as a relation parallel to the bottom plate 341 of the articulator 780 to the articulator via the pupil line setting rod 4 of the occlusal surface transfer instrument 320. Moreover, the recordings of the median line 43 and the specific median line 42 can be transferred as a relation perpendicular to the bottom plate 341 of the articulator 780 to the articulator via the median line setting rod 325.

Therefore, the upper-jaw dentition cast 71 and the lower-jaw dentition cast 72 can be fixed to the articulator 780 so that the occlusal surface becomes the same as that in the patient's oral cavity in a three-dimensional coordinate.
Therefore, it is possible to make the aesthetically superior artificial tooth in a state in which such occlusal surface in the oral cavity is reproduced in the articulator 780.

Moreover, according to the articulator 780 of the present embodiment, the rod fitting recessed portions 350a, 3250b and the fitting grooves 351a, 351b are formed along the same line perpendicular to the bottom plate 341. Moreover, the portions are formed so that the median line setting rod 325 is tentatively attached in a state in which the rod becomes perpendicular to the bottom plate 341, and the pupil line setting rod 4 of the occlusal surface transfer instrument 320 becomes parallel to the front edge portions of the bottom plate 341 and the top plate 782, when the rod body 335 and the protruding member 336 of the median line setting rod 325 are fitted into the rod fitting recessed portions 350a, 350b and the fitting grooves 351a, 351b, respectively. Therefore, the relative positional relation between the patient's pupil line 41, median line 43, and specific median line 42, and the occlusal surface in the oral cavity is exactly reproduced on the articulator 780, as the relative positional relation between the pupil line guide member 613 and elevator rod 612, and the upper-jaw dentition cast 71 and lower-jaw dentition cast 72.

In addition, the upper-jaw dentition cast 71 and the lower-jaw dentition cast 72 can be mounted in the articulator 780 in a state in which the front surfaces of these casts agree with the front surface of the articulator 780. Therefore, when the upper-jaw dentition cast 71 and the lower-jaw dentition cast 72 are viewed from the front surface of the articulator 740, it is possible to reproduce the same situation as that in a case where the dentition in the patient's oral cavity is viewed from the patient's front.

Therefore, it is possible to make the artificial tooth 147 for upper-jaw dentition with a high precision on the basis of the elevator rod 612 and the pupil line guide member 613.

Moreover, according to the articulator 780 of the present embodiment, when the rod body 335 and the protruding member 336 of the median line setting rod 325 are fitted into the rod fitting recessed portions 350a, 350b and the fitting grooves 351a, 351b, respectively, the occlusal surface transfer instrument 320 can be detachably fixed to the articulator 780. At the attaching time, the occlusal surface transfer instrument 320 can be tentatively attached to the articulator 780, and the upper-jaw dentition cast 71 and the lower-jaw dentition cast 72 can be tentatively held and positioned.

Therefore, an operation to fix the upper-jaw dentition cast 71 and the lower-jaw dentition cast 72 to the lower surface of the top plate main body 781 and the upper surface of the bottom plate 341, respectively, is facilitated.

Moreover, according to the articulator 780 of the present embodiment, the top plate 782 and the height adjusting rods 56, 56 are constituted so that the relative positional relation between the bottom plate 341 and the top plate 782 is retained before and after the removing in the case where the bite material 1' and two side bite materials 25' , 27' are removed after the attaching, and the relative positional relation between the bottom plate 341 and the top plate 782 is retained before and after reversing the top plate 781. Therefore, even after the bite material 1' and two side bite materials 25', 27' are removed, an interval between the upper-jaw dentition cast 71 and the lower-jaw dentition cast 72 does not change at all.

Therefore, it is possible to make the artificial tooth 147 for the upper-jaw dentition in the relative positional relation in which the normal occlusion is performed. Moreover, even when the top plate main body 781 constituting the top plate 782 is rotated to its former state with respect to the top plate base member 53 in order to check the occlusion state as needed during the making of the artificial tooth for the upper-jaw dentition, the relative positional relation between the upper-jaw dentition cast 71 and the lower-jaw dentition cast 72 does not change at all. Therefore, it is possible to check as needed whether or not the normal occlusion is performed during the making of the artificial tooth 147 for the upper-jaw dentition.

Moreover, according to the articulator 780 of the present embodiment, the upper-jaw dentition cast 71 and the lower-jaw dentition cast 72 are mounted on the articulator so that the front surfaces thereof agree with the front surface of the articulator 780. Therefore, the artificial tooth can be made horizontally symmetrically so that the upper-jaw dentition formed at a time when the support 143 of the upper-jaw dentition cast 71 is covered with the artificial tooth 147 for the upper-jaw dentition gradually becomes high from the artificial teeth 145a, 145b newly constituting the incisor to the artificial teeth 146a, 146b newly constituting the molar teeth as viewed from the front surface of the articulator 780.

Furthermore, according to the articulator 780 of the present embodiment, since the elevator rod 612 constituting the occlusal surface setting mechanism 620 is attached so as to be elevatable with respect to the top plate main body 781, it is possible to match the pupil line guide member 613 attached to the elevator rod 612 with the dentition of the upper-jaw dentition cast 71 and set the guide member to a desired height, and precision in making the artificial tooth 147 for the upper-jaw dentition is enhanced.

In addition, according to the articulator 780 of the present embodiment, the incisor guide member 614 constituting the occlusal surface setting mechanism 620 is protruded on the rear side of the bottom plate 341 so as to cross the material axis of the elevator rod 612 at right angles. Therefore, it is possible to make the artificial tooth 147 for the upper-jaw dentition so that the extended line of the axial direction of the incisor guide member 614 falls between the incisor 145a, 145b. The precision and operability in making the artificial tooth for the upper-jaw dentition are largely enhanced even in this respect.

Although not especially mentioned in the present embodiment, the articulator of the present invention has been constituted so that the top plate 782 is elevatable along the height adjusting rods 56, 56. However, unless there is any trouble in the attaching of the upper-jaw dentition cast 71 and the lower-jaw dentition cast 72, or the top plate has to be constituted to be elevatable, the top plate does not have to be elevatable.

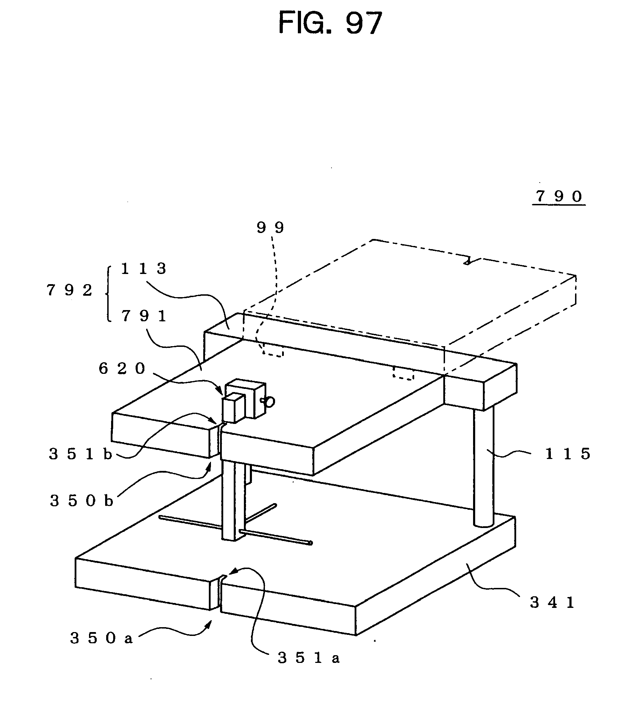

FIG. 97 is a perspective view showing an articulator according to a modification.

As seen from the drawing, an articulator 780 according to the modification is constituted of: a bottom plate 341; a pair of support rods 115, 115 stood in a state in which the rods are separated from each other along a rear edge portion of the bottom plate; a top plate 792 attached to upper ends of the support rods; and an occlusal surface setting mechanism 620 disposed so as to pass through the top plate in the vicinity of the front side of the top plate. The top plate 792 is constituted of: a top plate base member 113 attached to the upper ends of the support rods 115, 115; and a top plate main body 791 connected to the top plate base member via hinges 99, 99. Since the present modification has been described in detail in the fourth embodiment, the description is omitted hereinafter.

Moreover, in the present embodiment, the top plate 782 and the bottom plate 341 constituting the articulator 780 are constituted of rectangular steel plates having predetermined thicknesses, but shapes do not have to be especially limited to rectangular shapes.

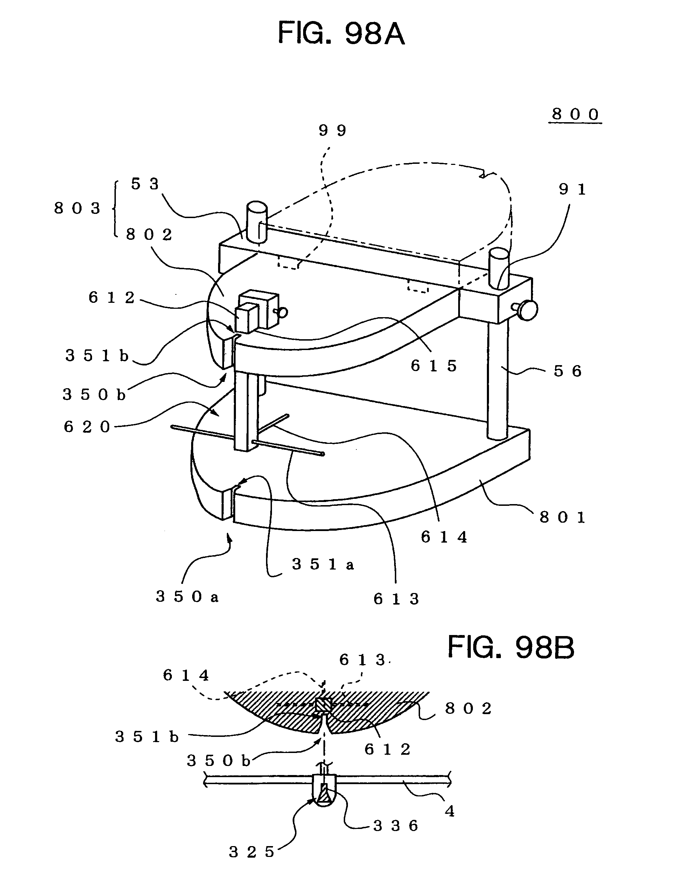

FIG. 98 is a perspective view showing an articulator 800 according to the modification.

As seen from the drawing, substantially in the same manner as in the articulator 780, the articulator 800 according to the modification is constituted of: a bottom plate 801 to whose upper surface a lower-jaw dentition cast 72 is attached; height adjusting rods 56, 56 as a support mechanism stood in the vicinity of a rear edge portion of the bottom plate; a top plate 803 whose rear edge portion is rotatably attached to the height adjusting rods so that the upper and lower sides can be reversed and to whose lower surface an upper-jaw dentition cast 71 is attached; and an occlusal surface setting mechanism 620 disposed so as to pass through the top plate in the vicinity of a front side of the top plate. The top plate is directed frontwards, and attached to the height adjusting rods 56, 56 in a cantilever form.

Moreover, the bottom plate 801 and the top plate 803 are disposed facing each other in parallel with each other, and opposite front end surfaces are positioned on a surface perpendicular to the bottom plate 801. The lower-jaw dentition cast 72 can be fixed to the upper surface of the bottom plate 801, and the upper-jaw dentition cast 71 can be fixed to the lower surface of the top plate 803, respectively.

The top plate 803 is constituted of: a top plate base member 53 whose opposite end portions are provided with two rod holes 91, 91 for passing the height adjusting rods 56, 56; and a top plate main body 802 connected to the top plate base member via hinges 99, 99.

Here, unlike the articulator 780, the bottom plate 801 and the top plate main body 802 are formed of semi-elliptical steel plates having predetermined thicknesses. The upper surface of the bottom plate 801 and the lower surface of the top plate main body 802 may be subjected to a known technology such as rough surface working or emboss working so that the lower-jaw dentition cast 72 and the upper-jaw dentition cast 71 can be attached via a predetermined bonding material such as plaster, respectively.

The front end surfaces of the bottom plate 801 and the top plate main body 802 are provided with rod fitting recessed portions 350a, 350b and fitting grooves 351a, 351b into which the rod body 335 and the protruding member 336 of the median line setting rod 325 constituting the occlusal surface transfer instrument 320 is to be detachably fitted in the same manner as in the articulator 780.

Since the articulator 800 according to the present modification is similar to the articulator 780 except that the shapes of the bottom and top plates are different, descriptions of another constitution, and functions and effects are omitted hereinafter.

Moreover, the incisor guide member 614 may be constituted to be stretchable, through this has not been mentioned in the present embodiment.

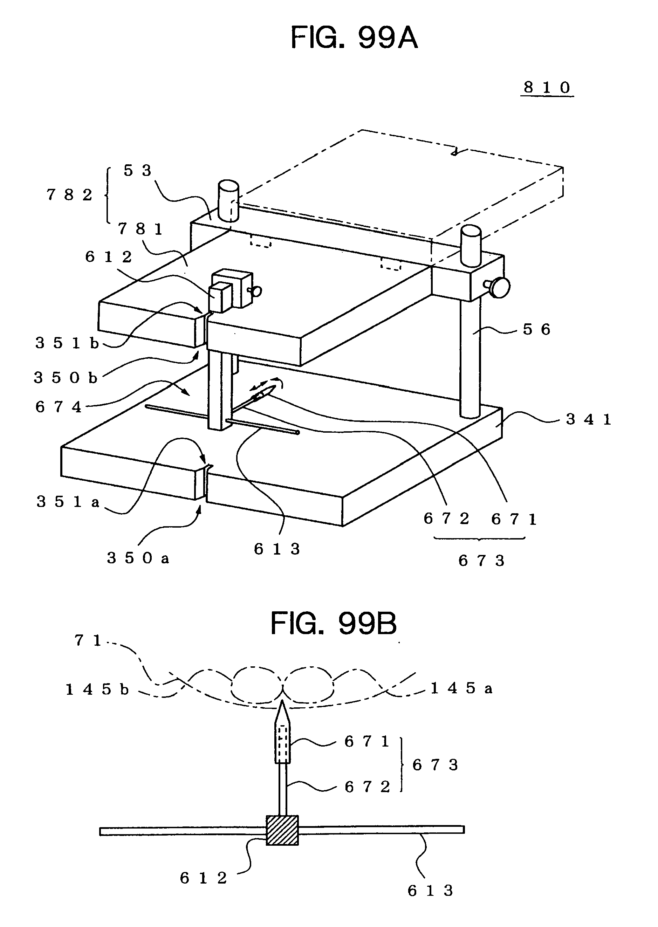

FIG. 99 shows a perspective view and a sectional view showing an articulator 810 according to the modification.
Substantially in the same manner as in the articulator 780, the articulator 810 shown in the drawing is constituted of: a bottom plate 341; height adjusting rods 56, 56 as a support mechanism stood in the vicinity of a rear edge portion of the bottom plate; a top plate 782 whose rear edge portion is attached to the height adjusting rods; and an occlusal surface setting mechanism 674 disposed so as to pass through the top plate in the vicinity of a front side of the top plate. The top plate 782 is directed frontwards, and attached to the height adjusting rods 56, 56 in a cantilever form.

The occlusal surface setting mechanism 674 includes: an elevator rod 612 passed through a through hole 615 formed in the top plate main body 781 so as to be non-rotatable around a material axis, and having a rectangular section; an incisor guide member 673 disposed at right angles to the material axis in the vicinity of a lower end of the elevator rod, and protruded rearwards in parallel with the bottom plate 341 and so as to cross front edge portions of the top plate 782 and the bottom plate 341 at right angles; and a pupil line guide member 613 disposed at right angles to the material axis of the elevator rod and the incisor guide member 673 in the vicinity of the lower end of the elevator rod 612.

Here, the incisor guide member 673 is constituted of an incisor guide main body 672 attached to the elevator rod 612, and an extendable guide 671 attached to a tip of the main body and formed to be sharp-pointed. The extendable guide 671 is constituted to be stretchable with respect to the incisor guide main body 672.

It is to be noted that since the incisor guide member 673 has been already described in detail, the description is omitted here.

Moreover, although not especially mentioned in the present embodiment, in the articulator according to the present invention, the median line setting rod may be tentatively attached in a state in which the pupil line setting rod of the occlusal surface transfer instrument becomes parallel to the pupil line guide member, the median line setting rod becomes perpendicular to the bottom plate, and the material axis of the rod and that of the incisor guide member are included in the same plane, when the rod body and the protruding member are fitted into the rod fitting recessed portions and the fitting grooves. In this case, the shape or the direction is arbitrary. The pupil line setting rod 4 of the occlusal surface transfer instrument 320 does not have to be parallel to the front edge portions of the bottom plate 341 and the top plate 782, when the protruding member 336 of the median line setting rod 325 is fitted as in the present embodiment. The pupil line setting rod 4 or the pupil line guide member 613 may be constituted so as to form a predetermined angle with respect to the front edge portions of the bottom plate 341 and the top plate 782.

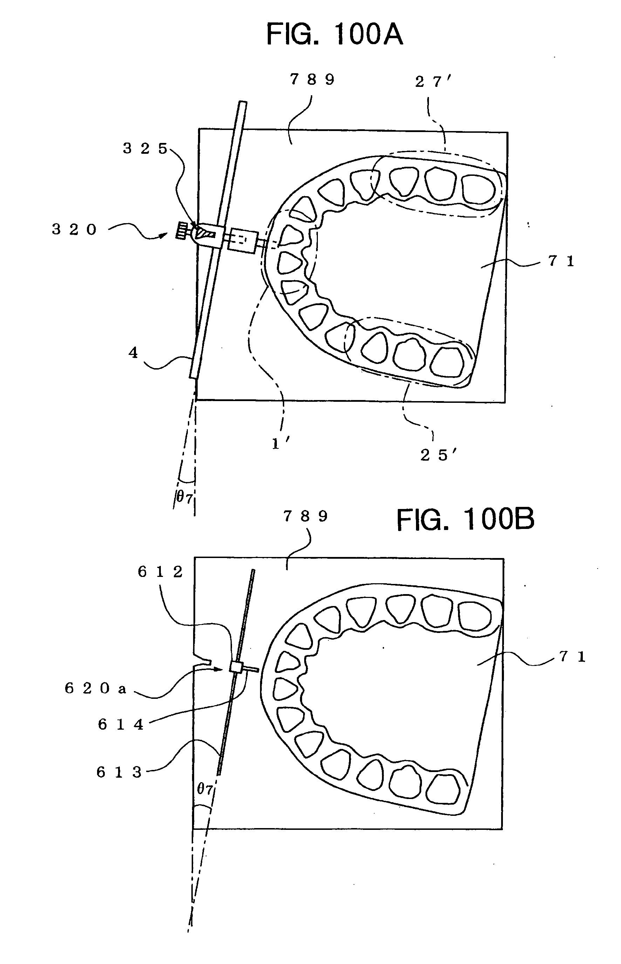

FIG. 100 is a looking-upward diagram (diagram in which one looks up at the above) of the top plate main body 789 according to the modification, (a) is a diagram showing a relative positional relation between the occlusal surface transfer instrument 320 and the upper-jaw dentition cast 71 or the top plate main body 789 in a case where the above-described disposing angle is an arbitrary angle θ7 other than 90° , and (b) is a diagram showing a relative positional relation between the occlusal surface setting mechanism 620a and the upper-jaw dentition cast 71 or the top plate main body 789.

In such case, as apparent from the drawing, the front surface of the upper-jaw dentition cast 71 does not agree with that of the top plate main body 789, and deviates therefrom as much as the angle θ7, but any problem is not generated in making the artificial tooth, and a high-precision artificial tooth can be made in the same manner as described above.

It is to be noted that the occlusal surface setting mechanism 620a is the same as the occlusal surface setting mechanism 620 except that the pupil line guide member 613 is not parallel to the front edge portion of the top plate main body 789, and has the angle θ7, and therefore description thereof is omitted here.

Moreover, in the present embodiment, the process has been described in a case where the artificial tooth 147 for the upper-jaw dentition is made using the occlusal surface transfer instrument 320 and the articulator 780. This also applies to a case where the artificial tooth for the lower-jaw dentition is made. First, the lower-jaw dentition is shaved with turbine or the like to form a support for supporting the artificial tooth, and two side bite materials and the bite material are bitten by the patient by the above-described procedure. In such state, the patient's pupil line 41 is recorded in the pupil line setting rod 4, and the patient's median line 43 and the specific median line 42 are recorded in the median line setting rod 325, respectively. Next, after mounting the lower and upper jaw dentition casts on the articulator 780 by use of the occlusal surface transfer instrument 320, the artificial tooth for the lower-jaw dentition may be made by use of the occlusal surface setting mechanism 620.

Moreover, to make the artificial tooth for the lower-jaw dentition, unlike the process of making the artificial tooth 147 for the upper-jaw dentition, the occlusion states of the dentition of the upper-jaw dentition cast and the corresponding dentition of the lower-jaw dentition cast are confirmed one by one with respect to the upper-jaw dentition cast corresponding to the already completed artificial tooth 147 for the upper-jaw dentition.

## Claims

1. An occlusal surface transfer instrument comprising:
a bite material holding member for holding a non-hardened bite material in a bitable state;
a connection member the one end of which the bite material
holding member is disposed in;
a pupil line setting rod connected near a center region thereof
to other end of the connection member; and
a median line setting rod attachable to the pupil line setting rod at right angles;
said median line setting rod being able to be in an arbitrary angular position around a material axis of the pupil line setting rod;
said pupil line setting rod being able to be attached to the connection member so as to be at right angles to the material axis of the connection member and so as to be swingable or rotatable around the material axis of the connection member.

2. The occlusal surface transfer instrument according to claim 1 wherein said connection member is provided with an insertion hole having a circular sectional shape in the other end, and said pupil line setting rod is provided with an inserting portion which protrudes near the center region of said pupil line setting rod and which has circular sectional shape, the inserting portion being fitted into the insertion hole.

3. The occlusal surface transfer instrument according to claim 2 wherein said connection member is provided with an inserting portion fixing mechanism so that the inserting portion is fixed into the insertion hole at an arbitrary angle to an axial line of the insertion hole.

4. The occlusal surface transfer instrument according to claim 1 wherein said pupil line setting rod is formed to a circular section and said median line setting rod is provided with a fitting portion in the peripheral surface of said median line setting rod, the fitting portion being attachable to said pupil line setting rod and being constituted so that said median line setting rod can be slidable along said pupil line setting rod and can be swung or rotated around the material axis of said pupil line setting rod when said median line setting rod is attached to said pupil line setting rod.

5. The occlusal surface transfer instrument according to claim 4 wherein said fitting portion is provided with a fitting portion fixing mechanism so that said median line setting rod can be fixed at a desired position of said pupil line setting rod and in a desired angular position around a material axis of said pupil line setting rod in a state in which said fitting portion is attached to said pupil line setting rod.

6. An articulator comprising:
a bottom plate the upper surface of which a lower-jaw dentition cast is able to be attached to;
a support mechanism stood in the vicinity of a rear edge portion of the bottom plate; and
a top plate the lower surface of which an upper-jaw dentition cast is able to be attached to;
said top plate being mounted at rear edge portion thereof to said support mechanism in a cantilever form so as to be directed frontwards and being mounted to said support mechanism detachably or rotatably such that an upper and lower sides of the said plate can be reversed;
said bottom plate and said top plate being constituted to be able to fix the lower-jaw dentition cast and the upper-jaw dentition cast to the upper surface of said bottom plate and the lower surface of said top plate respectively such that a median line setting rod constituting an occlusal surface transfer instrument according to any one of claims 1 to 5 is disposed perpendicularly to said bottom plate on the condition that a hardened bite material held by a bite material holding member constituting said occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
said top plate and said support mechanism being constituted to be able to retain a relative positional relation between said bottom plate and said top plate before and after removing the bite material and two side bite materials and to be able to retain a relative positional relation between said bottom plate and said top plate before and after mounting said top plate or before and after reversing said top plate.

7. The articulator according to claim 6 wherein said support mechanism comprises a pair of height adjusting rods stood at a distance each other along a rear edge portion of said bottom plate,
wherein said top plate comprises a top plate base member whose opposite end portions are provided with rod holes through which the height adjusting rods are inserted, and a top plate main body connected to the top plate base member via hinges,
whereby to elevate said top plate along the height adjusting rods and reverse upper and lower surfaces of said top plate main body,
wherein a fixing mechanism which fixes the top plate base member to desired positions of the height adjusting rods is disposed in the top plate base member or the height adjusting rod.

8. The articulator according to claim 7 wherein said bottom plate and said top plate are provided with a median line setting rod groove in front end surface thereof respectively, the median line setting rod groove being formed so that the median line setting rod constituting the occlusal surface transfer instrument can be fitted,
wherein a depth of the median line setting rod groove is set so that the median line setting rod becomes perpendicular to said bottom plate, when the median line setting rod is fitted into the median line setting rod grooves.

9. The articulator according to claim 7 wherein a front end surface of said bottom plate or said top plate is provided with a predetermined pupil line reference line disposed in parallel with said bottom plate.

10. The articulator according to claim 8 wherein an inner surface of each median line setting rod groove is provided with a median line reference line perpendicular to said bottom plate, and the front end surfaces of said top plate and said bottom plate are provided with pupil line reference lines at right angles to the median line reference lines, respectively.

11. The articulator according to claim 6 wherein said bottom plate and said top plate are provided with a median line setting rod groove in front end surface thereof respectively, the median line setting rod groove being formed so that the median line setting rod constituting the occlusal surface transfer instrument can be fitted,
wherein a depth of the median line setting rod groove is set so that the median line setting rod becomes perpendicular to said bottom plate, when the median line setting rod is fitted into the median line setting rod grooves.

12. The articulator according to claim 6 wherein a front end surface of said bottom plate or said top plate is provided with a predetermined pupil line reference line disposed in parallel with said bottom plate.

13. The articulator according to claim 11 wherein an inner surface of each median line setting rod groove is provided with a median line reference line perpendicular to said bottom plate, and the front end surfaces of said top plate and said bottom plate are provided with pupil line reference lines at right angles to the median line reference lines, respectively.

14. A method of making an artificial tooth, comprising the steps of:
biting a hardened bite material held by a bite material holding member provided with one end of a connection member constituting an occlusal surface transfer instrument between front teeth of an upper-jaw dentition cast and those of a lower-jaw dentition cast so as to correspond to an occlusion impression impressed on the hardened bite material and biting a two side materials between molar of the upper-jaw dentition cast and molar of the lower-jaw dentition cast respectively so as to correspond to occlusion impressions impressed by upper and lower molar on two side bite materials respectively;
fixing the lower-jaw dentition cast and the upper-jaw dentition cast to an upper surface of a bottom plate and a lower surface of a top plate respectively, the bottom plate and the top plate constituting an articulator, the top plate being mounted at the rear edge portion to a support mechanism in a cantilever form so as to be directed frontwards, the support mechanism being stood in the vicinity of a rear edge portion of the bottom plate;
removing the bite material and two side bite materials such that a relative positional relation between the bottom plate and the top plate is retained before and after removing; and
making the artificial tooth by use of the lower-jaw dentition cast or the upper-jaw dentition cast while the top plate is attached/detached such that a relative positional relation between the bottom plate and the top plate is retained before and after attached/detached or while the top plate is reversed by rotating to the support mechanism such that a relative positional relation between the bottom plate and the top plate is retained before and after reversed;
the lower-jaw dentition cast and the upper-jaw dentition cast being fixed to the upper surface of the bottom plate and the lower surface of the top plate respectively such that a median line setting rod constituting the occlusal surface transfer instrument is disposed perpendicularly to the bottom plate;
the median line setting rod being attached to a pupil line setting rod constituting the occlusal surface transfer instrument at right angles in a predetermined angular position around a material axis of the pupil line setting rod;
the pupil line setting rod being connected to other end of the connection member.

15. An occlusal surface transfer instrument comprising: a bite material holding member for holding a non-hardened bite material in a bitable state; a connection member the one end of which the bite material holding member is disposed in; a pupil line setting rod connected near a center region thereof to other end of the connection member; and a median line setting rod attachable to the pupil line setting rod at right angles, the median line setting rod being able to be in an arbitrary angular position around a material axis of the pupil line setting rod;
the pupil line setting rod being able to be attached to the connection member so as to be at right angles to the material axis of the connection member and so as to be swingable or rotatable around the material axis of the connection member;
the median line setting rod having a predetermined rod body and a protruding member protruded from a peripheral surface of the rod body along the material axis of the rod body.

16. The occlusal surface transfer instrument according to claim 15 wherein said connection member is provided with an insertion hole having a circular sectional shape in the other end, and said pupil line setting rod is provided with an inserting portion which protrudes near the center region of said pupil line setting rod and which has circular sectional shape, the inserting portion being fitted into the insertion hole.

17. The occlusal surface transfer instrument according to claim 16 wherein said connection member is provided with an inserting portion fixing mechanism so that the inserting portion is fixed into the insertion hole at an arbitrary angle to an axial line of the insertion hole.

18. The occlusal surface transfer instrument according to claim 15 wherein said pupil line setting rod is formed to a circular section and said median line setting rod is provided with a fitting portion in the peripheral surface of said median line setting rod, the fitting portion being attachable to said pupil line setting rod and being constituted so that said median line setting rod can be slidable along said pupil line setting rod and can be swung or rotated around the material axis of said pupil line setting rod when said median line setting rod is attached to said pupil line setting rod.

19. The occlusal surface transfer instrument according to claim 18 wherein said fitting portion is provided with a fitting portion fixing mechanism so that said median line setting rod can be fixed at a desired position of said pupil line setting rod and in a desired angular position around a material axis of said pupil line setting rod in a state in which said fitting portion is attached to said pupil line setting rod.

20. An articulator comprising:
a bottom plate the upper surface of which a lower-jaw dentition cast is able to be attached to;
a support mechanism stood in the vicinity of a rear edge portion of the bottom plate; and
a top plate the lower surface of which an upper-jaw dentition cast is able to be attached to;
the top plate being mounted at rear edge portion thereof to the support mechanism in a cantilever form so as to be directed frontwards and being mounted to the support mechanism detachably or rotatably such that an upper and lower sides of the top plate can be reversed;
the bottom plate having a predetermined fitting groove formed in a front end surface of the bottom plate and the top plate having a predetermined fitting groove formed in a front end surface of the top plate such that a protruding member of a median line setting rod constituting an occlusal surface transfer instrument according to any one of claims 15 to 19 is detachably fitted into the fitting grooves;
the bottom plate and the top plate being constituted to be able to hold temporarily the median line setting rod when the protruding member of the median line setting rod is fitted into the fitting grooves such that the median line setting rod is perpendicular to the bottom plate and the median line setting rod is positioned at a specific angle around an axial line perpendicular to the bottom plate;
the bottom plate and the top plate being constituted to be able to fix the lower-jaw dentition cast and the upper-jaw dentition cast to the upper surface of the bottom plate and the lower surface of the top plate respectively when the protruding member of the median line setting rod is fitted into the fitting grooves on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

21. The articulator according to claim 20 wherein said support mechanism comprises a pair of height adjusting rods stood at a distance each other along a rear edge portion of said bottom plate,
wherein said top plate comprises a top plate base member whose opposite end portions are provided with rod holes through which the height adjusting rods are inserted, and a top plate main body connected to the top plate base member via hinges, whereby to elevate said top plate along the height adjusting rods and reverse upper and lower surfaces of said top plate main body,
wherein a fixing mechanism which fixes the top plate base member to desired positions of the height adjusting rods is disposed in the top plate base member or the height adjusting rod.

22. The articulator according to claim 20 wherein a front end surface of said bottom plate or said top plate is provided with a predetermined pupil line reference line disposed in parallel with said bottom plate.

23. The articulator according to claim 21 wherein a front end surface of said bottom plate or said top plate is provided with a predetermined pupil line reference line disposed in parallel with said bottom plate.

24. An occlusal surface transfer instrument comprising:
a bite material holding member for holding a non-hardened bite material in a bitable state; a connection member the one end of which the bite material holding member is disposed in; a pupil line setting rod connected near a center region thereof to other end of the connection member; and a median line setting rod attachable to the pupil line setting rod at right angles;
said median line setting rod being able to be in an arbitrary angular position around a material axis of the pupil line setting rod;
said pupil line setting rod being able to be attached to the connection member so as to be at right angles to the material axis of the connection member and so as to be swingable or rotatable around the material axis of the connection member;
said median line setting rod having a non-circular section.

25. The occlusal surface transfer instrument according to claim 24 wherein said connection member is provided with an insertion hole having a circular sectional shape in the other end, and said pupil line setting rod is provided with an inserting portion which protrudes near the center region of said pupil line setting rod and which has circular sectional shape, the inserting portion being fitted into the insertion hole.

26. The occlusal surface transfer instrument according to claim 25 wherein said connection member is provided with an inserting portion fixing mechanism so that the inserting portion is fixed into the insertion hole at an arbitrary angle to an axial line of the insertion hole.

27. The occlusal surface transfer instrument according to claim 24 wherein said pupil line setting rod is formed to a circular section and said median line setting rod is provided with a fitting portion in the peripheral surface of said median line setting rod, the fitting portion being attachable to said pupil line setting rod and being constituted so that said median line setting rod can be slidable along said pupil line setting rod and can be swung or rotated around the material axis of said pupil line setting rod when said median line setting rod is attached to said pupil line setting rod.

28. The occlusal surface transfer instrument according to claim 27 wherein said fitting portion is provided with a fitting portion fixing mechanism so that said median line setting rod can be fixed at a desired position of said pupil line setting rod and in a desired angular position around a material axis of said pupil line setting rod in a state in which said fitting portion is attached to said pupil line setting rod.

29. An articulator comprising:
a bottom plate the upper surface of which a lower-jaw dentition cast is able to be attached to;
a support mechanism stood in the vicinity of a rear edge portion of the bottom plate; and
a top plate the lower surface of which an upper-jaw dentition cast is able to be attached to; the top plate being mounted at rear edge portion thereof to the support mechanism in a cantilever form so as to be directed frontwards and being mounted to the support mechanism detachably or rotatably such that an upper and lower sides of the top plate can be reversed;
said bottom plate having a predetermined rod fitting recessed portion formed in a front end surface of the bottom plate and the top plate having a predetermined rod fitting recessed portion formed in a front end surface of the top plate such that a median line setting rod constituting an occlusal surface transfer instrument according to any one of claims 24 to 28 is detachably fitted into the recessed portions;
said bottom plate and said top plate being constituted to be able to hold temporarily the median line setting rod when the median line setting rod is fitted into the rod fitting recessed portions such that the median line setting rod is perpendicular to the bottom plate and the median line setting rod is positioned at a specific angle around an axial line perpendicular to the bottom plate;
said bottom plate and said top plate being constituted to be able to fix the lower-jaw dentition cast and the upper-jaw dentition cast to the upper surface of the bottom plate and the lower surface of the top plate respectively when the median line setting rod is fitted into the rod fitting recessed portions on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
said top plate and said support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

30. The articulator according to claim 29 wherein said support mechanism comprises a pair of height adjusting rods stood at a distance each other along a rear edge portion of said bottom plate,
wherein said top plate comprises a top plate base member whose opposite end portions are provided with rod holes through which the height adjusting rods are inserted, and a top plate main body connected to the top plate base member via hinges, whereby to elevate said top plate along the height adjusting rods and reverse upper and lower surfaces of said top plate main body,
wherein a fixing mechanism which fixes the top plate base member to desired positions of the height adjusting rods is disposed in the top plate base member or the height adjusting rod.

31. The articulator according to claim 29 wherein a front end surface of said bottom plate or said top plate is provided with a predetermined pupil line reference line disposed in parallel with said bottom plate.

32. The articulator according to claim 30 wherein a front end surface of said bottom plate or said top plate is provided with a predetermined pupil line reference line disposed in parallel with said bottom plate.

33. An occlusal surface transfer instrument comprising:
a bite material holding member for holding a non-hardened bite material in a bitable state; a connection member the one end of which the bite material holding member is disposed in;
a pupil line setting rod connected near a center region thereof to other end of the connection member; and
a median line setting rod attachable to the pupil line setting rod at right angles;
the median line setting rod being able to be in an arbitrary angular position around a material axis of the pupil line setting rod;
the pupil line setting rod being able to be attached to the connection member so as to be at right angles to the material axis of the connection member and so as to be swingable or rotatable around the material axis of the connection member;
the median line setting rod including a predetermined rod body having a noncircular section and a protruding member protruded from a peripheral surface of the rod body along the material axis of the rod body.

34. The occlusal surface transfer instrument according to claim 33 wherein said connection member is provided with an insertion hole having a circular sectional shape in the other end, and said pupil line setting rod is provided with an inserting portion which protrudes near the center region of said pupil line setting rod and which has circular sectional shape, the inserting portion being fitted into the insertion hole.

35. The occlusal surface transfer instrument according to claim 34 wherein said connection member is provided with an inserting portion fixing mechanism so that the inserting portion is fixed into the insertion hole at an arbitrary angle to an axial line of the insertion hole.

36. The occlusal surface transfer instrument according to claim 33 wherein said pupil line setting rod is formed to a circular section and said median line setting rod is provided with a fitting portion in the peripheral surface of said median line setting rod, the fitting portion being attachable to said pupil line setting rod and being constituted so that said median line setting rod can be slidable along said pupil line setting rod and can be swung or rotated around the material axis of said pupil line setting rod when said median line setting rod is attached to said pupil line setting rod.

37. The occlusal surface transfer instrument according to claim 36 wherein said fitting portion is provided with a fitting portion fixing mechanism so that said median line setting rod can be fixed at a desired position of said pupil line setting rod and in a desired angular position around a material axis of said pupil line setting rod in a state in which said fitting portion is attached to said pupil line setting rod.

38. An articulator comprising:
a bottom plate the upper surface of which a lower-jaw dentition cast is able to be attached to;
a support mechanism stood in the vicinity of a rear edge portion of the bottom plate; and
a top plate the lower surface of which an upper-jaw dentition cast is able to be attached to; the top plate being mounted at rear edge portion thereof to the support mechanism in a cantilever form so as to be directed frontwards and being mounted to the support mechanism detachably or rotatably such that an upper and lower sides of the top plate can be reversed;
the bottom plate having a predetermined rod fitting recessed portion formed in a front end surface of the bottom plate and the top plate having a predetermined rod fitting recessed portion formed in a front end surface of the top plate such that a rod body of a median line setting rod constituting an occlusal surface transfer instrument according to any one of claims 33 to 37 is detachably attached into the rod fitting recessed portions;
the rod fitting recessed portion being formed in the inner surface of which a predetermined fitting groove is formed such that a protruding member of the median line setting rod is detachably fitted into the predetermined fitting grooves;
the bottom plate and the top plate being constituted to be able to hold temporarily the median line setting rod when the rod body and the protruding member are fitted into the rod fitting recessed portions and the fitting grooves respectively such that the median line setting rod is perpendicular to the bottom plate and the median line setting rod is positioned at a specific angle around an axial line perpendicular to the bottom plate;
the bottom plate and the top plate being constituted to be able to fix the lower-jaw dentition cast and the upper-jaw dentition cast to the upper surface of the bottom plate and the lower surface of the top plate respectively when the rod body and the protruding member are fitted into the rod fitting recessed portions and the fitting grooves respectively on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

39. The articulator according to claim 38 wherein said support mechanism comprises a pair of height adjusting rods stood at a distance each other along a rear edge portion of said bottom plate,
wherein said top plate comprises a top plate base member whose opposite end portions are provided with rod holes through which the height adjusting rods are inserted, and a top plate main body connected to the top plate base member via hinges,
whereby to elevate said top plate along the height adjusting rods and reverse upper and lower surfaces of said top plate main body,
wherein a fixing mechanism which fixes the top plate base member to desired positions of the height adjusting rods is disposed in the top plate base member or the height adjusting rod.

40. The articulator according to claim 38 wherein a front end surface of said bottom plate or said top plate is provided with a predetermined pupil line reference line disposed in parallel with said bottom plate.

41. The articulator according to claim 39 wherein a front end surface of said bottom plate or said top plate is provided with a predetermined pupil line reference line disposed in parallel with said bottom plate.

42. An articulator comprising:
a bottom plate the upper surface of which a lower-jaw dentition cast is able to be attached to;
a support mechanism stood in the vicinity of a rear edge portion of the bottom plate;
a top plate the lower surface of which an upper-jaw dentition cast is able to be attached to; and
an occlusal surface setting mechanism elevatably passed through a through hole formed in the vicinity of a front side of the top plate;
the top plate being mounted at rear edge portion thereof to the support mechanism in a cantilever form so as to be directed frontwards and being mounted to the support mechanism detachably or rotatably such that an upper and lower sides of the top plate can be reversed;
the occlusal surface setting mechanism including:
an elevator rod passed through the through hole so as to be non-rotatable around a material axis thereof;
an incisor guide member disposed at right angles to the material axis of the elevator rod in the vicinity of a lower end thereof and so as to protrude to a rear side of the bottom plate; and
a pupil line guide member disposed at right angles to the material axis of the elevator rod and the incisor guide member in the vicinity of the lower end of the elevator rod,
the bottom plate and the top plate being constituted to be able to fix the lower-jaw dentition cast and the upper-jaw dentition cast to the upper surface of the bottom plate and the lower surface of the top plate respectively such that a median line setting rod constituting an occlusal surface transfer instrument according to any one of claims 1 to 5 is disposed perpendicularly to the bottom plate on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

43. The articulator according to claim 42 wherein median line setting rod grooves into which the median line setting rod constituting the occlusal surface transfer instrument are to be fitted are formed in the front end surfaces of the bottom and top plates, and the median line setting rod groove is set so that the median line setting rod becomes perpendicular to the bottom plate and that a material axis of the median line setting rod and that of the incisor guide member are included in the same plane, when the median line setting rod is fitted into the median line setting rod grooves.

44. The articulator according to claim 42 wherein said support mechanism comprises a pair of height adjusting rods stood at a distance each other along a rear edge portion of said bottom plate,
wherein said top plate comprises a top plate base member whose opposite end portions are provided with rod holes through which the height adjusting rods are inserted, and a top plate main body connected to the top plate base member via hinges, whereby to elevate said top plate along the height adjusting rods and reverse upper and lower surfaces of said top plate main body,
wherein a fixing mechanism which fixes the top plate base member to desired positions of the height adjusting rods is disposed in the top plate base member or the height adjusting rod.

45. The articulator according to claim 43 wherein said support mechanism comprises a pair of height adjusting rods stood at a distance each other along a rear edge portion of said bottom plate,
wherein said top plate comprises a top plate base member whose opposite end portions are provided with rod holes through which the height adjusting rods are inserted, and a top plate main body connected to the top plate base member via hinges, whereby to elevate said top plate along the height adjusting rods and reverse upper and lower surfaces of said top plate main body,
wherein a fixing mechanism which fixes the top plate base member to desired positions of the height adjusting rods is disposed in the top plate base member or the height adjusting rod.

46. An occlusal surface setting instrument comprising:
a predetermined median line guide member;
an elevator member attached so as to be elevatable along the median line guide member;
an incisor guide member protruded from the elevator member at right angles to the median line guide member; and
a pupil line guide member attached near a center region thereof to the incisor guide member at right angles to a material axis of the incisor guide member and that of the median line guide member;
the median line guide member including:
a median line guiding rod body; and
a median line guiding protruding member protruded from a peripheral surface of the median line guiding rod body along a material axis of the median line guiding rod body, the median line guiding protruding member having the same section shape as a protruding member of a median line setting rod constituting an occlusal surface transfer instrument according to any one of claims 15 to 19;
the pupil line guide member is positioned to the median line guide member so that a disposing angle of the pupil line guide member to a protruding direction of the median line guiding protruding member is equal to that of the pupil line setting rod constituting the occlusal surface transfer instrument to the protruding direction of the protruding member.

47. An occlusal surface setting instrument comprising:
a predetermined median line guide member;
an incisor guide member protruded from the median line guide member at right angles to a material axis of the median line guide member; and
a pupil line guide member attached near a center region thereof to the incisor guide member at right angles to a material axis of the incisor guide member and that of the median line guide member;
the median line guide member including:
a median line guiding rod body; and
a median line guiding protruding member protruded from a peripheral surface of the median line guiding rod body along a material axis of the median line guiding rod body, the median line guiding protruding member having the same section shape as a protruding member of a median line setting rod constituting an occlusal surface transfer instrument according to any one of claims 15 to 19;
the pupil line guide member is positioned to the median line guide member so that a disposing angle of the pupil line guide member to a protruding direction of the median line guiding protruding member is equal to that of the pupil line setting rod constituting the occlusal surface transfer instrument to the protruding direction of the protruding member.

48. An occlusal surface setting instrument comprising:
a predetermined median line guide member;
an elevator member attached so as to be elevatable along the median line guide member;
an incisor guide member protruded from the elevator member at right angles to the median line guide member; and
a pupil line guide member attached near a center region thereof to the incisor guide member at right angles to a material axis of the incisor guide member and that of the median line guide member;
the median line guide member having the same section shape as
a median line setting rod constituting an occlusal surface transfer instrument according to any one of claims 24 to 28; the pupil line guide member is positioned to the median line guide member so that a disposing angle of the pupil line guide member to the median line guide member is equal to that of the pupil line setting rod constituting the occlusal surface transfer instrument to the median line setting rod.

49. An occlusal surface setting instrument comprising:
a predetermined median line guide member;
an incisor guide member protruded from the median line guide member at right angles to a material axis of the median line guide member; and
a pupil line guide member attached near a center region thereof to the incisor guide member at right angles to a material axis of the incisor guide member and that of the median line guide member;
the median line guide member having the same section shape as a median line setting rod constituting an occlusal surface transfer instrument according to any one of claims 24 to 28; the pupil line guide member is positioned to the median line guide member so that a disposing angle of the pupil line guide member to median line guide member is equal to that of the pupil line setting rod constituting the occlusal surface transfer instrument to the a median line setting rod.

50. An occlusal surface setting instrument comprising:
a predetermined median line guide member;
an elevator member attached so as to be elevatable along the median line guide member;
an incisor guide member protruded from the elevator member at right angles to the median line guide member; and
a pupil line guide member attached near a center region thereof to the incisor guide member at right angles to a material axis of the incisor guide member and that of the median line guide member;
the median line guide member including:
a median line guiding rod body; and
a median line guiding protruding member protruded from a peripheral surface of the median line guiding rod body along a material axis of the median line guiding rod body, the median line guide member having the same section shape as a median line setting rod constituting an occlusal surface transfer instrument according to any one of claims 33 to 37;
the pupil line guide member is positioned to the median line guide member so that a disposing angle of the pupil line guide member to a protruding direction of the median line guiding protruding member is equal to that of the pupil line setting rod constituting the occlusal surface transfer instrument to a protruding direction of a protruding member of the median line setting rod.

51. An occlusal surface setting instrument comprising:
a predetermined median line guide member;
an incisor guide member protruded from the median line guide member at right angles to a material axis of the median line guide member; and
a pupil line guide member attached near a center region thereof to the incisor guide member at right angles to a material axis of the incisor guide member and that of the median line guide member;
the median line guide member including:
a median line guiding rod body; and
a median line guiding protruding member protruded from a peripheral surface of the median line guiding rod body along a material axis of the median line guiding rod body, the median line guide member having the same section shape as a median line setting rod constituting an occlusal surface transfer instrument according to any one of claims 33 to 37;
the pupil line guide member is positioned to the median line guide member so that a disposing angle of the pupil line guide member to a protruding direction of the median line guiding protruding member is equal to that of a pupil line setting rod constituting an occlusal surface transfer instrument to a protruding direction of a protruding member of the median line setting rod.

52. An articulator comprising:
a bottom plate the upper surface of which a lower-jaw dentition cast is able to be attached to;
a support mechanism stood in the vicinity of a rear edge portion of the bottom plate;
a top plate the lower surface of which an upper-jaw dentition cast is able to be attached to; and
an occlusal surface setting mechanism elevatably passed through a through hole formed in the vicinity of a front side of the top plate;
the top plate being mounted at rear edge portion thereof to the support mechanism in a cantilever form so as to be directed frontwards and being mounted to the support mechanism detachably or rotatably such that an upper and lower sides of the top plate can be reversed;
the occlusal surface setting mechanism including:
an elevator rod passed through the through hole so as to be non-rotatable around a material axis thereof;
an incisor guide member disposed at right angles to the material axis of the elevator rod in the vicinity of a lower end thereof and so as to protrude to a rear side of the bottom plate; and
a pupil line guide member disposed at right angles to the material axis of the elevator rod and the incisor guide member in the vicinity of the lower end of the elevator rod;
the bottom plate having a predetermined fitting groove formed in a front end surface of the bottom plate and the top plate having a predetermined fitting groove formed in a front end surface of the top plate such that a protruding member of a median line setting rod constituting an occlusal surface transfer instrument according to any one of claims 15 to 19 is detachably fitted into the fitting grooves;
the bottom plate and the top plate being constituted to be able to hold temporarily the median line setting rod when the protruding member of the median line setting rod is fitted into the fitting grooves such that a pupil line setting rod constituting the occlusal surface transfer instrument becomes parallel to the pupil line guide member, that the median line setting rod becomes perpendicular to the bottom plate and that the material axis of the median line setting rod and the material axis of the incisor guide member are on a same plane;
the bottom plate and the top plate being constituted to be able to fix the lower-jaw dentition cast and the upper-jaw dentition cast to the upper surface of the bottom plate and the lower surface of the top plate respectively when the protruding member of the median line setting rod is fitted into the fitting grooves on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

53. The articulator according to claim 52 wherein said support mechanism comprises a pair of height adjusting rods stood at a distance each other along a rear edge portion of said bottom plate,
wherein said top plate comprises a top plate base member whose opposite end portions are provided with rod holes through which the height adjusting rods are inserted, and a top plate main body connected to the top plate base member via hinges, whereby to elevate said top plate along the height adjusting rods and reverse upper and lower surfaces of said top plate main body,
wherein a fixing mechanism which fixes the top plate base member to desired positions of the height adjusting rods is disposed in the top plate base member or the height adjusting rod.

54. An articulator comprising:
a bottom plate the upper surface of which a lower-jaw dentition cast is able to be attached to;
a support mechanism stood in the vicinity of a rear edge portion of the bottom plate;
a top plate the lower surface of which an upper-jaw dentition cast is able to be attached to; and
an occlusal surface setting mechanism elevatably passed through a through hole formed in the vicinity of a front side of the top plate;
the top plate being mounted at rear edge portion thereof to the support mechanism in a cantilever form so as to be directed frontwards and being mounted to the support mechanism detachably or rotatably such that an upper and lower sides of the top plate can be reversed;
the occlusal surface setting mechanism including:
an elevator rod passed through the through hole so as to be non-rotatable around a material axis thereof;
an incisor guide member disposed at right angles to the material axis of the elevator rod in the vicinity of a lower end thereof and so as to protrude to a rear side of the bottom plate; and
a pupil line guide member disposed at right angles to the material axis of the elevator rod and the incisor guide member in the vicinity of the lower end of the elevator rod;
the bottom plate having a rod fitting recessed portion formed in a front end surface of the bottom plate and the top plate having a predetermined rod fitting recessed portion formed in a front end surface of the top plate such that a median line setting rod constituting an occlusal surface transfer instrument according to any one of claims 24 to 28 is detachably fitted into the rod fitting recessed portions;
the bottom plate and the top plate being constituted to be able to hold temporarily the median line setting rod when the median line setting rod is fitted into the rod fitting recessed portions such that a pupil line setting rod constituting the occlusal surface transfer instrument becomes parallel to the pupil line guide member, that the median line setting rod becomes perpendicular to the bottom plate and that the material axis of the median line setting rod and the material axis of the incisor guide member are on a same plane;
the bottom plate and the top plate being constituted to be able to fix the lower-jaw dentition cast and the upper-jaw dentition cast to the upper surface of the bottom plate and the lower surface of the top plate respectively when the median line setting rod is fitted into the rod fitting recessed portions on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

55. The articulator according to claim 54 wherein said support mechanism comprises a pair of height adjusting rods stood at a distance each other along a rear edge portion of said bottom plate,
wherein said top plate comprises a top plate base member whose opposite end portions are provided with rod holes through which the height adjusting rods are inserted, and a top plate main body connected to the top plate base member via hinges, whereby to elevate said top plate along the height adjusting rods and reverse upper and lower surfaces of said top plate main body,
wherein a fixing mechanism which fixes the top plate base member to desired positions of the height adjusting rods is disposed in the top plate base member or the height adjusting rod.

56. An articulator comprising:
a bottom plate the upper surface of which a lower-jaw dentition cast is able to be attached to;
a support mechanism stood in the vicinity of a rear edge portion of the bottom plate;
a top plate the lower surface of which an upper-jaw dentition cast is able to be attached to; and
an occlusal surface setting mechanism elevatably passed through a through hole formed in the vicinity of a front side of the top plate;
the top plate being mounted at rear edge portion thereof to the support mechanism in a cantilever form so as to be directed frontwards and being mounted to the support mechanism detachably or rotatably such that an upper and lower sides of the top plate can be reversed;
the occlusal surface setting mechanism including:
an elevator rod passed through the through hole so as to be non-rotatable around a material axis thereof;
an incisor guide member disposed at right angles to the material axis of the elevator rod in the vicinity of a lower end thereof and so as to protrude to a rear side of the bottom plate; and
a pupil line guide member disposed at right angles to the material axis of the elevator rod and the incisor guide member in the vicinity of the lower end of the elevator rod;
the bottom plate having a rod fitting recessed portion formed in a front end surface of the bottom plate and the top plate having a predetermined rod fitting recessed portion formed in a front end surface of the top plate such that a rod body of a median line setting rod constituting an occlusal surface transfer instrument according to any one of claims 33 to 37 is detachably fitted into the rod fitting recessed portions;
the bottom plate having a fitting groove formed in an inner surface of the rod fitting recessed portion formed in the bottom plate and the top plate having a fitting groove formed in an inner surface of the rod fitting recessed portion formed in the top plate such that a protruding member of the median line setting rod is detachably fitted into the rod fitting grooves;
the bottom plate and the top plate being constituted to be able to hold temporarily the median line setting rod when the rod body and the protruding member of the median line setting rod is fitted into the rod fitting recessed portions and the fitting grooves respectively such that a pupil line setting rod constituting the occlusal surface transfer instrument becomes parallel to the pupil line guide member, that the median line setting rod becomes perpendicular to the bottom plate and that the material axis of the median line setting rod and the material axis of the incisor guide member are on a same plane;
the bottom plate and the top plate being constituted to be able to fix the lower-jaw dentition cast and the upper-jaw dentition cast to the upper surface of the bottom plate and the lower surface of the top plate respectively when the rod body and the protruding member of the median line setting rod is fitted into the rod fitting recessed portions and the fitting grooves respectively on the condition that a hardened bite material held by a bite material holding member constituting the occlusal surface transfer instrument is bitten between front teeth of the upper-jaw dentition cast and those of the lower-jaw dentition cast so as to correspond to an occlusion impression impressed on the hardened bite material and that two side materials are bitten between molar of the upper-jaw dentition cast and molar of the lower-jaw dentition cast respectively so as to correspond to occlusion impressions impressed by upper and lower molar on two side bite materials respectively;
the top plate and the support mechanism being constituted to be able to retain a relative positional relation between the bottom plate and the top plate before and after removing the bite material and two side bite materials and to be able to retain a relative positional relation between the bottom plate and the top plate before and after mounting the top plate or before and after reversing the top plate.

57. The articulator according to claim 56 wherein said support mechanism comprises a pair of height adjusting rods stood at a distance each other along a rear edge portion of said bottom plate,
wherein said top plate comprises a top plate base member whose opposite end portions are provided with rod holes through which the height adjusting rods are inserted, and a top plate main body connected to the top plate base member via hinges, whereby to elevate said top plate along the height adjusting rods and reverse upper and lower surfaces of said top plate main body,
wherein a fixing mechanism which fixes the top plate base member to desired positions of the height adjusting rods is disposed in the top plate base member or the height adjusting rod.

58. The articulator according to claim 42 wherein said incisor guide member is constituted to be stretchable, and a tip of the incisor guide member is formed to be sharp-pointed.

59. The articulator according to claim 43 wherein said incisor guide member is constituted to be stretchable, and a tip of the incisor guide member is formed to be sharp-pointed.

60. The articulator according to claim 44 wherein said incisor guide member is constituted to be stretchable, and a tip of the incisor guide member is formed to be sharp-pointed.

61. The articulator according to claim 45 wherein said incisor guide member is constituted to be stretchable, and a tip of the incisor guide member is formed to be sharp-pointed.

62. The articulator according to claim 45 wherein said incisor guide member is constituted to be stretchable, and a tip of the incisor guide member is formed to be sharp-pointed.

63. The articulator according to claim 46 wherein said incisor guide member is constituted to be stretchable, and a tip of the incisor guide member is formed to be sharp-pointed.

64. The articulator according to claim 48 wherein said incisor guide member is constituted to be stretchable, and a tip of the incisor guide member is formed to be sharp-pointed.

65. The articulator according to claim 49 wherein said incisor guide member is constituted to be stretchable, and a tip of the incisor guide member is formed to be sharp-pointed.

66. The articulator according to claim 50 wherein said incisor guide member is constituted to be stretchable, and a tip of the incisor guide member is formed to be sharp-pointed.

67. The articulator according to claim 51 wherein said incisor guide member is constituted to be stretchable, and a tip of the incisor guide member is formed to be sharp-pointed.

68. The articulator according to claim 52 wherein said incisor guide member is constituted to be stretchable, and a tip of the incisor guide member is formed to be sharp-pointed.

69. The articulator according to claim 53 wherein said incisor guide member is constituted to be stretchable, and a tip of the incisor guide member is formed to be sharp-pointed.

70. The articulator according to claim 54 wherein said incisor guide member is constituted to be stretchable, and a tip of the incisor guide member is formed to be sharp-pointed.

71. The articulator according to claim 55 wherein said incisor guide member is constituted to be stretchable, and a tip of the incisor guide member is formed to be sharp-pointed.

72. The articulator according to claim 56 wherein said incisor guide member is constituted to be stretchable, and a tip of the incisor guide member is formed to be sharp-pointed.

73. The articulator according to claim 57 wherein said incisor guide member is constituted to be stretchable, and a tip of the incisor guide member is formed to be sharp-pointed.
